(19) Europäisches Patentamt
European Patent Office
Office européen des brevets

(11) **EP 3 163 889 A1**

(12) **EUROPEAN PATENT APPLICATION**
published in accordance with Art. 153(4) EPC

(43) Date of publication:
**03.05.2017 Bulletin 2017/18**

(51) Int Cl.:
**H04N 21/434** *(2011.01)*   **H04N 21/41** *(2011.01)*
**H04N 5/44** *(2011.01)*

(21) Application number: **15814327.1**

(22) Date of filing: **30.06.2015**

(86) International application number:
**PCT/KR2015/006680**

(87) International publication number:
**WO 2016/003151 (07.01.2016 Gazette 2016/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.06.2014 US 201462019379 P**
**17.07.2014 US 201462025495 P**

(71) Applicant: **LG Electronics Inc. -1-**
**Seoul 07336 (KR)**

(72) Inventors:
• **LEE, Jinwon**
  **Seoul 137-893 (KR)**
• **YANG, Seungryul**
  **Seoul 137-893 (KR)**
• **KO, Woosuk**
  **Seoul 137-893 (KR)**
• **HONG, Sungryong**
  **Seoul 137-893 (KR)**
• **KWAK, Minsung**
  **Seoul 137-893 (KR)**
• **MOON, Kyoungsoo**
  **Seoul 137-893 (KR)**
• **AN, Seungjoo**
  **Seoul 137-893 (KR)**

(74) Representative: **Cabinet Plasseraud**
**66 rue de la Chaussée d'Antin**
**75440 Paris Cedex 09 (FR)**

(54) **BROADCAST TRANSMITTING DEVICE, BROADCAST RECEIVING DEVICE, OPERATING METHOD FOR BROADCAST TRANSMITTING DEVICE AND OPERATING METHOD FOR BROADCAST RECEIVING DEVICE**

(57)    A broadcast receiving device comprises: a broadcast receiving unit for receiving a broadcast signal; a control unit for acquiring application signalling data for signalling an application comprising a broadcast service on the basis of the broadcast signal; and an app sending and receiving unit for communicating a trigger to a second screen device, based on the application signalling data.

FIG. 177

**Description**

[Technical Field]

The present invention relates to a broadcast transmitting apparatus, a broadcast receiving apparatus, a method of operating a broadcast transmitting apparatus, and a method of operating a broadcast receiving apparatus.

[Background Art]

By virtue of the development of digital broadcast environments and communication environments, hybrid broadcast using a communication network (a broadband network) as well as an existing broadcast network has attracted much attention. In addition, such hybrid broadcast has provided an application or broadcast service that is operatively associated with a terminal device such as a smartphone or a tablet. The hybrid broadcast has provided a personalization function of providing an application associated with a broadcast service and content appropriate for each user.

For such hybrid broadcast, a broadcast receiving apparatus needs to freely access a communication network (a broadband network). The broadcast receiving apparatus needs to present content received through a communication network (a broadband network). To this end, a broadcast receiving apparatus and a broadcast transmitting apparatus need to support a content transfer protocol for supporting both a broadcast network and a communication network (a broadband network). To this end, there has been proposed use of MPEG-dynamic adaptive streaming over HTTP (DASH), which is standard technology for adaptively transmitting media content and MPEG media transport (MMT), which is a transmission standard for effectively transmitting media content via an IP network by the broadcast transmitting apparatus and the broadcast receiving apparatus according to a network environment.

[Disclosure]

[Technical Problem]

An object of the present invention devised to solve the problem lies in a broadcast transmitting apparatus, a broadcast receiving apparatus, a method of operating a broadcast transmitting apparatus, and a method of operating a broadcast receiving apparatus, for providing transmission and presentation of media content through a communication network (a broadband network) and a broadcast network.

An object of the present invention devised to solve the problem lies in an optin/out method with respect to an application executed in a hybrid broadcast system by a user in an environment in which a terrestrial broadcast network and the Internet are available.

An object of the present invention devised to solve the problem lies in a method of supporting association between broadcast content and content transmitted through DASH in an environment in which next-generation hybrid broadcast using a terrestrial broadcast network and the Internet is supported.

[Technical Solution]

The object of the present invention can be achieved by providing a broadcast receiving apparatus including a broadcast receiver configured to receive a broadcast signal, a controller configured to acquire application signaling information for signaling an application included in a broadcast service, from the broadcast signal, and an app transceiver configured to transmit a trigger to a second screen device based on the application signaling information.

The application signaling information may include at least one of a trigger for performing a timing related signaling operation for supporting an interactive service, trigger position information indicating a position of the trigger, and triggering application information including the application and metadata about an event targeted to the application.

The app transceiver may transmit trigger transmission information for transmitting the trigger to the second screen device.

The trigger transmission information may include at least one of trigger information indicating attributes of the trigger, trigger list information including at least one trigger information item, trigger position information indicating a position of the trigger, and application identifier list information indicating a list of an application identifier.

The trigger information may include at least one of an application identifier for identifying the application, trigger type information indicating a type of the trigger, action information indicating an action of the application, event start time information indicating start time of the trigger, event termination time information indicating termination time of the trigger, data information including data related to the trigger, and/or data position information indicating a position of data related to the trigger.

The app transceiver may further transmit application notification information indicating attributes of application notification displayed on the second screen device.

The application notification information may include at least one of a targetDevice attribute indicating a device on which application notification is displayed, a topMargin attribute indicating a top margin of application notification, a rightMargin attribute indicating a right margin of application notification, a show attribute indicating a time at which application notification is first displayed, a lasting attribute indicating a lasting time for displaying application notification, an interval attribute indicating an interval time between application notifications, a message element indicating a notification message of application notification, and/or a logo element indicating a logo image of application notification.

In another aspect of the present invention, provided herein is a method of receiving broadcast, including receiving a broadcast signal, acquiring application signaling information for signaling an application included in a broadcast service, from the broadcast signal, and transmitting a trigger to a second screen device based on the application signaling information.

The application signaling information may include at least one of a trigger for performing a timing related signaling operation for supporting an interactive service, trigger position information indicating a position of the trigger, and triggering application information including the application and metadata about an event targeted to the application.

The transmitting may include transmitting trigger transmission information for transmitting the trigger to the second screen device.

The trigger transmission information may include at least one of trigger information indicating attributes of the trigger, trigger list information including at least one trigger information item, trigger position information indicating a position of the trigger, and application identifier list information indicating a list of an application identifier.

The trigger information may include at least one of an application identifier for identifying the application, trigger type information indicating a type of the trigger, action information indicating an action of the application, event start time information indicating start time of the trigger, event termination time information indicating termination time of the trigger, data information including data related to the trigger, and/or data position information indicating a position of data related to the trigger.

The transmitting may include further transmitting application notification information indicating attributes of application notification displayed on the second screen device.

The application notification information may include at least one of a targetDevice attribute indicating a device on which application notification is displayed, a topMargin attribute indicating a top margin of application notification, a rightMargin attribute indicating a right margin of application notification, a show attribute indicating a time at which application notification is first displayed, a lasting attribute indicating a lasting time for displaying application notification, an interval attribute indicating an interval time between application notifications, a message element indicating a notification message of application notification, and/or a logo element indicating a logo image of application notification.

[Advantageous Effects]

According to an embodiment of the present invention, provided are a broadcast transmitting apparatus, a broadcast receiving apparatus, a method of operating a broadcast transmitting apparatus, and a method of operating a broadcast receiving apparatus, for transmission and presentation of media content through a communication network (a broadband network) and a broadcast network.

According to an embodiment of the present invention, usability setting such as Optin/out may be achieved for each application using a PDI system for personalization in a hybrid broadcast system.

According to an embodiment of the present invention, when a receiver configures application notification and manages Optin/out, the receiver may transmit application notification information to a companion device.

According to an embodiment of the present invention, application signaling may be divided and transmitted for each application ID during transmission of the application signaling to a companion device.

According to an embodiment of the present invention, provided is a delivery method of interactive application signaling of a next-generation hybrid broadcast system.

According to an embodiment of the present invention, interactive application signaling received by a TV, i.e., a primary device may be transmitted to a second screen, that is, a companion device in a next-generation hybrid broadcast system.

[Description of Drawings]

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates a structure of an apparatus for transmitting broadcast signals for future broadcast services according to an embodiment of the present invention.

FIG. 2 illustrates an input formatting block according to one embodiment of the present invention.

FIG. 3 illustrates an input formatting block according to another embodiment of the present invention.

FIG. 4 illustrates a BICM block according to an embodiment of the present invention.

FIG. 5 illustrates a BICM block according to another embodiment of the present invention.

FIG. 6 illustrates a frame building block according to one embodiment of the present invention.

FIG. 7 illustrates an OFDM generation block according to an embodiment of the present invention.

FIG. 8 illustrates a structure of an apparatus for receiving broadcast signals for future broadcast services according to an embodiment of the present invention.

FIG. 9 illustrates a frame structure according to an embodiment of the present invention.

FIG. 10 illustrates a signaling hierarchy structure of the frame according to an embodiment of the present invention.

FIG. 11 illustrates preamble signaling data according to an embodiment of the present invention.

FIG. 12 illustrates PLS1 data according to an embodiment of the present invention.

FIG. 13 illustrates PLS2 data according to an embodiment of the present invention.

FIG. 14 illustrates PLS2 data according to another embodiment of the present invention.

FIG. 15 illustrates a logical structure of a frame according to an embodiment of the present invention.

FIG. 16 illustrates PLS mapping according to an embodiment of the present invention.

FIG. 17 illustrates EAC mapping according to an embodiment of the present invention.

FIG. 18 illustrates FIC mapping according to an embodiment of the present invention.

FIG. 19 illustrates an FEC structure according to an embodiment of the present invention.

FIG. 20 illustrates a time interleaving according to an embodiment of the present invention.

FIG. 21 illustrates the basic operation of a twisted row-column block interleaver according to an embodiment of the present invention.

FIG. 22 illustrates an operation of a twisted row-column block interleaver according to another embodiment of the present invention.

FIG. 23 illustrates a diagonal-wise reading pattern of a twisted row-column block interleaver according to an embodiment of the present invention.

FIG. 24 illustrates interlaved XFECBLOCKs from each interleaving array according to an embodiment of the present invention.

FIG. 25 illustrates the concept of a variable bit-rate system according to an embodiment of the present invention.

FIG. 26 illustrates writing and reading operations of block interleaving according to an embodiment of the present invention.

FIG. 27 shows equations representing block interleaving according to an embodiment of the present invention.

FIG. 28 illustrates virtual FEC blocks according to an embodiment of the present invention.

FIG. 29 shows equations representing reading operation after insertion of virtual FEC blocks according to an embodiment of the present invention.

FIG. 30 is a flowchart illustrating a time interleaving process according to an embodiment of the present invention.

FIG. 31 shows equations representing a process of determining a shift value and a maximum TI block size according to an embodiment of the present invention.

FIG. 32 illustrates writing operation according to an embodiment of the present invention.

FIG. 33 illustrates reading operation according to an embodiment of the present invention.

FIG. 34 illustrates a result of skip operation in reading operation according to an embodiment of the present invention.

FIG. 35 shows a writing process of time deinterleaving according to an embodiment of the present invention.

FIG. 36 illustrates a writing process of time deinterleaving according to another embodiment of the present invention.

FIG. 37 shows equations representing reading operation of time deinterleaving according to another embodiment of the present invention.

FIG. 38 is a flowchart illustrating a time deinterleaving process according to an embodiment of the present invention.

FIG. 39 illustrates signaling for single-memory deinterleaving irrespective of the number of symbols in a frame according to an embodiment of the present invention.

FIG. 40 illustrates FI schemes of FSS in signaling for single-memory deinterleaving irrespective of the number of symbols in a frame according to an embodiment of the present invention.

FIG. 41 illustrates operation of a reset mode in signaling for single-memory deinterleaving irrespective of the number of symbols in a frame according to an embodiment of the present invention.

FIG. 42 illustrates equations indicating input and output of the frequency interleaver in signaling for single-memory deinterleaving irrespective of the number of symbols in a frame according to an embodiment of the present invention.

FIG. 43 illustrates equations of a logical operation mechanism of frequency interleaving based on FI scheme #1 and FI scheme #2 in signaling for single-memory deinterleaving irrespective of the number of symbols in a frame according to an embodiment of the present invention.

FIG. 44 illustrates an example in which the number of symbols is an even number in signaling for single-memory deinterleaving irrespective of the number of symbols in a frame according to an embodiment of the present invention.

FIG. 45 illustrates an example in which the number of symbols is an even number in signaling for single-memory deinterleaving irrespective of the number of symbols in a frame according to an embodiment of the present invention.

FIG. 46 illustrates an example in which the number of symbols is an odd number in signaling for single-memory deinterleaving irrespective of the number of symbols in a frame according to an embodiment of the present invention.

FIG. 47 illustrates an example in which the number of symbols is an odd number in signaling for single-memory deinterleaving irrespective of the number of symbols in a frame according to an embodiment of the present invention.

FIG. 48 illustrates operation of the frequency deinterleaver in signaling for single-memory deinterleaving irrespective of the number of symbols in a frame according to an embodiment of the present invention.

FIG. 49 is a block diagram illustrating a structure of a media content transceiving system according to an embodiment of the present invention.

FIG. 50 illustrates a structure of a media content transceiving system through a communication network (a broadband network) according to an embodiment of the present invention.

FIG. 51 illustrates a structure of media presentation description (MPD) according to an embodiment of the present invention.

FIG. 52 illustrates XML syntax according to an embodiment of the present invention.

FIG. 53 illustrates XML syntax of a period element of MPD according to an embodiment of the present invention.

FIG. 54 is a flowchart of an operation for receiving media content through an IP network by a broadcast receiving apparatus according to an embodiment of the present invention.

FIG. 55 illustrates the syntax of a bit stream when MPD is transmitted in the form of an MPD information table according to an embodiment of the present invention.

FIG. 56 is a flowchart illustrating an operation for extracting MPD based on aninformation table including MPD by a broadcast receiving apparatus according to an embodiment of the present invention.

FIG. 57 illustrates an MPD link table including MPD link according to an embodiment of the present invention.

FIG. 58 is a flowchart of an operation for receiving MPD based on a media content presentation information table including media content presentation information link by a broadcast receiving apparatus according to an embodiment of the present invention.

FIG. 59 illustrates the case in which MPD or an MPD information table is transmitted in IP datagram according to an embodiment of the present invention.

FIG. 60 illustrates the syntax of IP datagram when MPD or an MPD information table is transmitted in the IP datagram according to an embodiment of the present invention.

FIG. 61 illustrates the syntax of an MPD payload included in IP datagram when MPD or an MPD information table is transmitted in the IP datagram according to an embodiment of the present invention.

FIG. 62 is a flowchart of an operation for extracting media content presentation information or a media content presentation information table based on IP datagram including the media content presentation information or the media content presentation information table by a broadcast receiving apparatus according to an embodiment of the present invention.

FIG. 63 illustrates the syntax of MPD descriptor for transmitting MPD according to an embodiment of the present invention.

FIG. 64 illustrates the syntax of MPD bootstrap_data when MPD descriptor directly includes an MPD.

FIG. 65 illustrates the syntax of MPD bootstrap_data when the MPD descriptor includes an address of a link for storing the MPD, the MPD information table, or the MPD link table.

FIG. 66 illustrates the syntax of MPD bootstrap_data when the MPD descriptor includes an identifier of a data packet including MPD.

FIG. 67 illustrates the syntax of MPD bootstrap_data when MPD descriptor includes an identifier of a separate broadcast stream including MPD.

FIG. 68 illustrates the syntax of MPD bootstrap_data when MPD descriptor includes information on IP datagram including MPD, an MPD information table, or an MPD link information table.

FIG. 69 illustrates the syntax of MPD bootstrap_data when the MPD descriptor includes information on a transmission protocol session based on a session such as FLUTE or ALC/LCT for transmitting the MPD.

FIG. 70 is a flowchart of an operation for receiving media content presentation information by a broadcast receiving apparatus when a method of transmitting media content presentation information is transmitted in the broadcast information signaling information table.

FIG. 71 is a flowchart for explanation of a method of presenting media content by a broadcast receiving apparatus based on whether transmission of a broadcast stream is stable when broadcast content is transmitted through an IP network as well as a broadcast network.

FIG. 72 illustrates the syntax of a broadcast stream packet including synchronization information of media content transmitted through an IP network according to the MPEG-DASH standard.

FIG. 73 illustrates the syntax of synchronization information included in a header of a packet including broadcast content such as video and audio according to an embodiment of the present invention.

FIG. 74 illustrates the syntax of synchronization information included in a header of a packet including broadcast content such as video and audio according to another embodiment of the present invention.

FIG. 75 is a flowchart illustrating an operation of synchronization between broadcast content and media content by a broadcast receiving apparatus according to an embodiment of the present invention.

FIG. 76 illustrates format of information for identifying broadcast content included in media content presentation information when broadcast content is transmitted according to the ATSC standard.

FIG. 77 illustrates an example of MPD of MPEG-DASH including information for identifying broadcast content transmitted according to the ATSC standard.

FIG. 78 is a flowchart illustrating an operation for receiving broadcast content by a broadcast receiving apparatus based on media content presentation information.

FIG. 79 is a block diagram illustrating reception of MPD of MPEG-DASH through a broadcast network for transmitting a broadcast stream by a broadcast receiving apparatus according to the MPEG-2 TS standard.

FIG. 80 is a block diagram illustrating synchronization between broadcast content of a broadcast stream transmitted according to the MPEG-2 TS standard and media content transmitted through a communication network by a broadcast receiving apparatus.

FIG. 81 illustrates a structure of a broadcast receiving apparatus according to an embodiment of the present invention.

FIG. 82 illustrates a structure of a broadcast receiving apparatus according to another embodiment of the present invention.

FIG. 83 illustrates a structure of a broadcast receiving apparatus according to another embodiment of the present invention.

FIG. 84 is a flowchart illustrating an operation for scanning a broadcast service and generating a channel map by a broadcast receiving apparatus.

FIG. 85 is a flowchart illustrating an operation for receiving a broadcast signal by a broadcast receiving apparatus.

FIG. 86 is a flowchart illustrating an operation for acquiring a media component by a broadcast receiving apparatus based on media content presentation information.

FIG. 87 illustrates a broadcast transport frame according to an embodiment of the present invention.

FIG. 88 illustrates a broadcast transport frame according to another embodiment of the present invention.

FIG. 89 illustrates configuration of a service signaling message according to an embodiment of the present invention.

FIG. 90 illustrates a configuration of a broadcast service signaling message in a next-generation broadcast system according to an embodiment of the present invention.

FIG. 91 shows meaning of values of time base_transport_mode field and signaling_transport_mode field in a service signaling message according to an embodiment of the present invention.

FIG. 92 illustrates the syntax of bootstrap() field according to values of time base_transport_mode field and signaling_transport_mode field according to an embodiment of the present invention.

FIG. 93 illustrates the syntax of bootstrap() field according to values of time base_transport_mode field and signaling_transport_mode field according to an embodiment of the present invention.

FIG. 94 illustrates the syntax of bootstrap() field according to values of time base_transport_mode field and signaling_transport_mode field according to an embodiment of the present invention.

FIG. 95 illustrates the syntax of bootstrap() field according to values of time base_transport_mode field and signaling_transport_mode field according to an embodiment of the present invention.

FIG. 96 illustrates the syntax of bootstrap() field according to values of time base_transport_mode field and signaling_transport_mode field according to an embodiment of the present invention.

FIG. 97 illustrates the syntax of bootstrap() field according to values of time base_transport_mode field and signaling_transport_mode field according to an embodiment of the present invention.

FIG. 98 illustrates the syntax of bootstrap() field according to values of time base_transport_mode field and signaling_transport_mode field according to an embodiment of the present invention.

FIG. 99 illustrates a procedure of acquiring time base and a service signaling message in the embodiment of FIGs. 90 to 98.

FIG. 100 illustrates a configuration of a broadcast service signaling message in a next-generation broadcast system according to an embodiment of the present invention.

FIG. 101 illustrates a configuration of a broadcast service signaling message in a next-generation broadcast system according to an embodiment of the present invention.

FIG. 102 illustrates the meaning of a value of each transmission mode described with reference to FIG. 101.

FIG. 103 illustrates a configuration of a signaling message for signaling a component data acquisition path of a broadcast service in a next-generation broadcast system.

FIG. 104 illustrates the syntax of app_delevery_info() field according to an embodiment of the present invention.

FIG. 105 illustrates the syntax of app_delevery_info() field according to another embodiment of the present invention.

FIG. 106 illustrates component location signaling including path information for acquisition of one or more component data items included in the broadcast service.

FIG. 107 illustrates a configuration of the component location signaling of FIG. 106.

FIG. 108 is a flowchart illustrating an operation of a broadcast receiving apparatus according to an embodiment of the present invention.

FIG. 109 is a flowchart illustrating an operation of a broadcast transmitting apparatus according to an embodiment of the present invention.

FIG. 110 is a block diagram illustrating a structure of a media content transceiving system according to an embodiment of the present invention.

FIG. 111 illustrates service types and component types of the service types according to an embodiment of the present invention.

FIG. 112 illustrates a relationship between an NRT content item and an NRT file according to an embodiment of the present invention.

FIG. 113 is a table showing attributes according to a service type and a component type according to an embodiment of the present invention.

FIG. 114 is another table showing attributes according to a service type and a component type, according to an embodiment of the present invention.

FIG. 115 is another table showing attribute according to a service type and a component type, according to an embodiment of the present invention.

FIG. 116 is another table showing attribute according to a service type and a component type, according to an embodiment of the present invention.

FIG. 117 is a diagram illustrating definition of a content item and on-demand content according to an embodiment of the present invention.

FIG. 118 is a diagram illustrating an example of a complex audio component according to an embodiment of the present invention.

FIG. 119 illustrates a trigger according to the aforementioned trigger syntax.

FIG. 120 illustrates attribute information related to an application according to an embodiment of the present invention.

FIG. 121 illustrates the syntax of triggering application information according to an embodiment of the present invention.

FIG. 122 illustrates XML format of triggering application information according to an embodiment of the present invention.

FIG. 123 illustrates the syntax of an event stream element including MPD according to an embodiment of the present invention.

FIG. 124 illustrates the syntax of an event element of an event stream element included in the MPD according to an embodiment of the present invention.

FIG. 125 illustrates the syntax of an event message box for inband event signaling according to an embodiment of the present invention.

FIG. 126 illustrating a matching relationship of trigger attribute, the MPD element, and the event message box, for signaling trigger type information, according to an embodiment of the present invention.

FIG. 127 illustrates trigger type information according to an embodiment of the present invention.

FIG. 128 illustrates the syntax of triggering application information according to an embodiment of the present invention.

FIG. 129 illustrates a matching relationship of trigger attribute, the MPD element, and the event message box, for signaling a position of information on a triggered application, according to an embodiment of the present invention.

FIG. 130 illustrates a matching relationship of trigger attribute, the MPD element, and the event message box, for signaling a status of an application, according to an embodiment of the present invention.

FIG. 131 is a matching relationship of trigger attribute, an MPD element, and an event message box, for signaling an action of an application, according to an embodiment of the present invention.

FIG. 132 is a matching relationship of trigger attribute, an MPD element, and an event message box, for signaling media time, according to an embodiment of the present invention.

FIG. 133 illustrates definition of value attribute for signaling all trigger attributes as one event according to an embodiment of the present invention.

FIG. 134 illustrates a matching relationship of identifier attribute and message attribute of an event element, an identifier field of an event message box, and a message data field, for signaling all trigger attributes as one event, according to an embodiment of the present invention.

FIG. 135 illustrates a configuration of a package of an MMT protocol according to an embodiment of the present invention.

FIG. 136 illustrates a configuration of an MMTP packet and a type of data included in the MMTP packet according to an embodiment of the present invention.

FIG. 137 illustrates the syntax of an MMTP payload header when an MMTP packet includes a fragment of MPU according to an embodiment of the present invention.

FIG. 138 illustrates synchronization of a trigger transmitted through content and MPU according to an embodiment of the present invention.

FIG. 139 illustrates the syntax of an MMT signaling message according to another embodiment of the present invention.

FIG. 140 illustrates a relationship between an identifier for identifying an MMT signaling message and data signaled by the MMT signaling message according to an embodiment of the present invention.

FIG. 141 illustrates the syntax of a signaling message including application signaling information according to another embodiment of the present invention.

FIG. 142 illustrates the syntax of an application signaling table including application signaling information according to another embodiment of the present invention.

FIG. 143 illustrates a relationship of trigger type information included in an application signaling table and trigger attribute included in a trigger according to another embodiment of the present invention.

FIG. 144 illustrates a relationship of a value of an identifier for identifying an MMT signaling message and data signaled by an MMT signaling message according to another embodiment of the present invention.

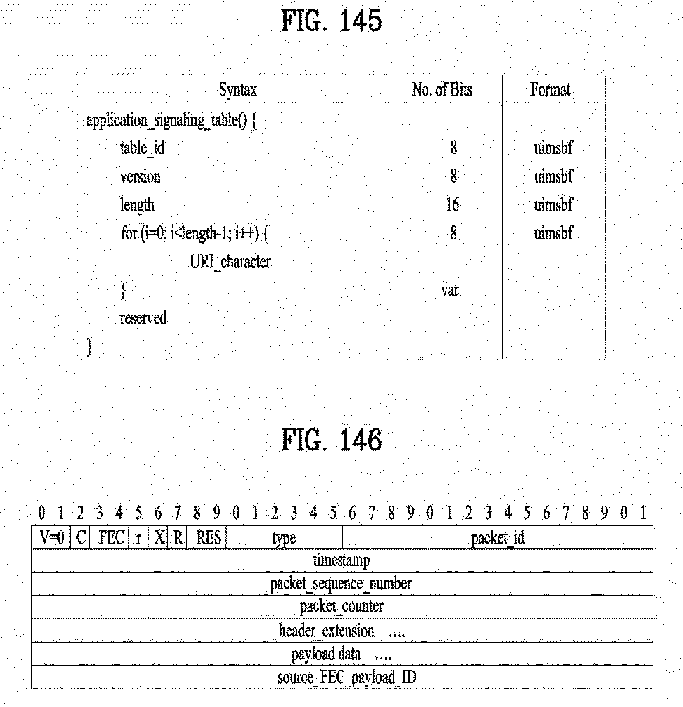

In the embodiment of FIG. 145, the application signaling table does not include trigger type information unlike the aforementioned application signaling table.

FIG. 146 illustrates a configuration of an MMTP packet according to another embodiment of the present invention.

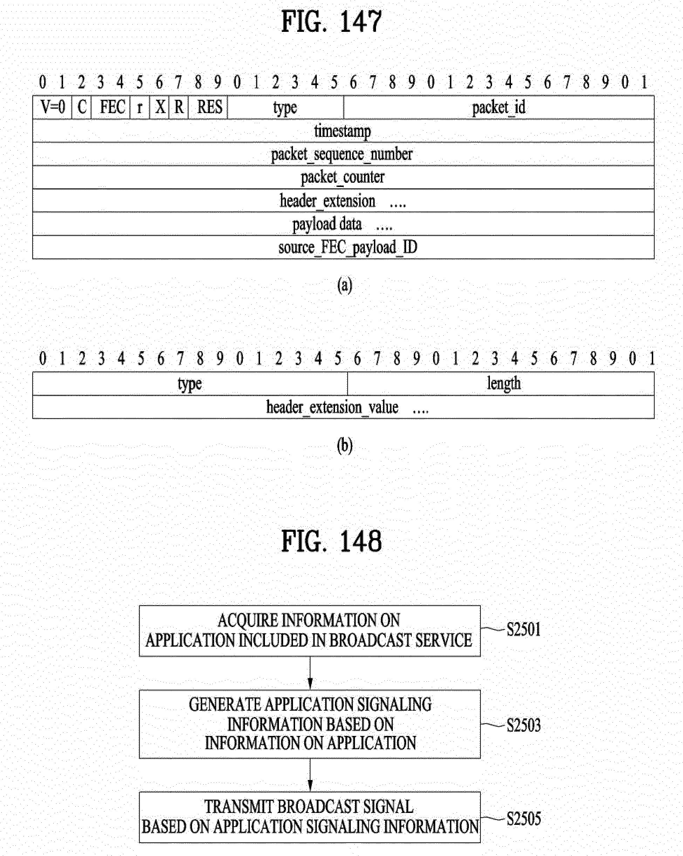

FIG. 147 illustrates the syntax of a header extension field for transmitting application signaling information and a configuration of an MMTP packet according to another embodiment of the present invention.

FIG. 148 illustrates transmission of a broadcast signal based on application signaling information by a broadcast transmitting apparatus according to embodiments of the present invention.

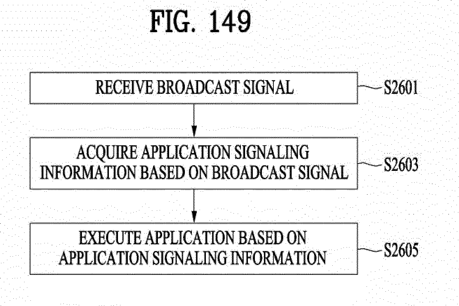

FIG. 149 illustrates acquisition of application signaling information based on a broadcast signal by a broadcast receiving apparatus according to embodiments of the present invention.

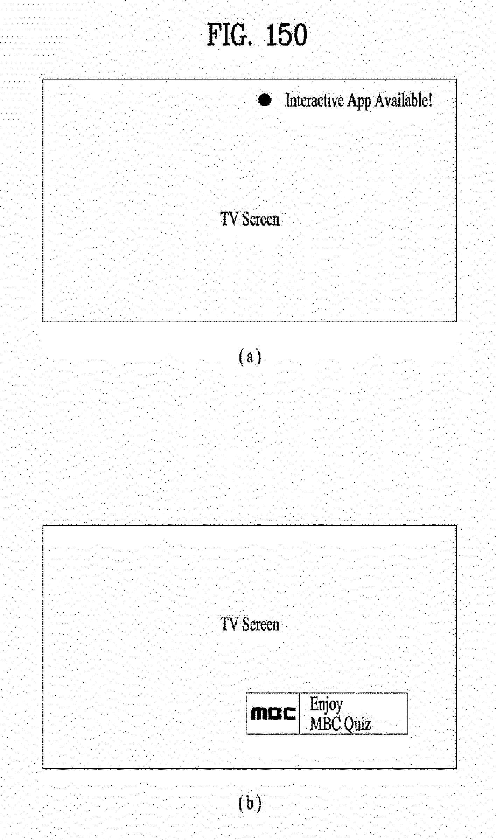

FIG. 150 is a view showing notification for entry into a synchronized application according to an embodiment of the present invention.

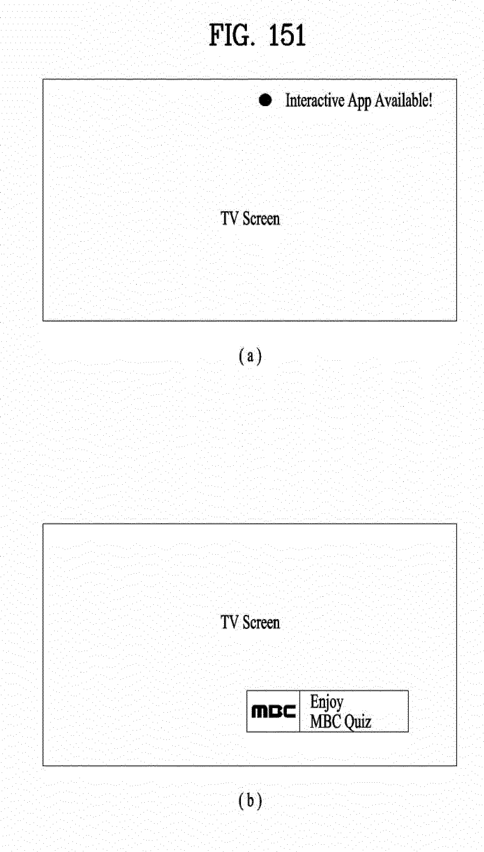

FIG. 151 illustrates notification for entrance into a synchronized application according to an embodiment of the present invention.

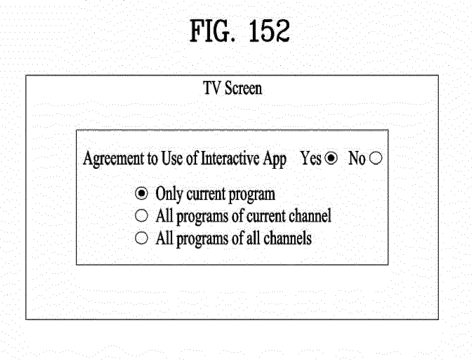

FIG. 152 is a view showing a user interface for interlocking synchronized application notification and a user agreement interface according to an embodiment of the present invention.

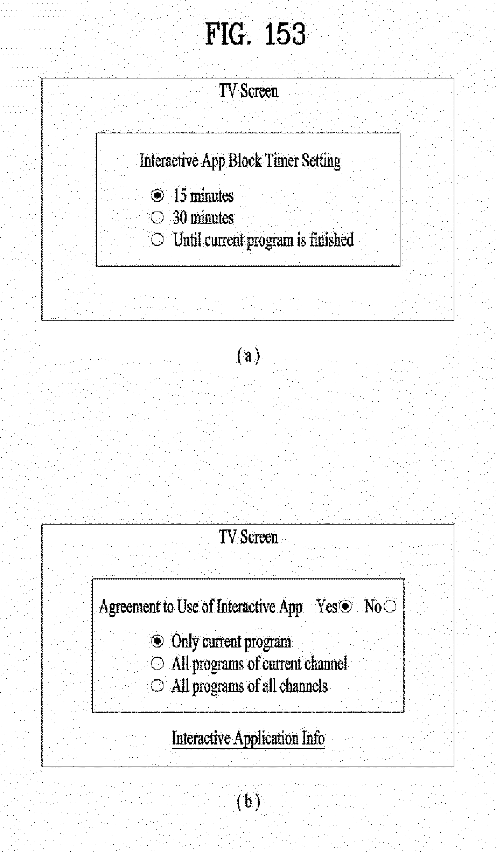

FIG. 153 is a view showing a user interface for agreement to the use of an application according to another embodiment of the present invention.

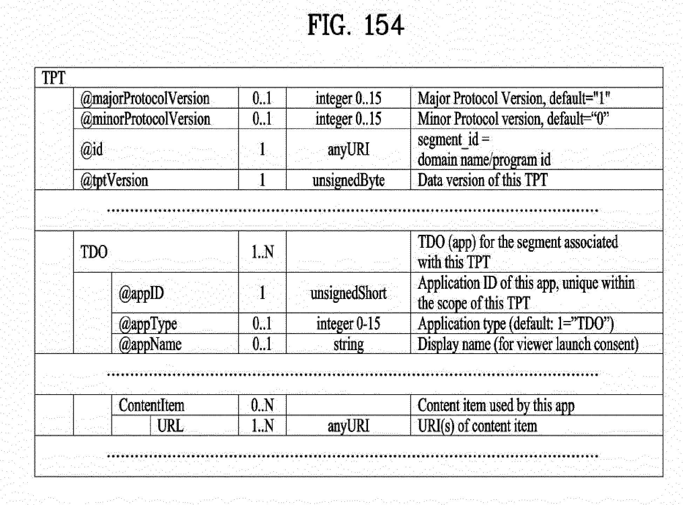

FIG. 154 is a view showing a portion of a TDO parameter table (TPT) (or a TDO parameter element) according to an embodiment of the present invention.

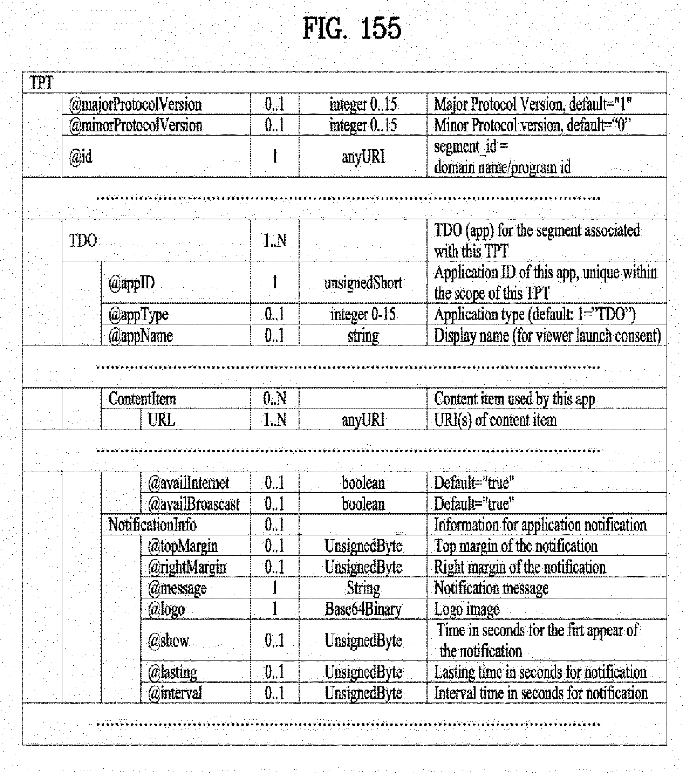

FIG. 155 is a view showing a portion of a TDO parameter table (TPT) (or a TDO parameter element) according to another embodiment of the present invention.

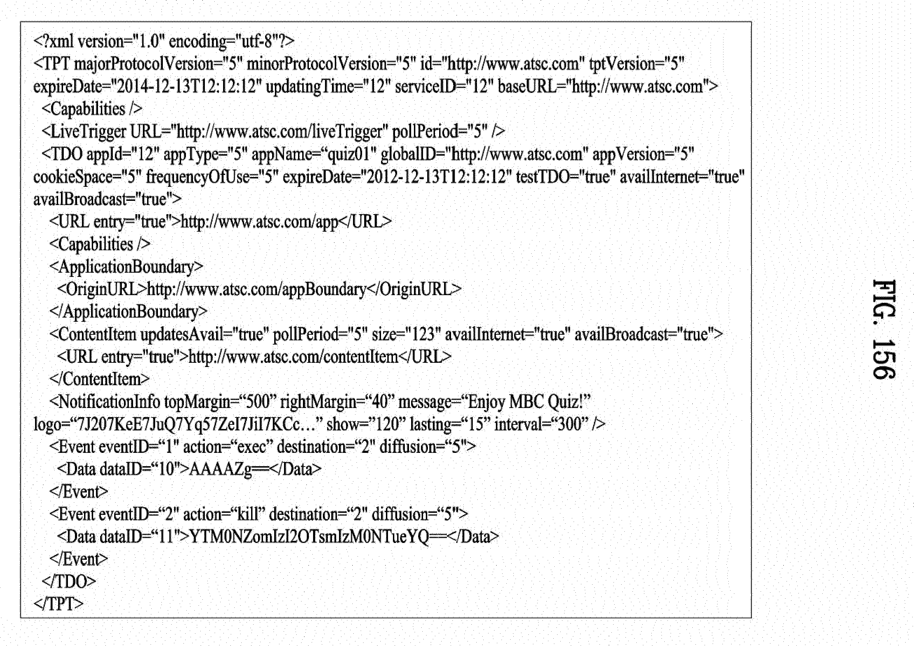

FIG. 156 is a diagram illustrating an embodiment of XML format of TPT according to another embodiment of the present invention.

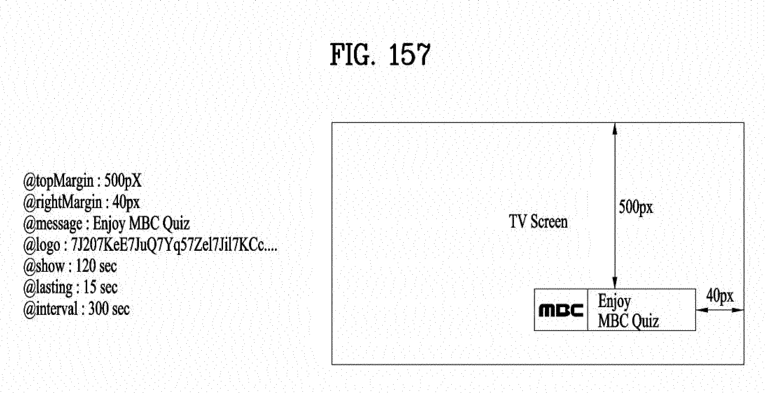

FIG. 157 is a view showing a screen on which notification of a synchronized application is expressed using information of a NotificationInfo element according to an embodiment of the present invention.

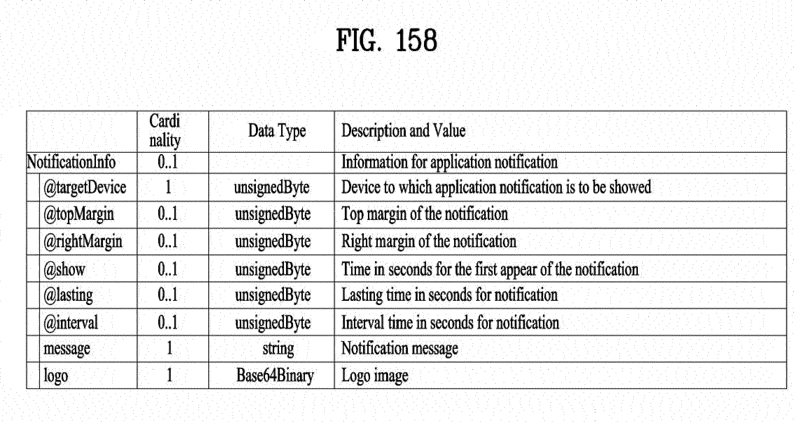

FIG. 158 illustrates application notification information according to an embodiment of the present invention.

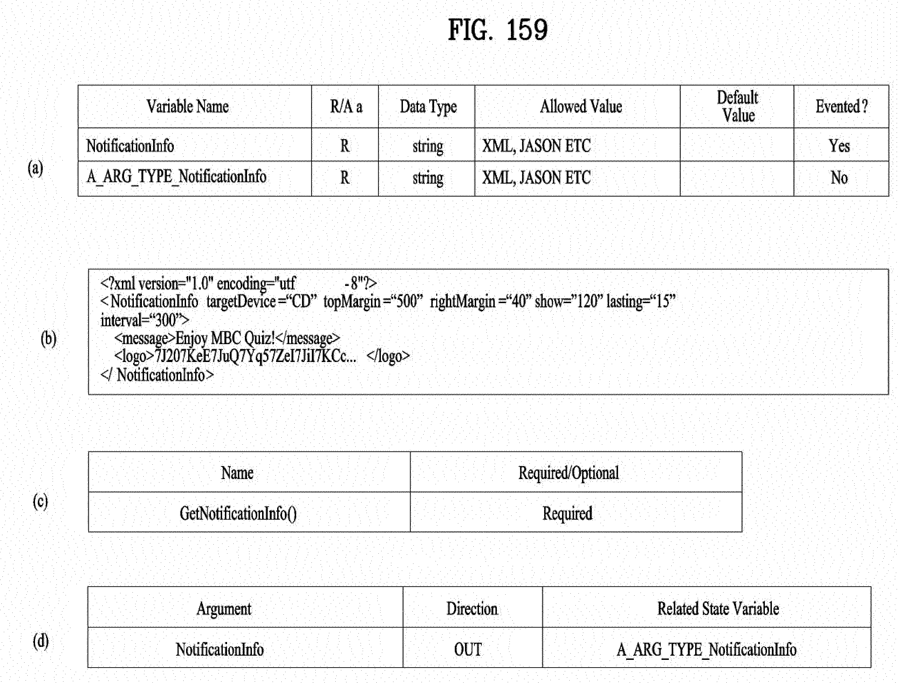

FIG. 159 is a diagram illustrating a state variable for application notification according to an embodiment of the present invention.

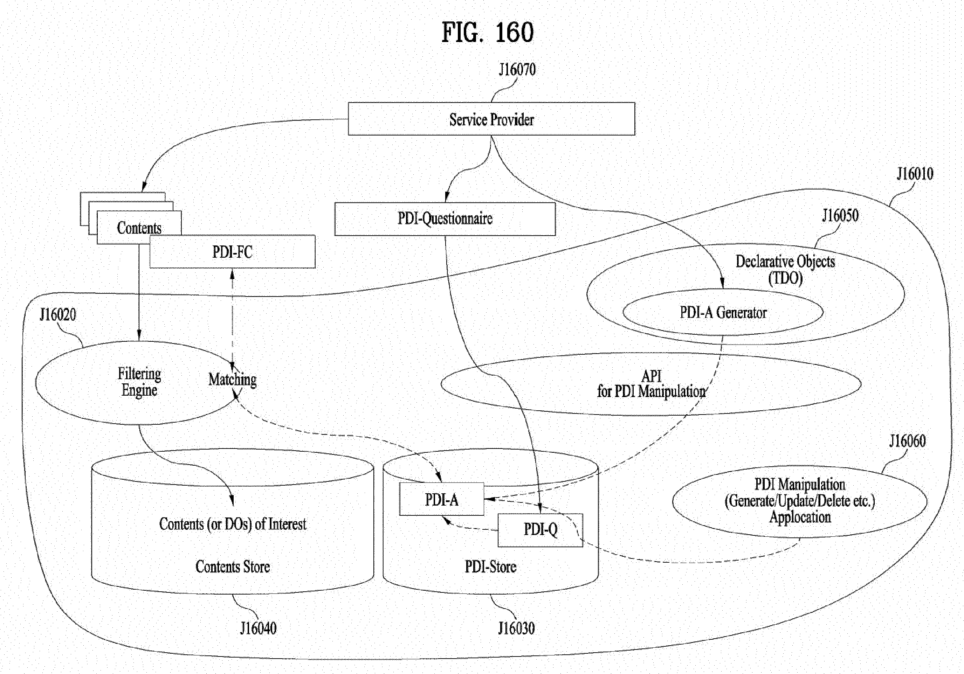

FIG. 160 is a view showing a procedure for broadcast personalization according to an embodiment of the present invention.

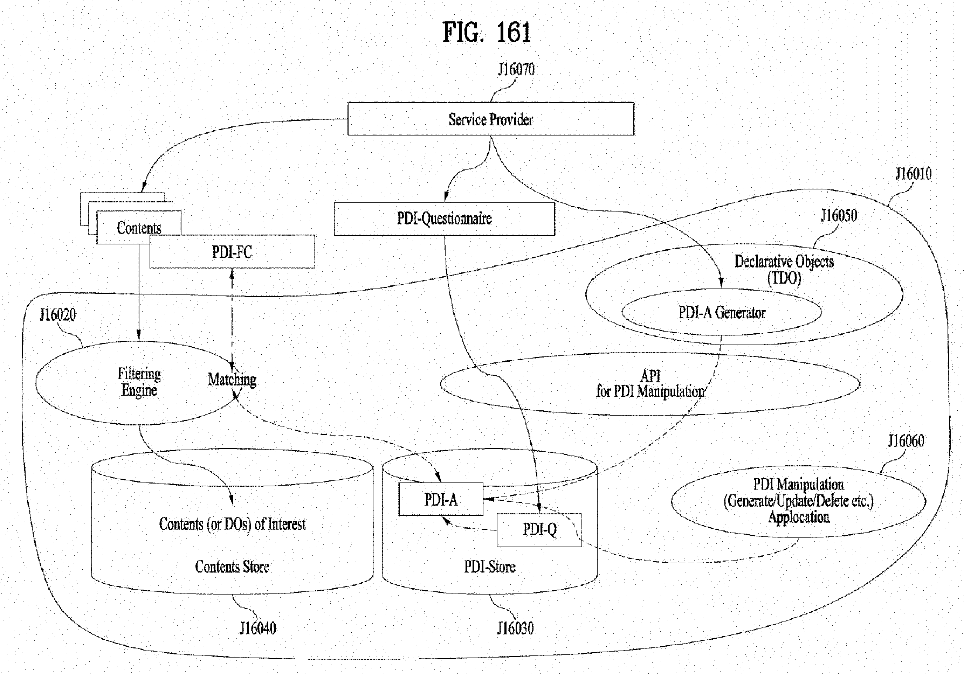

FIG. 161 is a diagram illustrating a procedure of personalization of broadcast according to an embodiment of the present invention.

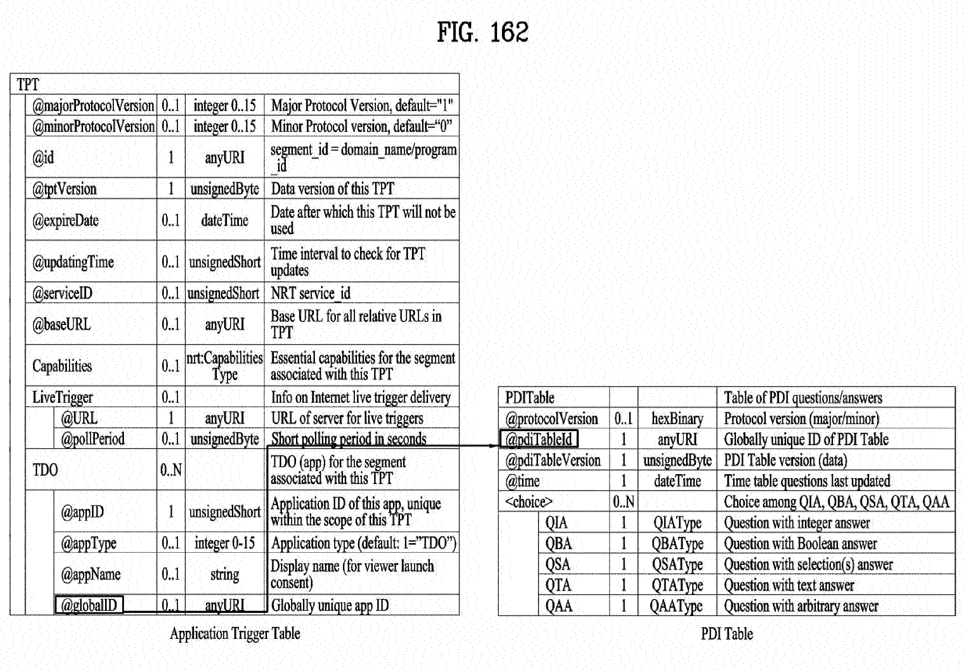

FIG. 162 is a view showing a signaling structure for user setting per application according to an embodiment of the present invention.

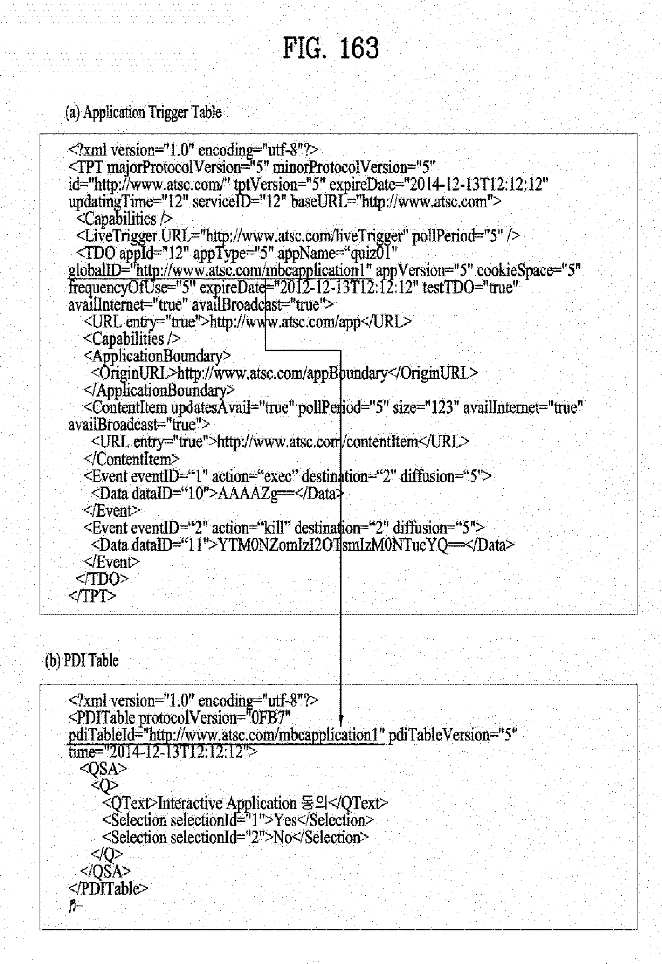

FIG. 163 illustrates XML format for user setting for each application according to an embodiment of the present invention.

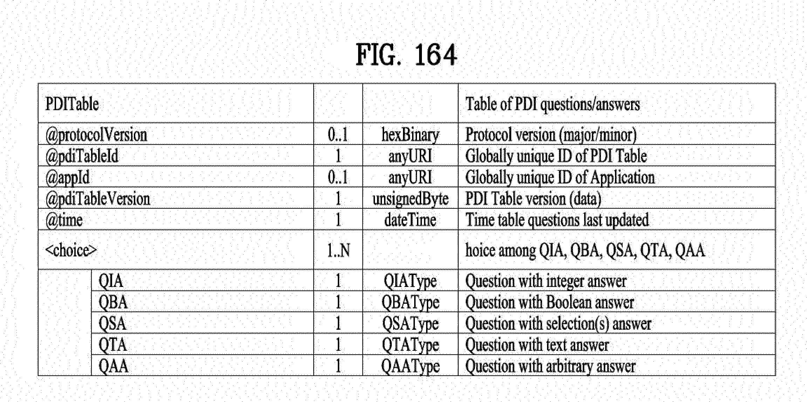

FIG. 164 is a view showing a signaling structure for user setting per application according to another embodiment of the present invention.

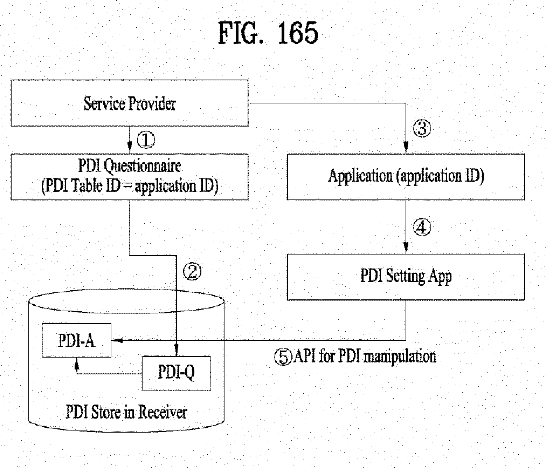

FIG. 165 is a view showing a procedure for opt-in/out setting of an application using a PDI table according to an embodiment of the present invention.

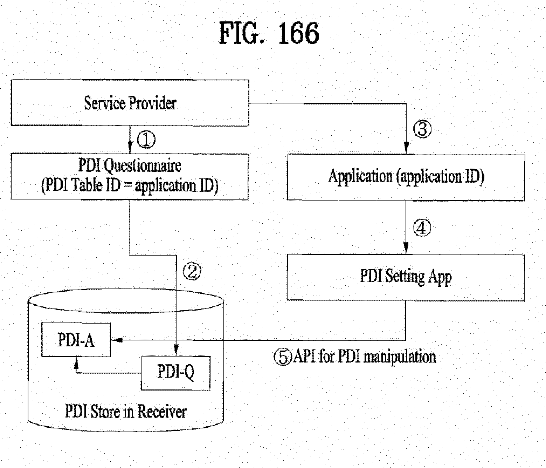

FIG. 166 illustrates a procedure of setting Opt-in/out of an application using a PDI table according to an embodiment of the present invention.

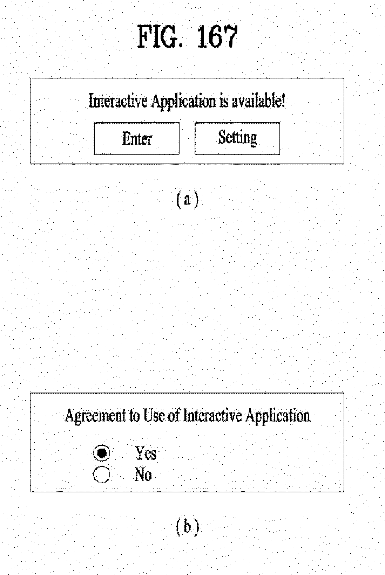

FIG. 167 is a view showing a user interface (UI) for opt-in/out setting of an application according to an embodiment of the present invention.

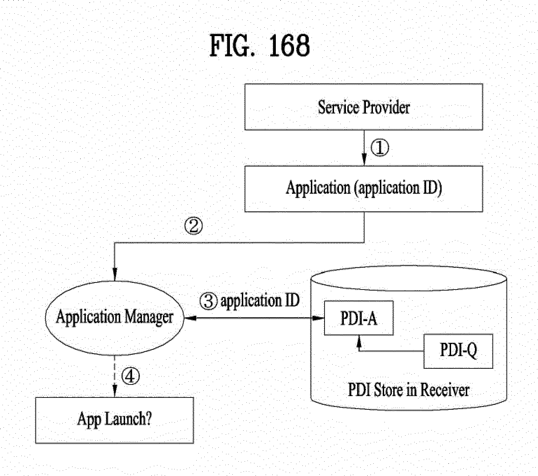

FIG. 168 is a view showing a processing procedure in a case in which a receiver (TV) receives a trigger of an application having the same application ID from a service provider after completing opt-in/out setting of an application using a PDI table according to an embodiment of the present invention.

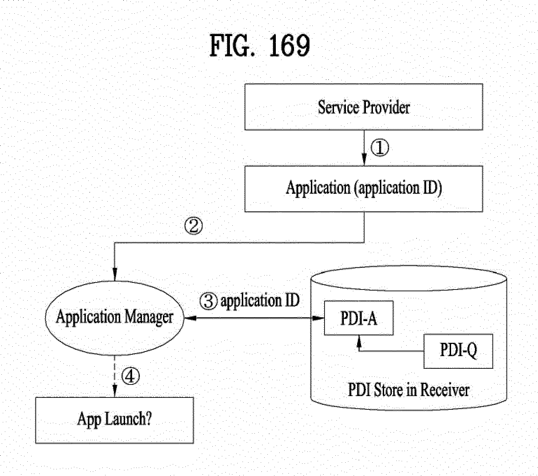

FIG. 169 illustrates a processing procedure when Opt-in/out setting of an application is completed using a PDI table and then a receiver (TV) receives a trigger of an application with the same application ID from a service provider according to an embodiment of the present invention.

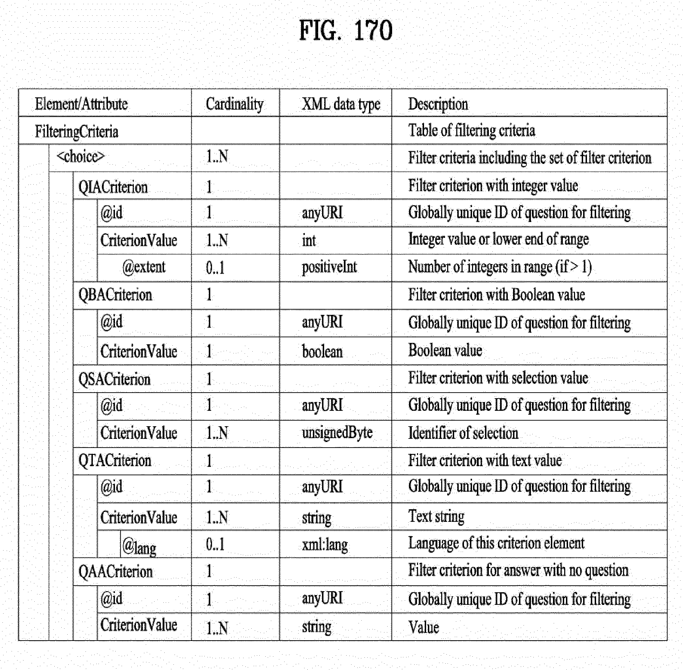

FIG. 170 illustrates data format of filtering criteria according to an embodiment of the present invention.

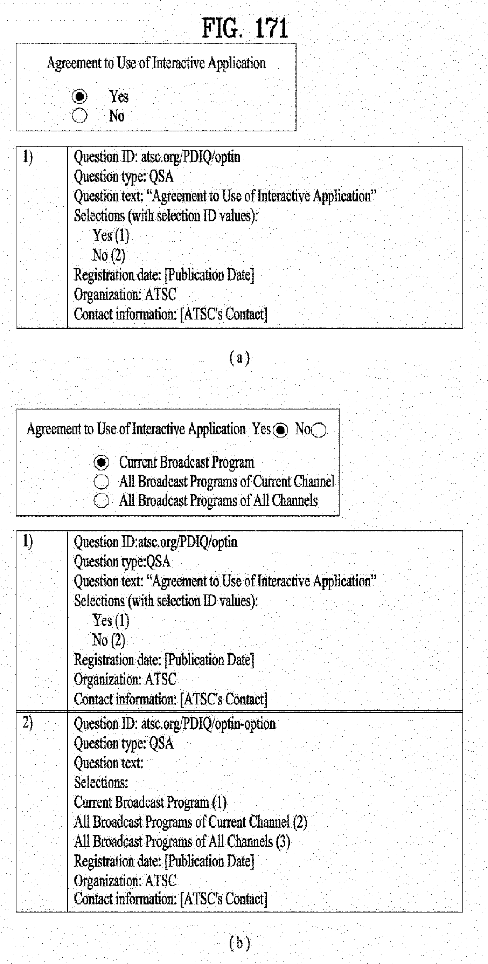

FIG. 171 is a view showing an UI for setting an option of an application per user and a question thereto according to an embodiment of the present invention.

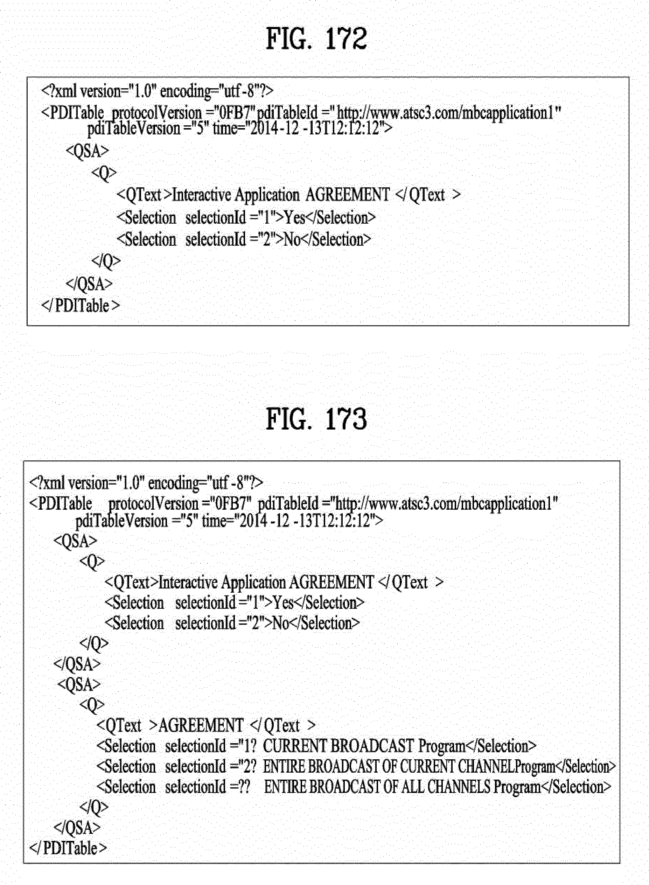

FIG. 172 illustrates XML data format of a PDI Table according to an embodiment of the present invention.

FIG. 173 illustrates XML data format of a PDI Table according to an embodiment of the present invention.

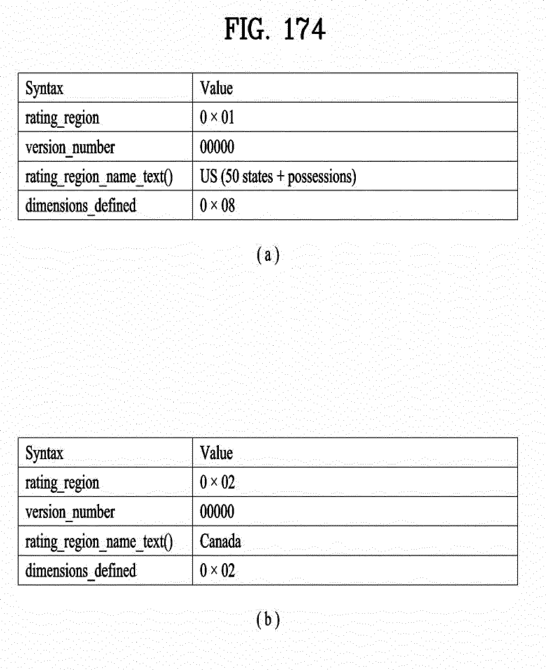

FIG. 174 is a view showing a Rated_dimension element in a ContentAdvisoryInfo element according to an embodiment of the present invention.

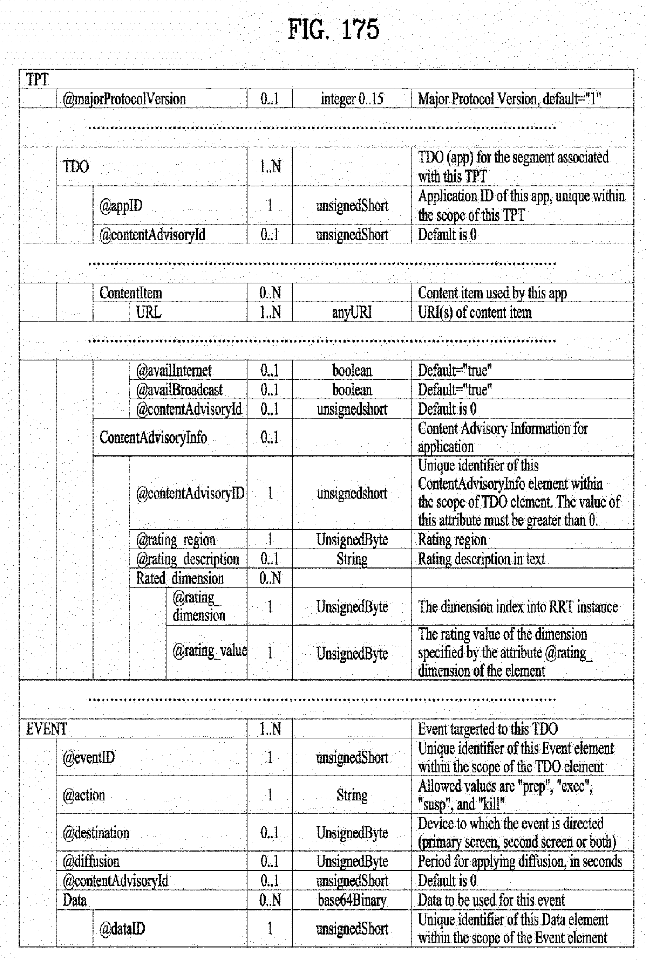

FIG. 175 is a view showing a TPT including content advisory information (ContentAdvisoryInfo element) according to an embodiment of the present invention.

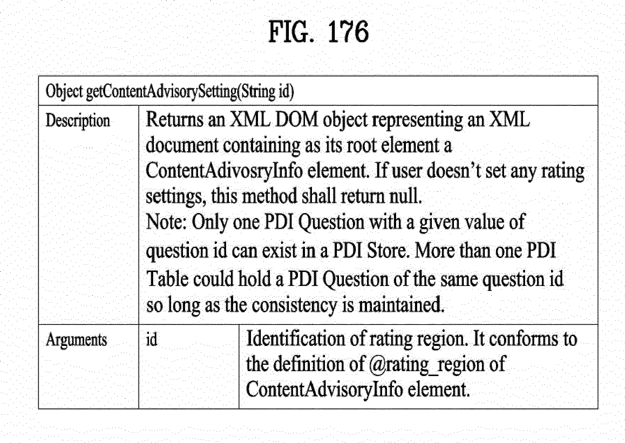

FIG. 176 is a view showing an application programming interface (API) for acquiring a rating value according to an embodiment of the present invention.

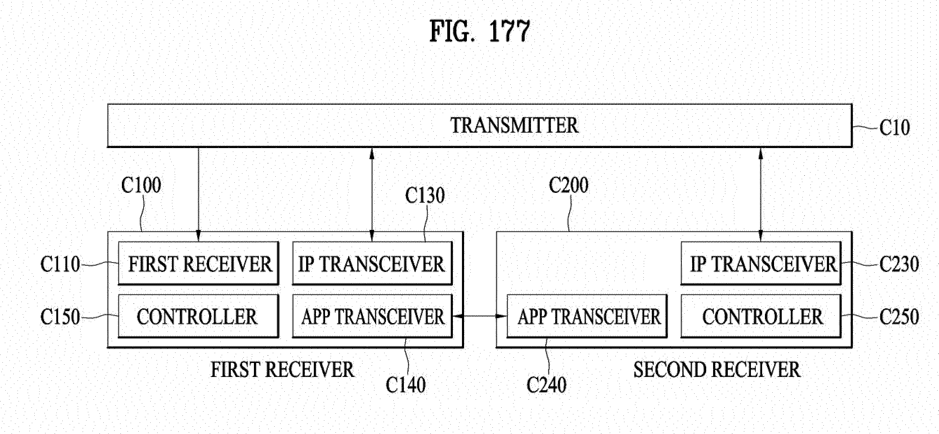

FIG. 177 is a diagram illustrating a structure of a transceiving system according to an embodiment of the present invention.

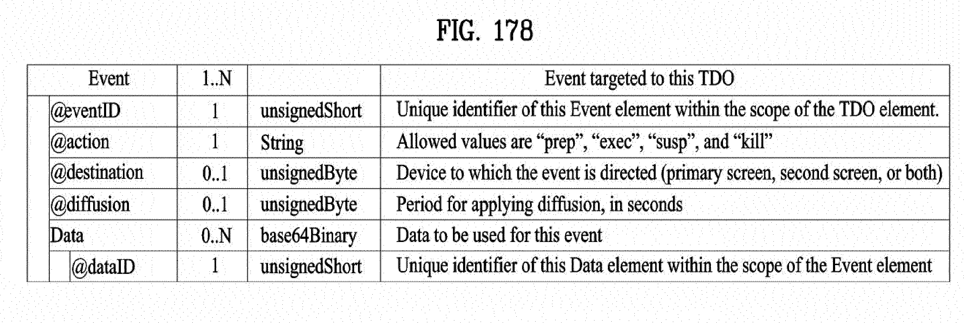

FIG. 178 is a diagram illustrating event information according to an embodiment of the present invention.

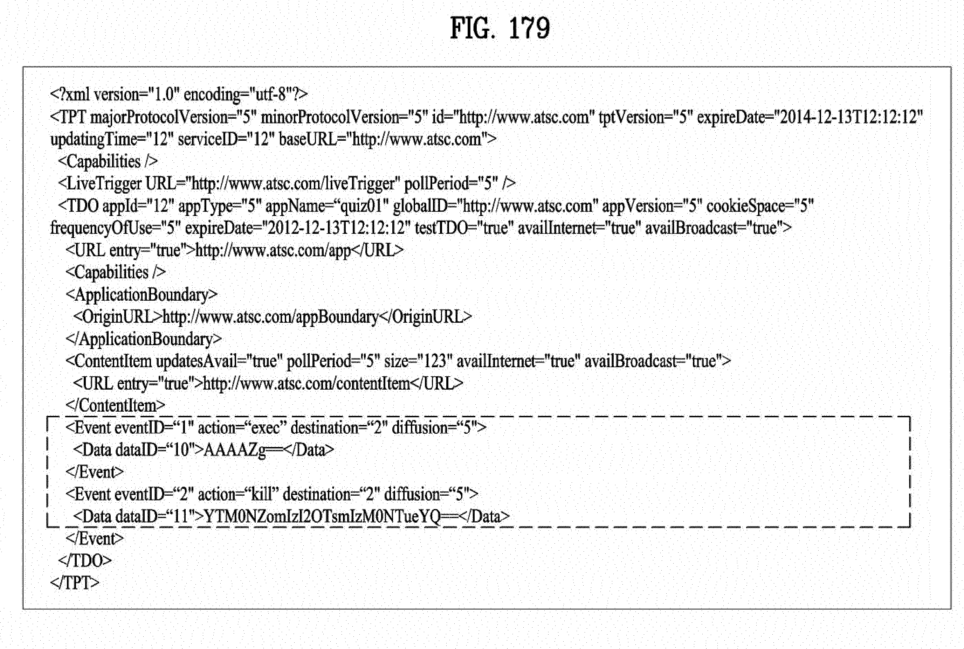

FIG. 179 is a diagram illustrating XML format of event information according to an embodiment of the present invention.

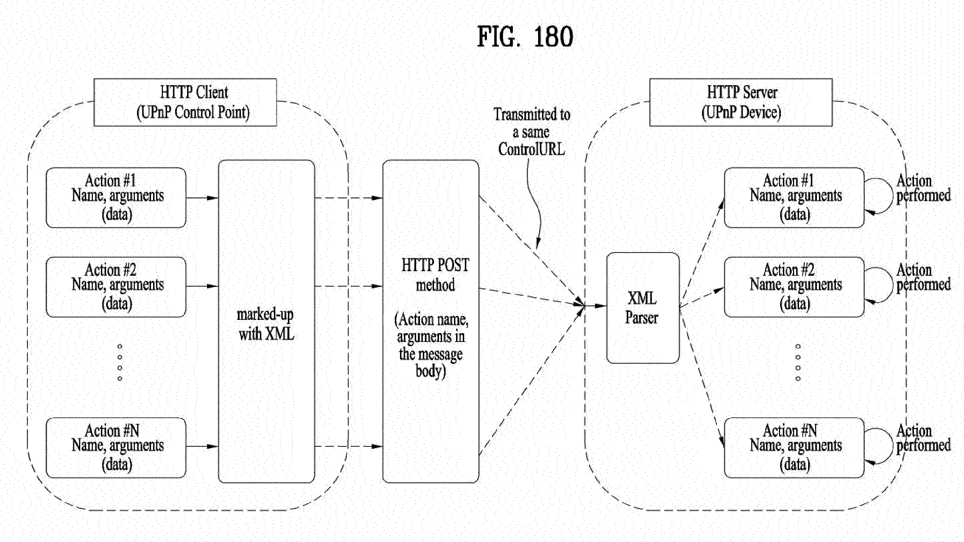

FIG. 180 is a diagram illustrating UPnP Action Mechanism according to an embodiment of the present invention.

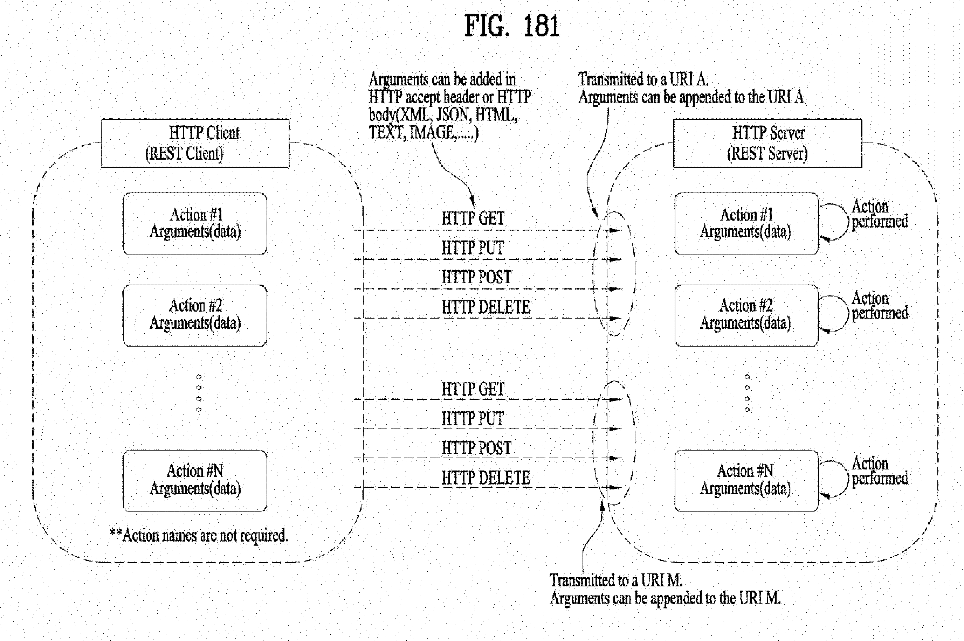

FIG. 181 is a diagram illustrating a REST mechanism according to an embodiment of the present invention.

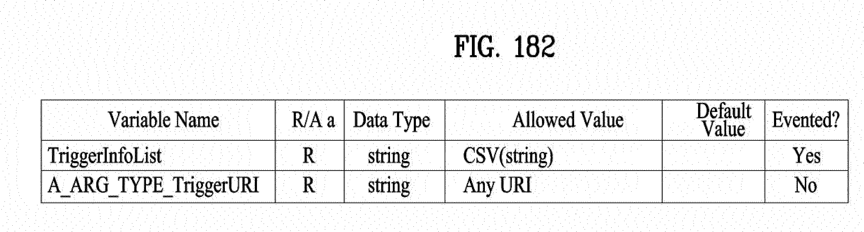

FIG. 182 is a diagram illustrating state variables for transmitting a trigger according to an embodiment of the present invention.

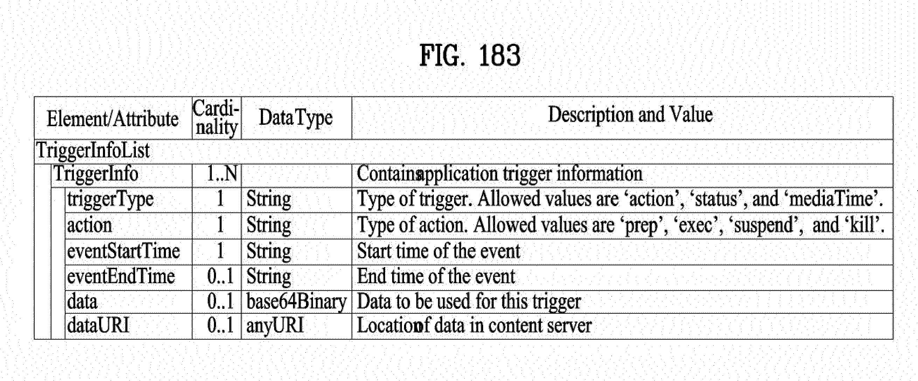

FIG. 183 is a diagram illustrating trigger list information according to an embodiment of the present invention.

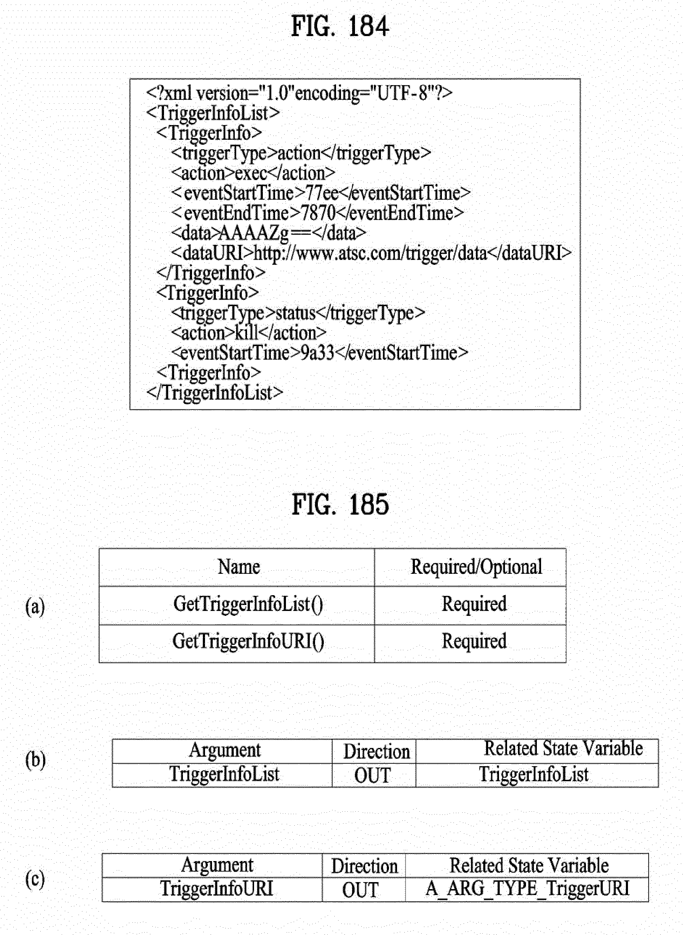

FIG. 184 is a diagram illustrating XML format of trigger list information according to an embodiment of the present invention.

FIG. 185 is a diagram illustrating trigger transmission information according to an embodiment of the present invention.

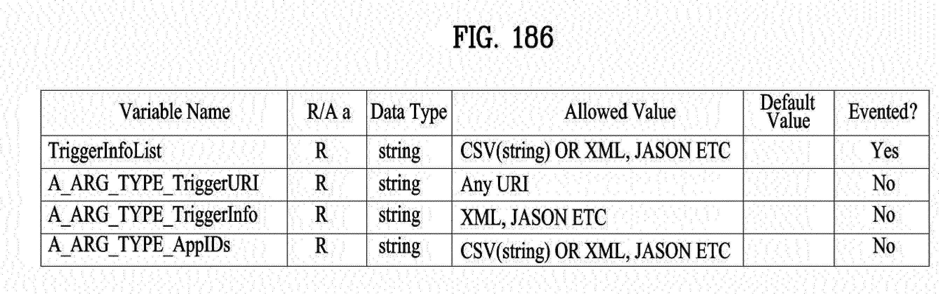

FIG. 186 is a diagram illustrating trigger transmission information according to an embodiment of the present invention.

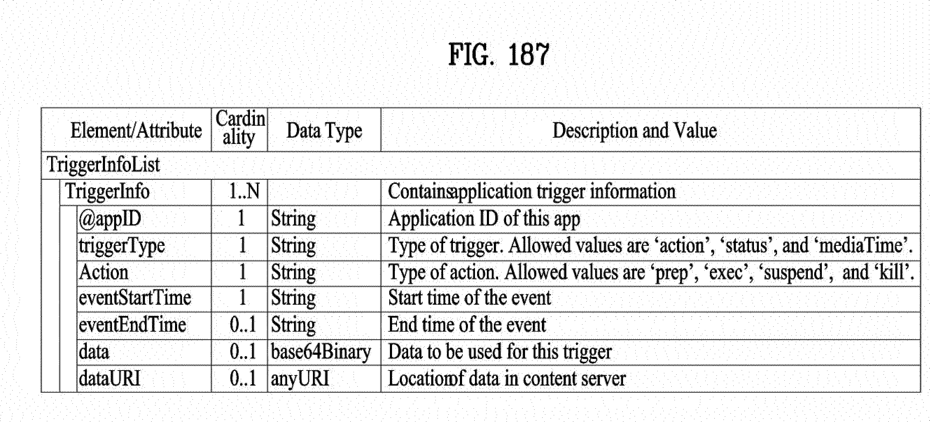

FIG. 187 is a diagram illustrating trigger list information according to an embodiment of the present invention.

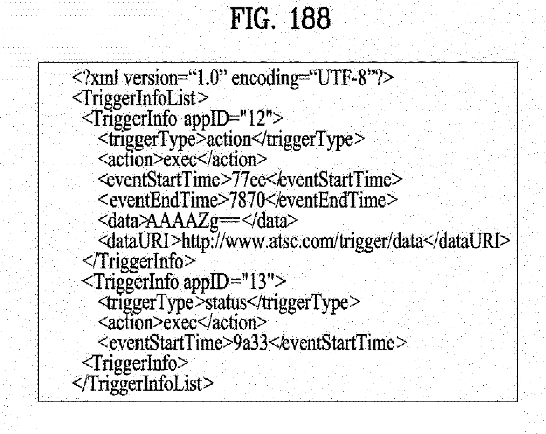

FIG. 188 is a diagram illustrating 의 XML data format of trigger list information according to an embodiment of the present invention.

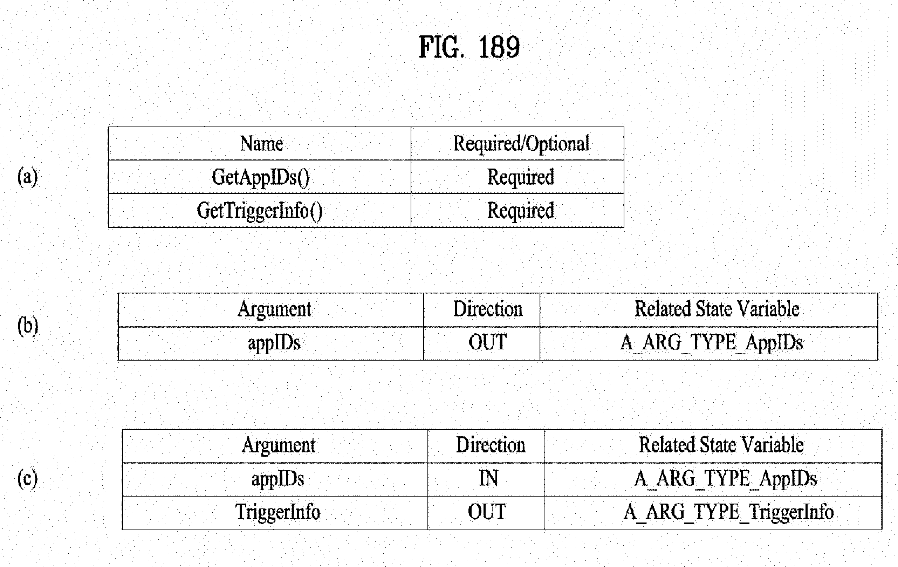

FIG. 189 is a diagram illustrating trigger transmission information according to an embodiment of the present invention.

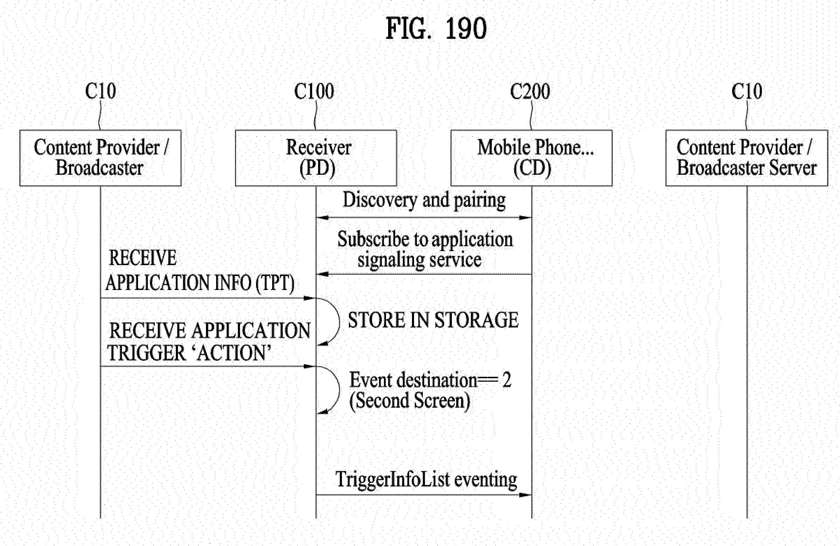

FIG. 190 is a flow diagram when trigger type information indicates "action" according to an embodiment of the present invention.

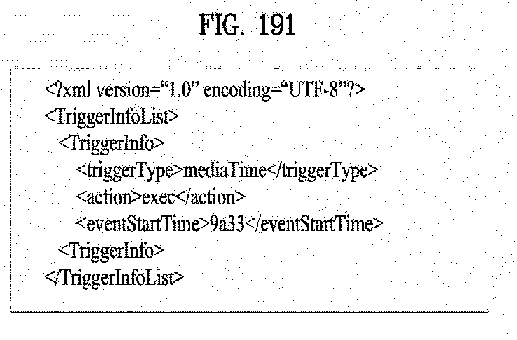

FIG. 191 illustrates XML format of TriggerInfoList when trigger type information indicates "action" according to an embodiment of the present invention.

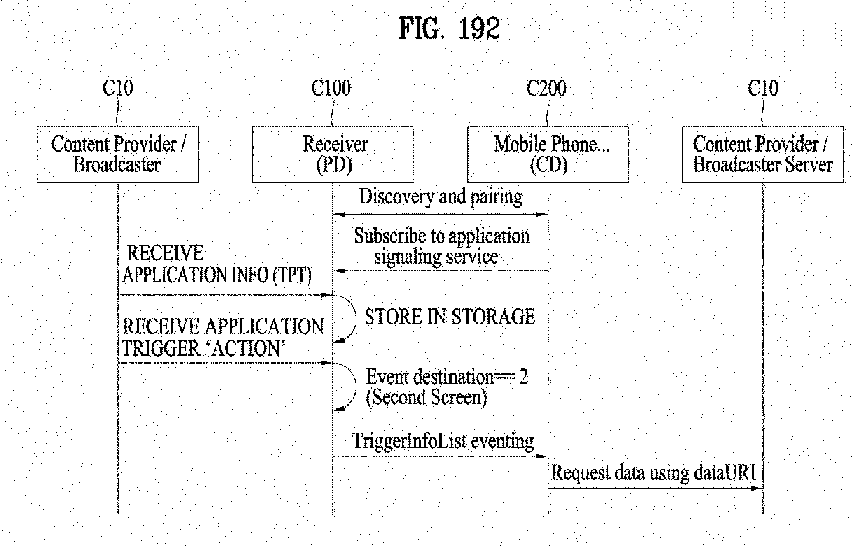

FIG. 192 is a flow diagram when trigger type information indicates "action" according to an embodiment of the present invention.

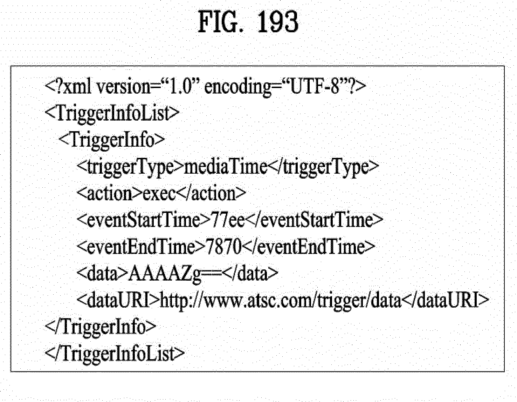

FIG. 193 illustrates XML format of TriggerInfoList when trigger type information indicates "action" according to an embodiment of the present invention.

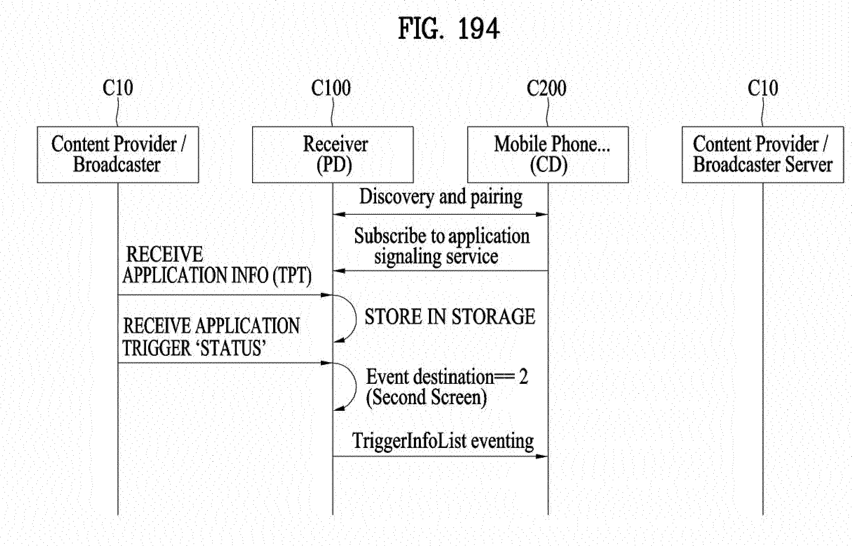

FIG. 194 is a flow diagram when trigger type information indicates "status" according to an embodiment of the present invention.

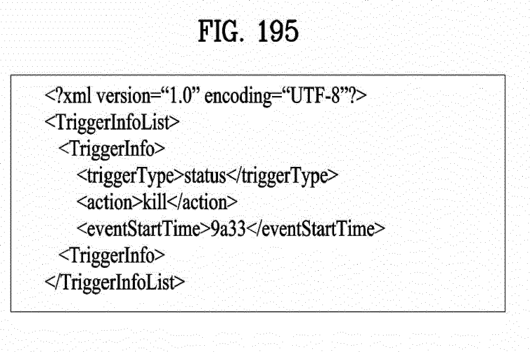

FIG. 195 is a diagram illustrating XML format of TriggerInfoList when trigger type information indicates "status" according to an embodiment of the present invention.

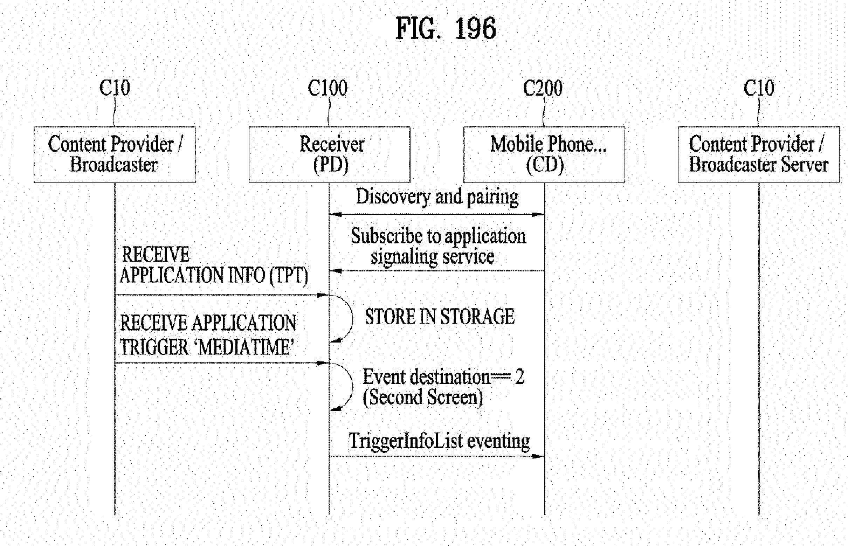

FIG. 196 is a flow diagram when trigger type information indicates "mediaTime" according to an embodiment of the present invention.

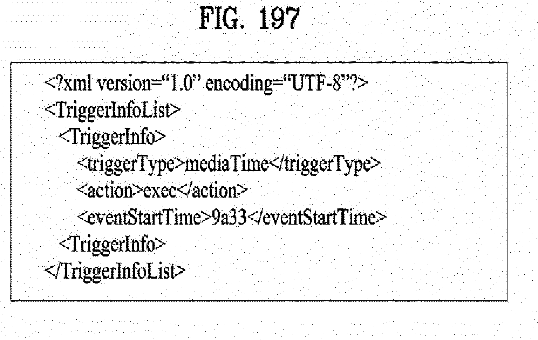

FIG. 197 is a diagram illustrating XML format of TriggerInfoList when trigger type information indicates "mediaTime" according to an embodiment of the present invention.

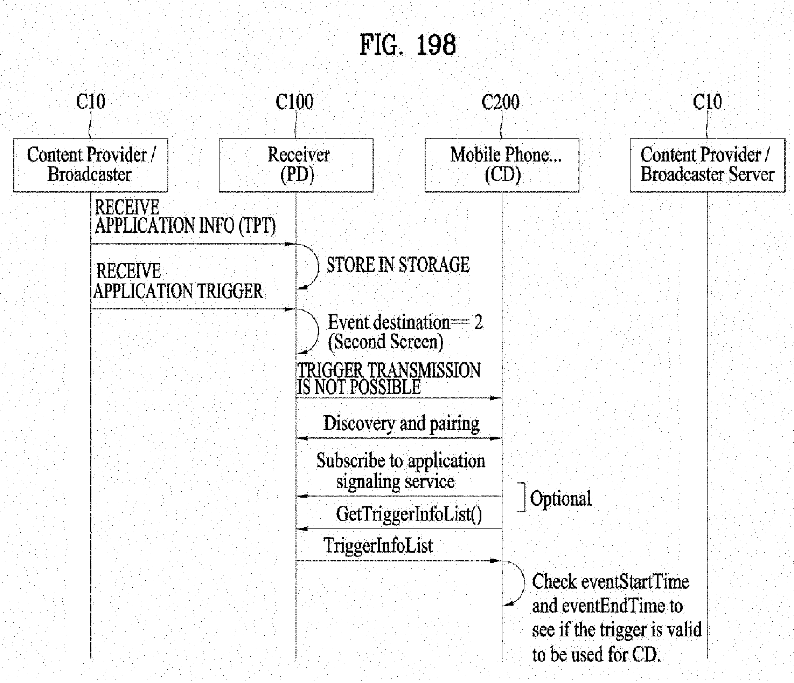

FIG. 198 is a flow diagram when a first receiver and a second receiver are not paired with each other according to an embodiment of the present invention.

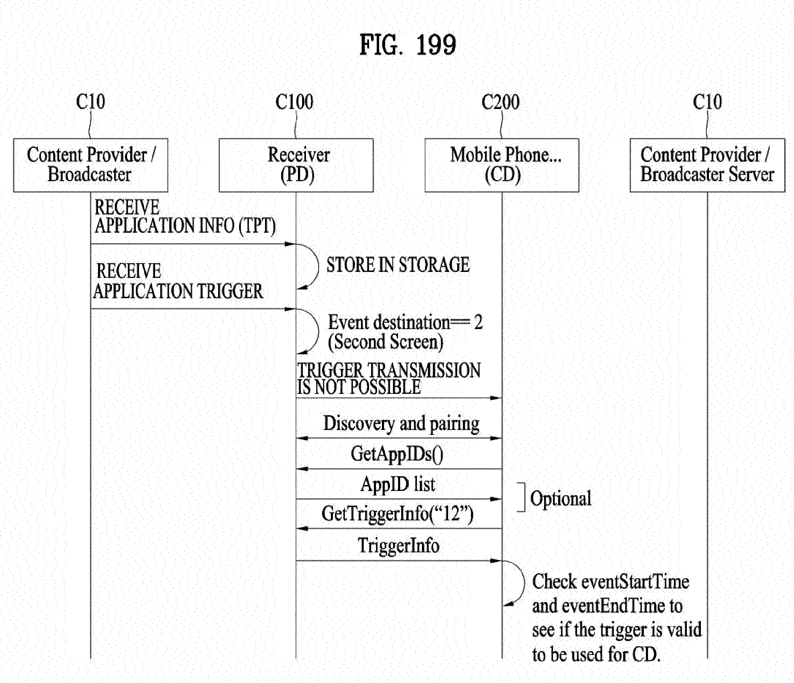

FIG. 199 is a flow diagram of the case in which the first receiver and the second receiver are not paired according to an embodiment of the present invention.

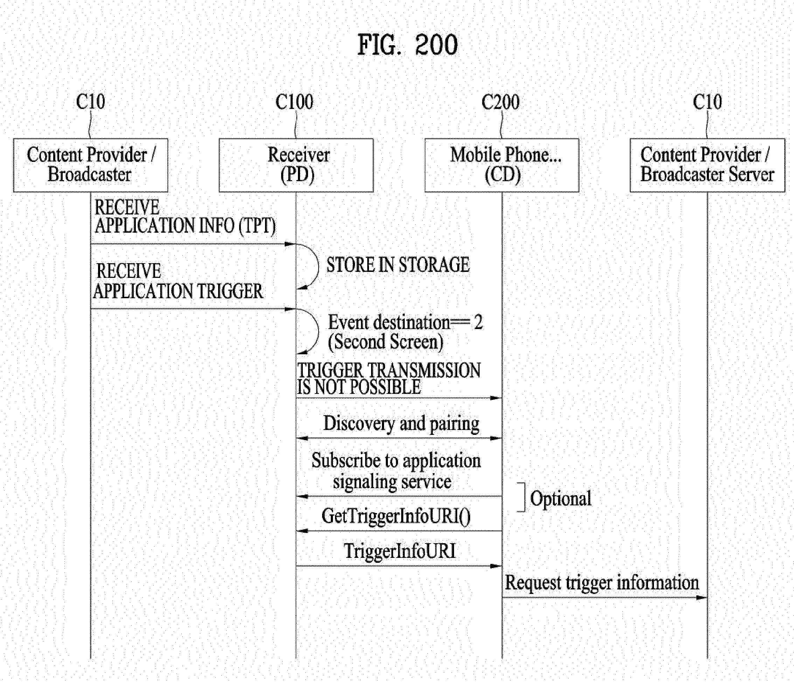

FIG. 200 is a flow diagram of reception of triggering application information by a second receiver from a transmitter according to an embodiment of the present invention.

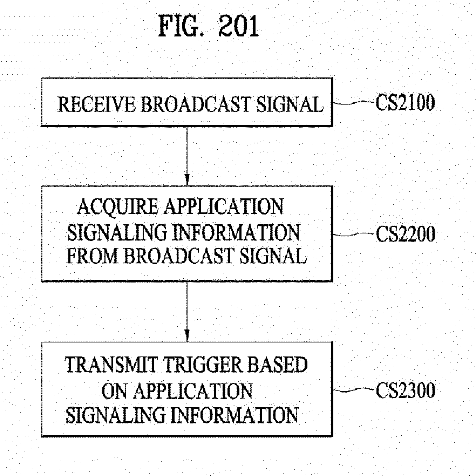

FIG. 201 is a flowchart illustrating an operation of a broadcast receiving apparatus according to an embodiment of the present invention.

[Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention.

Although most terms of elements in this specification have been selected from general ones widely used in the art taking into consideration functions thereof in this specification, the terms may be changed depending on the intention or convention of those skilled in the art or the introduction of new technology. Some terms have been arbitrarily selected by the applicant and their meanings are explained in the following description as needed. Thus, the terms used in this specification should be construed based on the overall content of this specification together with the actual meanings of the terms rather than their simple names or meanings.

The term "signaling" in the present invention may indicate that service information (SI) that is transmitted and received from a broadcast system, an Internet system, and/or a broadcast/Internet convergence system. The service information (SI) may include broadcast service information (e.g., ATSC-SI and/or DVB-SI) received from the existing broadcast systems.

The term "broadcast signal" may conceptually include not only signals and/or data received from a terrestrial broadcast, a cable broadcast, a satellite broadcast, and/or a mobile broadcast, but also signals and/or data received from bidirectional broadcast systems such as an Internet broadcast, a broadband broadcast, a communication broadcast, a data broadcast, and/or VOD (Video On Demand).

The term "PLP" may indicate a predetermined unit for transmitting data contained in a physical layer. Therefore, the term "PLP" may also be replaced with the terms 'data unit' or 'data pipe' as necessary.

A hybrid broadcast service configured to interwork with the broadcast network and/or the Internet network may be used as a representative application to be used in a digital television (DTV) service. The hybrid broadcast service transmits, in real time, enhancement data related to broadcast A/V (Audio/Video) contents transmitted through the terrestrial broadcast network over the Internet, or transmits, in real time, some parts of the broadcast A/V contents over the Internet, such that users can experience a variety of contents.

The present invention provides apparatuses and methods for transmitting and receiving broadcast signals for future broadcast services. Future broadcast services according to an embodiment of the present invention include a terrestrial broadcast service, a mobile broadcast service, a UHDTV service, etc. The present invention may process broadcast signals for the future broadcast services through non-MIMO (Multiple Input Multiple Output) or MIMO according to one embodiment. A non-MIMO scheme according to an embodiment of the present invention may include a MISO (Multiple Input Single Output) scheme, a SISO (Single Input Single Output) scheme, etc.

While MISO or MIMO uses two antennas in the following for convenience of description, the present invention is applicable to systems using two or more antennas. The present invention may defines three physical layer (PL) profiles - base, handheld and advanced profiles-each optimized to minimize receiver complexity while attaining the performance required for a particular use case. The physical layer (PHY) profiles are subsets of all configurations that a corresponding receiver should implement.

The three PHY profiles share most of the functional blocks but differ slightly in specific blocks and/or parameters. Additional PHY profiles can be defined in the future. For the system evolution, future profiles can also be multiplexed with the existing profiles in a single RF channel through a future extension frame (FEF). The details of each PHY profile are described below.

1. Base profile

The base profile represents a main use case for fixed receiving devices that are usually connected to a roof-top antenna. The base profile also includes portable devices that could be transported to a place but belong to a relatively stationary reception category. Use of the base profile could be extended to handheld devices or even vehicular by some improved implementations, but those use cases are not expected for the base profile receiver operation.

Target SNR range of reception is from approximately 10 to 20dB, which includes the 15dB SNR reception capability of the existing broadcast system (e.g. ATSC A/53). The receiver complexity and power consumption is not as critical as in the battery-operated handheld devices, which will use the handheld profile. Key system parameters for the base profile are listed in below table 1.

[Table 1]

| LDPC codeword length | 16K, 64K bits |
|---|---|
| Constellation size | 4~10 bpcu (bits per channel use) |
| Time de-interleaving memory size | $\leq 2^{19}$ data cells |
| Pilot patterns | Pilot pattern for fixed reception |
| FFT size | 16K, 32K points |

2. Handheld profile

The handheld profile is designed for use in handheld and vehicular devices that operate with battery power. The devices can be moving with pedestrian or vehicle speed. The power consumption as well as the receiver complexity is very important for the implementation of the devices of the handheld profile. The target SNR range of the handheld profile is approximately 0 to 10dB, but can be configured to reach below 0dB when intended for deeper indoor reception.

In addition to low SNR capability, resilience to the Doppler Effect caused by receiver mobility is the most important performance attribute of the handheld profile. Key system parameters for the handheld profile are listed in the below table 2.

[Table 2]

| LDPC codeword length | 16K bits |
|---|---|
| Constellation size | 2~8 bpcu |
| Time de-interleaving memory size | $\leq 2^{18}$ data cells |
| Pilot patterns | Pilot patterns for mobile and indoor reception |
| FFT size | 8K, 16K points |

3. Advanced profile

The advanced profile provides highest channel capacity at the cost of more implementation complexity. This profile requires using MIMO transmission and reception, and UHDTV service is a target use case for which this profile is specifically designed. The increased capacity can also be used to allow an increased number of services in a given bandwidth, e.g., multiple SDTV or HDTV services.

The target SNR range of the advanced profile is approximately 20 to 30dB. MIMO transmission may initially use existing elliptically-polarized transmission equipment, with extension to full-power cross-polarized transmission in the future. Key system parameters for the advanced profile are listed in below table 3.

[Table 3]

| LDPC codeword length | 16K, 64K bits |
|---|---|
| Constellation size | 8~12 bpcu |
| Time de-interleaving memory size | $\leq 2^{19}$ data cells |
| Pilot patterns | Pilot pattern for fixed reception |
| FFT size | 16K, 32K points |

In this case, the base profile can be used as a profile for both the terrestrial broadcast service and the mobile broadcast service. That is, the base profile can be used to define a concept of a profile which includes the mobile profile.

Also, the advanced profile can be divided advanced profile for a base profile with MIMO and advanced profile for a handheld profile with MIMO. Moreover, the three profiles can be changed according to intention of the designer.

The following terms and definitions may apply to the present invention. The following terms and definitions can be changed according to design.

auxiliary stream: sequence of cells carrying data of as yet undefined modulation and coding, which may be used for future extensions or as required by broadcasters or network operators

base data pipe: data pipe that carries service signaling data

baseband frame (or BBFRAME): set of Kbch bits which form the input to one FEC encoding process (BCH and LDPC encoding)

cell: modulation value that is carried by one carrier of the OFDM transmission

coded block: LDPC-encoded block of PLS1 data or one of the LDPC-encoded blocks of PLS2 data

data pipe: logical channel in the physical layer that carries service data or related metadata, which may carry one or multiple service(s) or service component(s).

data pipe unit: a basic unit for allocating data cells to a DP in a frame.

data symbol: OFDM symbol in a frame which is not a preamble symbol (the frame signaling symbol and frame edge symbol is included in the data symbol)

DP_ID: this 8-bit field identifies uniquely a DP within the system identified by the SYSTEM_ID

dummy cell: cell carrying a pseudo-random value used to fill the remaining capacity not used for PLS signaling, DPs or auxiliary streams

emergency alert channel: part of a frame that carries EAS information data

frame: physical layer time slot that starts with a preamble and ends with a frame edge symbol

frame repetition unit: a set of frames belonging to same or different physical layer profile including a FEF, which is repeated eight times in a super-frame

fast information channel: a logical channel in a frame that carries the mapping information between a service and the corresponding base DP

FECBLOCK: set of LDPC-encoded bits of a DP data

FFT size: nominal FFT size used for a particular mode, equal to the active symbol period Ts expressed in cycles of the elementary period T

frame signaling symbol: OFDM symbol with higher pilot density used at the start of a frame in certain combinations of FFT size, guard interval and scattered pilot pattern, which carries a part of the PLS data

frame edge symbol: OFDM symbol with higher pilot density used at the end of a frame in certain combinations of FFT size, guard interval and scattered pilot pattern

frame-group: the set of all the frames having the same PHY profile type in a super-frame.

future extension frame: physical layer time slot within the super-frame that could be used for future extension, which starts with a preamble

Futurecast UTB system: proposed physical layer broadcasting system, of which the input is one or more MPEG2-TS or IP or general stream(s) and of which the output is an RF signal

input stream: A stream of data for an ensemble of services delivered to the end users by the system.

normal data symbol: data symbol excluding the frame signaling symbol and the frame edge symbol

PHY profile: subset of all configurations that a corresponding receiver should implement

PLS: physical layer signaling data consisting of PLS1 and PLS2

PLS1: a first set of PLS data carried in the FSS symbols having a fixed size, coding and modulation, which carries basic information about the system as well as the parameters needed to decode the PLS2

NOTE: PLS1 data remains constant for the duration of a frame-group.

PLS2: a second set of PLS data transmitted in the FSS symbol, which carries more detailed PLS data about the system and the DPs

PLS2 dynamic data: PLS2 data that may dynamically change frame-by-frame

PLS2 static data: PLS2 data that remains static for the duration of a frame-group

preamble signaling data: signaling data carried by the preamble symbol and used to identify the basic mode of the system

preamble symbol: fixed-length pilot symbol that carries basic PLS data and is located in the beginning of a frame

NOTE: The preamble symbol is mainly used for fast initial band scan to detect the system signal, its timing, frequency offset, and FFT-size.

reserved for future use: not defined by the present document but may be defined in future

super-frame: set of eight frame repetition units

time interleaving block (TI block): set of cells within which time interleaving is carried out, corresponding to one use of the time interleaver memory

TI group: unit over which dynamic capacity allocation for a particular DP is carried out, made up of an integer, dynamically varying number of XFECBLOCKs

NOTE: The TI group may be mapped directly to one frame or may be mapped to multiple frames. It may contain one or more TI blocks.

Type 1 DP: DP of a frame where all DPs are mapped into the frame in TDM fashion

Type 2 DP: DP of a frame where all DPs are mapped into the frame in FDM fashion

XFECBLOCK: set of Ncells cells carrying all the bits of one LDPC FECBLOCK

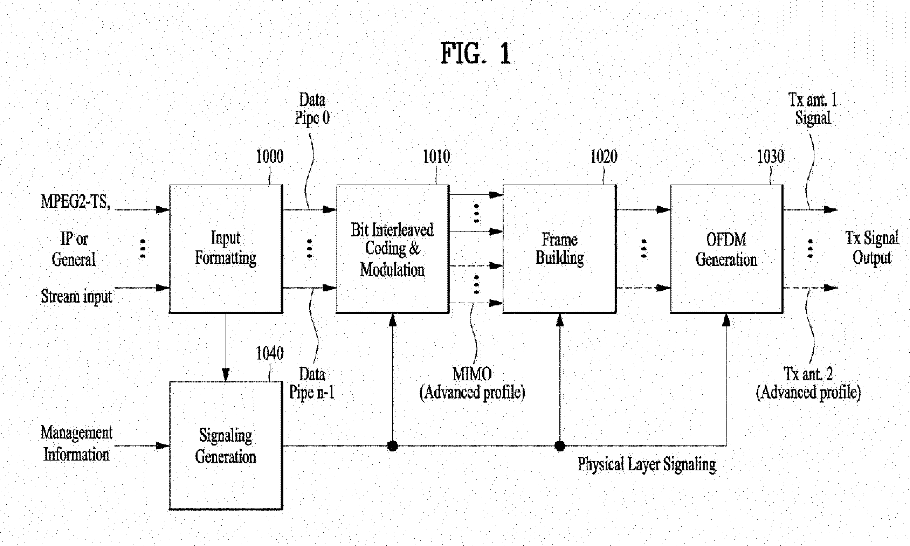

FIG. 1 illustrates a structure of an apparatus for transmitting broadcast signals for future broadcast services according to an embodiment of the present invention.

The apparatus for transmitting broadcast signals for future broadcast services according to an embodiment of the present invention can include an input formatting block 1000, a BICM (Bit interleaved coding & modulation) block 1010, a frame building block 1020, an OFDM (Orthogonal Frequency Division Multiplexing) generation block 1030 and a signaling generation block 1040. A description will be given of the operation of each module of the apparatus for transmitting broadcast signals.

IP stream/packets and MPEG2-TS are the main input formats, other stream types are handled as General Streams. In addition to these data inputs, Management Information is input to control the scheduling and allocation of the corresponding bandwidth for each input stream. One or multiple TS stream(s), IP stream(s) and/or General Stream(s) inputs are simultaneously allowed.

The input formatting block 1000 can demultiplex each input stream into one or multiple data pipe(s), to each of which an independent coding and modulation is applied. The data pipe (DP) is the basic unit for robustness control, thereby affecting quality-of-service (QoS). One or multiple service(s) or service component(s) can be carried by a single DP. Details of operations of the input formatting block 1000 will be described later.

The data pipe is a logical channel in the physical layer that carries service data or related metadata, which may carry one or multiple service(s) or service component(s).

Also, the data pipe unit: a basic unit for allocating data cells to a DP in a frame.

In the BICM block 1010, parity data is added for error correction and the encoded bit streams are mapped to complex-value constellation symbols. The symbols are interleaved across a specific interleaving depth that is used for the corresponding DP. For the advanced profile, MIMO encoding is performed in the BICM block 1010 and the additional data path is added at the output for MIMO transmission. Details of operations of the BICM block 1010 will be described later.

The Frame Building block 1020 can map the data cells of the input DPs into the OFDM symbols within a frame. After mapping, the frequency interleaving is used for frequency-domain diversity, especially to combat frequency-selective fading channels. Details of operations of the Frame Building block 1020 will be described later.

After inserting a preamble at the beginning of each frame, the OFDM Generation block 1030 can apply conventional OFDM modulation having a cyclic prefix as guard interval. For antenna space diversity, a distributed MISO scheme is applied across the transmitters. In addition, a Peak-to-Average Power Reduction (PAPR) scheme is performed in the time domain. For flexible network planning, this proposal provides a set of various FFT sizes, guard interval lengths and corresponding pilot patterns. Details of operations of the OFDM Generation block 1030 will be described later.

The Signaling Generation block 1040 can create physical layer signaling information used for the operation of each functional block. This signaling information is also transmitted so that the services of interest are properly recovered at the receiver side. Details of operations of the Signaling Generation block 1040 will be described later.

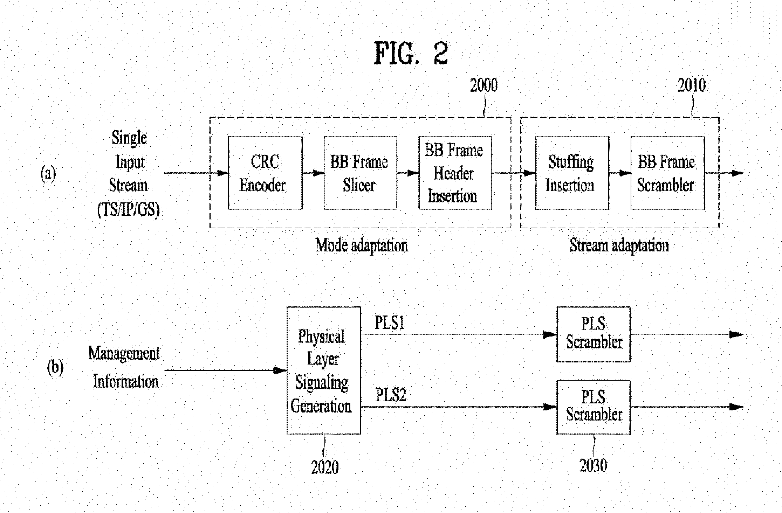

FIGS. 2, 3 and 4 illustrate the input formatting block 1000 according to embodiments of the present invention. A description will be given of each figure.

FIG. 2 illustrates an input formatting block according to one embodiment of the present invention. FIG. 2 shows an input formatting module when the input signal is a single input stream.

The input formatting block illustrated in FIG. 2 corresponds to an embodiment of the input formatting block 1000 described with reference to FIG. 1.

The input to the physical layer may be composed of one or multiple data streams. Each data stream is carried by one DP. The mode adaptation modules slice the incoming data stream into data fields of the baseband frame (BBF). The system supports three types of input data streams: MPEG2-TS, Internet protocol (IP) and Generic stream (GS). MPEG2-TS is characterized by fixed length (188 byte) packets with the first byte being a sync-byte (0x47). An IP stream is composed of variable length IP datagram packets, as signaled within IP packet headers. The system supports both IPv4 and IPv6 for the IP stream. GS may be composed of variable length packets or constant length packets, signaled within encapsulation packet headers.

(a) shows a mode adaptation block 2000 and a stream adaptation 2010 for signal DP and (b) shows a PLS generation block 2020 and a PLS scrambler 2030 for generating and processing PLS data. A description will be given of the operation of each block.

The Input Stream Splitter splits the input TS, IP, GS streams into multiple service or service component (audio, video, etc.) streams. The mode adaptation module 2010 is comprised of a CRC Encoder, BB (baseband) Frame Slicer, and BB Frame Header Insertion block.

The CRC Encoder provides three kinds of CRC encoding for error detection at the user packet (UP) level, i.e., CRC-8, CRC-16, and CRC-32. The computed CRC bytes are appended after the UP. CRC-8 is used for TS stream and CRC-32 for IP stream. If the GS stream doesn't provide the CRC encoding, the proposed CRC encoding should be applied.

BB Frame Slicer maps the input into an internal logical-bit format. The first received bit is defined to be the MSB. The BB Frame Slicer allocates a number of input bits equal to the available data field capacity. To allocate a number of input bits equal to the BBF payload, the UP packet stream is sliced to fit the data field of BBF.

BB Frame Header Insertion block can insert fixed length BBF header of 2 bytes is inserted in front of the BB Frame. The BBF header is composed of STUFFI (1 bit), SYNCD (13 bits), and RFU (2 bits). In addition to the fixed 2-Byte BBF header, BBF can have an extension field (1 or 3 bytes) at the end of the 2-byte BBF header.

The stream adaptation 2010 is comprised of stuffing insertion block and BB scrambler. The stuffing insertion block can insert stuffing field into a payload of a BB frame. If the input data to the stream adaptation is sufficient to fill a BB-Frame, STUFFI is set to '0' and the BBF has no stuffing field. Otherwise STUFFI is set to '1' and the stuffing field is inserted immediately after the BBF header. The stuffing field comprises two bytes of the stuffing field header and a variable size of stuffing data.

The BB scrambler scrambles complete BBF for energy dispersal. The scrambling sequence is synchronous with the BBF. The scrambling sequence is generated by the feed-back shift register.

The PLS generation block 2020 can generate physical layer signaling (PLS) data. The PLS provides the receiver with a means to access physical layer DPs. The PLS data consists of PLS1 data and PLS2 data.

The PLS1 data is a first set of PLS data carried in the FSS symbols in the frame having a fixed size, coding and modulation, which carries basic information about the system as well as the parameters needed to decode the PLS2 data. The PLS1 data provides basic transmission parameters including parameters required to enable the reception and decoding of the PLS2 data. Also, the PLS1 data remains constant for the duration of a frame-group.

The PLS2 data is a second set of PLS data transmitted in the FSS symbol, which carries more detailed PLS data about the system and the DPs. The PLS2 contains parameters that provide sufficient information for the receiver to decode the desired DP. The PLS2 signaling further consists of two types of parameters, PLS2 Static data (PLS2-STAT data) and PLS2 dynamic data (PLS2-DYN data). The PLS2 Static data is PLS2 data that remains static for the duration of a frame-group and the PLS2 dynamic data is PLS2 data that may dynamically change frame-by-frame.

Details of the PLS data will be described later.

The PLS scrambler 2030 can scramble the generated PLS data for energy dispersal.

The above-described blocks may be omitted or replaced by blocks having similar or identical functions.

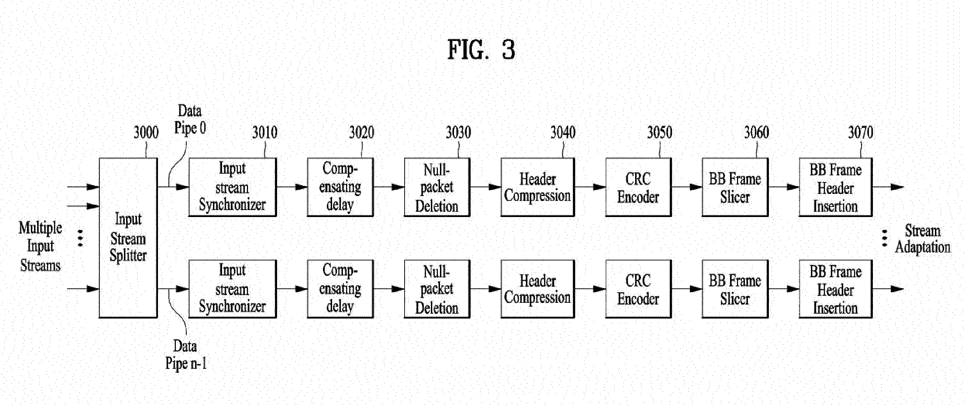

FIG. 3 illustrates an input formatting block according to another embodiment of the present invention.

The input formatting block illustrated in FIG. 3 corresponds to an embodiment of the input formatting block 1000 described with reference to FIG. 1.

FIG. 3 shows a mode adaptation block of the input formatting block when the input signal corresponds to multiple input streams.

The mode adaptation block of the input formatting block for processing the multiple input streams can independently process the multiple input streams.

Referring to FIG. 3, the mode adaptation block for respectively processing the multiple input streams can include an input stream splitter 3000, an input stream synchronizer 3010, a compensating delay block 3020, a null packet deletion block 3030, a head compression block 3040, a CRC encoder 3050, a BB frame slicer 3060 and a BB header insertion block 3070. Description will be given of each block of the mode adaptation block.

Operations of the CRC encoder 3050, BB frame slicer 3060 and BB header insertion block 3070 correspond to those of the CRC encoder, BB frame slicer and BB header insertion block described with reference to FIG. 2 and thus description thereof is omitted.

The input stream splitter 3000 can split the input TS, IP, GS streams into multiple service or service component (audio, video, etc.) streams.

The input stream synchronizer 3010 may be referred as ISSY. The ISSY can provide suitable means to guarantee Constant Bit Rate (CBR) and constant end-to-end transmission delay for any input data format. The ISSY is always used for the case of multiple DPs carrying TS, and optionally used for multiple DPs carrying GS streams.

The compensating delay block 3020 can delay the split TS packet stream following the insertion of ISSY information to allow a TS packet recombining mechanism without requiring additional memory in the receiver.

The null packet deletion block 3030, is used only for the TS input stream case. Some TS input streams or split TS streams may have a large number of null-packets present in order to accommodate VBR (variable bit-rate) services in a CBR TS stream. In this case, in order to avoid unnecessary transmission overhead, null-packets can be identified and not transmitted. In the receiver, removed null-packets can be re-inserted in the exact place where they were originally by reference to a deleted null-packet (DNP) counter that is inserted in the transmission, thus guaranteeing constant bit-rate and avoiding the need for time-stamp (PCR) updating.

The head compression block 3040 can provide packet header compression to increase transmission efficiency for TS or IP input streams. Because the receiver can have a priori information on certain parts of the header, this known information can be deleted in the transmitter.

For Transport Stream, the receiver has a-priori information about the sync-byte configuration (0x47) and the packet length (188 Byte). If the input TS stream carries content that has only one PID, i.e., for only one service component (video, audio, etc.) or service sub-component (SVC base layer, SVC enhancement layer, MVC base view or MVC dependent views), TS packet header compression can be applied (optionally) to the Transport Stream. IP packet header compression is used optionally if the input steam is an IP stream.

The above-described blocks may be omitted or replaced by blocks having similar or identical functions.

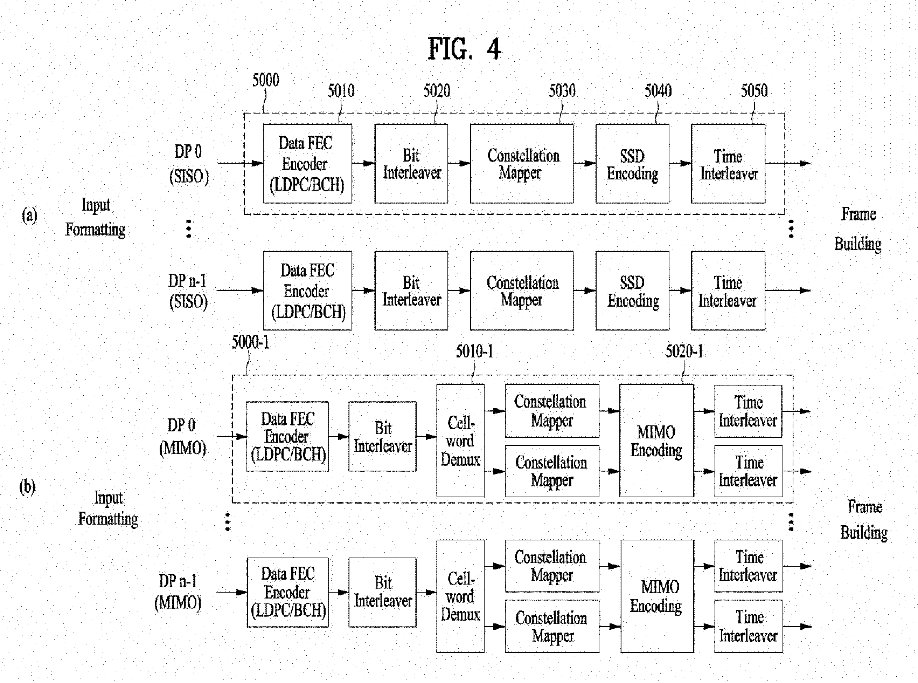

FIG. 4 illustrates a BICM block according to an embodiment of the present invention.

The BICM block illustrated in FIG. 4 corresponds to an embodiment of the BICM block 1010 described with reference to FIG. 1.

As described above, the apparatus for transmitting broadcast signals for future broadcast services according to an embodiment of the present invention can provide a terrestrial broadcast service, mobile broadcast service, UHDTV service, etc.

Since QoS (quality of service) depends on characteristics of a service provided by the apparatus for transmitting broadcast signals for future broadcast services according to an embodiment of the present invention, data corresponding to respective services needs to be processed through different schemes. Accordingly, the a BICM block according to an embodiment of the present invention can independently process DPs input thereto by independently applying SISO, MISO and MIMO schemes to the data pipes respectively corresponding to data paths. Consequently, the apparatus for transmitting broadcast signals for future broadcast services according to an embodiment of the present invention can control QoS for each service or service component transmitted through each DP.

(a) shows the BICM block shared by the base profile and the handheld profile and (b) shows the BICM block of the advanced profile.

The BICM block shared by the base profile and the handheld profile and the BICM block of the advanced profile can include plural processing blocks for processing each DP.

A description will be given of each processing block of the BICM block for the base profile and the handheld profile and the BICM block for the advanced profile.

A processing block 5000 of the BICM block for the base profile and the handheld profile can include a Data FEC encoder 5010, a bit interleaver 5020, a constellation mapper 5030, an SSD (Signal Space Diversity) encoding block 5040 and a time interleaver 5050.

The Data FEC encoder 5010 can perform the FEC encoding on the input BBF to generate FECBLOCK procedure using outer coding (BCH), and inner coding (LDPC). The outer coding (BCH) is optional coding method. Details of operations of the Data FEC encoder 5010 will be described later.

The bit interleaver 5020 can interleave outputs of the Data FEC encoder 5010 to achieve optimized performance with combination of the LDPC codes and modulation scheme while providing an efficiently implementable structure. Details of operations of the bit interleaver 5020 will be described later.

The constellation mapper 5030 can modulate each cell word from the bit interleaver 5020 in the base and the handheld profiles, or cell word from the Cell-word demultiplexer 5010-1 in the advanced profile using either QPSK, QAM-16, non-uniform QAM (NUQ-64, NUQ-256, NUQ-1024) or non-uniform constellation (NUC-16, NUC-64, NUC-256, NUC-1024) to give a power-normalized constellation point, el. This constellation mapping is applied only for DPs. Observe that QAM-16 and NUQs are square shaped, while NUCs have arbitrary shape. When each constellation is rotated by any multiple of 90 degrees, the rotated constellation exactly overlaps with its original one. This "rotation-sense" symmetric property makes the capacities and the average powers of the real and imaginary components equal to each other. Both NUQs and NUCs are defined specifically for each code rate and the particular one used is signaled by the parameter DP_MOD filed in PLS2 data.

The time interleaver 5050 can operates at the DP level. The parameters of time interleaving (TI) may be set differently for each DP. Details of operations of the time interleaver 5050 will be described later.

A processing block 5000-1 of the BICM block for the advanced profile can include the Data FEC encoder, bit interleaver, constellation mapper, and time interleaver. However, the processing block 5000-1 is distinguished from the processing block 5000 further includes a cell-word demultiplexer 5010-1 and a MIMO encoding block 5020-1.

Also, the operations of the Data FEC encoder, bit interleaver, constellation mapper, and time interleaver in the processing block 5000-1 correspond to those of the Data FEC encoder 5010, bit interleaver 5020, constellation mapper 5030, and time interleaver 5050 described and thus description thereof is omitted.

The cell-word demultiplexer 5010-1 is used for the DP of the advanced profile to divide the single cell-word stream into dual cell-word streams for MIMO processing. Details of operations of the cell-word demultiplexer 5010-1 will be described later.

The MIMO encoding block 5020-1 can processing the output of the cell-word demultiplexer 5010-1 using MIMO encoding scheme. The MIMO encoding scheme was optimized for broadcasting signal transmission. The MIMO technology is a promising way to get a capacity increase but it depends on channel characteristics. Especially for broadcasting, the strong LOS component of the channel or a difference in the received signal power between two antennas caused by different signal propagation characteristics makes it difficult to get capacity gain from MIMO. The proposed MIMO encoding scheme overcomes this problem using a rotation-based pre-coding and phase randomization of one of the MIMO output signals.

MIMO encoding is intended for a 2x2 MIMO system requiring at least two antennas at both the transmitter and the receiver. Two MIMO encoding modes are defined in this proposal; full-rate spatial multiplexing (FR-SM) and full-rate full-diversity spatial multiplexing (FRFD-SM). The FR-SM encoding provides capacity increase with relatively small complexity increase at the receiver side while the FRFD-SM encoding provides capacity increase and additional diversity gain with a great complexity increase at the receiver side. The proposed MIMO encoding scheme has no restriction on the antenna polarity configuration.

MIMO processing is required for the advanced profile frame, which means all DPs in the advanced profile frame are processed by the MIMO encoder. MIMO processing is applied at DP level. Pairs of the Constellation Mapper outputs NUQ (e1,i and e2,i) are fed to the input of the MIMO Encoder. Paired MIMO Encoder output (g1,i and g2,i) is transmitted by the same carrier k and OFDM symbol 1 of their respective TX antennas.

The above-described blocks may be omitted or replaced by blocks having similar or identical functions.

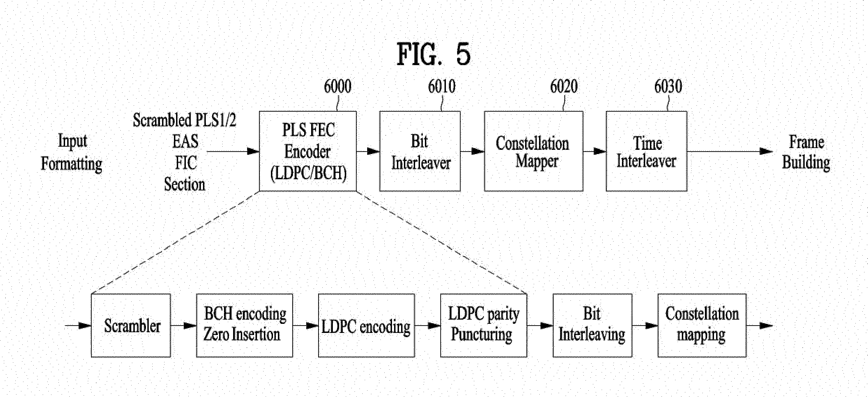

FIG. 5 illustrates a BICM block according to another embodiment of the present invention.

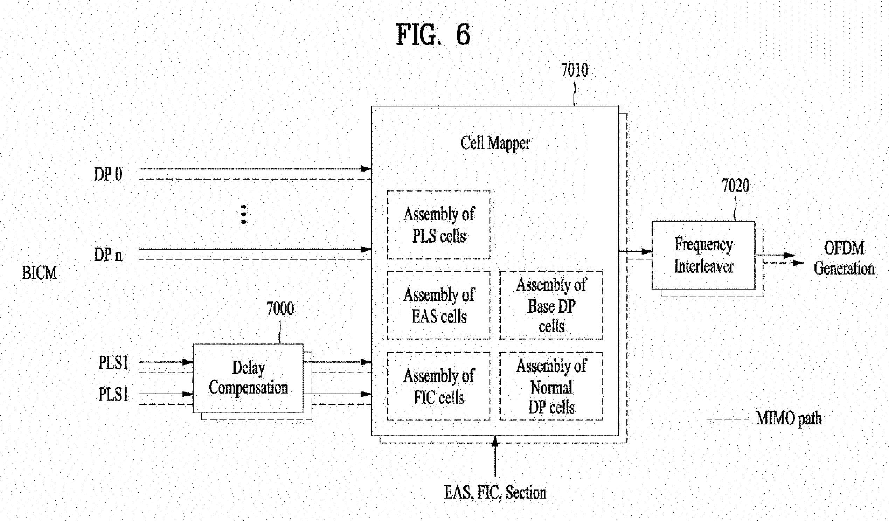

The BICM block illustrated in FIG. 6 corresponds to an embodiment of the BICM block 1010 described with reference to FIG. 1.

FIG. 5 illustrates a BICM block for protection of physical layer signaling (PLS), emergency alert channel (EAC) and fast information channel (FIC). EAC is a part of a frame that carries EAS information data and FIC is a logical channel in a frame that carries the mapping information between a service and the corresponding base DP. Details of the EAC and FIC will be described later.

Referring to FIG. 6, the BICM block for protection of PLS, EAC and FIC can include a PLS FEC encoder 6000, a bit interleaver 6010 and a constellation mapper 6020.

Also, the PLS FEC encoder 6000 can include a scrambler, BCH encoding/zero insertion block, LDPC encoding block and LDPC parity punturing block. Description will be given of each block of the BICM block.

The PLS FEC encoder 6000 can encode the scrambled PLS 1/2 data, EAC and FIC section.

The scrambler can scramble PLS1 data and PLS2 data before BCH encoding and shortened and punctured LDPC encoding.

The BCH encoding/zero insertion block can perform outer encoding on the scrambled PLS 1/2 data using the shortened BCH code for PLS protection and insert zero bits after the BCH encoding. For PLS1 data only, the output bits of the zero insertion may be permutted before LDPC encoding.

The LDPC encoding block can encode the output of the BCH encoding/zero insertion block using LDPC code. To generate a complete coded block, Cldpc, parity bits, Pldpc are encoded systematically from each zero-inserted PLS information block, Ildpc and appended after it.

【Equation 1】

$$\mathbf{C}_{ldpc} = \begin{bmatrix} \mathbf{I}_{ldpc} & \mathbf{P}_{ldpc} \end{bmatrix} = \begin{bmatrix} i_0, i_1, \ldots, i_{K_{ldpc}-1}, & p_0, p_1, \ldots, p_{N_{ldpc}-K_{ldpc}-1} \end{bmatrix}$$

The LDPC code parameters for PLS1 and PLS2 are as following table 4.

[Table 4]

| Signaling Type | $K_{sig}$ | $K_{bch}$ | $N_{bch\_parity}$ | $K_{ldpc}$ ($=N_{bch}$) | $N_{ldpc}$ | $N_{ldpc\_parity}$ | code rate | $Q_{ldpc}$ |
|---|---|---|---|---|---|---|---|---|
| PLS1 | 342 | 1020 | 60 | 1080 | 4320 | 3240 | 1/4 | 36 |
| PLS2 | <1021 | | | | | | | |
| | >1020 | 2100 | | 2160 | 7200 | 5040 | 3/10 | 56 |

The LDPC parity puncturing block can perform puncturing on the PLS1 data and PLS 2 data.

When shortening is applied to the PLS1 data protection, some LDPC parity bits are punctured after LDPC encoding. Also, for the PLS2 data protection, the LDPC parity bits of PLS2 are punctured after LDPC encoding. These punctured bits are not transmitted.

The bit interleaver 6010 can interleave the each shortened and punctured PLS1 data and PLS2 data.

The constellation mapper 6020 can map the bit ineterlaeved PLS1 data and PLS2 data onto constellations.

The above-described blocks may be omitted or replaced by blocks having similar or identical functions.

FIG. 6 illustrates a frame building block according to one embodiment of the present invention.

The frame building block illustrated in FIG. 6 corresponds to an embodiment of the frame building block 1020 described with reference to FIG. 1.

Referring to FIG. 6, the frame building block can include a delay compensation block 7000, a cell mapper 7010 and a frequency interleaver 7020. Description will be given of each block of the frame building block.

The delay compensation block 7000 can adjust the timing between the data pipes and the corresponding PLS data to ensure that they are co-timed at the transmitter end. The PLS data is delayed by the same amount as data pipes are by addressing the delays of data pipes caused by the Input Formatting block and BICM block. The delay of the BICM block is mainly due to the time interleaver 5050. In-band signaling data carries information of the next TI group so that they are carried one frame ahead of the DPs to be signaled. The Delay Compensating block delays in-band signaling data accordingly.

The cell mapper 7010 can map PLS, EAC, FIC, DPs, auxiliary streams and dummy cells into the active carriers of the OFDM symbols in the frame. The basic function of the cell mapper 7010 is to map data cells produced by the TIs for each of the DPs, PLS cells, and EAC/FIC cells, if any, into arrays of active OFDM cells corresponding to each of the OFDM symbols within a frame. Service signaling data (such as PSI(program specific information)/SI) can be separately gathered and sent by a data pipe. The Cell Mapper operates according to the dynamic information produced by the scheduler and the configuration of the frame structure. Details of the frame will be described later.

The frequency interleaver 7020 can randomly interleave data cells received from the cell mapper 7010 to provide frequency diversity. Also, the frequency interleaver 7020 can operate on very OFDM symbol pair comprised of two sequential OFDM symbols using a different interleaving-seed order to get maximum interleaving gain in a single frame.

The above-described blocks may be omitted or replaced by blocks having similar or identical functions.

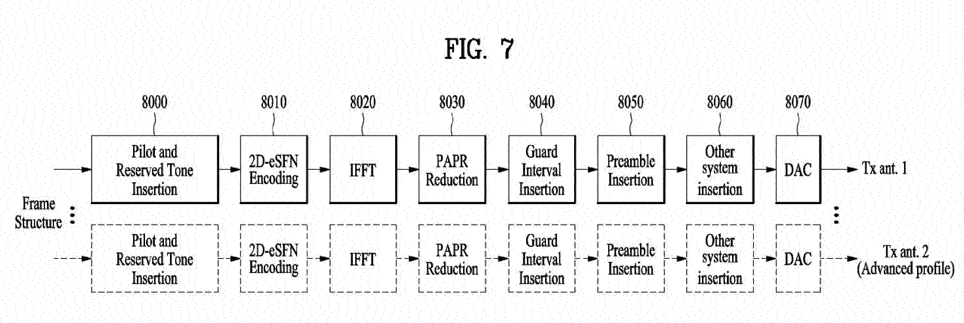

FIG. 7 illustrates an OFDM generation block according to an embodiment of the present invention.

The OFDM generation block illustrated in FIG. 7 corresponds to an embodiment of the OFDM generation block 1030 described with reference to FIG. 1.

The OFDM generation block modulates the OFDM carriers by the cells produced by the Frame Building block, inserts the pilots, and produces the time domain signal for transmission. Also, this block subsequently inserts guard intervals, and applies PAPR (Peak-to-Average Power Radio) reduction processing to produce the final RF signal.

Referring to FIG. 7, the OFDM generation block can include a pilot and reserved tone insertion block 8000, a 2D-eSFN encoding block 8010, an IFFT (Inverse Fast Fourier Transform) block 8020, a PAPR reduction block 8030, a guard interval insertion block 8040, a preamble insertion block 8050, other system insertion block 8060 and a DAC block 8070.

The other system insertion block 8060 can multiplex signals of a plurality of broadcast transmission/reception systems in the time domain such that data of two or more different broadcast transmission/reception systems providing broadcast services can be simultaneously transmitted in the same RF signal bandwidth. In this case, the two or more different broadcast transmission/reception systems refer to systems providing different broadcast services. The different broadcast services may refer to a terrestrial broadcast service, mobile broadcast service, etc.

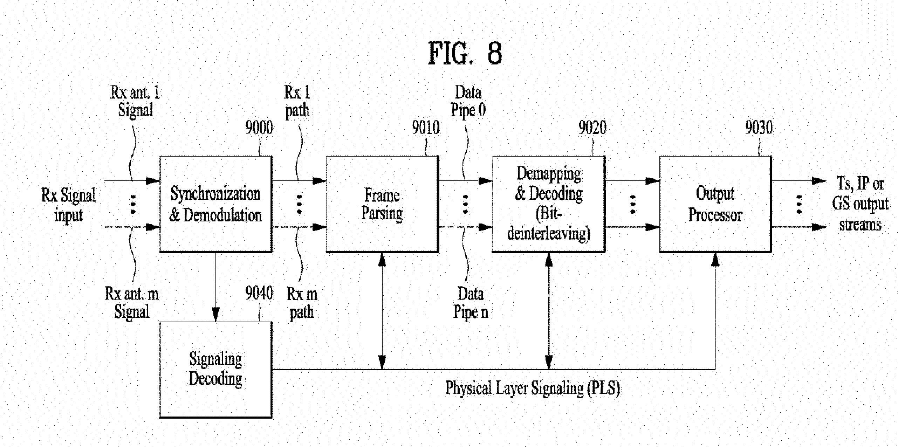

FIG. 8 illustrates a structure of an apparatus for receiving broadcast signals for future broadcast services according to an embodiment of the present invention.

The apparatus for receiving broadcast signals for future broadcast services according to an embodiment of the present invention can correspond to the apparatus for transmitting broadcast signals for future broadcast services, described with reference to FIG. 1.

The apparatus for receiving broadcast signals for future broadcast services according to an embodiment of the present invention can include a synchronization & demodulation module 9000, a frame parsing module 9010, a demapping & decoding module 9020, an output processor 9030 and a signaling decoding module 9040. A description will be given of operation of each module of the apparatus for receiving broadcast signals.

The synchronization & demodulation module 9000 can receive input signals through m Rx antennas, perform signal detection and synchronization with respect to a system corresponding to the apparatus for receiving broadcast signals and carry out demodulation corresponding to a reverse procedure of the procedure performed by the apparatus for transmitting broadcast signals.

The frame parsing module 9010 can parse input signal frames and extract data through which a service selected by a user is transmitted. If the apparatus for transmitting broadcast signals performs interleaving, the frame parsing module 9010 can carry out deinterleaving corresponding to a reverse procedure of interleaving. In this case, the positions of a signal and data that need to be extracted can be obtained by decoding data output from the signaling decoding module 9040 to restore scheduling information generated by the apparatus for transmitting broadcast signals.

The demapping & decoding module 9020 can convert the input signals into bit domain data and then deinterleave the same as necessary. The demapping & decoding module 9020 can perform demapping for mapping applied for transmission efficiency and correct an error generated on a transmission channel through decoding. In this case, the demapping & decoding module 9020 can obtain transmission parameters necessary for demapping and decoding by decoding the data output from the signaling decoding module 9040.

The output processor 9030 can perform reverse procedures of various compression/signal processing procedures which are applied by the apparatus for transmitting broadcast signals to improve transmission efficiency. In this case, the output processor 9030 can acquire necessary control information from data output from the signaling decoding module 9040. The output of the output processor 8300 corresponds to a signal input to the apparatus for transmitting broadcast signals and may be MPEG-TSs, IP streams (v4 or v6) and generic streams.

The signaling decoding module 9040 can obtain PLS information from the signal demodulated by the synchronization & demodulation module 9000. As described above, the frame parsing module 9010, demapping & decoding module 9020 and output processor 9030 can execute functions thereof using the data output from the signaling decoding module 9040.

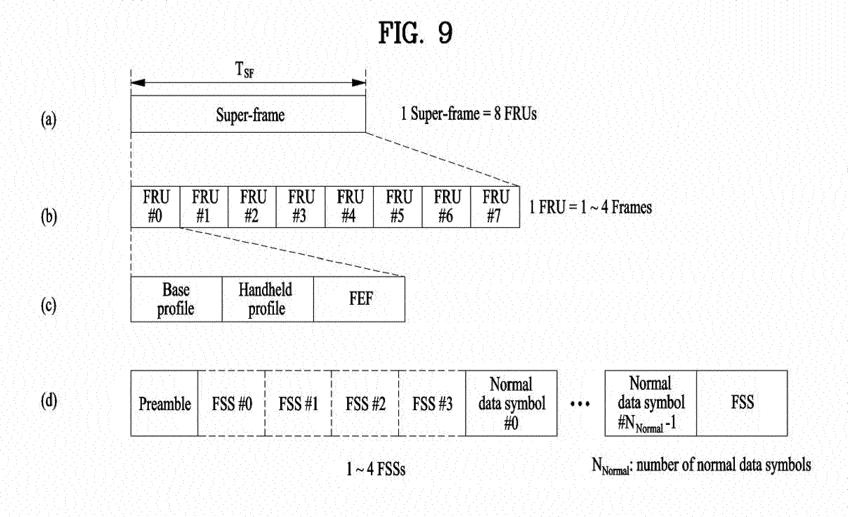

FIG. 9 illustrates a frame structure according to an embodiment of the present invention.

FIG. 9 shows an example configuration of the frame types and FRUs in a super-frame. (a) shows a super frame according to an embodiment of the present invention, (b) shows FRU (Frame Repetition Unit) according to an embodiment of the present invention, (c) shows frames of variable PHY profiles in the FRU and (d) shows a structure of a frame.

A super-frame may be composed of eight FRUs. The FRU is a basic multiplexing unit for TDM of the frames, and is repeated eight times in a super-frame.

Each frame in the FRU belongs to one of the PHY profiles, (base, handheld, advanced) or FEF. The maximum allowed number of the frames in the FRU is four and a given PHY profile can appear any number of times from zero times to four times in the FRU (e.g., base, base, handheld, advanced). PHY profile definitions can be extended using reserved values of the PHY_PROFILE in the preamble, if required.

The FEF part is inserted at the end of the FRU, if included. When the FEF is included in the FRU, the minimum number of FEFs is 8 in a super-frame. It is not recommended that FEF parts be adjacent to each other.

One frame is further divided into a number of OFDM symbols and a preamble. As shown in (d), the frame comprises a preamble, one or more frame signaling symbols (FSS), normal data symbols and a frame edge symbol (FES).

The preamble is a special symbol that enables fast Futurecast UTB system signal detection and provides a set of basic transmission parameters for efficient transmission and reception of the signal. The detailed description of the preamble will be will be described later.

The main purpose of the FSS(s) is to carry the PLS data. For fast synchronization and channel estimation, and hence fast decoding of PLS data, the FSS has more dense pilot pattern than the normal data symbol. The FES has exactly the same pilots as the FSS, which enables frequency-only interpolation within the FES and temporal interpolation, without extrapolation, for symbols immediately preceding the FES.

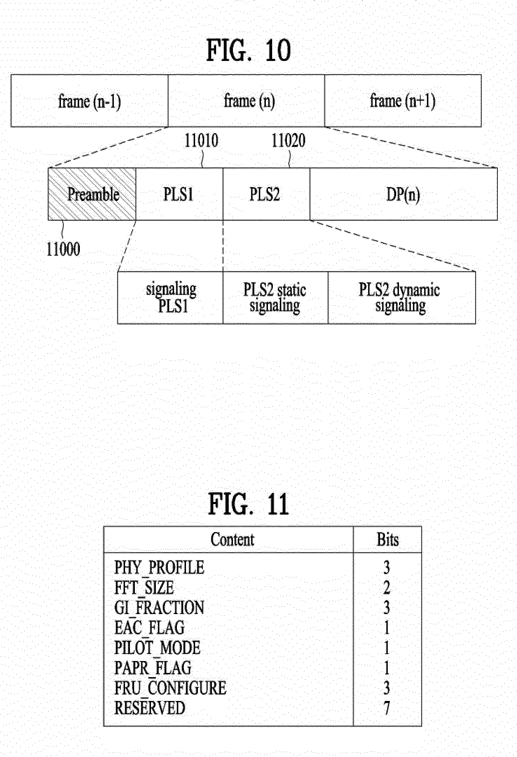

FIG. 10 illustrates a signaling hierarchy structure of the frame according to an embodiment of the present invention.

FIG. 10 illustrates the signaling hierarchy structure, which is split into three main parts: the preamble signaling data 11000, the PLS1 data 11010 and the PLS2 data 11020. The purpose of the preamble, which is carried by the preamble symbol in every frame, is to indicate the transmission type and basic transmission parameters of that frame. The PLS1 enables the receiver to access and decode the PLS2 data, which contains the parameters to access the DP of interest. The PLS2 is carried in every frame and split into two main parts: PLS2-STAT data and PLS2-DYN data. The static and dynamic portion of PLS2 data is followed by padding, if necessary.

FIG. 11 illustrates preamble signaling data according to an embodiment of the present invention.

Preamble signaling data carries 21 bits of information that are needed to enable the receiver to access PLS data and trace DPs within the frame structure. Details of the preamble signaling data are as follows:

PHY_PROFILE: This 3-bit field indicates the PHY profile type of the current frame. The mapping of different PHY profile types is given in below table 5.

[Table 5]

| Value | PHY profile |
|---|---|
| 000 | Base profile |
| 001 | Handheld profile |
| 010 | Advanced profiled |
| 011~110 | Reserved |
| 111 | FEF |

FFT_SIZE: This 2 bit field indicates the FFT size of the current frame within a frame-group, as described in below table 6.

[Table 6]

| Value | FFT size |
|---|---|
| 00 | 8K FFT |
| 01 | 16K FFT |
| 10 | 32K FFT |
| 11 | Reserved |

GI_FRACTION: This 3 bit field indicates the guard interval fraction value in the current super-frame, as described in below table 7.

[Table 7]

| Value | GI_FRACTION |
|---|---|
| 000 | 1/5 |
| 001 | 1/10 |
| 010 | 1/20 |
| 011 | 1/40 |
| 100 | 1/80 |
| 101 | 1/160 |
| 110~111 | Reserved |

EAC_FLAG: This 1 bit field indicates whether the EAC is provided in the current frame. If this field is set to '1', emergency alert service (EAS) is provided in the current frame. If this field set to '0', EAS is not carried in the current frame. This field can be switched dynamically within a super-frame.

PILOT_MODE: This 1-bit field indicates whether the pilot mode is mobile mode or fixed mode for the current frame in the current frame-group. If this field is set to '0', mobile pilot mode is used. If the field is set to '1', the fixed pilot mode is used.

PAPR_FLAG: This 1-bit field indicates whether PAPR reduction is used for the current frame in the current frame-group. If this field is set to value '1', tone reservation is used for PAPR reduction. If this field is set to '0', PAPR reduction is not used.

FRU_CONFIGURE: This 3-bit field indicates the PHY profile type configurations of the frame repetition units (FRU) that are present in the current super-frame. All profile types conveyed in the current super-frame are identified in this field in all preambles in the current super-frame. The 3-bit field has a different definition for each profile, as show in below table 8.

[Table 8]

|  | Current PHY_PROFILE = '000' (base) | Current PHY_PROFILE = '001' (handheld) | Current PHY_PROFILE = '010' (advanced) | Current PHY_PROFILE = '111' (FEF) |
|---|---|---|---|---|
| FRU_CONFIGURE = 000 | Only base profile present | Only handheld profile present | Only advanced profile present | Only FEF present |
| FRU_CONFIGURE = 1XX | Handheld profile present | Base profile present | Base profile present | Base profile present |
| FRU CONFIGURE = X1X | Advanced profile present | Advanced profile present | Handheld profile present | Handheld profile present |
| FRU CONFIGURE = XX1 | FEF present | FEF present | FEF present | Advanced profile present |

RESERVED: This 7-bit field is reserved for future use.

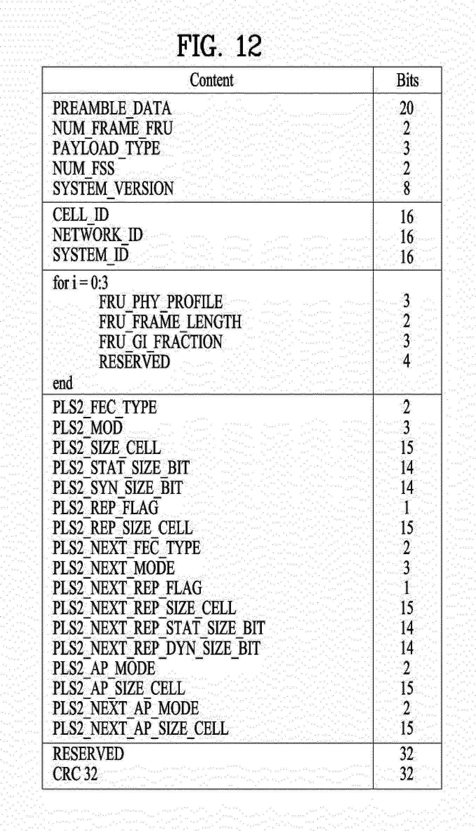

FIG. 12 illustrates PLS1 data according to an embodiment of the present invention.

PLS1 data provides basic transmission parameters including parameters required to enable the reception and decoding of the PLS2. As above mentioned, the PLS1 data remain unchanged for the entire duration of one frame-group. The detailed definition of the signaling fields of the PLS1 data are as follows:

PREAMBLE_DATA: This 20-bit field is a copy of the preamble signaling data excluding the EAC_FLAG.

NUM_FRAME_FRU: This 2-bit field indicates the number of the frames per FRU.

PAYLOAD_TYPE: This 3-bit field indicates the format of the payload data carried in the frame-group. PAYLOAD_TYPE is signaled as shown in table 9.

[Table 9]

| value | Payload type |
|---|---|
| 1XX | TS stream is transmitted |
| X1X | IP stream is transmitted |
| XX1 | GS stream is transmitted |

NUM_FSS: This 2-bit field indicates the number of FSS symbols in the current frame.

SYSTEM_VERSION: This 8-bit field indicates the version of the transmitted signal format. The SYSTEM_VERSION is divided into two 4-bit fields, which are a major version and a minor version.

Major version: The MSB four bits of SYSTEM_VERSION field indicate major version information. A change in the major version field indicates a non-backward-compatible change. The default value is '0000'. For the version described in this standard, the value is set to '0000'.

Minor version: The LSB four bits of SYSTEM_VERSION field indicate minor version information. A change in the minor version field is backward-compatible.

CELL_ID: This is a 16-bit field which uniquely identifies a geographic cell in an ATSC network. An ATSC cell coverage area may consist of one or more frequencies, depending on the number of frequencies used per Futurecast UTB system. If the value of the CELL_ID is not known or unspecified, this field is set to '0'.

NETWORK_ID: This is a 16-bit field which uniquely identifies the current ATSC network.

SYSTEM_ID: This 16-bit field uniquely identifies the Futurecast UTB system within the ATSC network. The Futurecast UTB system is the terrestrial broadcast system whose input is one or more input streams (TS, IP, GS) and whose output is an RF signal. The Futurecast UTB system carries one or more PHY profiles and FEF, if any. The same Futurecast UTB system may carry different input streams and use different RF frequencies in different geographical areas, allowing local service insertion. The frame structure and scheduling is controlled in one place and is identical for all transmissions within a Futurecast UTB system. One or more Futurecast UTB systems may have the same SYSTEM_ID meaning that they all have the same physical layer structure and configuration.

The following loop consists of FRU_PHY_PROFILE, FRU_FRAME_LENGTH, FRU_GI_FRACTION, and RESERVED which are used to indicate the FRU configuration and the length of each frame type. The loop size is fixed so that four PHY profiles (including a FEF) are signaled within the FRU. If NUM_FRAME_FRU is less than 4, the unused fields are filled with zeros.

FRU_PHY_PROFILE: This 3-bit field indicates the PHY profile type of the (i+1)th (i is the loop index) frame of the associated FRU. This field uses the same signaling format as shown in the table 8.

FRU_FRAME_LENGTH: This 2-bit field indicates the length of the (i+1)th frame of the associated FRU. Using FRU_FRAME_LENGTH together with FRU_GI_FRACTION, the exact value of the frame duration can be obtained.

FRU_GI_FRACTION: This 3-bit field indicates the guard interval fraction value of the (i+1)th frame of the associated FRU. FRU_GI_FRACTION is signaled according to the table 7.

RESERVED: This 4-bit field is reserved for future use.

The following fields provide parameters for decoding the PLS2 data.

PLS2_FEC_TYPE: This 2-bit field indicates the FEC type used by the PLS2 protection. The FEC type is signaled according to table 10. The details of the LDPC codes will be described later.

[Table 10]

| Content | PLS2 FEC type |
|---------|---------------|
| 00 | 4K-1/4 and 7K-3/10 LDPC codes |
| 01 ~ 11 | Reserved |

PLS2_MOD: This 3-bit field indicates the modulation type used by the PLS2. The modulation type is signaled according to table 11.

[Table 11]

| Value | PLS2_MODE |
|-------|-----------|
| 000 | BPSK |
| 001 | QPSK |
| 010 | QAM-16 |
| 011 | NUQ-64 |
| 100~111 | Reserved |

PLS2_SIZE_CELL: This 15-bit field indicates Ctotal_partial_block, the size (specified as the number of QAM cells) of the collection of full coded blocks for PLS2 that is carried in the current frame-group. This value is constant during the entire duration of the current frame-group.

PLS2_STAT_SIZE_BIT: This 14-bit field indicates the size, in bits, of the PLS2-STAT for the current frame-group. This value is constant during the entire duration of the current frame-group.

PLS2_DYN_SIZE_BIT: This 14-bit field indicates the size, in bits, of the PLS2-DYN for the current frame-group. This value is constant during the entire duration of the current frame-group.

PLS2_REP_FLAG: This 1-bit flag indicates whether the PLS2 repetition mode is used in the current frame-group. When this field is set to value '1', the PLS2 repetition mode is activated. When this field is set to value '0', the PLS2 repetition mode is deactivated.

PLS2_REP_SIZE_CELL: This 15-bit field indicates Ctotal_partial_block, the size (specified as the number of QAM cells) of the collection of partial coded blocks for PLS2 carried in every frame of the current frame-group, when PLS2 repetition is used. If repetition is not used, the value of this field is equal to 0. This value is constant during the entire duration of the current frame-group.

PLS2_NEXT_FEC_TYPE: This 2-bit field indicates the FEC type used for PLS2 that is carried in every frame of the next frame-group. The FEC type is signaled according to the table 10.

PLS2_NEXT_MOD: This 3-bit field indicates the modulation type used for PLS2 that is carried in every frame of the next frame-group. The modulation type is signaled according to the table 11.

PLS2_NEXT_REP_FLAG: This 1-bit flag indicates whether the PLS2 repetition mode is used in the next frame-group. When this field is set to value '1', the PLS2 repetition mode is activated. When this field is set to value '0', the PLS2 repetition mode is deactivated.

PLS2_NEXT_REP_SIZE_CELL: This 15-bit field indicates Ctotal_full_block, The size (specified as the number of QAM cells) of the collection of full coded blocks for PLS2 that is carried in every frame of the next frame-group, when PLS2 repetition is used. If repetition is not used in the next frame-group, the value of this field is equal to 0. This value is constant during the entire duration of the current frame-group.

PLS2_NEXT_REP_STAT_SIZE_BIT: This 14-bit field indicates the size, in bits, of the PLS2-STAT for the next frame-group. This value is constant in the current frame-group.

PLS2_NEXT_REP_DYN_SIZE_BIT: This 14-bit field indicates the size, in bits, of the PLS2-DYN for the next frame-group. This value is constant in the current frame-group.

PLS2_AP_MODE: This 2-bit field indicates whether additional parity is provided for PLS2 in the current frame-group. This value is constant during the entire duration of the current frame-group. The below table 12 gives the values of this field. When this field is set to '00', additional parity is not used for the PLS2 in the current frame-group.

[Table 12]

| Value | PLS2-AP mode |
|---|---|
| 00 | AP is not provided |
| 01 | AP1 mode |
| 10~11 | Reserved |

PLS2_AP_SIZE_CELL: This 15-bit field indicates the size (specified as the number of QAM cells) of the additional parity bits of the PLS2. This value is constant during the entire duration of the current frame-group.

PLS2_NEXT_AP_MODE: This 2-bit field indicates whether additional parity is provided for PLS2 signaling in every frame of next frame-group. This value is constant during the entire duration of the current frame-group. The table 12 defines the values of this field

PLS2_NEXT_AP_SIZE_CELL: This 15-bit field indicates the size (specified as the number of QAM cells) of the additional parity bits of the PLS2 in every frame of the next frame-group. This value is constant during the entire duration of the current frame-group.

RESERVED: This 32-bit field is reserved for future use.

CRC_32: A 32-bit error detection code, which is applied to the entire PLS1 signaling.

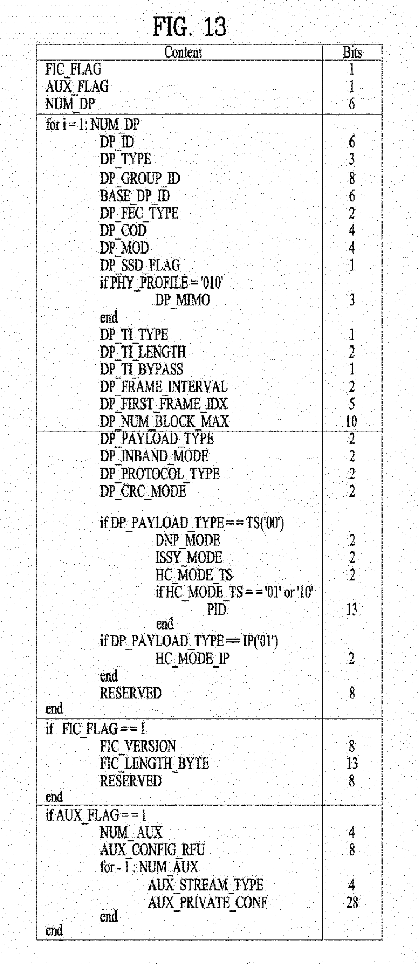

FIG. 13 illustrates PLS2 data according to an embodiment of the present invention.

FIG. 13 illustrates PLS2-STAT data of the PLS2 data. The PLS2-STAT data are the same within a frame-group, while the PLS2-DYN data provide information that is specific for the current frame.

The details of fields of the PLS2-STAT data are as follows:

FIC_FLAG: This 1-bit field indicates whether the FIC is used in the current frame-group. If this field is set to '1', the FIC is provided in the current frame. If this field set to '0', the FIC is not carried in the current frame. This value is constant during the entire duration of the current frame-group.

AUX_FLAG: This 1-bit field indicates whether the auxiliary stream(s) is used in the current frame-group. If this field is set to '1', the auxiliary stream is provided in the current frame. If this field set to '0', the auxiliary stream is not carried in the current frame. This value is constant during the entire duration of current frame-group.

*NUM_DP: This 6-bit field indicates the number of DPs carried within the current frame. The value of this field ranges from 1 to 64, and the number of DPs is NUM_DP+1.

DP_ID: This 6-bit field identifies uniquely a DP within a PHY profile.

DP_TYPE: This 3-bit field indicates the type of the DP. This is signaled according to the below table 13.

[Table 13]

| Value | DP Type |
|---|---|
| 000 | DP Type 1 |
| 001 | DP Type 2 |
| 010~111 | reserved |

DP_GROUP_ID: This 8-bit field identifies the DP group with which the current DP is associated. This can be used by a receiver to access the DPs of the service components associated with a particular service, which will have the same DP_GROUP_ID.

BASE_DP_ID: This 6-bit field indicates the DP carrying service signaling data (such as PSI/SI) used in the Management layer. The DP indicated by BASE_DP_ID may be either a normal DP carrying the service signaling data along with the service data or a dedicated DP carrying only the service signaling data

DP_FEC_TYPE: This 2-bit field indicates the FEC type used by the associated DP. The FEC type is signaled according to the below table 14.

[Table 14]

| Value | FEC_TYPE |
|-------|----------|
| 00 | 16K LDPC |
| 01 | 64K LDPC |
| 10~11 | Reserved |

DP_COD: This 4-bit field indicates the code rate used by the associated DP. The code rate is signaled according to the below table 15.

[Table 15]

| Value | Code rate |
|-------|-----------|
| 0000 | 5/15 |
| 0001 | 6/15 |
| 0010 | 7/15 |
| 0011 | 8/15 |
| 0100 | 9/15 |
| 0101 | 10/15 |
| 0110 | 11/15 |
| 0111 | 12/15 |
| 1000 | 13/15 |
| 1001 ~ 1111 | Reserved |

DP_MOD: This 4-bit field indicates the modulation used by the associated DP. The modulation is signaled according to the below table 16.

[Table 16]

| Value | Modulation |
|-------|------------|
| 0000 | QPSK |
| 0001 | QAM-16 |
| 0010 | NUQ-64 |
| 0011 | NUQ-256 |
| 0100 | NUQ-1024 |
| 0101 | NUC-16 |
| 0110 | NUC-64 |
| 0111 | NUC-256 |
| 1000 | NUC-1024 |
| 1001~1111 | reserved |

DP_SSD_FLAG: This 1-bit field indicates whether the SSD mode is used in the associated DP. If this field is set to value '1', SSD is used. If this field is set to value '0', SSD is not used.

The following field appears only if PHY_PROFILE is equal to '010', which indicates the advanced profile:

DP_MIMO: This 3-bit field indicates which type of MIMO encoding process is applied to the associated DP. The type of MIMO encoding process is signaled according to the table 17.

[Table 17]

| Value | MIMO encoding |
|---|---|
| 000 | FR-SM |
| 001 | FRFD-SM |
| 010~111 | reserved |

DP_TI_TYPE: This 1-bit field indicates the type of time-interleaving. A value of '0' indicates that one TI group corresponds to one frame and contains one or more TI-blocks. A value of '1' indicates that one TI group is carried in more than one frame and contains only one TI-block.

DP_TI_LENGTH: The use of this 2-bit field (the allowed values are only 1, 2, 4, 8) is determined by the values set within the DP_TI_TYPE field as follows:

If the DP_TI_TYPE is set to the value '1', this field indicates PI, the number of the frames to which each TI group is mapped, and there is one TI-block per TI group (NTI=1). The allowed PI values with 2-bit field are defined in the below table 18.

If the DP_TI_TYPE is set to the value '0', this field indicates the number of TI-blocks NTI per TI group, and there is one TI group per frame (PI=1). The allowed PI values with 2-bit field are defined in the below table 18.

[Table 18]

| 2-bit field | $P_I$ | $N_{TI}$ |
|---|---|---|
| 00 | 1 | 1 |
| 01 | 2 | 2 |
| 10 | 4 | 3 |
| 11 | 8 | 4 |

DP_FRAME_INTERVAL: This 2-bit field indicates the frame interval (IJUMP) within the frame-group for the associated DP and the allowed values are 1, 2, 4, 8 (the corresponding 2-bit field is '00', '01', '10', or '11', respectively). For DPs that do not appear every frame of the frame-group, the value of this field is equal to the interval between successive frames. For example, if a DP appears on the frames 1, 5, 9, 13, etc., this field is set to '4'. For DPs that appear in every frame, this field is set to '1'.

DP_TI_BYPASS: This 1-bit field determines the availability of time interleaver 5050. If time interleaving is not used for a DP, it is set to '1'. Whereas if time interleaving is used it is set to '0'.

DP_FIRST_FRAME_IDX: This 5-bit field indicates the index of the first frame of the super-frame in which the current DP occurs. The value of DP_FIRST_FRAME_IDX ranges from 0 to 31

DP_NUM_BLOCK_MAX: This 10-bit field indicates the maximum value of DP_NUM_BLOCKS for this DP. The value of this field has the same range as DP_NUM_BLOCKS.

DP_PAYLOAD_TYPE: This 2-bit field indicates the type of the payload data carried by the given DP. DP_PAYLOAD_TYPE is signaled according to the below table 19.

[Table 19]

| Value | Payload Type |
|---|---|
| 00 | TS. |
| 01 | IP |
| 10 | GS |
| 11 | reserved |

DP_INBAND_MODE: This 2-bit field indicates whether the current DP carries in-band signaling information. The in-band signaling type is signaled according to the below table 20.

[Table 20]

| Value | In-band mode |
|-------|--------------|
| 00 | In-band signaling is not carried. |
| 01 | INBAND-PLS is carried only |
| 10 | INBAND-ISSY is carried only |
| 11 | INBAND-PLS and INBAND-ISSY are carried |

DP_PROTOCOL_TYPE: This 2-bit field indicates the protocol type of the payload carried by the given DP. It is signaled according to the below table 21 when input payload types are selected.

[Table 21]

| Value | If DP_PAYLOAD_TYPE Is TS | If DP_PAYLOAD_TYPE Is IP | If DP_PAYLOAD_TYPE Is GS |
|-------|--------------------------|--------------------------|--------------------------|
| 00 | MPEG2-TS | IPv4 | (Note) |
| 01 | Reserved | IPv6 | Reserved |
| 10 | Reserved | Reserved | Reserved |
| 11 | Reserved | Reserved | Reserved |

DP_CRC_MODE: This 2-bit field indicates whether CRC encoding is used in the Input Formatting block. The CRC mode is signaled according to the below table 22.

[Table 22]

| Value | CRC mode |
|-------|----------|
| 00 | Not used |
| 01 | CRC-8 |
| 10 | CRC-16 |
| 11 | CRC-32 |

DNP_MODE: This 2-bit field indicates the null-packet deletion mode used by the associated DP when DP_PAYLOAD_TYPE is set to TS ('00'). DNP_MODE is signaled according to the below table 23. If DP_PAYLOAD_TYPE is not TS ('00'), DNP_MODE is set to the value '00'.

[Table 23]

| Value | Null-packet deletion mode |
|-------|---------------------------|
| 00 | Not used |
| 01 | DNP-NORMAL |
| 10 | DNP-OFFSET |
| 11 | reserved |

ISSY_MODE: This 2-bit field indicates the ISSY mode used by the associated DP when DP_PAYLOAD_TYPE is set to TS ('00'). The ISSY_MODE is signaled according to the below table 24 If DP_PAYLOAD_TYPE is not TS ('00'), ISSY_MODE is set to the value '00'.

[Table 24]

| Value | ISSY mode |
|-------|-----------|
| 00 | Not used |

(continued)

| Value | ISSY mode |
|-------|-----------|
| 01 | ISSY-UP |
| 10 | ISSY-BBF |
| 11 | reserved |

HC_MODE_TS: This 2-bit field indicates the TS header compression mode used by the associated DP when DP_PAYLOAD_TYPE is set to TS ('00'). The HC_MODE_TS is signaled according to the below table 25.

[Table 25]

| Value | Header compression mode |
|-------|------------------------|
| 00 | HC_MODE_TS 1 |
| 01 | HC_MODE_TS 2 |
| 10 | HC_MODE_TS 3 |
| 11 | HC_MODE_TS 4 |

HC_MODE_IP: This 2-bit field indicates the IP header compression mode when DP_PAYLOAD_TYPE is set to IP ('01'). The HC_MODE_IP is signaled according to the below table 26.

[Table 26]

| Value | Header compression mode |
|-------|------------------------|
| 00 | No compression |
| 01 | HC_MODE_IP 1 |
| 10~11 | reserved |

PID : This 13-bit field indicates the PID number for TS header compression when DP_PAYLOAD_TYPE is set to TS ('00') and HC_MODE_TS is set to '01' or '10'.
RESERVED: This 8-bit field is reserved for future use.
The following field appears only if FIC_FLAG is equal to '1':

FIC_VERSION: This 8-bit field indicates the version number of the FIC.
FIC_LENGTH_BYTE: This 13-bit field indicates the length, in bytes, of the FIC.
RESERVED: This 8-bit field is reserved for future use.

The following field appears only if AUX_FLAG is equal to '1':

NUM_AUX: This 4-bit field indicates the number of auxiliary streams. Zero means no auxiliary streams are used.
AUX_CONFIG_RFU: This 8-bit field is reserved for future use.
AUX_STREAM_TYPE: This 4-bit is reserved for future use for indicating the type of the current auxiliary stream.
AUX_PRIVATE_CONFIG: This 28-bit field is reserved for future use for signaling auxiliary streams.

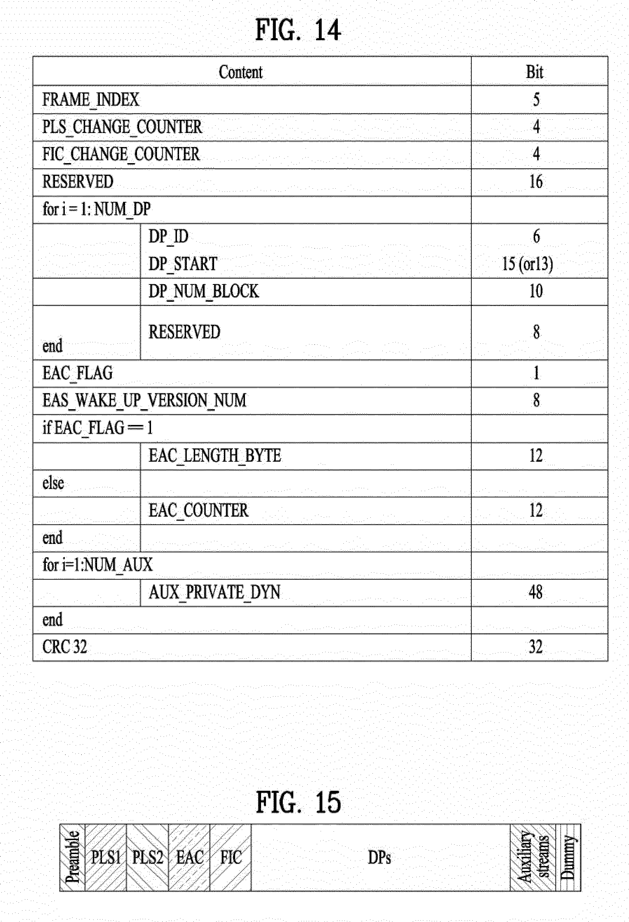

FIG. 14 illustrates PLS2 data according to another embodiment of the present invention.
FIG. 14 illustrates PLS2-DYN data of the PLS2 data. The values of the PLS2-DYN data may change during the duration of one frame-group, while the size of fields remains constant.
The details of fields of the PLS2-DYN data are as follows:
FRAME_INDEX: This 5-bit field indicates the frame index of the current frame within the super-frame. The index of the first frame of the super-frame is set to '0'.
PLS_CHANGE_COUNTER: This 4-bit field indicates the number of super-frames ahead where the configuration will change. The next super-frame with changes in the configuration is indicated by the value signaled within this field. If this field is set to the value '0000', it means that no scheduled change is foreseen: e.g., value '1' indicates that there is a change in the next super-frame.

FIC_CHANGE_COUNTER: This 4-bit field indicates the number of super-frames ahead where the configuration (i.e., the contents of the FIC) will change. The next super-frame with changes in the configuration is indicated by the value signaled within this field. If this field is set to the value '0000', it means that no scheduled change is foreseen: e.g. value '0001' indicates that there is a change in the next super-frame.

RESERVED: This 16-bit field is reserved for future use.

The following fields appear in the loop over NUM_DP, which describe the parameters associated with the DP carried in the current frame.

DP_ID: This 6-bit field indicates uniquely the DP within a PHY profile.

DP_START: This 15-bit (or 13-bit) field indicates the start position of the first of the DPs using the DPU addressing scheme. The DP_START field has differing length according to the PHY profile and FFT size as shown in the below table 27.

[Table 27]

| PHY profile | DP_START field size | |
| --- | --- | --- |
| | 64K | 16K |
| Base | 13 bit | 15 bit |
| Handheld | - | 13 bit |
| Advanced | 13 bit | 15 bit |

DP_NUM_BLOCK: This 10-bit field indicates the number of FEC blocks in the current TI group for the current DP. The value of DP_NUM_BLOCK ranges from 0 to 1023

RESERVED: This 8-bit field is reserved for future use.

The following fields indicate the FIC parameters associated with the EAC.

EAC_FLAG: This 1-bit field indicates the existence of the EAC in the current frame. This bit is the same value as the EAC_FLAG in the preamble.

EAS_WAKE_UP_VERSION_NUM: This 8-bit field indicates the version number of a wake-up indication.

If the EAC_FLAG field is equal to '1', the following 12 bits are allocated for EAC_LENGTH_BYTE field. If the EAC_FLAG field is equal to '0', the following 12 bits are allocated for EAC_COUNTER.

EAC_LENGTH_BYTE: This 12-bit field indicates the length, in byte, of the EAC..

EAC_COUNTER: This 12-bit field indicates the number of the frames before the frame where the EAC arrives.

The following field appears only if the AUX_FLAG field is equal to '1':

AUX_PRIVATE_DYN: This 48-bit field is reserved for future use for signaling auxiliary streams. The meaning of this field depends on the value of AUX_STREAM_TYPE in the configurable PLS2-STAT.

CRC_32: A 32-bit error detection code, which is applied to the entire PLS2.

FIG. 15 illustrates a logical structure of a frame according to an embodiment of the present invention.

As above mentioned, the PLS, EAC, FIC, DPs, auxiliary streams and dummy cells are mapped into the active carriers of the OFDM symbols in the frame. The PLS1 and PLS2 are first mapped into one or more FSS(s). After that, EAC cells, if any, are mapped immediately following the PLS field, followed next by FIC cells, if any. The DPs are mapped next after the PLS or EAC, FIC, if any. Type 1 DPs follows first, and Type 2 DPs next. The details of a type of the DP will be described later. In some case, DPs may carry some special data for EAS or service signaling data. The auxiliary stream or streams, if any, follow the DPs, which in turn are followed by dummy cells. Mapping them all together in the above mentioned order, i.e. PLS, EAC, FIC, DPs, auxiliary streams and dummy data cells exactly fill the cell capacity in the frame.

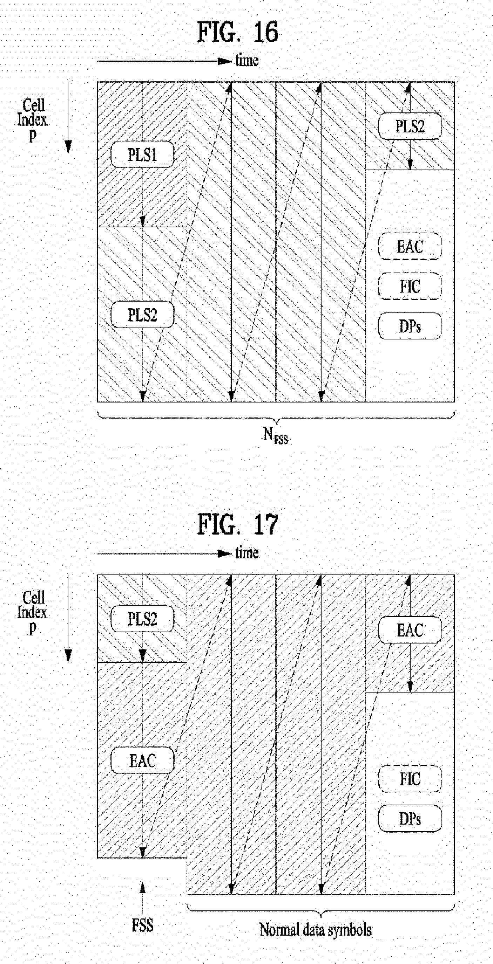

FIG. 16 illustrates PLS mapping according to an embodiment of the present invention.

PLS cells are mapped to the active carriers of FSS(s). Depending on the number of cells occupied by PLS, one or more symbols are designated as FSS(s), and the number of FSS(s) NFSS is signaled by NUM_FSS in PLS1. The FSS is a special symbol for carrying PLS cells. Since robustness and latency are critical issues in the PLS, the FSS(s) has higher density of pilots allowing fast synchronization and frequency-only interpolation within the FSS.

PLS cells are mapped to active carriers of the NFSS FSS(s) in a top-down manner as shown in an example in FIG. 16. The PLS1 cells are mapped first from the first cell of the first FSS in an increasing order of the cell index. The PLS2 cells follow immediately after the last cell of the PLS1 and mapping continues downward until the last cell index of the first FSS. If the total number of required PLS cells exceeds the number of active carriers of one FSS, mapping proceeds to the next FSS and continues in exactly the same manner as the first FSS.

After PLS mapping is completed, DPs are carried next. If EAC, FIC or both are present in the current frame, they are placed between PLS and "normal" DPs.

FIG. 17 illustrates EAC mapping according to an embodiment of the present invention.

EAC is a dedicated channel for carrying EAS messages and links to the DPs for EAS. EAS support is provided but EAC itself may or may not be present in every frame. EAC, if any, is mapped immediately after the PLS2 cells. EAC is not preceded by any of the FIC, DPs, auxiliary streams or dummy cells other than the PLS cells. The procedure of mapping the EAC cells is exactly the same as that of the PLS.

The EAC cells are mapped from the next cell of the PLS2 in increasing order of the cell index as shown in the example in FIG. 17. Depending on the EAS message size, EAC cells may occupy a few symbols, as shown in FIG. 17.

EAC cells follow immediately after the last cell of the PLS2, and mapping continues downward until the last cell index of the last FSS. If the total number of required EAC cells exceeds the number of remaining active carriers of the last FSS mapping proceeds to the next symbol and continues in exactly the same manner as FSS(s). The next symbol for mapping in this case is the normal data symbol, which has more active carriers than a FSS.

After EAC mapping is completed, the FIC is carried next, if any exists. If FIC is not transmitted (as signaled in the PLS2 field), DPs follow immediately after the last cell of the EAC.

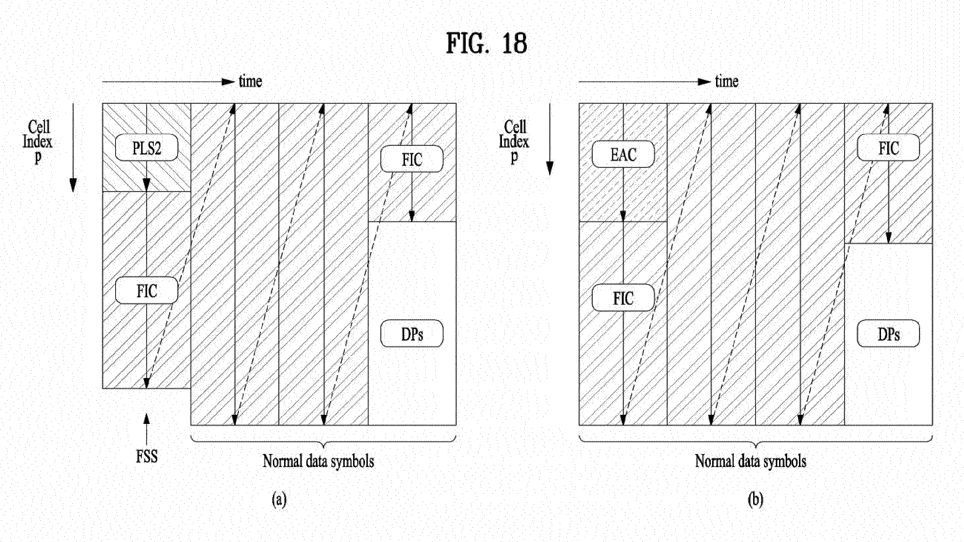

FIG. 18 illustrates FIC mapping according to an embodiment of the present invention.

shows an example mapping of FIC cell without EAC and (b) shows an example mapping of FIC cell with EAC.

FIC is a dedicated channel for carrying cross-layer information to enable fast service acquisition and channel scanning. This information primarily includes channel binding information between DPs and the services of each broadcaster. For fast scan, a receiver can decode FIC and obtain information such as broadcaster ID, number of services, and BASE_DP_ID. For fast service acquisition, in addition to FIC, base DP can be decoded using BASE_DP_ID. Other than the content it carries, a base DP is encoded and mapped to a frame in exactly the same way as a normal DP. Therefore, no additional description is required for a base DP. The FIC data is generated and consumed in the Management Layer. The content of FIC data is as described in the Management Layer specification.

The FIC data is optional and the use of FIC is signaled by the FIC_FLAG parameter in the static part of the PLS2. If FIC is used, FIC_FLAG is set to '1' and the signaling field for FIC is defined in the static part of PLS2. Signaled in this field are FIC _VERSION, and FIC_LENGTH_BYTE. FIC uses the same modulation, coding and time interleaving parameters as PLS2. FIC shares the same signaling parameters such as PLS2_MOD and PLS2_FEC. FIC data, if any, is mapped immediately after PLS2 or EAC if any. FIC is not preceded by any normal DPs, auxiliary streams or dummy cells. The method of mapping FIC cells is exactly the same as that of EAC which is again the same as PLS.

Without EAC after PLS, FIC cells are mapped from the next cell of the PLS2 in an increasing order of the cell index as shown in an example in (a). Depending on the FIC data size, FIC cells may be mapped over a few symbols, as shown in (b).

FIC cells follow immediately after the last cell of the PLS2, and mapping continues downward until the last cell index of the last FSS. If the total number of required FIC cells exceeds the number of remaining active carriers of the last FSS, mapping proceeds to the next symbol and continues in exactly the same manner as FSS(s). The next symbol for mapping in this case is the normal data symbol which has more active carriers than a FSS.

If EAS messages are transmitted in the current frame, EAC precedes FIC, and FIC cells are mapped from the next cell of the EAC in an increasing order of the cell index as shown in (b).

After FIC mapping is completed, one or more DPs are mapped, followed by auxiliary streams, if any, and dummy cells.

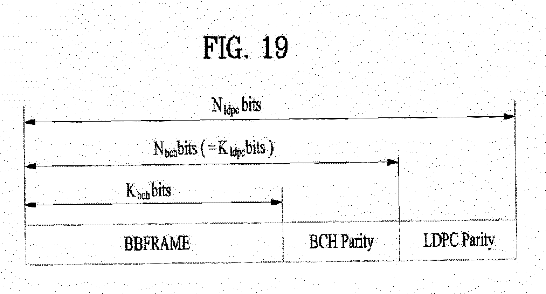

FIG. 19 illustrates an FEC structure according to an embodiment of the present invention.

FIG. 19 illustrates an FEC structure according to an embodiment of the present invention before bit interleaving. As above mentioned, Data FEC encoder may perform the FEC encoding on the input BBF to generate FECBLOCK procedure using outer coding (BCH), and inner coding (LDPC). The illustrated FEC structure corresponds to the FECBLOCK. Also, the FECBLOCK and the FEC structure have same value corresponding to a length of LDPC codeword.

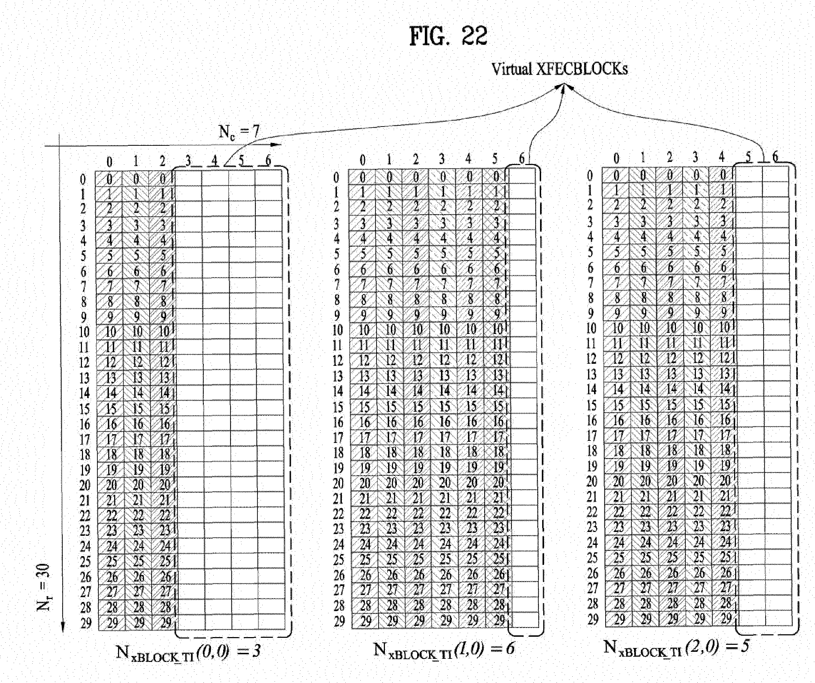

The BCH encoding is applied to each BBF (Kbch bits), and then LDPC encoding is applied to BCH-encoded BBF (Kldpc bits = Nbch bits) as illustrated in FIG. 22.

The value of Nldpc is either 64800 bits (long FECBLOCK) or 16200 bits (short FECBLOCK).

The below table 28 and table 29 show FEC encoding parameters for a long FECBLOCK and a short FECBLOCK, respectively.

[Table 28]

| LDPC Rate | $N_{ldpc}$ | $K_{ldpc}$ | $K_{bch}$ | BCH error correction capability | $N_{bch}$-$K_{bch}$ |
|---|---|---|---|---|---|
| 5/15 | | 21600 | 21408 | | |
| 6/15 | | 25920 | 25728 | | |
| 7/15 | | 30240 | 30048 | | |
| 8/15 | | 34560 | 34368 | | |
| 9/15 | 64800 | 38880 | 38688 | 12 | 192 |
| 10/15 | | 43200 | 43008 | | |
| 11/15 | | 47520 | 47328 | | |
| 12/15 | | 51840 | 51648 | | |
| 13/15 | | 56160 | 55968 | | |

[Table 29]

| LDPC Rate | $N_{ldpc}$ | $K_{ldpc}$ | $K_{bch}$ | BCH error correction capability | $N_{bch}$-$K_{bch}$ |
|---|---|---|---|---|---|
| 5/15 | | 5400 | 5232 | | |
| 6/15 | | 6480 | 6312 | | |
| 7/15 | 16200 | 7560 | 7392 | 12 | 168 |
| 8/15 | | 8640 | 8472 | | |
| 9/15 | | 9720 | 9552 | | |
| 10/15 | | 10800 | 10632 | | |
| 11/15 | | 11880 | 11712 | | |
| 12/15 | | 12960 | 12792 | | |
| 13/15 | | 14040 | 13872 | | |

The details of operations of the BCH encoding and LDPC encoding are as follows:

A 12-error correcting BCH code is used for outer encoding of the BBF. The BCH generator polynomial for short FECBLOCK and long FECBLOCK are obtained by multiplying together all polynomials.

LDPC code is used to encode the output of the outer BCH encoding. To generate a completed Bldpc (FECBLOCK), Pldpc (parity bits) is encoded systematically from each Ildpc (BCH-encoded BBF), and appended to Ildpc. The completed Bldpc (FECBLOCK) are expressed as followequation.

【Equation2】

$$B_{ldpc} = [\, \mathbf{I}_{ldpc} \quad \mathbf{P}_{ldpc} \,] = [\, i_0, i_1, \ldots, i_{K_{ldpc}-1}, \ p_0, p_1, \ldots, p_{N_{ldpc}-K_{ldpc}-1} \,]$$

The parameters for long FECBLOCK and short FECBLOCK are given in the above table 28 and 29, respectively.
The detailed procedure to calculate Nldpc - Kldpc parity bits for long FECBLOCK, is as follows:

1) Initialize the parity bits,

【Equation3】

$$p_0 = p_1 = p_2 = \ldots = p_{N_{ldpc}-K_{ldpc}-1} = 0$$

2) Accumulate the first information bit - i0, at parity bit addresses specified in the first row of an addresses of parity check matrix. The details of addresses of parity check matrix will be described later. For example, for rate 13/15:

【Equation 4】

$$p_{983} = p_{983} \oplus i_0 \qquad\qquad p_{2815} = p_{2815} \oplus i_0$$

$$p_{4837} = p_{4837} \oplus i_0 \qquad\qquad p_{4989} = p_{4989} \oplus i_0$$

$$p_{6138} = p_{6138} \oplus i_0 \qquad\qquad p_{6458} = p_{6458} \oplus i_0$$

$$p_{6921} = p_{6921} \oplus i_0 \qquad\qquad p_{6974} = p_{6974} \oplus i_0$$

$$p_{7572} = p_{7572} \oplus i_0 \qquad\qquad p_{8260} = p_{8260} \oplus i_0$$

$$p_{8496} = p_{8496} \oplus i_0$$

3) For the next 359 information bits, is, s=1, 2, ..., 359 accumulate is at parity bit addresses using following equation.

【Equation 5】

$$\{x + (s \mod 360) \times Q_{ldpc}\} \mod (N_{ldpc} - K_{ldpc})$$

where x denotes the address of the parity bit accumulator corresponding to the first bit i0, and Qldpc is a code rate dependent constant specified in the addresses of parity check matrix. Continuing with the example, Qldpc = 24 for rate 13/15, so for information bit i1, the following operations are performed:

【Equation 6】

$$p_{1007} = p_{1007} \oplus i_1 \qquad\qquad p_{2839} = p_{2839} \oplus i_1$$

$$p_{1861} = p_{1861} \oplus i_1 \qquad\qquad p_{5013} = p_{5013} \oplus i_1$$

$$p_{6162} = p_{6162} \oplus i_1 \qquad\qquad p_{6482} = p_{6482} \oplus i_1$$

$$p_{6945} = p_{6945} \oplus i_1 \qquad\qquad p_{6998} = p_{6998} \oplus i_1$$

$$p_{7596} = p_{7596} \oplus i_1 \qquad\qquad p_{8284} = p_{8284} \oplus i_1$$

$$p_{8520} = p_{8520} \oplus i_1$$

4) For the 361st information bit i360, the addresses of the parity bit accumulators are given in the second row of the addresses of parity check matrix. In a similar manner the addresses of the parity bit accumulators for the following 359 information bits is, s= 361, 362, ..., 719 are obtained using the equation 6, where x denotes the address of the parity bit accumulator corresponding to the information bit i360, i.e., the entries in the second row of the addresses of parity check matrix.

5) In a similar manner, for every group of 360 new information bits, a new row from addresses of parity check matrixes used to find the addresses of the parity bit accumulators.

After all of the information bits are exhausted, the final parity bits are obtained as follows:

6) Sequentially perform the following operations starting with i=1

【Equation 7】

$$p_i = p_i \oplus p_{i-1}, \qquad i = 1,2,..., N_{ldpc} - K_{ldpc} - 1$$

where final content of $p_i$, i=0,1,...$N_{ldpc}$ - $K_{ldpc}$ - 1 is equal to the parity bit pi.

[Table 30]

| Code Rate | $Q_{ldpc}$ |
|-----------|------------|
| 5/15 | 120 |
| 6/15 | 108 |
| 7/15 | 96 |
| 8/15 | 84 |
| 9/15 | 72 |
| 10/15 | 60 |
| 11/15 | 48 |
| 12/15 | 36 |
| 13/15 | 24 |

This LDPC encoding procedure for a short FECBLOCK is in accordance with the LDPC encoding procedure for the long FECBLOCK, except replacing the table 30 with table 31, and replacing the addresses of parity check matrix for the long FECBLOCK with the addresses of parity check matrix for the short FECBLOCK.

[Table 31]

| Code Rate | $Q_{ldpc}$ |
|-----------|------------|
| 5/15 | 30 |
| 6/15 | 27 |
| 7/15 | 24 |
| 8/15 | 21 |
| 9/15 | 18 |
| 10/15 | 15 |
| 11/15 | 12 |
| 12/15 | 9 |
| 13/15 | 6 |

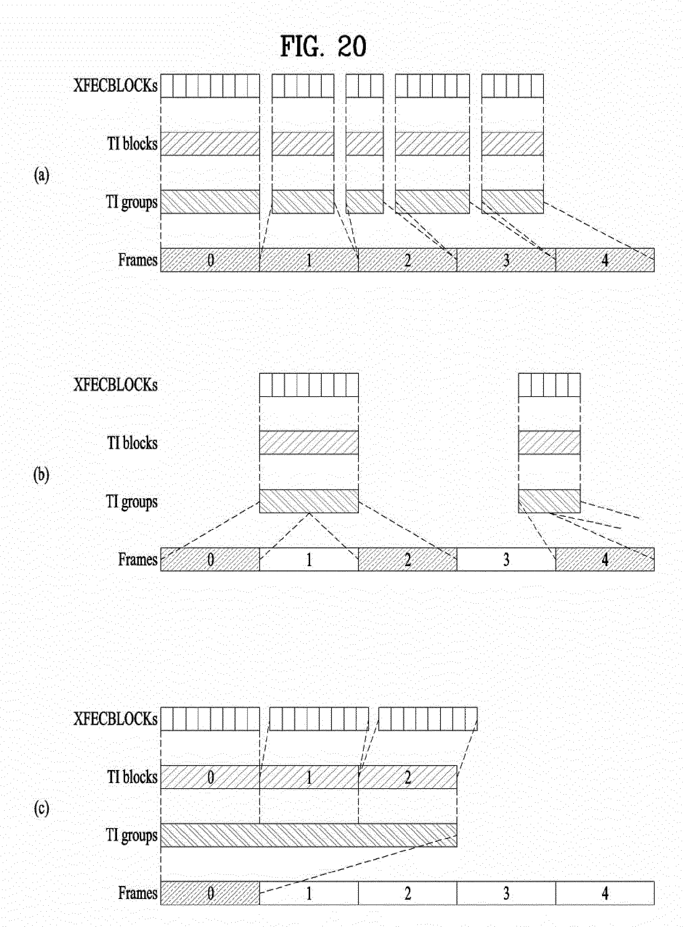

FIG. 20 illustrates a time interleaving according to an embodiment of the present invention.

(a) to (c) show examples of TI mode.

The time interleaver operates at the DP level. The parameters of time interleaving (TI) may be set differently for each DP.

The following parameters, which appear in part of the PLS2-STAT data, configure the TI:

DP_TI_TYPE (allowed values: 0 or 1): Represents the TI mode; '0' indicates the mode with multiple TI blocks (more than one TI block) per TI group. In this case, one TI group is directly mapped to one frame (no inter-frame interleaving). '1' indicates the mode with only one TI block per TI group. In this case, the TI block may be spread over more than one frame (inter-frame interleaving).

DP_TI_LENGTH: If DP_TI_TYPE = '0', this parameter is the number of TI blocks NTI per TI group. For DP_TI_TYPE = '1', this parameter is the number of frames PI spread from one TI group.

DP_NUM_BLOCK_MAX (allowed values: 0 to 1023): Represents the maximum number of XFECBLOCKs per TI group.

DP_FRAME_INTERVAL (allowed values: 1, 2, 4, 8): Represents the number of the frames IJUMP between two successive frames carrying the same DP of a given PHY profile.

DP_TI_BYPASS (allowed values: 0 or 1): If time interleaving is not used for a DP, this parameter is set to '1'. It is set to '0' if time interleaving is used.

Additionally, the parameter DP_NUM_BLOCK from the PLS2-DYN data is used to represent the number of XFECBLOCKs carried by one TI group of the DP.

When time interleaving is not used for a DP, the following TI group, time interleaving operation, and TI mode are not considered. However, the Delay Compensation block for the dynamic configuration information from the scheduler will still be required. In each DP, the XFECBLOCKs received from the SSD/MIMO encoding are grouped into TI groups. That is, each TI group is a set of an integer number of XFECBLOCKs and will contain a dynamically variable number of XFECBLOCKs. The number of XFECBLOCKs in the TI group of index n is denoted by NxBLOCK_Group(n) and is signaled as DP_NUM_BLOCK in the PLS2-DYN data. Note that NxBLOCK_Group(n) may vary from the minimum value of 0 to the maximum value NxBLOCK_Group_MAX (corresponding to DP_NUM_BLOCK_MAX) of which the largest value is 1023.

Each TI group is either mapped directly onto one frame or spread over PI frames. Each TI group is also divided into more than one TI blocks(NTI), where each TI block corresponds to one usage of time interleaver memory. The TI blocks within the TI group may contain slightly different numbers of XFECBLOCKs. If the TI group is divided into multiple TI blocks, it is directly mapped to only one frame. There are three options for time interleaving (except the extra option of skipping the time interleaving) as shown in the below table 32.

[Table 32]

| Modes | Descriptions |
|---|---|
| Option-1 | Each TI group contains one TI block and is mapped directly to one frame as shown in (a). This option is signaled in the PLS2-STAT by DP_TI_TYPE='0' and DP TI LENGTH ='1'($N_{TI}$=1). |
| Option-2 | Each TI group contains one TI block and is mapped to more than one frame. (b) shows an example, where one TI group is mapped to two frames, i.e., DP_TI_LENGTH ='2' ($P_I$=2) and DP FRAME INTERVAL ($I_{JUMP}$ = 2). This provides greater time diversity for low data-rate services. This option is signaled in the PLS2-STAT by DP_TI_TYPE ='1'. |
| Option-3 | Each TI group is divided into multiple TI blocks and is mapped directly to one frame as shown in (c). Each TI block may use full TI memory, so as to provide the maximum bit-rate for a DP. This option is signaled in the PLS2-STAT signaling by DP_TI_TYPE='0' and DP_TI_LENGTH = $N_{TI}$, while $P_I$=1. |

Typically, the time interleaver will also act as a buffer for DP data prior to the process of frame building. This is achieved by means of two memory banks for each DP. The first TI-block is written to the first bank. The second TI-block is written to the second bank while the first bank is being read from and so on.

The TI is a twisted row-column block interleaver. For the sth TI block of the nth TI group, the number of rows $N_r$ of a TI memory is equal to the number of cells $N_{cells}$, i.e., $N_r = N_{cells}$ while the number of columns $N_c$ is equal to the number $N_{xBLOCK\_TI}(n,s)$.

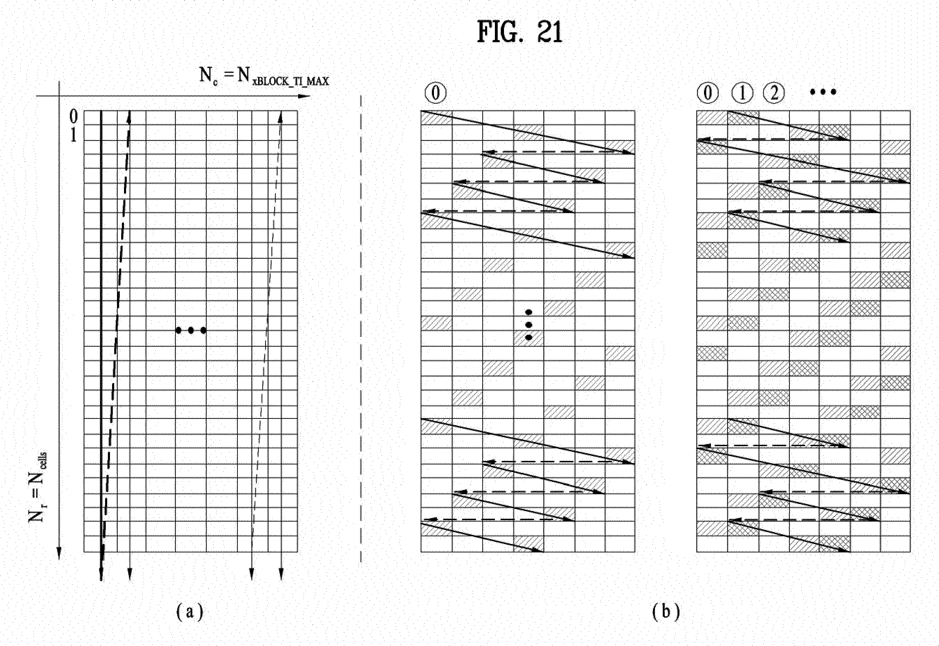

FIG. 21 illustrates the basic operation of a twisted row-column block interleaver according to an embodiment of the present invention.

FIG. 21 (a) shows a writing operation in the time interleaver and FIG. 21(b) shows a reading operation in the time interleaver The first XFECBLOCK is written column-wise into the first column of the TI memory, and the second XFECBLOCK is written into the next column, and so on as shown in (a). Then, in the interleaving array, cells are read out diagonal-wise. During diagonal-wise reading from the first row (rightwards along the row beginning with the left-most column) to the last row, $N_r$ cells are read out as shown in (b). In detail, assuming $Z_{n,s,i}(i=0,...,N_rN_c)$ as the TI memory cell position to be read sequentially, the reading process in such an interleaving array is performed by calculating the row index $R_{n,s,i}$, the column index $C_{n,s,i}$, and the associated twisting parameter $T_{n,s,i}$ as follows equation.

【Equation 8】

$$GENERATE\left(R_{n,s,i}, C_{n,s,i}\right)=$$

$$\{$$

$$R_{n,s,i} = \mod(i, N_r),$$

$$T_{n,s,i} = \mod(S_{shift} \times R_{n,s,i}, N_c),$$

$$C_{n,s,i} = \mod\left(T_{n,s,i} + \left\lfloor \frac{i}{N_r} \right\rfloor, N_c\right)$$

$$\}$$

where $S_{shift}$ is a common shift value for the diagonal-wise reading process regardless of $N_{xBLOCK\_TI}(n,s)$, and it is determined by $N_{xBLOCK\_TI\_MAX}$ given in the PLS2-STAT as follows equation.

【Equation 9】

$$for \begin{cases} N'_{xBLOCK\_TI\_MAX} = N_{xBLOCK\_TI\_MAX} + 1, & if\ N_{xBLOCK\_TI\_MAX}\ \mod 2 = 0 \\ N'_{xBLOCK\_TI\_MAX} = N_{xBLOCK\_TI\_MAX}, & if\ N_{xBLOCK\_TI\_MAX}\ \mod 2 = 1 \end{cases}$$

$$S_{shift} = \frac{N'_{xBLOCK\_TI\_MAX} - 1}{2}$$

As a result, the cell positions to be read are calculated by a coordinate as $Z_{n,s,t} = N_r C_{n,s,i} + R_{n,s,j}$

FIG. 22 illustrates an operation of a twisted row-column block interleaver according to another embodiment of the present invention.

More specifically, FIG. 22 illustrates the interleaving array in the TI memory for each TI group, including virtual XFECBLOCKs when $N_{xBLOCK\_TI}(0,0)=3$, $N_{xBLOCK\_TI}(1,0) = 6$, $N_{xBLOCK\_TI}(2,0) = 5$

The variable number $N_{xBLOCK\_TI}(n,s)=N_r$ will be less than or equal to $N_{xBLOCK\_TI\_MAX}$. Thus, in order to achieve a single-memory deinterleaving at the receiver side, regardless of $N_{xBLOCK\_TI}(n,s)$, the interleaving array for use in a twisted row-column block interleaver is set to the size of $N_r \times N_c = N_{cells} \times N_{xBLOCK\_TI\_MAX}$ by inserting the virtual XFECBLOCKs into the TI memory and the reading process is accomplished as follow equation.

【Equation10】

$$p = 0;$$
$$for\ i = 0; i < N_{cells}N'_{xBLOCK\_TI\_MAX}; i = i+1$$
$$\{GENERATE\ (R_{n,s,i}, C_{n,s,i});$$
$$V_i = N_r C_{n,s,i} + R_{n,s,i}$$
$$if\ V_i < N_{cells}N_{xBLOCK\_TI}(n,s)$$
$$\{$$
$$Z_{n,s,p} = V_i;\ p = p+1;$$
$$\}$$
$$\}$$

The number of TI groups is set to 3. The option of time interleaver is signaled in the PLS2-STAT data by DP_TI_TYPE='0', DP_FRAME_INTERVAL='1', and DP_TI_LENGTH='1', i.e.,NTI=1, IJUMP=1, and PI=1. The number of XFECBLOCKs, each of which has Ncells = 30 cells, per TI group is signaled in the PLS2-DYN data by NxBLOCK_TI(0,0)=3, NxBLOCK_TI(1,0)=6, and NxBLOCK_TI(2,0)=5, respectively. The maximum number of XFECBLOCK is signaled in the PLS2-STAT data by NxBLOCK_Group_MAX, which leads to $\llcorner N_{xBLOCK\_Group\_MAX}/N_{TI}\lrcorner = N_{xBLOCK\_TI\_MAX}$=6.

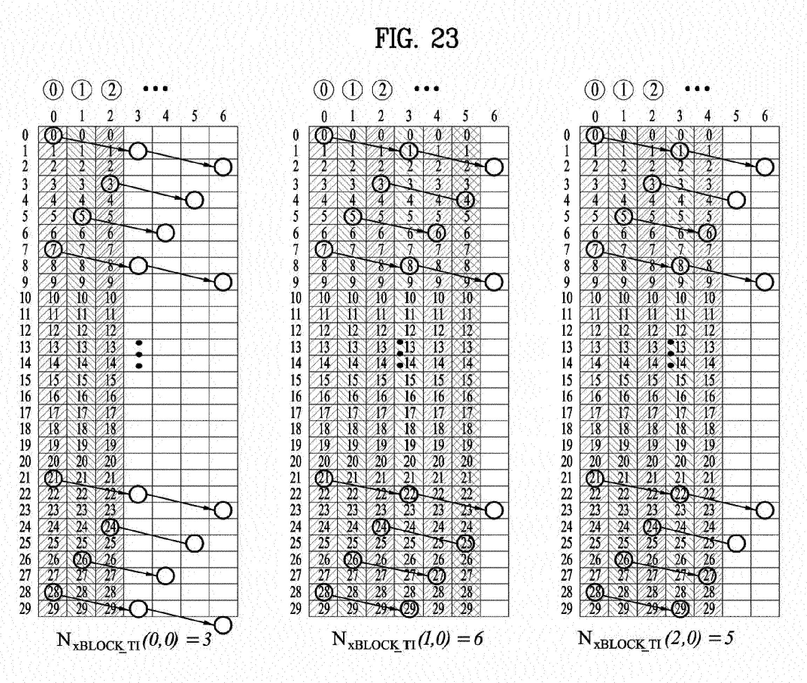

FIG. 23 illustrates a diagonal-wise reading pattern of a twisted row-column block interleaver according to an embodiment of the present invention.

More specifically FIG. 23 shows a diagonal-wise reading pattern from each interleaving array with parameters of $N'_{xBLOCK\ TI\ MAX}$=7 and Sshift=(7-1)/2=3. Note that in the reading process shown as pseudocode above, if $V_i \geq N_{cells}N_{xBLOCK\_TI}(n,s)$, the value of Vi is skipped and the next calculated value of Vi is used.

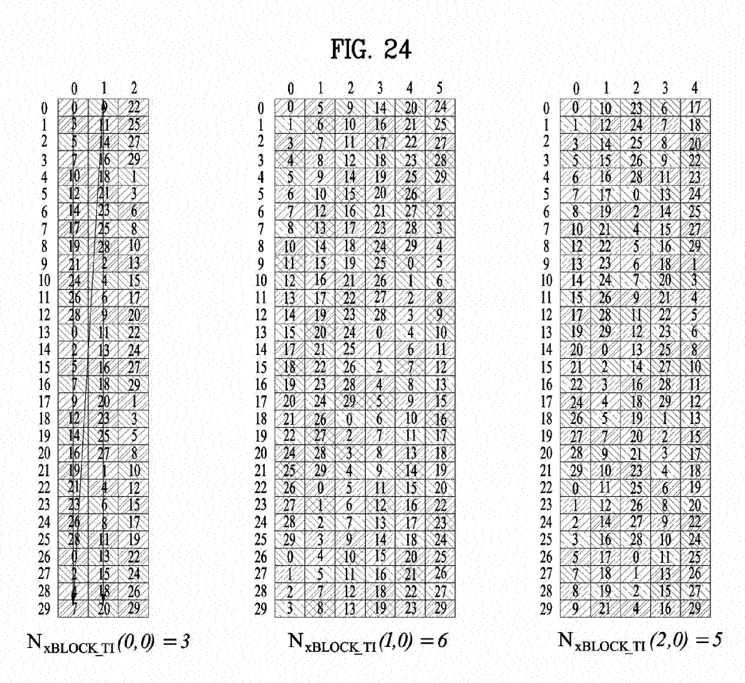

FIG. 24 illustrates interlaved XFECBLOCKs from each interleaving array according to an embodiment of the present invention.

FIG. 24 illustrates the interleaved XFECBLOCKs from each interleaving array with parameters of $N'_{xBLOCK\_TI\_MAX}$=7 and Sshift=3.

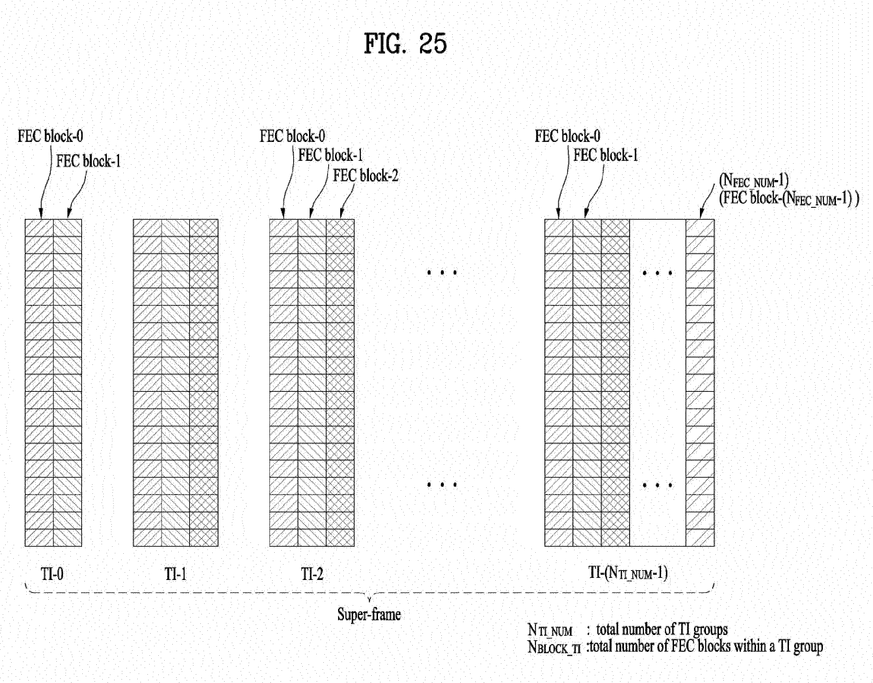

FIG. 25 illustrates the concept of a variable bit-rate system according to an embodiment of the present invention.

The variable bit-rate system according to an embodiment of the present invention is another embodiment of the aforementioned variable data-rate system.

Specifically, a transport superframe, shown in FIG. 25, is composed of $N_{TI\_NUM}$ TI groups and each TI group can include $N_{BLOCK\ TI}$ FEC blocks.

In this case, TI groups may respectively include different numbers of FEC blocks. The TI group according to an embodiment of the present invention can be defined as a block for performing time interleaving and can be used in the same meaning as the aforementioned TI block or IF. That is, one IF can include at least one TI block and the number of FEC blocks in the TI block is variable.

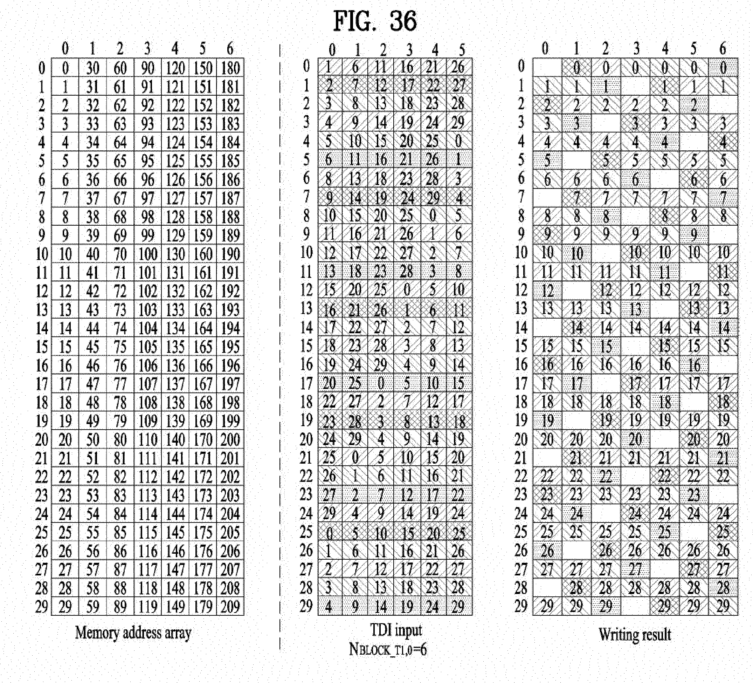

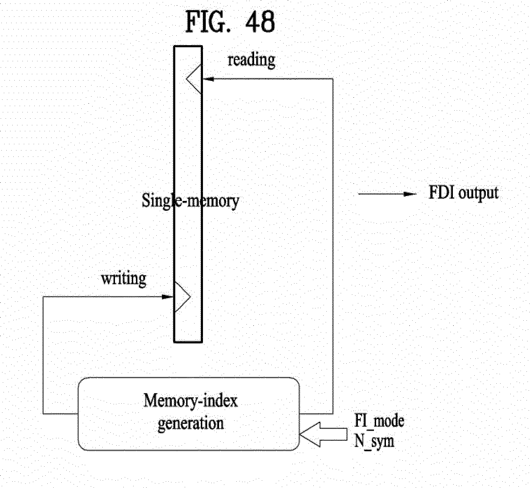

Details are as described with reference to FIGS. 36 and 48.

When TI groups include different numbers of FEC blocks, the present invention performs interleaving on the TI groups using one twisted row-column block interleaving rule in an embodiment. Accordingly, the receiver can perform deinterleaving using a single memory.

A description will be given of an input FEC block memory arrangement method and reading operation of the time interleaver in consideration of variable bit-rate (VBR) transmission in which the number of FEC blocks can be changed per TI group.

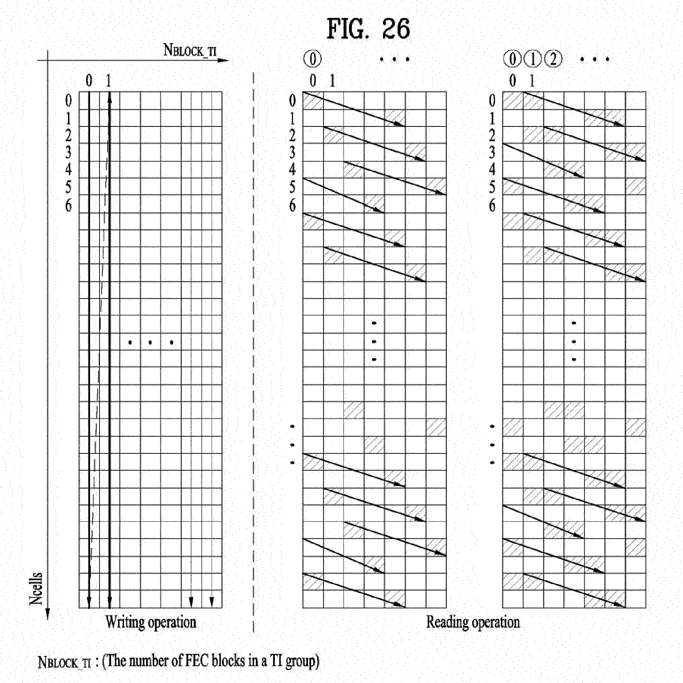

FIG. 26 illustrates writing and reading operations of block interleaving according to an embodiment of the present invention.

FIG. 26 corresponds to another embodiment of the operation shown in FIG. 26 and thus detailed description thereof is omitted.

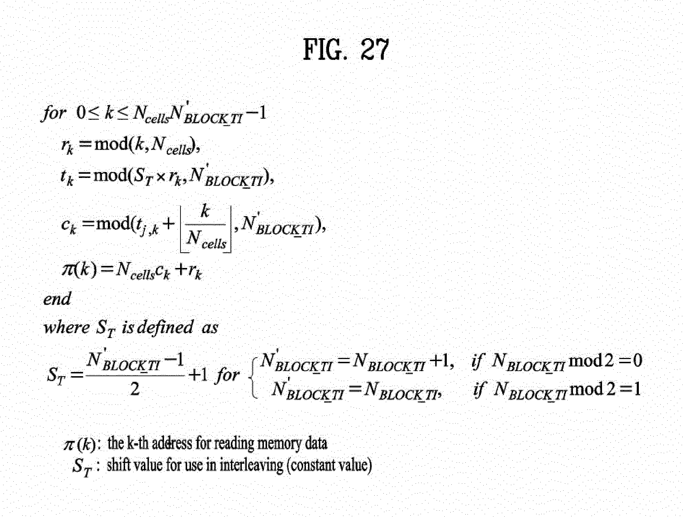

FIG. 27 shows equations representing block interleaving according to an embodiment of the present invention.

The equations shown in the figure represent block interleaving applied per TI group. As expressed by the equations, shift values can be respectively calculated in a case in which the number of FEC blocks included in a TI group is an odd number and a case in which the number of FEC blocks included in a TI group is an even number. That is, block interleaving according to an embodiment of the present invention can calculate a shift value after making the number of FEC blocks be an odd-number.

A time interleaver according to an embodiment of the present invention can determine parameters related to interleaving on the basis of a TI group having a maximum number of FEC blocks in the corresponding superframe. Accordingly, the receiver can perform deinterleaving using a single memory.

Here, for a TI group having a smaller number of FEC blocks than the maximum number of FEC blocks, virtual FEC blocks corresponding to a difference between the number of FEC blocks and the maximum number of FEC blocks can be added. Virtual FEC blocks according to an embodiment of the present invention can be inserted before actual FEC blocks. Subsequently, the time interleaver according to an embodiment of the present invention can perform interleaving on the TI groups using one twisted row-column block interleaving rule in consideration of the virtual FEC blocks. In addition, the time interleaver according to an embodiment of the present invention can perform the aforementioned skip operation when a memory-index corresponding to virtual FEC blocks is generated during reading operation. In the following writing operation, the number of FEC blocks of input TI groups is matched to the number of FEC blocks of output TI groups. Consequently, according to time interleaving according to an embodiment of the present invention, loss of data rate of data actually transmitted may be prevented through skip operation even if virtual FEC blocks are inserted in order to perform efficient single-memory deinterleaving in the receiver.

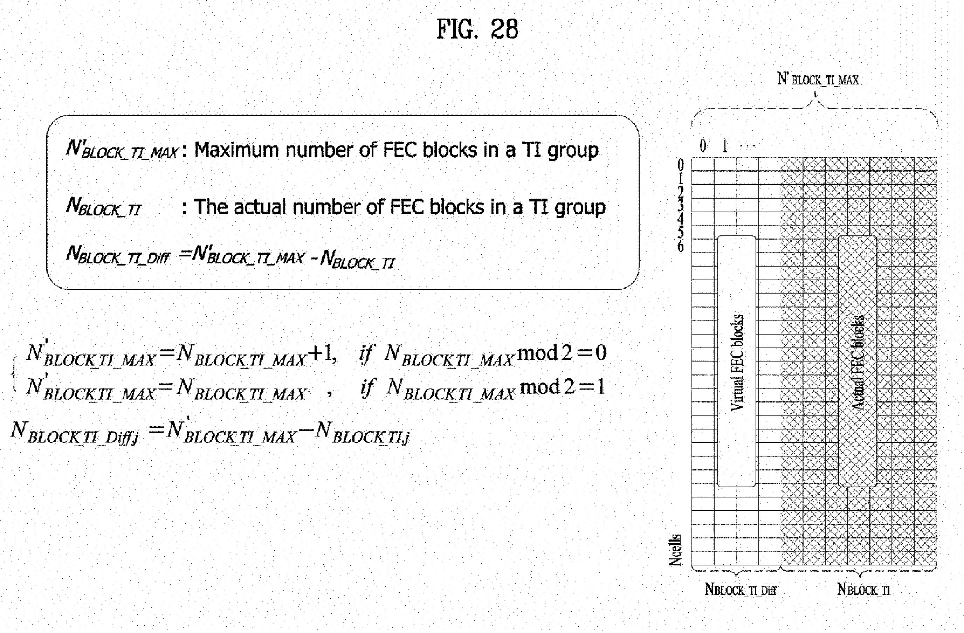

FIG. 28 illustrates virtual FEC blocks according to an embodiment of the present invention.

The left side of the figure shows parameters indicating a maximum number of FEC blocks in a TI group, the actual number of FEC blocks included in a TI group and a difference between the maximum number of FEC blocks and the actual number of FEC blocks, and equations for deriving the number of virtual FEC blocks.

The right side of the figure shows an embodiment of inserting virtual FEC blocks into a TI group. In this case, the virtual FEC blocks can be inserted before actual FEC blocks, as described above.

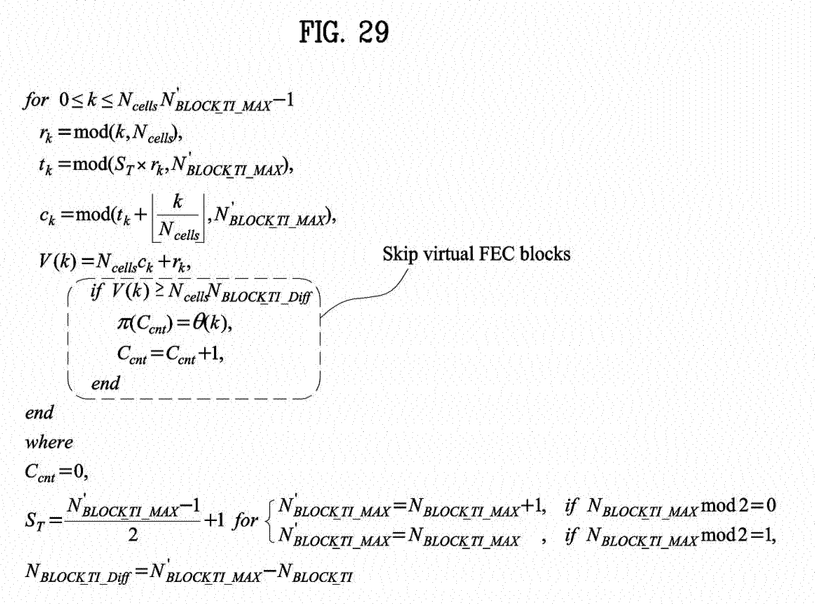

FIG. 29 shows equations representing reading operation after insertion of virtual FEC blocks according to an embodiment of the present invention.

Skip operation illustrated in the figure can skip virtual FEC blocks in reading operation.

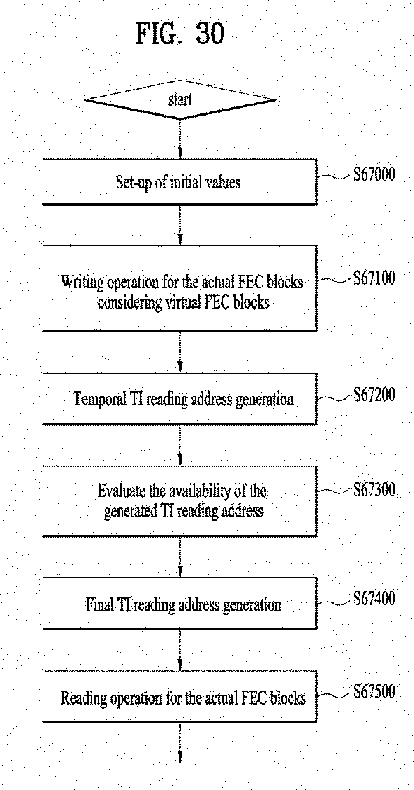

FIG. 30 is a flowchart illustrating a time interleaving process according to an embodiment of the present invention.

A time interleaver according to an embodiment of the present invention can setup initial values (S67000).

Then, the time interleaver according to an embodiment of the present invention can perform writing operation on actual FEC blocks in consideration of virtual FEC blocks (S67100).

The time interleaver according to an embodiment of the present invention can generate a temporal TI address (S67200).

Subsequently, the time interleaver according to an embodiment of the present invention can evaluate the availability of the generated TI reading address (S67300). Then, the time interleaver according to an embodiment of the present invention can generate a final TI reading address (S67400).

The time interleaver according to an embodiment of the present invention can read the actual FEC blocks (S67500).

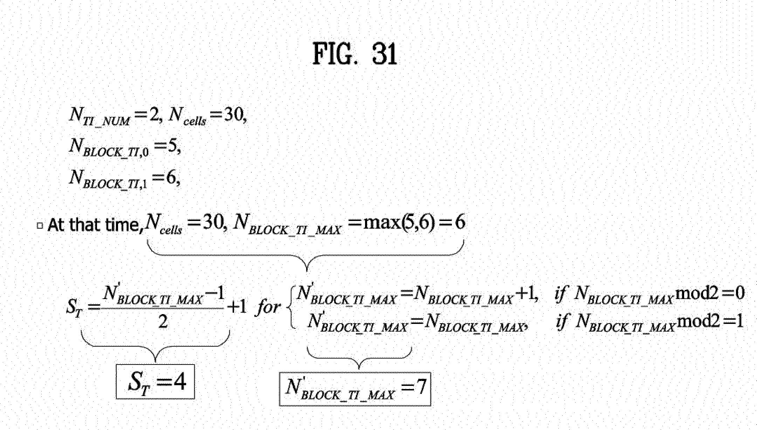

FIG. 31 shows equations representing a process of determining a shift value and a maximum TI block size according to an embodiment of the present invention.

The figure shows an embodiment in which the number of TI groups is 2, the number of cells in a TI group is 30, the number of FEC blocks included in the first TI group is 5 and the number of FEC blocks included in the second TI block is 6. While a maximum number of FEC blocks is 6, 6 is an even number. Accordingly, a maximum number of FEC blocks, which is adjusted in order to obtain the shift value, can be 7 and the shift value can be calculated as 4.

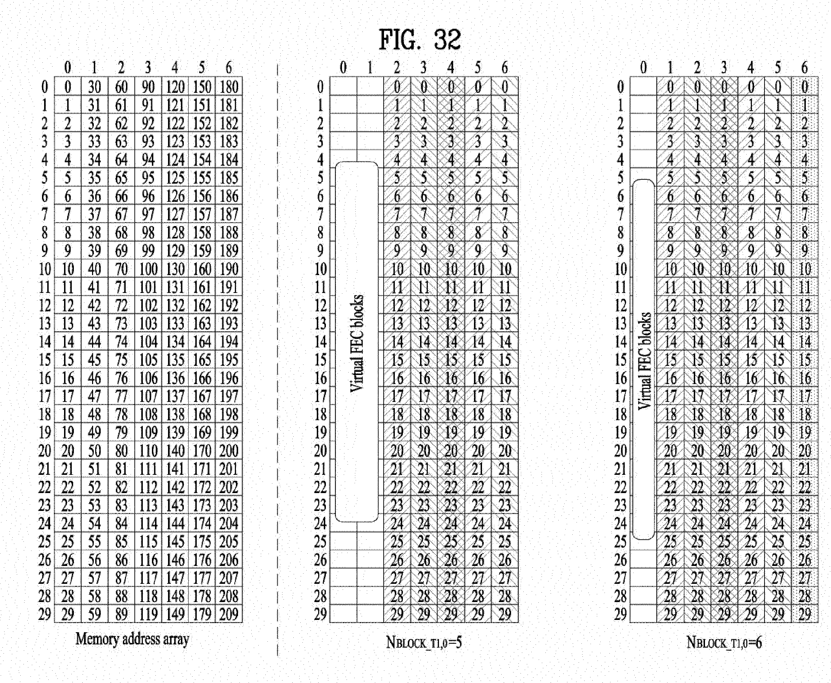

FIGS. 32, 33 and 34 illustrate a TI process of the embodiment shown in FIG. 31.

FIG. 32 illustrates writing operation according to an embodiment of the present invention.

FIG. 32 shows writing operation for the two TI groups described with reference to FIG. 31.

A block shown in the left side of the figure represents a TI memory address array and blocks shown in the right side of the figure illustrate writing operation when two virtual FEC blocks and one virtual FEC block are respectively inserted into two continuous TI groups. Since the adjusted maximum number of FEC blocks is 7, as described above, two virtual FEC blocks are inserted into the first TI group and one virtual FEC block is inserted into the second TI group.

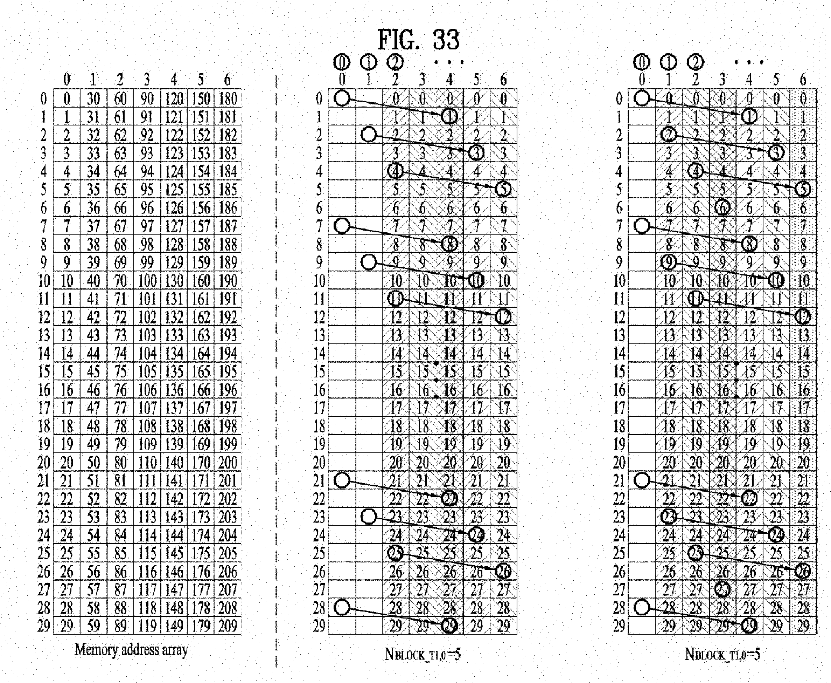

FIG. 33 illustrates reading operation according to an embodiment of the present invention.

A block shown in the left side of the figure represents a TI memory address array and blocks shown in the right side of the figure illustrate reading operation when two virtual FEC blocks and one virtual FEC block are respectively inserted into two continuous TI groups. In this case, reading operation can be performed on the virtual FEC blocks in the same manner as the reading operation performed on actual FEC blocks.

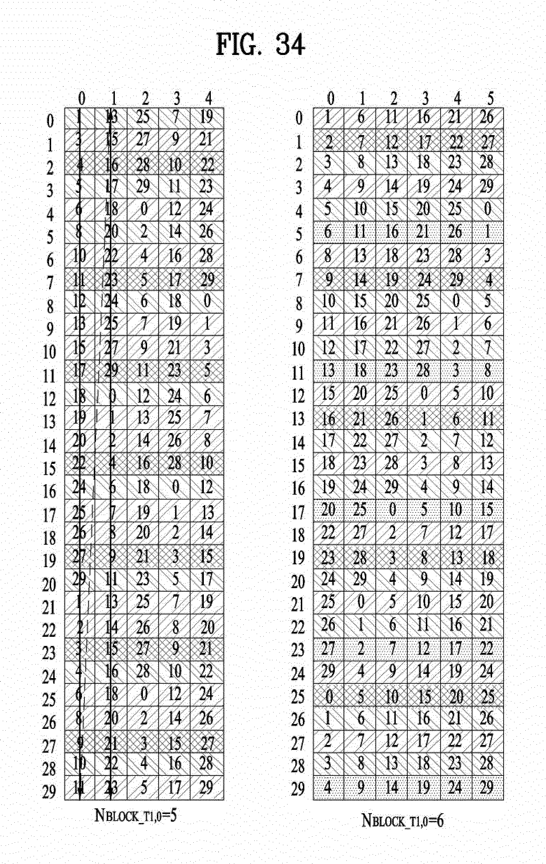

FIG. 34 illustrates a result of skip operation in reading operation according to an embodiment of the present invention.

As shown in the figure, virtual FEC blocks can be skipped in two TI groups.

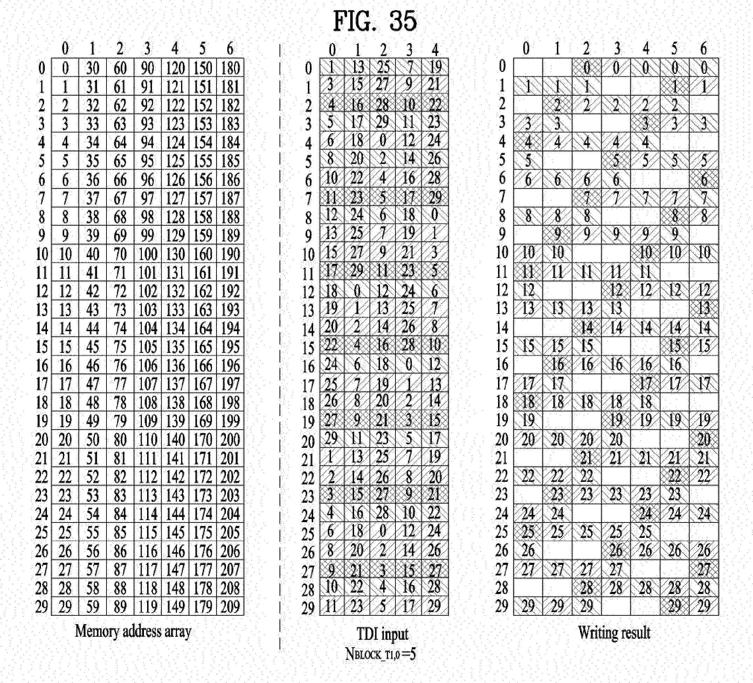

FIGS. 35 and 36 illustrate time deinterleaving corresponding to a reverse of TI described with reference to FIGS. 31 to 34. Specifically, FIG. 35 illustrates time deinterleaving for the first TI group and FIG. 36 illustrates time deinterleaving for the second TI group.

FIG. 35 shows a writing process of time deinterleaving according to an embodiment of the present invention.

In this case, the parameters described with reference to FIG. 31 can be equally applied.

A left block in the figure shows a TI memory address array, a middle block shows the first TI group input to a time deinterleaver and a right block shows a writing process performed in consideration of virtual FEC blocks that are skipped with respect to the first TI group.

As shown in the figure, two virtual FEC blocks skipped during TI can be restored for correct reading operation in the writing process. In this case, the positions and quantity of the skipped two virtual FEC blocks can be estimated through an arbitrary algorithm.

FIG. 36 illustrates a writing process of time deinterleaving according to another embodiment of the present invention.

A left block in the figure shows a TI memory address array, a middle block shows the second TI group input to the time deinterleaver and a right block shows a writing process performed in consideration of virtual FEC blocks that are skipped with respect to the second TI group.

As shown in the figure, one virtual FEC block skipped during TI can be restored for correct reading operation in the writing process. In this case, the position and quantity of the skipped one virtual FEC block can be estimated through an arbitrary algorithm.

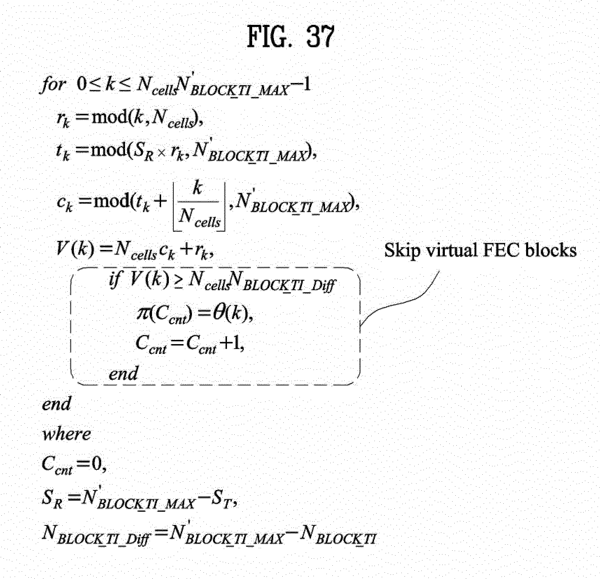

FIG. 37 shows equations representing reading operation of time deinterleaving according to another embodiment of the present invention.

A TDI shift value used in the receiver can be determined by a shift value used in the transmitter, and skip operation can skip virtual FEC blocks in reading operation, similarly to skip operation performed in the transmitter.

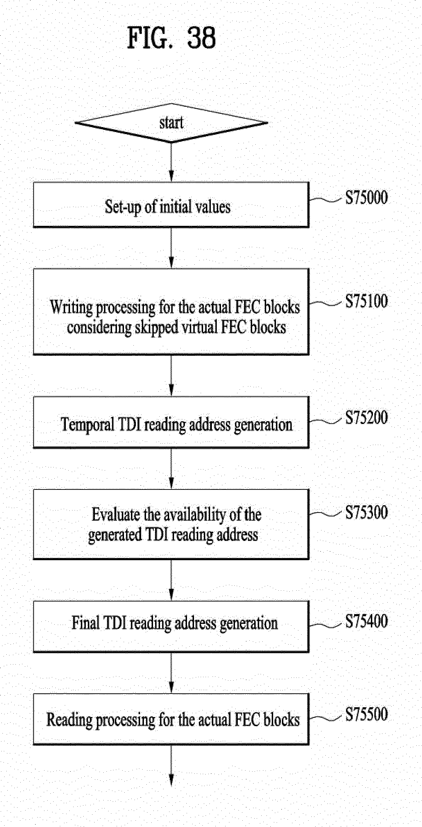

FIG. 38 is a flowchart illustrating a time deinterleaving process according to an embodiment of the present invention.

A time deinterleaver according to an embodiment of the present invention can setup initial values (S75000).

Then, the time deinterleaver according to an embodiment of the present invention can perform writing operation on actual FEC blocks in consideration of virtual FEC blocks (S75100).

Subsequently, the time deinterleaver according to an embodiment of the present invention can generate a temporal TDI reading address (S75200).

The time deinterleaver according to an embodiment of the present invention can evaluate the availability of the generated TDI reading address (S75300). Then, the time deinterleaver according to an embodiment of the present invention can generate a final TDI reading address (S75400).

Subsequently, the time deinterleaver according to an embodiment of the present invention can read the actual FEC blocks (S75500).

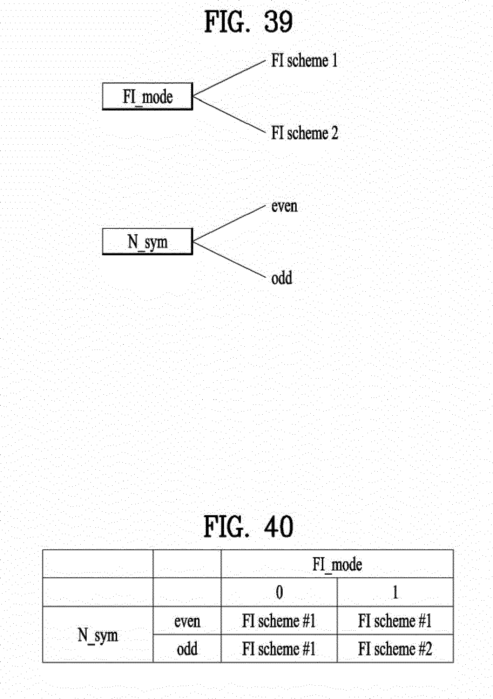

FIG. 39 illustrates signaling for single-memory deinterleaving irrespective of the number of symbols in a frame according to an embodiment of the present invention.

As described above, the frequency interleaver according to the present invention performs interleaving using different interleaving sequences in a plurality of OFDM symbols, but the frequency deinterleaver may perform single-memory deinterleaving on the received OFDM symbols.

The present invention proposes a method for performing single-memory deinterleaving by the frequency deinterleaver irrespective of whether the number of OFDM symbols in one frame is an even number or an odd number. To this end, the above-described architecture of the frequency interleaver may operate differently depending on whether the number of OFDM symbols is an even number or an odd number. Furthermore, signaling information related thereto may be additionally defined in the above-described preamble and/or the physical layer signal (PLS). As such, single-memory deinterleaving is not limited to a case in which the number of OFDM symbols is an even number, and may always be enabled.

Here, the PLS may be transmitted in a frame starting symbol (FSS) of every frame. Alternatively, according to another embodiment, the PLS may be transmitted in the first OFDM symbol. Otherwise, based on whether the PLS is present, signaling information corresponding to the PLS may be completely transmitted in the preamble. Or, signaling information corresponding to the preamble and/or the PLS may be transmitted in bootstrap information. The bootstrap information may be an information part located in front of the preamble.

Information about, for example, a processing operation used by the frequency interleaver of the transmitter may include an FI_mode field and an N_sym field.

The FI_mode field may be a 1-bit field which can be located in the preamble. The FI_mode field may indicate an interleaving scheme used in the FSS or the first OFDM symbol of every frame.

The interleaving scheme indicated as the FI_mode field may include FI scheme #1 and FI scheme #2.

FI scheme #1 can indicate that the frequency interleaver of the transmitter performs random writing operation and then linear reading operation on the FSS. This case may correspond to a case in which the FI_mode field value is 0. The random writing or linear reading operation may be performed in or from memory using a value generated by an arbitrary random sequence generator using, for example, a pseudo-random binary sequence (PRBS). Here, linear reading may refer to sequentially reading operation.

FI scheme #2 can indicate that the transmitter performs linear writing operation and then random reading operation on the FSS. This case may correspond to a case in which the FI_mode field value is 1. Likewise, the linear writing or random reading operation may be performed in or from memory using a value generated by an arbitrary random sequence generator using, for example, PRBS. Here, linear writing may refer to a sequentially writing operation.

In addition, the FI_mode field may indicate an interleaving scheme used in a frame edge symbol (FES) or the last OFDM symbol of every frame. The interleaving scheme applied to the FES may be indicated differently from the value of the N_sym field transmitted by the PLS. That is, the interleaving scheme indicated as the FI_mode field may differ depending on whether the number of OFDM symbols is an odd number or an even number. Mapping information between the two fields may be predefined as a table by the transmitter and the receiver.

The FI_mode field may be defined and transmitted in a part of the frame other than the preamble according to another embodiment.

The N_sym field may be a field which can be located in the PLS part. The number of bits of the N_sym field is variable according to embodiments. The N_sym field may indicate number of OFDM symbols included in one frame. As such, the receiver can acquire information about whether the number of OFDM symbols is an even number or an odd number.

Operation of the frequency deinterleaver corresponding to the frequency interleaver irrespective of the number of OFDM symbols in one frame is as described below. This frequency deinterleaver may perform single-memory deinterleaving by utilizing the proposed signaling fields irrespective of whether the number of OFDM symbols is an even number or an odd number.

Initially, the frequency deinterleaver may perform frequency deinterleaving on the FSS using information of the FI_mode field of the preamble because the frequency interleaving scheme used in the FSS is indicated as the FI_mode.

The frequency deinterleaver may perform frequency deinterleaving on the FES using signaling information of the FI_mode field and signaling information of the N_sym field of the PLS. In this case, the mapping information between the two fields may be acquired using the predefined table. A description of the predefined table will be given below.

Overall deinterleaving operation on the other symbols may be performed inversely from the interleaving operation of the transmitter. That is, on a pair of contiguously input OFDM symbols, the frequency deinterleaver may perform deinterleaving using one interleaving sequence. Here, the interleaving sequence may be an interleaving sequence used by the frequency interleaver for reading & writing. The frequency deinterleaver may perform reading & writing operation inversely using the interleaving sequence.

However, the frequency deinterleaver according to the present invention may not use a ping pong architecture using double memories. The frequency deinterleaver may perform deinterleaving on contiguously input OFDM symbols using a single memory. As such, the efficiency of using memory by the frequency deinterleaver may be increased.

FIG. 40 illustrates FI schemes of FSS in signaling for single-memory deinterleaving irrespective of the number of symbols in a frame according to an embodiment of the present invention.

An interleaving scheme applied to frequency interleaving operation may be determined using the above-described FI_mode field and the N_sym field.

In the case of FSS, when the number of OFDM symbols indicated as the N_sym field is an even number, FI scheme #1 may be performed on the FSS irrespective of the FI_mode field value.

When the number of OFDM symbols indicated as the N_sym field is an odd number, FI scheme #1 may be applied to the FSS if the FI_mode field has a value of 0, and FI scheme #2 may be applied to the FSS if the FI_mode field has a value of 1. That is, when the number of OFDM symbols is an odd number, FI schemes #1 and #2 may be alternately applied to the FSS symbols for frequency interleaving.

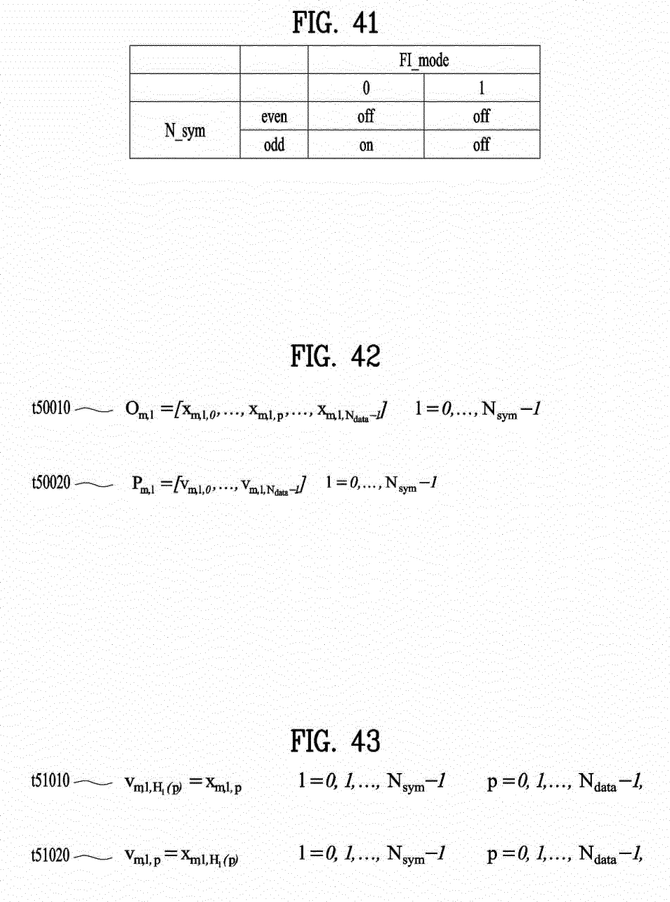

FIG. 41 illustrates operation of a reset mode in signaling for single-memory deinterleaving irrespective of the number of symbols in a frame according to an embodiment of the present invention.

For frequency interleaving on FES, the above-described symbol offset generator may adopt a reset mode as a new concept. The reset mode may refer to a mode in which a symbol offset value generated by the symbol offset generator is '0'.

For frequency interleaving on FES, whether to use the reset mode may be determined using the above-described FI_mode field and the N_sym field.

When the number of OFDM symbols indicated as the N_sym field is an even number, the reset mode of the symbol offset generator may not operate (off) irrespective of the value of the FI_mode field.

When the number of OFDM symbols indicated as the N_sym field is an odd number, if the value of the FI_mode field is 0, the symbol offset generator may operate in the reset mode (on). Otherwise, if the value of the FI_mode field is 1, the reset mode of the symbol offset generator may not operate (off). That is, when the number of OFDM symbols is an odd number, the reset mode may be alternately turned on and off for frequency interleaving.

FIG. 42 illustrates equations indicating input and output of the frequency interleaver in signaling for single-memory deinterleaving irrespective of the number of symbols in a frame according to an embodiment of the present invention.

As described above, OFDM symbol pairs of memory bank-A and memory bank-B may be processed through the above-described interleaving operation. As described above, for interleaving, a variety of different interleaving seeds generated by cyclically shifting one main interleaving seed may be used. Here, the interleaving seed may also be called an interleaving sequence. Alternatively, the interleaving seed may also be called an interleaving address value, an address value, or an interleaving address. Here, the term "interleaving address value(s)" can be used for referring plural address values, or for referring a interleaving seed which is a singular. That is, depeding on embodiments, interleaving address value(s) can mean H(p) itself, or each addresses belong to H(p).

Input of frequency interleaving to be interleaved within one OFDM symbol may be indicated as Om,l (t50010). Here, data cells may be indicated as xm,1,0, .... xm,1,Ndata-1. Meanwhile, p may indicate a cell index, 1 may indicate an OFDM symbol index, and m may indicate a frame index. That is, xm,l,p may indicate a p-th data cell of an 1-th OFDM symbol of an m-th frame. Ndata may indicate the number of data cells. Nsym may indicate the number of symbols (frame signaling symbols, normal data symbols, or frame edge symbols).

Data cells which are interleaved based on the above-described operation may be indicated as Pm,l (t50020). The interleaved data cells may be indicated as vm,1,0, .... vm,1,Ndata-1. Meanwhile, p,1, and m may have the above-described index values.

FIG. 43 illustrates equations of a logical operation mechanism of frequency interleaving based on FI scheme #1 and FI scheme #2 in signaling for single-memory deinterleaving irrespective of the number of symbols in a frame according to an embodiment of the present invention.

A description is now given of frequency interleaving based on FI scheme #1. As described above, frequency interleaving may be performed using an interleaving sequence (interleaving address) of each memory bank.

Interleaving operation on an even symbol (j mod 2 = 0) may be mathematically expressed as given by equation t51010. On input data x, frequency interleaving may be performed using the interleaving sequence (interleaving address) to acquire output v. Here, p-th input data x may be permuted to be identical to H(p)-th output data v.

That is, on an even symbol (the first symbol), random writing operation may be performed using the interleaving sequence, and then linear reading operation for sequentially reading data may be performed. Here, the interleaving sequence (interleaving address) may be a value generated by an arbitrary random sequence generator using, for example, PRBS.

Interleaving operation on an odd symbol (j mod 2 = 1) may be mathematically expressed as given by equation t51020. On input data x, frequency interleaving may be performed using the interleaving sequence (interleaving address) to acquire output v. Here, H(p)-th input data x may be permuted to be identical to p-th output data v. That is, compared to the interleaving process performed on the even symbol, the interleaving sequence (interleaving address) may be applied inversely.

That is, on an odd symbol (the second symbol), a linear writing operation for sequentially writing data in memory may be performed, and then random reading operation for randomly reading the data using the interleaving sequence may be performed. Likewise, the interleaving sequence (interleaving address) may be a value generated by an arbitrary random sequence generator using, for example, PRBS.

A description is now given of frequency interleaving based on FI scheme #2.

In the case of frequency interleaving based on FI scheme #2, operation on an even/odd symbol may be performed inversely from the operation based on FI scheme #1.

That is, on the even symbol, linear writing operation may be performed and then random reading operation may be performed as given by equation t51020. In addition, on the odd symbol, random writing operation may be performed and then linear reading operation may be performed as given by equation t51010. A detailed description thereof is the same as that given above in relation to FI scheme #1.

The symbol index 1 may be indicated as 0, 1, ... , $N_{sym-1}$, and the cell index p may be indicated as 0, 1, ... , $N_{data-1}$. According to another embodiment, the frequency interleaving scheme on an even symbol and the frequency interleaving scheme on an odd symbol may be switched. In addition, according to another embodiment, the frequency interleaving scheme based on FI scheme #1 and the frequency interleaving scheme based on FI scheme #2 may be switched.

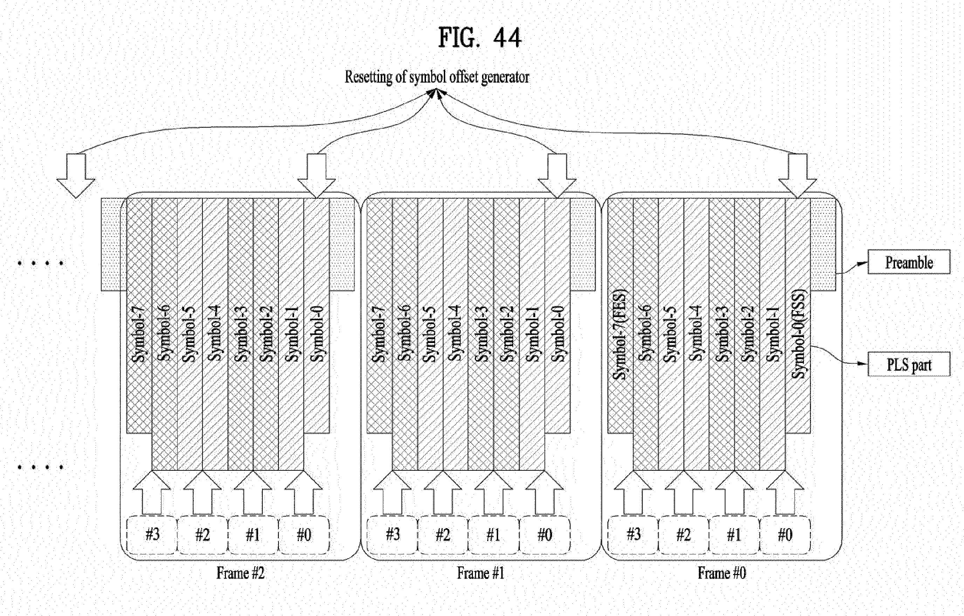

FIG. 44 illustrates an example in which the number of symbols is an even number in signaling for single-memory deinterleaving irrespective of the number of symbols in a frame according to an embodiment of the present invention.

In the current embodiment, the N_sym field may indicate that the number of OFDM symbols in one frame is an even number. The current embodiment assumes that one frame includes one preamble and eight OFDM symbols. According to another embodiment, bootstrap information may be further included in front of the preamble. The bootstrap information is not illustrated.

In the current embodiment, one frame may include one FSS and one FES. Here, it is assumed that the FSS and the FES have the same length. In addition, since information of the N_sym field is transmitted in the PLS part, the frequency deinterleaver may acquire the corresponding information after decoding the FSS. Furthermore, the current embodiment assumes that the N_sym field is completely decoded before operation on the FES is performed.

In the FSS of each frame, the value of the symbol offset generator may be reset to 0. Accordingly, the first and second symbols may be processed using the same interleaving sequence. In addition, sequence #0 may be used for operation whenever each frame starts. After that, sequences #1 and #2 may be sequentially used for operation of the frequency interleaver/deinterleaver.

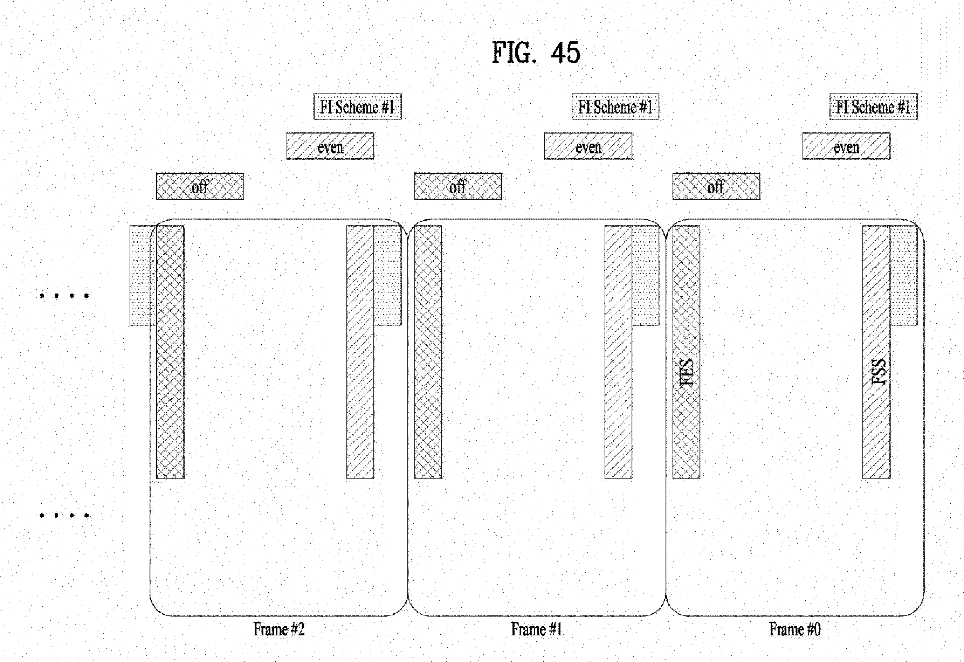

FIG. 45 illustrates an example in which the number of symbols is an even number in signaling for single-memory deinterleaving irrespective of the number of symbols in a frame according to an embodiment of the present invention.

In the first frame, information about an interleaving scheme of the FSS may be acquired from the FI_mode field of the preamble. In the current embodiment, since the number of OFDM symbols is an even number, only FI scheme #1 may be used.

Then, the FSS may be decoded and thus N_sym information may be acquired. The N_sym information indicates that the number of symbols in the current frame is an even number. After that, the acquired FI_mode information and the N_sym information may be used when the frequency deinterleaver decodes the FES. Since the number of symbols is an even number, the symbol offset generator does not operate in the above-described reset mode. That is, the reset mode may be in an off state.

Subsequently, even in another frame, since an even number of OFDM symbols are included, the frequency deinterleaver may operate in the same manner. That is, the FI scheme to be used in the FSS is FI scheme #1, and the reset mode to be used in the FES may be in an off state.

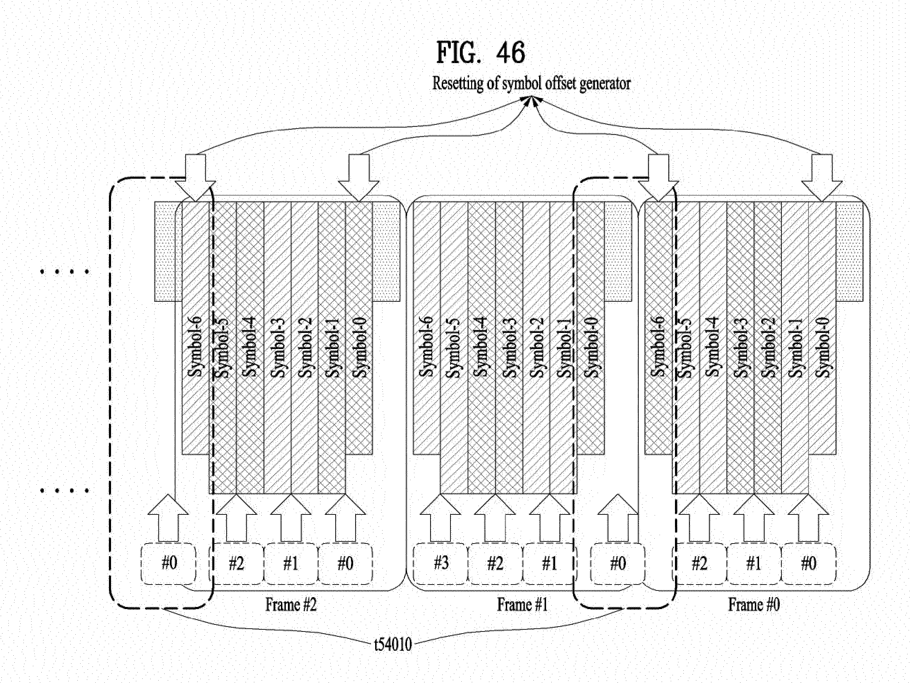

FIG. 46 illustrates an example in which the number of symbols is an odd number in signaling for single-memory deinterleaving irrespective of the number of symbols in a frame according to an embodiment of the present invention.

In the current embodiment, the N_sym field may indicate that the number of OFDM symbols in one frame is an odd number. The current embodiment assumes that one frame includes one preamble and seven OFDM symbols. According to another embodiment, bootstrap information may be further included in front of the preamble. The bootstrap information is not illustrated.

In the current embodiment, like the case in which the number of symbols is an even number, one frame may include one FSS and one FES. Here, it is assumed that the FSS and the FES have the same length. In addition, since information of the N_sym field is transmitted in the PLS part, the frequency deinterleaver may acquire the corresponding information after decoding the FSS. Furthermore, the current embodiment assumes that the N_sym field is completely decoded before operation on the FES is performed.

In the FSS of each frame, the value of the symbol offset generator may be reset to 0. Furthermore, in the FES of an arbitrary frame, the symbol offset generator may operate in a reset mode based on the values of the FI_mode field and the N_sym field. Accordingly, in the FES of the arbitrary frame, the value of the symbol offset generator may be reset or not reset to 0. These reset operations may be alternately performed on frames.

The symbol offset generator may be reset in the last symbol of the first frame, i.e., the FES. Accordingly, the interleaving sequence may be reset to sequence #0. As such, the frequency interleaver/deinterleaver may process the corresponding FES based on sequence #0 (t54010).

In the FSS of a subsequent frame, the symbol offset generator may be reset again and thus sequence #0 may be used (t54010). The symbol offset generator may not be reset in the FES of the second frame (frame #1), and may be reset again in the FES of the third frame (frame #2).

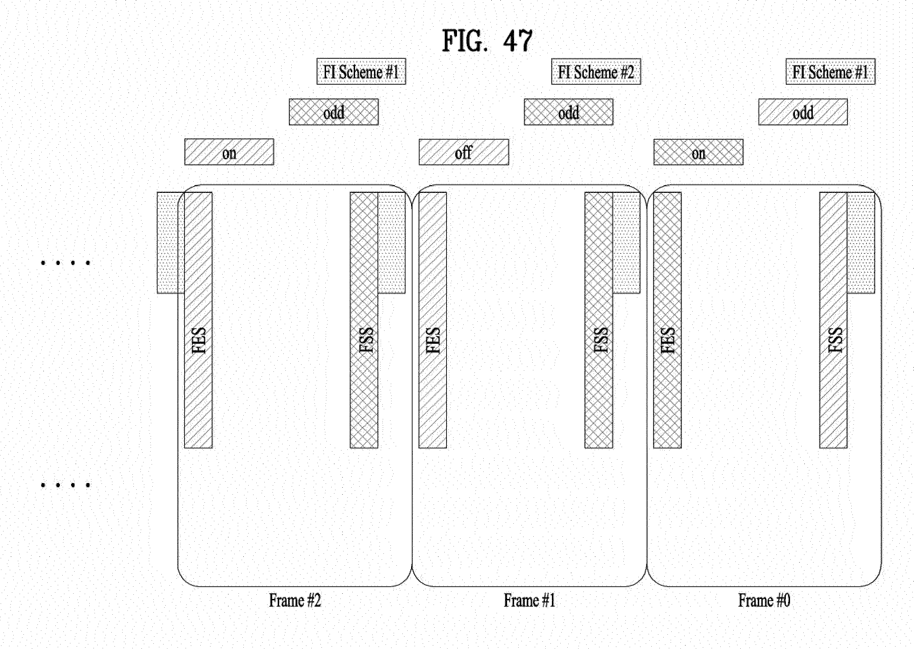

FIG. 47 illustrates an example in which the number of symbols is an odd number in signaling for single-memory deinterleaving irrespective of the number of symbols in a frame according to an embodiment of the present invention.

In the first frame, information about an interleaving scheme of the FSS may be acquired from the FI_mode field of the preamble. Since the number of OFDM symbols is an odd number, FI scheme #1 and FI scheme #2 may be used. In the current embodiment, FI scheme #1 is used in the first frame.

Then, the FSS may be decoded and thus N_sym information may be acquired. The N_sym information indicates that the number of symbols in the current frame is an odd number. After that, the acquired FI_mode information and the N_sym information may be used when the frequency deinterleaver decodes the FES. Since the number of symbols is an odd number and FI scheme #1 is used, the FI_mode field value is 0. Since the FI_mode is 0, the symbol offset generator may operate in the above-described reset mode. That is, the reset mode may be in an on state.

The symbol offset generator may operate in the reset mode and thus may be reset to 0. Since the FI_mode field value is 1 in the second frame, this indicates that the FSS is processed based on FI scheme #2. The N_sym field indicates that the number of symbols is an odd number. In the second frame, since the FI_mode field value is 1 and the number of symbols is an odd number, the symbol offset generator may not operate in the reset mode.

In this manner, the FI scheme to be used in the FSS may be alternately set to FI schemes #1 and #2. Furthermore, the reset mode to be used in the FES may be alternately set to be on and off. According to another embodiment, the settings may not be changed every frame.

FIG. 48 illustrates operation of the frequency deinterleaver in signaling for single-memory deinterleaving irrespective of the number of symbols in a frame according to an embodiment of the present invention.

The frequency deinterleaver may perform frequency deinterleaving using information of the predefined FI_mode field and/or the N_sym field. As described above, the frequency deinterleaver may operate using a single memory. Basically, frequency deinterleaving may be inverse operation of the frequency interleaving operation performed by the transmitter, to restore the order of data.

As described above, frequency deinterleaving on the FSS may be performed based on information about the FI scheme which is acquired from the FI_mode field and the N_sym field of the preamble. Frequency deinterleaving on the FES may be performed based on information indicating whether to the reset mode operates, which is acquired using the FI_mode field and the N_sym field.

That is, on a pair of input OFDM symbols, the frequency deinterleaver may perform inverse operation of the reading/writing operation of the frequency interleaver. One interleaving sequence may be used in this operation.

However, as described above, the frequency interleaver follows the ping pong architecture using double memories, but the frequency deinterleaver may perform deinterleaving using a single memory. This single-memory frequency deinterleaving operation may be performed using information of the FI_mode field and the N_sym field. This information may allow single-memory frequency deinterleaving even on a frame having an odd number of OFDM symbols irrespective of the number of OFDM symbols.

The frequency interleaver according to the present invention may perform frequency interleaving on all data cells of the OFDM symbols. The frequency interleaver may map the data cells to available data carriers of the symbols.

The frequency interleaver according to the present invention may operate in different interleaving modes based on FFT size. For example, when the FFT size is 32K, the frequency interleaver may perform random writing/linear reading operation on an even symbol and perform linear writing/random reading operation on an odd symbol as in FI scheme #1 described above. Alternatively, when the FFT size is 16K or 8K, the frequency interleaver may perform linear reading/random writing operation on all symbols irrespective of an even/odd number.

The FFT size, which determines whether to switch the interleaving modes, may vary according to embodiments. That is, interleaving as in FI scheme #1 may be performed in the case of 32K and 16K, and interleaving irrespective of an even/odd number may be performed in the case of 8K. Alternatively, interleaving as in FI scheme #1 may be performed for all FFT sizes, or interleaving irrespective of an even/odd number may be performed for all FFT sizes. Otherwise, according to another embodiment, interleaving as in FI scheme #2 may be performed for a specific FFT size.

This frequency interleaving operation may be performed using the above-described interleaving sequence (interleaving address). The interleaving sequence may be variously generated using an offset value as described above. Alternatively, address check may be performed to generate various interleaving sequences.

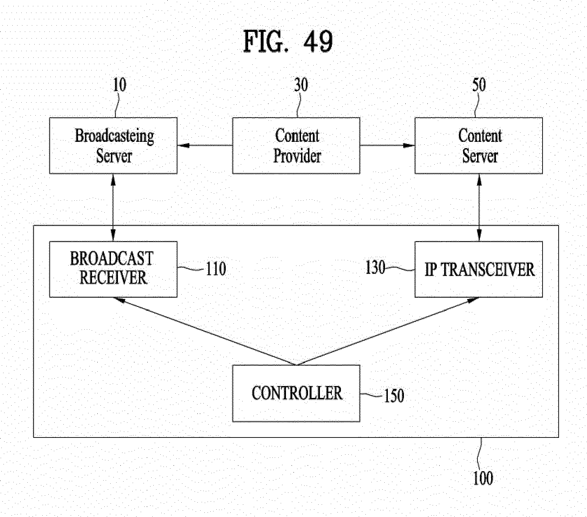

FIG. 49 is a block diagram illustrating a structure of a media content transceiving system according to an embodiment of the present invention.

According to an embodiment of the present invention, the media content transceiving system may include a broadcast server 10, a content provider 30, a content server 50, and a broadcast receiving apparatus 100.

The content provider 30 may provide media content to the broadcast server 10 and the content server 50.

The broadcast server 10 may transmit a broadcast stream including media content using at least one of satellite, terrestrial, and cable broadcast networks. The broadcast server 10 may include a controller (not shown) and a transmitter (not shown) of the broadcast server 10. The controller may control an operation of the broadcast server 10.

The content server 50 may transmit media content according to a request of a broadcast receiving apparatus.

The broadcast receiving apparatus 100 may include a controller 150, an IP transceiver 130, and a broadcast receiver 110. The broadcast receiving apparatus 100 may control operations of the IP transceiver 130 and the broadcast receiver 110 through the controller 150. The broadcast receiving apparatus 100 may receive a broadcast stream including media content through the broadcast receiver 110. In this case, the broadcast stream may be transmitted using at least one of satellite, terrestrial, and cable broadcast networks. Accordingly, the broadcast receiver 110 may include at least one of a satellite tuner, a terrestrial tuner, and a cable tuner in order to receive the broadcast stream. The broadcast receiving apparatus 100 may make a request for media content to the content server 50 through the IP transceiver 130. The broadcast receiving apparatus 100 may receive media content from a content server through the IP transceiver 130. The broadcast receiving apparatus 100 may decode media content through a decoder.

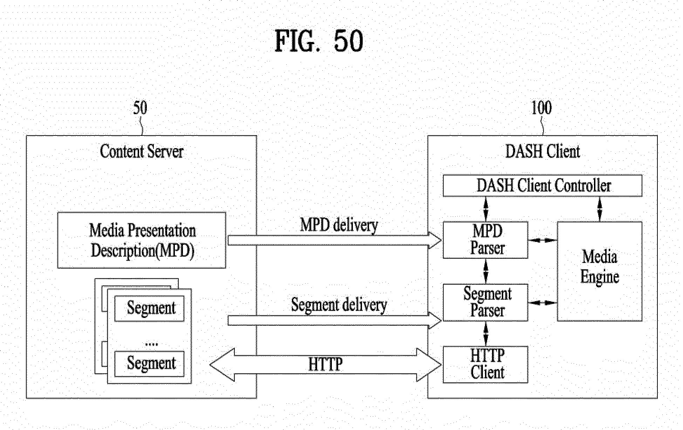

With reference to FIGs. 50 to 54, transmission and reception of media content through a communication network (a broadband network) according to an embodiment of the present invention will be described below.

FIG. 50 illustrates a structure of a media content transceiving system through a communication network (a broadband network) according to an embodiment of the present invention.

The communication network used in the specification refers to a network which accesses the Internet through Internet protocol (IP). In detail, the communication network may support at least one of unicast and multicast. In addition, the communication network may use digital subscriber line (DSL), optical communication, cable, cellular, wireless network, and satellite as hierarchical technologies. In particular, the communication network may not use a terrestrial broadcast network as physical layer technologies. According to an embodiment of the present invention, transmission and reception of media content through a communication network (a broadband network) may be classified into transmission and reception of a transport packet including actual media content and transmission and reception of media content presentation information. The broadcast receiving apparatus 100 may receive the media content presentation information and receive a transport packet including media content. In this case, the media content presentation information may represent information required for presentation of media content. The media content presentation information may include at least one of spatial information and temporal information required for presentation of media content. The media content presentation information may include information required to receive a transport packet including media content. In detail, the media content presentation information may include an address for receiving the transport packet including media content. The broadcast receiving apparatus 100 may present media content based on the media content presentation information.

In detailed embodiments, media content may be transmitted and received through a communication network (a broadband network) according to the MMT standard. In this case, the content server 50 may transmit a presentation information (PI) file including the media content presentation information. The content server 50 may transmit an MMT protocol (MMTP) packet including media content based on a request of the broadcast receiving apparatus 100. The broadcast receiving apparatus 100 may receive the PI file. The broadcast receiving apparatus 100 may receive a transport packet including media content. The broadcast receiving apparatus 100 may extract media content from the transport packet including media content. The broadcast receiving apparatus 100 may present media content based on the PI file.

In another detailed embodiment, as in an embodiment illustrated in FIG. 26, media content may be transmitted through an IP network according to the MPEG-DASH standard. In FIG. 26, the content server 50 may transmit media presentation description (MPD) including the media content presentation information. However, in a detailed embodiment, the MPD may be transmitted by another external server instead of the content server 50. The content server 50 may transmit a segment including media content based on a request of the broadcast receiving apparatus 100. The broadcast receiving apparatus 100 may receive the MPD. The broadcast receiving apparatus 100 may make a request for media content to a content server based on the MPD. The broadcast receiving apparatus 100 may receive the transport packet including media content based on the request. The broadcast receiving apparatus 100 may present media content based on the MPD. To this end, the broadcast receiving apparatus 100 may include a DASH client in the controller 150. The DASH client may include an MPD parser for parsing the MPD, a segment parser for parsing a segment, an HTTP client for transmitting an HTTP request message and receiving an HTTP response message through the IP transceiver 130, and an engine for presenting media. The MPD will be described in detail with reference to FIGs. 27 to 29.

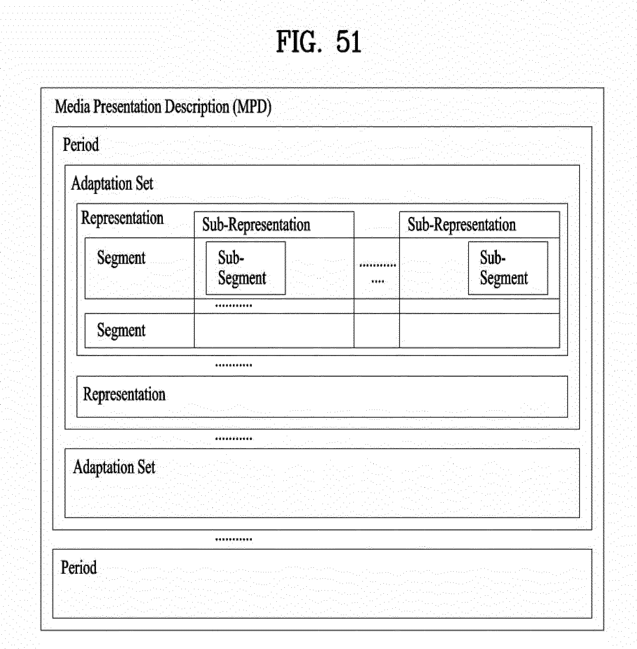

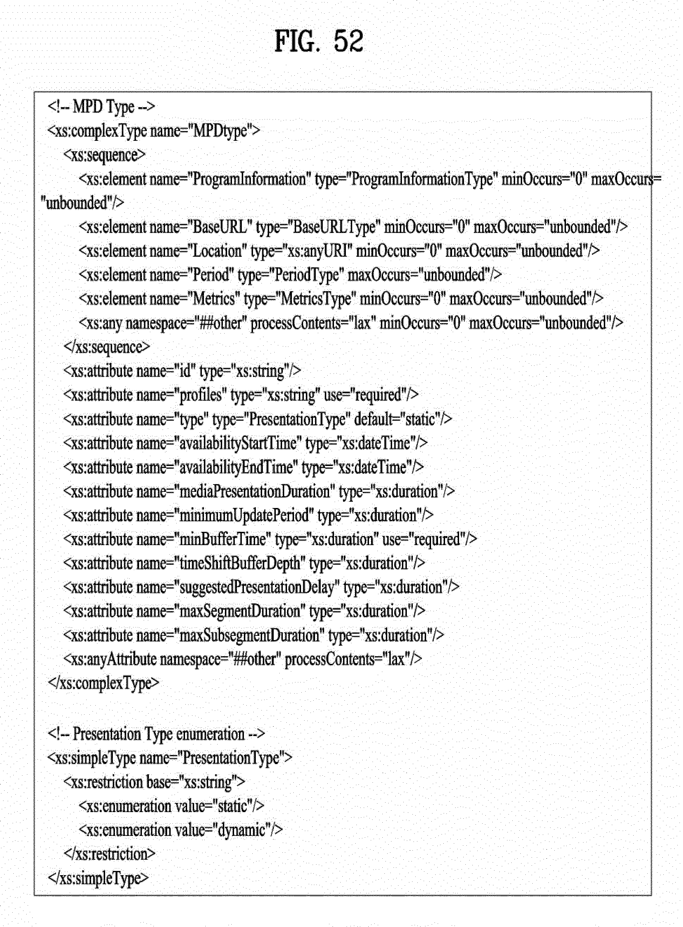

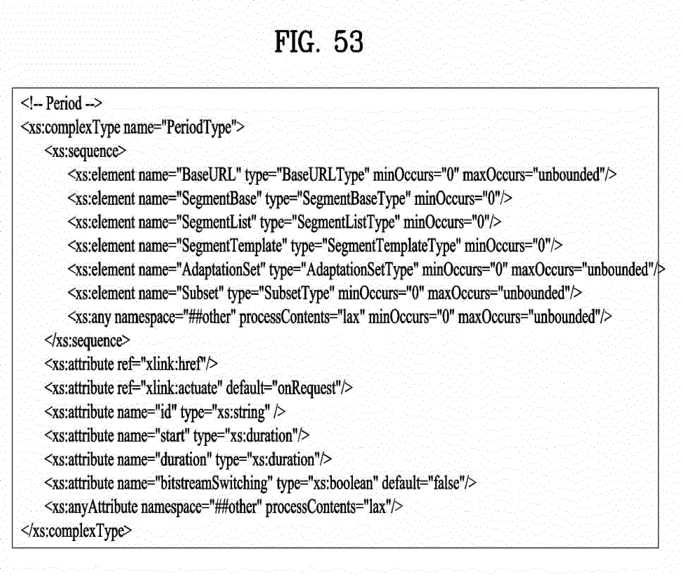

FIG. 51 illustrates a structure of media presentation description (MPD) according to an embodiment of the present invention. FIG. 52 illustrates XML syntax according to an embodiment of the present invention. FIG. 53 illustrates XML syntax of a period element of MPD according to an embodiment of the present invention.

The MPD may include a period element, an adaptation set element, and a representation element.

The period element may include information on a period. The MPD may include information on a plurality of periods. The period may indicate a continuous time period of media content presentation.

The adaptation set element may include information on an adaptation set. The MPD may include information on a plurality of adaptation sets. The adaptation set may be a set of media components including one or more convertible media components. The adaptation set may include one or more representations. Each adaptation set may include different languages of audio or different languages of subtitles.

The representation element may include information on representation. The MPD may include information on a plurality of representations. The representation may be a set obtained by configuring one or more media components and may have a plurality of representations that are differently encoded with respect to the same media content component. When bitstream switching is possible, the broadcast receiving apparatus 100 may convert representation received based on information updated during media content presentation into another representation. In particular, the broadcast receiving apparatus 100 may convert the received representation into other representation according to an environment of a bandwidth. The representation may be divided into a plurality of segments.

A segment is a unit of media content data. In detail, the segment may be a transfer unit of media content data. The representation may be transmitted as a segment or a portion of the segment according to a request from a media content receiver 30 using an HTTP GET or HTTP partial GET method defined in HTTP 1.1 (RFC 2616).

In addition, the segment may include a plurality of sub-segments. The sub-segment may refer to a smallest unit to be indexed at the segment level. The segment may include an initialization segment, a media segment, an index segment, a bitstream switching segment, and so on.

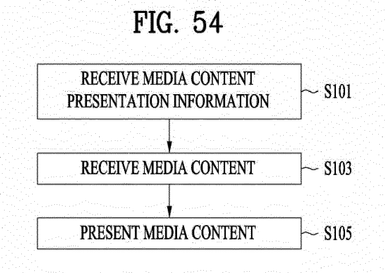

FIG. 54 is a flowchart of an operation for receiving media content through an IP network by the broadcast receiving apparatus 100 according to an embodiment of the present invention.

The broadcast receiving apparatus 100 may receive media content presentation information through the IP transceiver 130 (S101). In a detailed embodiment, media content presentation information may be MPD according to the MPEG-DASH standard. In this case, the broadcast receiving apparatus 100 may receive the MPD through the IP transceiver 130. In another embodiment, the media content presentation information may be a PI file according to the MMT standard. In this case, the broadcast receiving apparatus 100 may receive the PI file through the IP transceiver 130.

The broadcast receiving apparatus 100 may receive media content based on the media content presentation information through the IP transceiver 130 (S103).

The broadcast receiving apparatus 100 may present media content through the controller 150 (S105). In detail, the broadcast receiving apparatus 100 may present media content based on the media content presentation information through the controller 150.

It may be necessary to receive media content presentation information as described above in order to receive media content through a communication network (a broadband network) by the broadcast receiving apparatus 100 that receives a broadcast stream through a broadcast network such as satellite, cable, and terrestrial networks. In particular, media content presentation information may be transmitted and received through a broadcast stream so as to be effectively associated with content transmitted through a broadcast network. This is because, when the media content presentation information is transmitted through a broadcast stream, a content provider or a broadcaster integrates and manages content information provided through a broadcast network and information on media content transmitted through a communication network (a broadband network). The broadcast receiving apparatus 100 continuously receives a broadcast stream and, thus, when media content presentation information is transmitted through a broadcast stream, the broadcast receiving apparatus 100 may rapidly recognize whether the media content presentation information is updated without a separate information request message. In addition, when information on media content provided through a broadcast network and information on media content transmitted through a communication network (a broadband network) are integrated and signaled through the media content presentation information, a broadcast receiving apparatus may receive and present both media content transmitted through a broadcast network and media content transmitted through a communication network (a broadband network) based on the media content presentation information. Accordingly, the broadcast receiving apparatus may enhance efficiency and simplify an operation of the broadcast receiving apparatus.

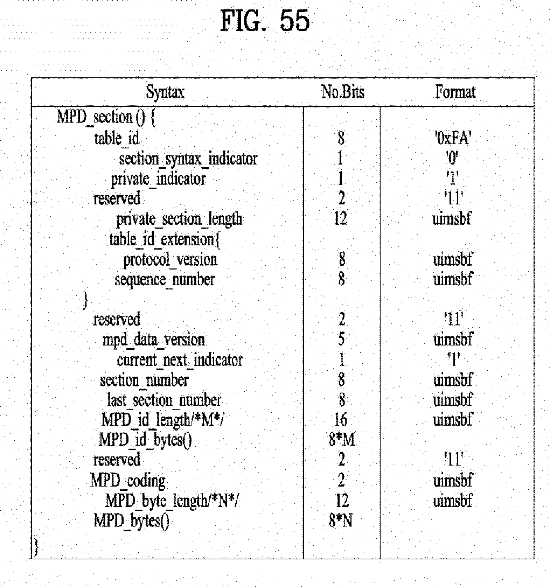

With reference to FIGs. 55 to 87, a method of transmitting and receiving media content presentation information using a broadcast stream transmitted through a broadcast network instead of a communication network (a broadband network) will be described below.

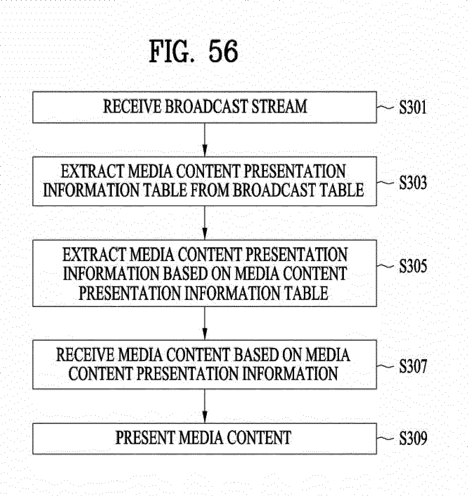

A content provider or broadcaster may transmit the media content presentation information in a media content presentation information table. With reference to FIGs. 55 and 56, the case in which the media content presentation information is transmitted in the media content presentation information will be described below.

When the media content presentation information is transmitted in the media content presentation information, the broadcast receiving apparatus 100 may receive the media content presentation information based on the media content presentation information table. In detail, the broadcast receiving apparatus 100 may extract the media content presentation information from the media content presentation information table and receive the media content presentation information.

In this case, the media content presentation information table may include an ID element for identifying the media content presentation information table from a plurality of information tables.

The media content presentation information table may include an id_extension element. The id_extension element may indicate an identifier for identifying a media content presentation information table instance. In this case, an id_extension field may include a protocol_version field indicating a protocol version of the media content presentation information table. The id_extension field may include a sequence_number field for identifying each of a plurality of media content presentation information tables including different media content presentation information items. The id extension element may indicate an identifier for identifying a broadcast service associated with the media content presentation information table. In this case, the id_extension element may indicate any one of a program number, a service id, and a source id.

The media content presentation information table may include a version element indicating a version of the media content presentation information table. In this case, the broadcast receiving apparatus 100 may determine whether the media content presentation information table is updated based on the version element. In detail, the broadcast receiving apparatus 100 may determine that the media content presentation information table is updated upon receiving a media content presentation information table having a different version element value from a value of a version element of a previously received media content presentation information table. In this case, the broadcast receiving apparatus 100 may extract the media content presentation information from the media content presentation information table. The broadcast receiving apparatus 100 may determine that the media content presentation information table is not updated upon receiving a media content presentation information table having the same version element version as a version element of a previously received media content presentation information table. In this case, the broadcast receiving apparatus 100 may not extract media content presentation information from the media content presentation information table. In a detailed embodiment, a value of the version element may have the same value as a value of a version element included in the media content presentation information.

The media content presentation information table may include a media content presentation information id element indicating an identifier for identifying the media content presentation information.

In this case, the media content presentation information table may include a media content presentation information id_length element indicating a length of an identifier for identifying the media content presentation information.

The media content presentation information table may include a coding element indicating an encoding method of the media content presentation information. In this case, the coding element indicating the encoding method may indicate that the media content presentation information table includes media content presentation information without separate compression. In addition, the coding element indicating an encoding method may indicate that the media content presentation information table includes media content presentation information compressed using a specific algorithm. In this case, the specific algorithm may be gzip.

In addition, the media content presentation information table may include a byte_length element indicating a length of the media content presentation information.

The media content presentation information table may include a byte() element that is media content presentation information without change.

In this case, the media content presentation information table may have a form of XML, HTML5, or bitstream.

FIG. 55 illustrates the syntax of a bit stream when an MPD is transmitted in the form of an MPD information table according to an embodiment of the present invention.

In the embodiment of FIG. 55, a media content presentation information table has a bit stream form and media content presentation information is included in the MPD. Accordingly, in FIG. 55, the media content presentation information table is referred to as an MPD information table.

The MPD information table may include at least one of a table_id field, a section_syntax_indicator field, a private_indicator field, a private_section_length field, a table_id_extension field, a table_id_extension field, an MPD_data_version field, a section_number field, a last_section_number field, an MPD_id_length field, an MPD_id_byte field, an MPD_coding field, an MPD_byte_length field, and/or an MPD_byte field.

In the embodiment of FIG. 55, the table_id field may indicate an identifier of an MPD information table. In this case, the table_id field may be OxFA that is one of reserved id values defined in ATSC A/65.

The section_syntax_indicator field may indicate whether an MPD information table is a private section table of a long form of the MPEG-2 TS standard. The MPD information table is not a long form and, thus, the section_syntax_indicator field may have a value '0'.

The private_indicator field may indicate whether a current table corresponds to a private section. The MPD information table corresponds to a private section and, thus, the private_indicator field may have a value '1'.

The private_section_length field may have a length of a section included subsequent to the private_section_length field.

The table_id_extension field may indicate an identifier for identifying a broadcast service associated with MPD transmitted through an MPD information table. In this case, the table_id_extension field may indicate any one of a program number, a service id, and/or a source id. According to another embodiment of the present invention, the table_id_extension field may indicate an identifier for identifying MPD. In detail, the table_id_extension field may include the protocol_version field indicating a protocol version of the MPD information table. The table_id_extension field may include the sequence_number field for identifying each of a plurality of MPD information tables including different MPDs.

The MPD_data_version field may indicate a version of the MPD information table. In this case, the broadcast receiving apparatus 100 may determine whether an MPD information table is updated based on the mpd_data_version field. A value of the MPD_data_version field may be the same as a value of a version element included in the MPD.

The section_number field may indicate a number of a current section.

The last_section_number field may indicate a number of a last section. When a size of the MPD information table is large, the last_section_number field may be divided into a plurality of sections and transmitted. In this case, the broadcast receiving apparatus 100 may determine whether all sections required for the MPD information table are received based on the section_number field and the last_section_number field.

The MPD_id_bytes field may indicate an identifier MPD.

The MPD_id_length field may indicate a length of an identifier for identifying MPD.

The MPD_coding field may indicate an encoding method of the MPD. In this case, the MPD_coding field indicating an encoding method may indicate that an MPD information table includes media content presentation information without separate compression. The MPD_coding field may indicate that the MPD information table includes an MPD compressed using a specific algorithm. In this case, the specific algorithm may be gzip. In a detailed embodiment, a value of the MPD_coding field may be defined as shown in Table 33.

[Table 33]

| Value | Designation |
|-------|-------------|
| 0x00  | Plain text  |

(continued)

| Value | Designation |
|---|---|
| 0x01 | Compressed by gzip |
| 0x02-0x03 | Reserved for future use |

In an embodiment of Table 33, when the MPD_coding field has a value of 0x00, this indicates that the MPD information table includes media content presentation information without separate compression. When the MPD_coding field has a value of 0x01, this indicates that the MPD information table includes an MPD compressed using gzip.

The MPD_byte_length field may indicate a length of an MPD.

The MPD_byte() field may include actual data of an MPD included in the MPD information table.

FIG. 56 is a flowchart illustrating an operation for extracting MPD based on an information table including an MPD by a broadcast receiving apparatus according to an embodiment of the present invention.

The broadcast receiving apparatus 100 may receive a broadcast stream through the broadcast receiver 110 (S301).

The broadcast receiving apparatus 100 may extract the media content presentation information table from the broadcast stream through the controller 150 (S303). In a detailed embodiment, the broadcast receiving apparatus 100 may extract the media content presentation information table from the broadcast stream based on an id element through the controller 150. In detail, the broadcast receiving apparatus 100 may extract the media content presentation information table from the broadcast stream based on information obtained by combining id element and id_extension element through the controller 150. For example, the broadcast receiving apparatus 100 may identify the media content presentation information table based on the id element and extract the media content presentation information table from the broadcast stream through the controller 150. In this case, the broadcast receiving apparatus 100 may identify the media content presentation information table based on a value obtained by combining a value of the id element and a value of the id_extension element and extract the media content presentation information table from the broadcast stream through the controller 150.

The broadcast receiving apparatus 100 may extract the media content presentation information based on the media content presentation information table through the controller 150 (S305). In this case, when the media content presentation information is compressed, the broadcast receiving apparatus 100 may decompress the media content presentation information to extract the media content presentation information through the controller 150.

The broadcast receiving apparatus 100 may receive media content based on the media content presentation information through the IP transceiver 130 (S307).

The broadcast receiving apparatus 100 may present media content through the controller 150 (S309). In detail, the broadcast receiving apparatus 100 may present media content based on the media content presentation information through the controller 150.

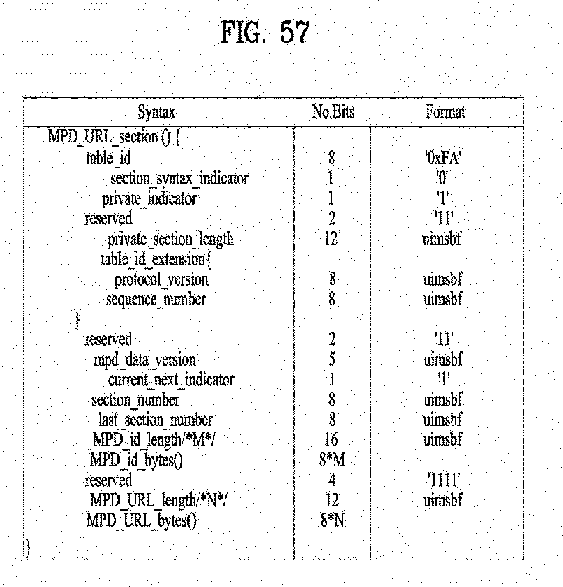

A content provider or a broadcaster may transmit media content presentation information in an IP datagram through a broadcast network instead of an IP network. In this case, the content provider or the broadcaster may transmit a media content presentation information table including the media content presentation information in the IP datagram. With reference to FIGs. 57 to 60, the case in which the media content presentation information is transmitted in the IP datagram will be described below.

When the media content presentation information is transmitted in the IP datagram, the broadcast receiving apparatus 100 may receive the media content presentation information based on the media IP datagram. In a detailed embodiment, the broadcast receiving apparatus 100 may extract the media content presentation information from the IP datagram and receive the media content presentation information. In another detailed embodiment, the broadcast receiving apparatus 100 may extract the media content presentation information table from the IP datagram and receive the media content presentation information.

In this case, the media content presentation information may be included in a UDP payload. The UDP payload may include a payload type field and a payload field. The payload_typefield may represent a data form of media content presentation information included in the payload field. In this case, a value of the payload_typefield may indicate that the media content presentation information included in the payload field is a file itself. In a detailed embodiment, when the media content presentation information is included in the MPD, a value of the payload_type field may indicate that the payload field includes an MPD without change. In another detailed embodiment, when the media content presentation information is included in a PI file, a value of the payload_typefield may indicate that the payload field includes the PI file without change. In addition, a value of the payload_typefield may indicate that the media content presentation information is included in a special syntax form. In addition, a value of the payload_typefield may indicates that the media content presentation information is included in a form of the aforementioned media content presentation information table.

The payload field may include the media content presentation information.

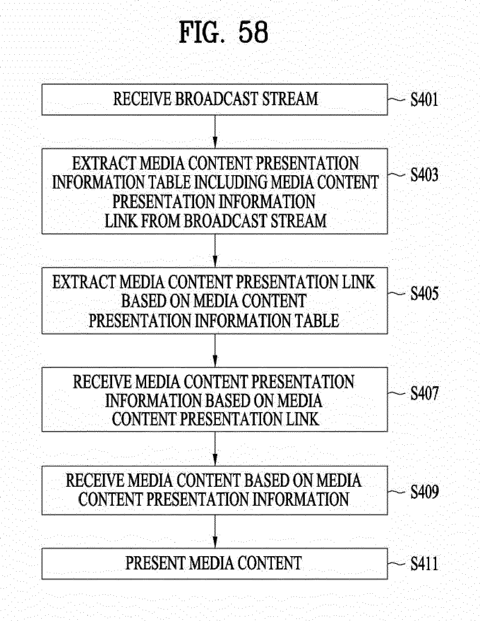

A content provider or a broadcaster may transmit a media content presentation information link in the media content presentation information table. In this case, the media content presentation information link may link the media content presentation information and receive the media content presentation information. In this case, the media content presentation information link may be a uniform resource locator (URL). With reference to FIGs. 57 and 58, the case in which the media content presentation information link is transmitted in the media content presentation information table will be described below.

When the media content presentation information link is transmitted in the media content presentation information table, the broadcast receiving apparatus 100 may receive the media content presentation information based on the media content presentation information table. In detail, the broadcast receiving apparatus 100 may extract media content presentation information link from the media content presentation information table. In this case, the broadcast receiving apparatus 100 may receive the media content presentation information from the media content presentation information link.

In this case, the media content presentation information table may include an id element for identifying the media content presentation information table among a plurality of information tables.

The media content presentation information table may include an id_extension element. The id_extension element may indicate an identifier for identifying media content presentation information table instance. In this case, the id_extension field may include the protocol_version field indicating a protocol version of the media content presentation information table. In addition, the id_extension field may include the sequence_number field for identifying each of a plurality of media content presentation information tables including different media content presentation information items. The id extension element may indicate a service identifier for identifying a broadcast service associated with the media content presentation information table. In this case, the id_extension element may indicate any one of program number, service id, and source id.

The media content presentation information table may include a version element indicating a version of the media content presentation information table. In this case, the broadcast receiving apparatus 100 may determine whether the media content presentation information table is updated based on the version element. In detail, the broadcast receiving apparatus 100 may determine that the media content presentation information table is updated upon receiving a media content presentation information table having a different version element value from a value of a version element of a previously received media content presentation information table. In this case, the broadcast receiving apparatus 100 may extract the media content presentation information from the media content presentation information table. The broadcast receiving apparatus 100 may determine that the media content presentation information table is not updated upon receiving the media content presentation information table having the same value as a value of a version element of a previously received media content presentation information table. In this case, the broadcast receiving apparatus 100 may not extract the media content presentation information from the media content presentation information table. In a detailed embodiment, the value of the version element may be the same as a value of a version element included in the media content presentation information.

The media content presentation information table may include a media content presentation information id element indicating an identifier for identifying the media content presentation information.

In this case, the media content presentation information table may include a media content presentation information id_length element indicating a length of an identifier for identifying the media content presentation information.

The media content presentation information table may include a byte_length element indicating a length of the media content presentation information link.

The media content presentation information table may include a byte() element as a media content presentation information link itself. In this case, the media content presentation information link may be a URL.

In this case, the media content presentation information table may be XML, HTML5, or a bitstream.

FIG. 57 illustrates an MPD link table including MPD link according to an embodiment of the present invention.

In the embodiment of FIG. 57, the media content presentation information table has a bitstream form and the media content presentation information is included in the MPD. Accordingly, in FIG. 33, the media content presentation information table is referred to as an MPD information table. In addition, the media content presentation information may link a URL. Accordingly, the media content presentation information will be referred to as link MPD_URL.

The MPD information table may include a table id field, a section_syntax_indicator field, a private_indicator field, a private_section_length field, a table_id_extension field, a table_id_extension field, an MPD_data_version field, a section_number field, a last_section_number field, an MPD_id_length field, an MPD_id_byte field, an MPD_URL_length field, and an MPD_URL_bytes field.

In the embodiment of FIG. 57, the table_id field may indicate an identifier of the MPD information table. In this case, the table_id field may be 0xFA as one of reserved id values defined in ATSC A/65.

The section_syntax_indicator field may indicate whether the MPD information table is a private section table of a long form of the MPEG-2 TS standard. The MPD information table is not a long form and, thus, the section_syntax_indicator field may have a value O.

The private_indicator field may indicate whether a current table corresponds to a private section. The MPD information table corresponds to a private section and, thus, the private_indicator field may have a value of 1.

The private_section_length field may indicate a length of a section included subsequent to the private_section_length field.

The table_id_extension field may indicate an identifier for identifying a broadcast service associated with MPD transmitted through an MPD information table. In this case, the table_id_extension field may indicate any one of program number, service id, and source id. In another embodiment of the present invention, the table_id_extension field may indicate an identifier for identifying MPD. In detail, the table_id_extension field may include a protocol_version field indicating a protocol version of the MPD information table. The table_id_extension field may include the sequence_number field for identifying each of a plurality of MPD information tables including different MPDs.

The MPD_data_version field may indicate a version of the MPD information table. In this case, the broadcast receiving apparatus 100 may determine whether the MPD information table is updated based on the mpd_data_version field. The value of the MPD_data_version field may be the same as a value of the version element included in MPD.

The section_number field may indicate a number of a current section.

The last_section_number field may indicate a number of a last section. When a size of the MPD information table is large, the last_section_number field may be divided into a plurality of sections and transmitted. In this case, the broadcast receiving apparatus 100 may determine whether all sections required for an MPD information table are received based on the section_number field and the last_section_number field.

The MPD_id_bytes field may indicate an identifier for identifying MPD.

The MPD_id_lengt field may indicate a length of an identifier for identifying MPD.

The MPD_URL_length field may indicate a length of MPD_URL.

The MPD_URL_byte() field may be MPD_URL itself.

FIG. 58 is a flowchart of an operation for receiving MPD based on a media content presentation information table including media content presentation information link by a broadcast receiving apparatus according to an embodiment of the present invention.

The broadcast receiving apparatus 100 may receive a broadcast stream through the broadcast receiver 110 (S401).

The broadcast receiving apparatus 100 may extract a media content presentation information table including a media content presentation information link from the broadcast stream through the controller 150 (S403). In a detailed embodiment, the broadcast receiving apparatus 100 may extract the media content presentation information table from the broadcast stream based on the id element through the controller 150. In detail, the broadcast receiving apparatus 100 may extract the media content presentation information table from the broadcast stream based on information obtained by combining the id element and the id_extension element through the controller 150. For example, the broadcast receiving apparatus 100 may identify the media content presentation information table based on a value of the id element and extract the media content presentation information table from the broadcast stream through the controller 150. In this case, the broadcast receiving apparatus 100 may identify the media content presentation information table based on a value obtained by combining a value of the id element and a value of the id_extension element and extract the media content presentation information table from the broadcast stream through the controller 150.

The broadcast receiving apparatus 100 may extract the media content presentation information link based on the media content presentation information table through the controller 150 (S405). In this case, the media content presentation information link may be a URL.

The broadcast receiving apparatus 100 may receive the media content presentation information based on the media content presentation link through the IP transceiver 130 (S407).

The broadcast receiving apparatus 100 may receive media content based on the media content presentation information through the IP transceiver 130 (S409).

The broadcast receiving apparatus 100 may present media content through the controller 150 (S411). In detail, the broadcast receiving apparatus 100 may present media content based on the media content presentation information through the controller 150.

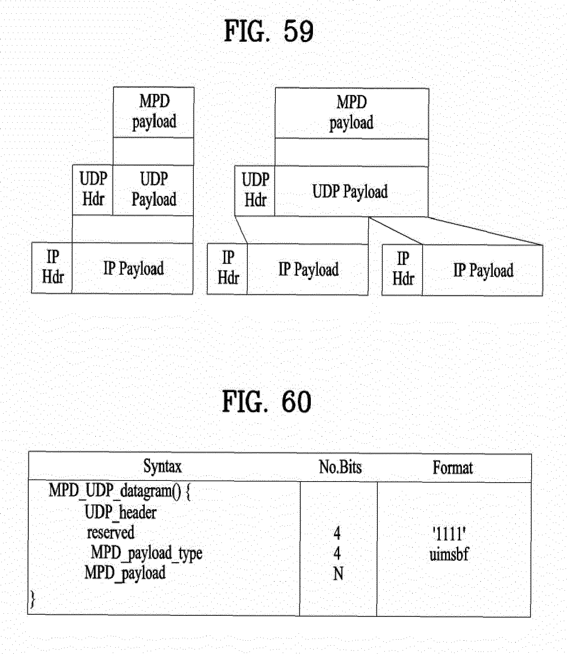

In the embodiments of FIGs. 59 to 61, the media content presentation information is included in the MPD. FIG. 59 illustrates the case in which MPD or an MPD information table is transmitted in an IP datagram according to an embodiment of the present invention.

Like a data structure illustrated in FIG. 59, in the embodiments of FIGs. 59 to 61, the IP datagram includes a UDP datagram in an IP payload. In addition, the UDP datagram includes an MPD or an MPD information table in the UDP payload. In this case, the syntax of the IP datagram will be described in detail with reference to FIG. 60.

FIG. 60 illustrates the syntax of an IP datagram when MPD or an MPD information table is transmitted in the IP datagram according to an embodiment of the present invention.

The UDP payload may include an MPD_payload_type field and a payload field. The MPD_payload_typefield may indicate a data form of MPD of the MPD_payload field. A value of the MPD_payload_type field may indicate that the MPD_payload field includes an MPD itself. A value of the MPD_payload_type field may indicate that the MPD_payload field includes an MPD in a special syntax form. In detail, the value of the MPD_payload_type field may be defined as shown in Table 34 below.

[Table 34]

| Value | Designation |
|-------|-------------|
| 0x00 | Not Specified |
| 0x01 | Syntax |
| 0x02 | MPD file as it is |
| 0x03 | MPD section |
| 0x04 | Reserved for future use |

In the embodiment of Table 34, when a value of the MPD_payload_type field is 0x01, this may indicate that the MPD_payload field includes an MPD in a special syntax form. When a value of the MPD_payload_type field is 0x02, this may indicate that the MPD_payload field includes an MPD without change. In addition, when a value of the MPD_payload_type field is 0x03, this may indicate that the MPD_payload field includes an MPD in a form of the aforementioned MPD information table.

The MPD_payload field includes an MPD.

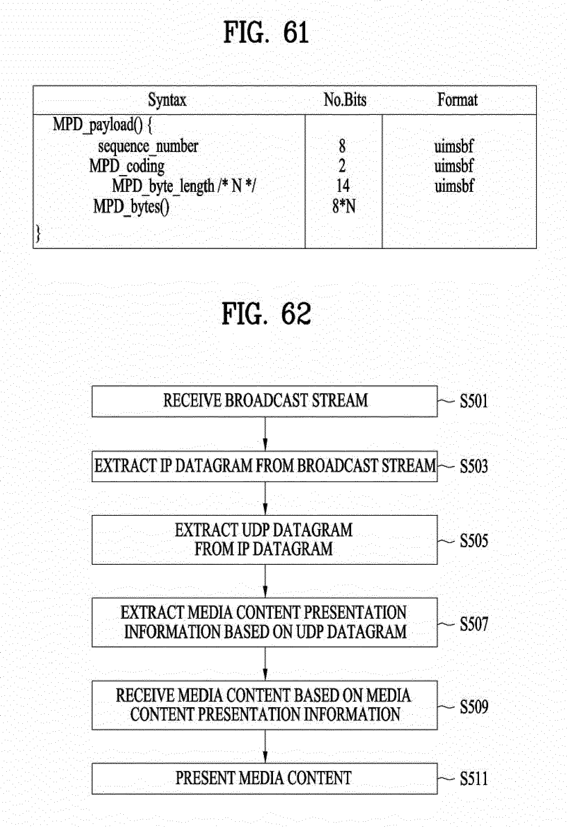

FIG. 61 illustrates the syntax of an MPD payload included in an IP datagram when an MPD or an MPD information table is transmitted in the IP datagram according to an embodiment of the present invention.

The MPD_coding field may indicate an encoding method of the MPD or the MPD information table. In this case, the MPD_coding field indicating an encoding method may indicate that the MPD payload includes the MPD or the MPD information table without separate compression. In addition, the MPD_coding field may indicate that the MPD payload includes the MPD or MPD information table compressed using a specific algorithm. In this case, the specific algorithm may be gzip. In a detailed embodiment, a value of the MPD_coding field may be defined as shown in Table 35 below.

[Table 35]

| Value | Designation |
|-------|-------------|
| 0x00 | Plain text |
| 0x01 | Compressed by gzip |
| 0x02-0x03 | Reserved for future use |

In the embodiment of Table 35 above, when the MPD_coding field has a value of 0x00, the value may indicate that an MPD payload includes an MPD or an MPD information table without separate compression. When the MPD_coding field has a value of 0x01, the value may indicate that an MPD payload includes an MPD or an MPD information table compressed using gzip.

The MPD_byte_length field may indicate a length of the MPD or MPD information table.

FIG. 62 is a flowchart of an operation of extracting media content presentation information or a media content presentation information table based on IP datagram including the media content presentation information or the media content presentation information table by a broadcast receiving apparatus according to an embodiment of the present invention.

The broadcast receiving apparatus 100 may receive a broadcast stream through the broadcast receiver 110 (S501).

The broadcast receiving apparatus 100 may extract an IP datagram from the broadcast stream through the controller 150 (S503).

The broadcast receiving apparatus 100 may extract a UDP datagram from the IP datagram through the controller 150 (S505). In detail, the broadcast receiving apparatus 100 may extract the UDP datagram from a payload of the IP datagram.

The broadcast receiving apparatus 100 may extract media content presentation information based on the UDP datagram through the controller 150 (S507). In detail, the broadcast receiving apparatus 100 may extract media content presentation information or a media content presentation information table from a payload of the UDP datagram. In a detailed embodiment, when the media content presentation information or the media content presentation information table is compressed, the broadcast receiving apparatus 100 may release compression of the media content presentation information or the media content presentation information table to extract the media content presentation information or the media content presentation information table through the controller 150. In this case, the broadcast receiving apparatus 100 may release compression of the media content presentation information or the media content presentation information table based on a coding field included in the UDP datagram. In this case, the broadcast receiving apparatus 100 may extract media content presentation information from the media content presentation information table through the controller 150.

The broadcast receiving apparatus 100 may receive media content based on the media content presentation information through the IP transceiver 130 (S507).

The broadcast receiving apparatus 100 may present the media content through the controller 150 (S509). In detail, the broadcast receiving apparatus 100 may present the media content based on the media content presentation information through the controller 150.

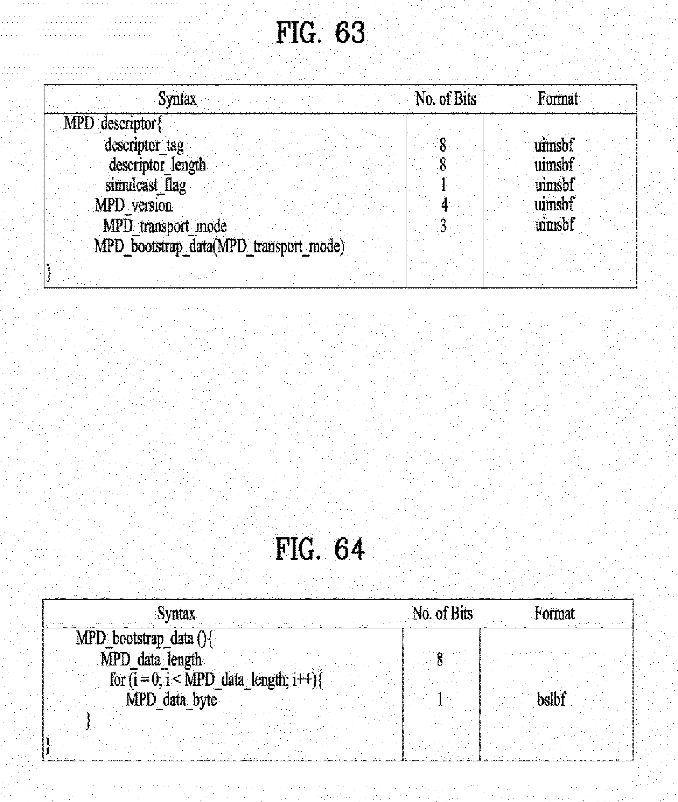

A content provider or a broadcaster may transmit a method of transmitting media content presentation information in a broadcast information signaling table. With reference to FIGs. 63 to 71, transmission of media content presentation information in a broadcast information signaling table will be described below. In this case, the broadcast information signaling table may be formed in any one of forms such as a bitstream, HTML5, and XML.

In a detailed embodiment, a content provider or a broadcaster may transmit a descriptor including a method of transmitting media content presentation information in a broadcast information signaling information table.

In this case, the broadcast information signaling information table may be any one of a program specific information (PSI) table defined in the ISO/IEC 13818-1 standard, a system information (SI) table defined in the ETSI EN 300 468 standard, and a program and system information protocol (PSIP) defined in the ATSC standard. In particular, the signaling information table may be an information table for signaling information on broadcast content. In this case, the information on the broadcast content may be, in detail, any one of information on a broadcast service, information on an elementary stream, and information on an event. In detail, the information table may be any one of a terrestrial virtual channel table (TVCT) and an event information table (EIT) among tables defined in A/65 that is one of the ATSC standards, a service map table (SMT) among tables defined in the A/153, a service description table (SDT) and an event information table (EIT) defined in the in the ETSI EN 300 468 standard, and a program map table (PMT) defined in the ISO/IEC 13818-1 standard.

The descriptor may include a tag element for identifying the descriptor.

The descriptor may include a length element indicating a length of the descriptor.

The descriptor may include a simulcast_flag indicating that broadcast content determined by the descriptor is simultaneously transmitted to an IP network as well as a broadcast network. In this case, the broadcast content may be any one of an elementary stream determined by the descriptor, a service determined by the descriptor, and an event determined by the descriptor. When a value of the simulcast_flag is 1 and transmission of a broadcast stream through a broadcast network is not stable, the broadcast receiving apparatus 100 may receive broadcast content determined by the descriptor through an IP network. In detail, when a value of the simulcast_flag is 1 and a signal of a broadcast stream transmitted through a broadcast network is weaker than a predetermined reference or presentation of broadcast content is stopped, the broadcast receiving apparatus 100 may receive broadcast content determined by the descriptor through an IP network. In this case, the broadcast receiving apparatus 100 may display information indicating that broadcast content determined by the descriptor is capable of being received, to a user. In addition, the broadcast receiving apparatus 100 may receive broadcast content determined by the descriptor through an IP network based on a user input. In detail, when there is user input, the broadcast receiving apparatus 100 may receive broadcast content determined by the descriptor through an IP network.

In addition, the descriptor may include a version element indicating a version of the media content presentation information.

The descriptor may include a transport_mode element indicating a detailed method of transmitting media content presentation information or media content presentation information table. In this case, a value of the transport_mode element may indicate that the descriptor directly includes media content presentation information or a media content presentation information table. A value of the transport_mode element may indicate that the media content presentation information or the media content presentation information table is capable of being downloaded through a link address included in the descriptor. A value of the transport_mode element may indicate that an information table included in a packet including the descriptor and another packet includes media content presentation information. A value of the transport_mode element may indicate that the media content presentation information includes a separate broadcast stream. A value of the transport_mode element may indicate that the IP datagram includes the media content presentation information or the media content presentation information table. In addition, a value of the transport_mode element may indicate that the media content presentation information or the media content presentation information table is transmitted according to a session-based transport protocol. In this case, the session-based transport protocol may be file delivery over unidirectional transport (FLUTE). In addition, the session-based transport protocol may be asynchronous layered coding (ALC)/layered coding transport (LCT).

The descriptor may include a bootstrap_data element including detailed transport information corresponding to a method of transmitting the media content presentation information or the media content presentation information table. In this case, when the descriptor directly includes the media content presentation information, the bootstrap_data element may include the media content presentation information itself. In this case, the broadcast receiving apparatus 100 may extract the media content presentation information from the descriptor.

When the media content presentation information or the media content presentation information table is capable of being downloaded through a link included in the descriptor, the bootstrap_data element may include a link for downloading the media content presentation information or the media content presentation information table. In a detailed embodiment, the broadcast receiving apparatus 100 may access the link and receive the downloaded media content presentation information or media content presentation information table. In this case, there may be a plurality of links. In addition, the links may be assigned priorities. In this case, the broadcast receiving apparatus 100 may sequentially attempt to download the media content presentation information or the media content presentation information table from a link with high priority. In this case, the link may be a uniform resource locator (URL).

When an information table included in a packet including the descriptor and another packet includes media content presentation information or media content presentation information link for linking media content presentation information, the bootstrap_data element may include an identifier of a packet including the media content presentation information or the media content presentation information link. In this case, a table ID of the information table may be predetermined. However, when the table ID of the information table is not predetermined, the bootstrap_data element may include the table ID of the information table. In this case, the information table may be the aforementioned media content presentation information table.

When a separate broadcast stream includes media content presentation information or media content presentation information link, the bootstrap_data element may include an identifier of the broadcast stream and an identifier of the packet including the media content presentation information or the media content presentation information link. In this case, when the broadcast stream complies with the MPEG2 TS standard, the identifier of the broadcast stream may be a TS ID and the packet identifier may be a PID. In detail, the information table included in the packet may include media content presentation information or media content presentation information link. In this case, the table ID of the information table may be predetermined. However, when the table ID of the information table is not predetermined, the bootstrap_data element may include the table ID of the information table. In this case, the information table including the media content presentation information may be aforementioned media content presentation information table.

When an IP datagram includes the media content presentation information or the media content presentation information table, the bootstrap_data element may include a flag, a source IP address, and a version of an IP address form, indicating whether an identifier, an IP address, a port number, and a source IP address of a logical data transmission channel of a physical layer for downloading an IP datagram including the media content presentation information are included. In this case, the logical data transmission channel of the physical layer may be referred to as a physical layer pipe. In this case, the physical layer pipe may be a logical data transmission path in one radio frequency (RF) channel. One RF channel may include one or more physical layer pipes. The physical layer pipe may be referred to as a data pipe (DP).

When the media content presentation information or the media content presentation information table is transmitted through a session-based transport protocol session, the bootstrap_data element may include a flag, a source IP address of a session, and a version of an IP address form, indicating whether an identifier, a session identifier, a session IP address, a session port number, and a session source IP address of a data transmission channel of a physical layer for downloading a media content information or media content presentation information table are included. As described above, the session-based transport protocol may be FLUTE. The session-based transport protocol may be ALC/LCT. In this case, when the session-based transport protocol is FLUTE, the session identifier may be TSI that is an identifier of the FLUTE session.

In the embodiment of FIGs. 63 to 69, the MPD may include media content presentation information. In the embodiment of FIGs. 63 to 69, a descriptor including a method of transmitting media content presentation information or a media content presentation information table is referred to as a descriptor. In this case, the MPD descriptor may be included in a broadcast information signaling information table in the form of a bitstream.

FIG. 63 illustrates the syntax of an MPD descriptor for transmitting an MPD according to an embodiment of the present invention.

The MPD descriptor may include a descriptor_tag field, a descriptor_length field, an MPD_version field, a simulcast_flag field, an MPD_vesrsion field, an MPD_transport mode field, and an MPD_bootstrap_data field.

The descriptor_tag field may indicate an identifier of the MPD descriptor.

The descriptor_length field may indicate a length of the MPD descriptor.

The MPD_version field may indicate a version of the MPD.

The simulcast_flag field may indicate that broadcast content determined by the MPD descriptor is simultaneously transmitted through an IP network as well as a broadcast network. In this case, the broadcast content may be any one of an elementary stream determined by the MPD descriptor, a service determined by the MPD descriptor, and an event determined by the MPD descriptor. When a value of the simulcast_flag is 1 and transmission of a broadcast stream transmitted through the broadcast network is not stable, the broadcast receiving apparatus 100 may receive broadcast content determined by the descriptor through the IP network. In detail, when a value of the simulcast_flag is 1 and a signal of a broadcast stream transmitted through a broadcast network is weaker than a predetermined reference or presentation of broadcast content is stopped, the broadcast receiving apparatus 100 may receive broadcast content determined by the descriptor through an IP network. In this case, the broadcast receiving apparatus 100 may display information indicating that broadcast content determined by the MPD descriptor is capable of being received, to a user. In addition, the broadcast receiving apparatus 100 may receive broadcast content determined by the MPD descriptor through an IP network based on user input. In detail, when there is user input, the broadcast receiving apparatus 100 may receive broadcast content determined by the MPD descriptor through an IP network.

The MPD_transport mode field may indicate a detailed method of transmitting an MPD, an MPD information table (MPD_Section), or an MPD link table (MPD_URL_Section). In this case, a value of the MPD_transport mode field may indicate that the MPD descriptor directly includes an MPD. A value of the MPD_transport mode field may indicate that an MPD, an MPD information table, or an MPD link table are capable of being downloaded through a link address including the MPD descriptor. In addition, a value of the MPD_transport mode field may indicate that an information table included in a packet and another packet including the MPD descriptor includes an MPD or MPD URL. In this case, the MPD_URL may indicate a URL for downloading an MPD. In this case, the information table may be the aforementioned MPD information table. In this case, the information table may be the aforementioned MPD link information table. A value of the MPD_transport mode field may indicate that the MPD or the MPD_URL includes M separate broadcast streams. In this case, the information table may be the aforementioned MPD information table. In this case, the information table may be aforementioned MPD link information table. A value of the MPD_transport mode field may indicate that the IP datagram includes an MPD, an MPD information table, or an MPD link table. In addition, a value of the MPD_transport mode field may indicate that an MPD, an MPD information table, or an MPD link table is transmitted through a session-based transport protocol session such as FLUTE or ALC/LCT. In detail, a value of the MPD_transport mode field may be allocated as shown in Table 36 below.

[Table 36]

| Value | Designation |
|---|---|
| 0x00 | The MPD is delivered in MPD_data_bytes() |
| 0x01 | The location of MPD, MPD_Section or MPD_URL_Section is identified in the URL carried in the MPD_URL. |
| 0x02 | The MPD or MPD_URL is delivered by section as separate tables (e.g., MPEG-2 private section) in same broadcast network |
| 0x03 | The MPD or MPD_URL is delivered by section as separate tables (e.g., MPEG-2 private section) in different broadcast network |
| 0x04 | The MPD, MPD_Section or MPD_URL_Section is delivered in IP datagrams |
| 0x05 | The MPD, MPD_Section or MPD_URL is delivered in FLUTE sessions(e.g. FLUTE, ALC/LCT etc) |
| 0x06-0x07 | Reserved for future use |

In the embodiment of Table 36 above, when a value of the MPD_transport mode field is 0x00, the MPD_transport mode field may indicate that the MPD descriptor directly includes an MPD. When a value of the MPD_transport mode field is 0x01, the MPD_transport mode field may indicate that an MPD, an MPD information table, or an MPD link table are capable of being downloaded through a link address included in the MPD descriptor. When a value of the MPD_transport mode field is 0x02, the MPD_transport mode field may indicate that an information table included in a packet or another packet including the MPD descriptor includes an MPD or an MPD_URL. When a value of the MPD_transport mode field is 0x03, the MPD_transport mode field may indicate that a separate broadcast stream includes the MPD. When a value of the MPD_transport mode field is 0x04, the MPD_transport mode field may indicate that the IP datagram includes an MPD, an MPD information table, or an MPD link table. When a value of the MPD_transport mode field is 0x05, the MPD_transport mode field may indicate that an MPD, an MPD information table, or an MPD link table is transmitted through a transmission protocol session. In this case, the transmission protocol may be FLUTE. In this case, the transmission protocol may be ALC/LCT.

The MPD_bootstrap_data field may include detailed transmitting information according to a method of transmitting MPD or an MPD information table, which will be described in detail with reference to FIGs. 38 to 43.

FIG. 64 illustrates the syntax of MPD bootstrap_data when an MPD descriptor directly includes an MPD.

When the MPD descriptor directly includes media content presentation information, the bootstrap_data may include an MPD_data_length field and an MPD_data_byte field. The MPD_data_length field may indicate a size of MPD data. The MPD_data_byte field may indicate actual data of the MPD. In this case, the broadcast receiving apparatus 100 may extract the MPD from the MPD descriptor.

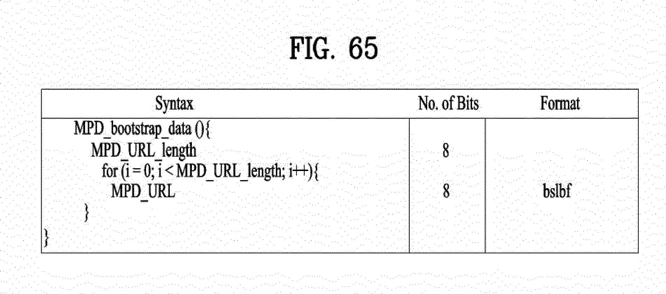

FIG. 65 illustrates the syntax of MPD bootstrap_data when the MPD descriptor includes an address of a link for storing the MPD, the MPD information table, or the MPD link table.

When the MPD is downloaded through an IP address included in the MPD descriptor, the bootstrap_data may include an MPD_URL_length field and an MPD_URL field. The MPD_URL_length field may indicate a length of the URL. The MPD_URL field may indicate a URL for downloading the MPD, the MPD information table, or the MPD link table.

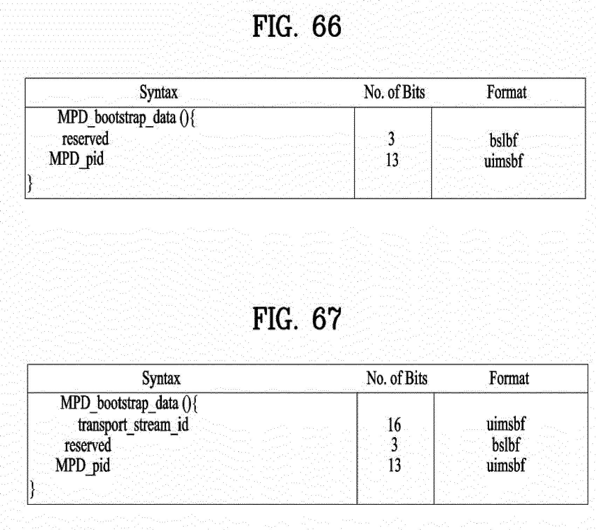

FIG. 66 illustrates the syntax of MPD bootstrap_data when the MPD descriptor includes an identifier of a data packet including an MPD.

When information included in a packet or another packet including the MPD descriptor includes an MPD and MPD_URL, the bootstrap_data may include MPD_pid field. In this case, the information table may be the aforementioned MPD information table. In this case, the information table may be the aforementioned MPD link information table. The MPD_pid field may indicate an identifier of a packet including the MPD. In this case, when the broadcast stream complies with the MPEG-2 TS standard, the packet identifier may be a PID. The broadcast receiving apparatus 100 may extract the MPD based on the MPD_pid field. The broadcast receiving apparatus 100 may identify a packet including an MPD or MPD_URL based on the value of the MPD_pid field and extract the MPD or the MPD_URL from the packet including the MPD or the MPD_URL. In this case, the table ID of the information table may be predetermined. However, when the table ID of the information table is not predetermined, the bootstrap_data may include the table_id field indicating a table ID of the information table.

FIG. 67 illustrates the syntax of MPD bootstrap_data when an MPD descriptor includes an identifier of a separate broadcast stream including an MPD.

When a separate broadcast stream includes an MPD or MPD_URL, the bootstrap_data may include a transport_stream_id field and an MPD_pid field. The transport_stream_id field may indicate an identifier of a broadcast stream including the MPD. The MPD_pid may indicate an identifier of a packet including the MPD or the MPD_URL. In this case, when the broadcast stream complies with the MPEG-2 TS standard, an identifier of the broadcast stream may be a TS ID and an identifier of the packet may be a PID. The broadcast receiving apparatus 100 may extract the MPD or the MPD_URL based on the transport_stream_id field and the MPD_pid field. The broadcast receiving apparatus 100 may identify a broadcast stream including an MPD or an MPD_URL based on the transport_stream_id field and identify a packet including an MPD based on the MPD_pid field. Then, the broadcast receiving apparatus 100 may extract the MPD or the MPD_URL from the packet including the MPD or the MPD_URL. In a detailed embodiment, the packet including the MPD may include an MPD information table. In another detailed embodiment, the packet including the MPD_URL may include an MPD link information table. In this case, a table ID of the information table may be predetermined. However, when the table ID of the information table is not predetermined, the bootstrap_data may include a table_id field indicating a table ID of the information table.

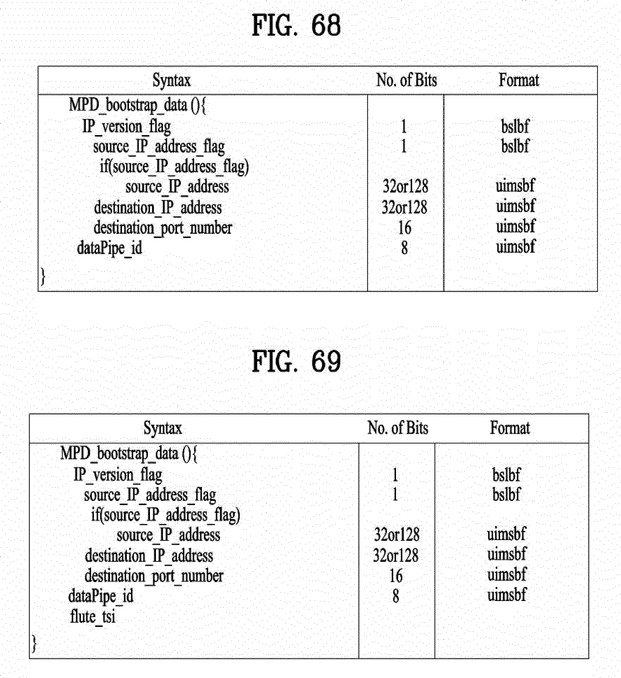

FIG. 68 illustrates the syntax of MPD bootstrap_data when an MPD descriptor includes information on an IP datagram including an MPD, an MPD information table, or an MPD link information table.

When the MPD descriptor includes information on an IP datagram including the MPD, the MPD information table, or the MPD link information table, bootstrap_data may include an IP_version_flag field, a source_IP_address_flag field, a source_IP_address field, a destination_IP_address field, a destination_port_number, and a dataPipe_id field. The dataPipe_id field may indicate an identifier of a data transmission channel of a physical layer. In detail, the broadcast receiving apparatus 100 may acquire a specific IP datagram through a corresponding transmission channel. The IP_version_flag field may indicate a version of an IP address form. The source_IP_address_flag field may indicate whether a source IP address of the IP datagram including the MPD, the MPD information table, or the MPD link information table is included. The destination_IP_address field may indicate an IP address for downloading the IP datagram including the MPD, the MPD information table, or the MPD link information table. The destination_port_number field may indicate a port number for downloading the IP datagram including the MPD, the MPD information table, or the MPD link information table. The broadcast receiving apparatus 100 may extract the MPD, the MPD information table, or the MPD link information table based on the dataPipe_id field, the destination_IP_address field, and the destination_port_number field. The broadcast receiving apparatus 100 may identify a data channel of a physical layer for transmitting the IP datagram based on the dataPipe_id field and extract the IP datagram including the MPD, the MPD information table, or the MPD link information table based on the destination_IP_address field and the destination_port_number field. Then, the broadcast receiving apparatus 100 may extract the MPD, the MPD information table, or the MPD link information table from the IP datagram including the MPD, the MPD information table, or the MPD link information table.

FIG. 69 illustrates the syntax of MPD bootstrap_data when the MPD descriptor includes information on a transmission protocol session based on a session such as FLUTE or ALC/LCT for transmitting the MPD.

When the media content presentation information is transmitted through the session-based transport protocol session such as FLUTE or ALC/LCT, the bootstrap_data may include an IP_version_flag field, a source_IP_address_flag field, a source_IP_address field, a destination_IP_address field, a destination_port_number field, a dataPipe_id field, and a flute_tsi field. The IP_version_flag field may indicate a version of an IP address form. The source_IP_address_flag field may indicate whether a source IP address of a FLUTE session for transmitting the MPD is included. The destination_IP_address field may indicate an IP address of an FLUTE session for transmitting the MPD. The destination_port_number field may indicate a port number of the FLUTE session for transmitting the MPD. The dataPipe_id field may indicate an identifier of a data transmission channel of a physical layer. The flute_tsi field may identify an identifier of the FLUTE session for transmitting the MPD. The broadcast receiving apparatus 100 may extract the MPD, the MPD information table, or the MPD link information table using the dataPipe_id field, the destination_IP_address field, the destination_port_number, and the flute_tsi field. In detail, the broadcast receiving apparatus 100 may identify the data transmission channel of the physical layer according to the value of the dataPipe_id field and extract the MPD, the MPD information table, and the MPD link information table using the flute_tsi field, the destination_IP_address field, and the destination_port_number.

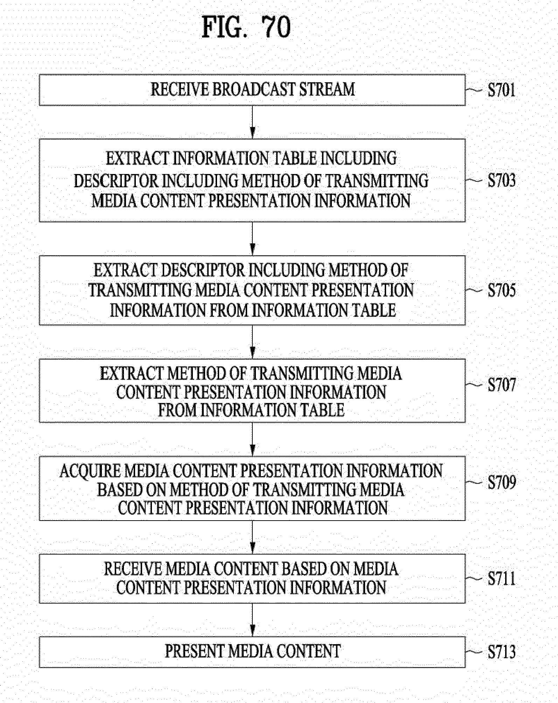

FIG. 70 is a flowchart of an operation for receiving media content presentation information by a broadcast receiving apparatus when a method of transmitting media content presentation information is transmitted in the broadcast information signaling information table.

The broadcast receiving apparatus 100 may receive a broadcast stream through the broadcast receiver 110 (S701).

The broadcast receiving apparatus 100 may extract the information table including the descriptor including the method of transmitting the media content presentation information through the controller 150 (S703). As described above, in this case, the information table may be any one of a program specific information (PSI) table defined in the ISO/IEC 13818-1 standard, a system information (SI) table defined in the ETSI EN 300 468 standard, and a program and system information protocol (PSIP) table defined in the ATSC standard. In particular, the information table may be an information table for signaling information on broadcast content. The information on the broadcast content may be, in detail, information on a broadcast service, information on an elementary stream, and information on an event. In detail, the information table may be any one of a terrestrial virtual channel table (TVCT) and an event information table (EIT) among tables defined in A/65 that is one of the ATSC standards, a service map table (SMT) among tables defined in the A/153, a service description table (SDT) and an event information table (EIT) defined in the in the ETSI EN 300 468 standard, and a program map table (PMT) defined in the ISO/IEC 13818-1 standard.

The broadcast receiving apparatus 100 may extract a descriptor including a method of transmitting media content presentation information from an information table through the controller 150 (S705).

The broadcast receiving apparatus 100 may extract a method of transmitting the media content presentation information from the information table through the controller 150 (S707). The descriptor may include transport_mode element indicating a detailed method of transmitting the media content presentation information or the media content presentation information table. The descriptor may include a bootstrap_data element including detailed transmitting information according to a method of transmitting the media content presentation information or the media content presentation information table. In this case, the broadcast receiving apparatus 100 may identify the method of transmitting the media content presentation information or the media content presentation information table based on the transport_mode element and extract transmission information of the media content presentation information or the media content presentation information table based on the bootstrap_data element. In this case, the method of transmitting the media content presentation information may be any one of the case in which the descriptor directly includes media content presentation information, the case in which the descriptor directly includes media content presentation information, the case in which the media content presentation information or the media content presentation information table is capable of being downloaded through a link included in the descriptor, the case in which a packet or another packet including the descriptor includes the media content presentation information or the media content presentation information link, the case in which a separate broadcast stream includes the media content presentation information or the media content presentation information link, the case in which the bootstrap_data element includes an identifier of a broadcast stream and an identifier of a packet including the media content presentation information, the case in which the IP datagram includes the media content presentation information or the media content presentation information table, and the case in which the media content presentation information is transmitted through a session-based transport protocol, as described above.

The broadcast receiving apparatus 100 may acquire media content presentation information based on the method of transmitting the media content presentation information or the media content presentation information table through the controller 150 (S709). In this case, the broadcast receiving apparatus 100 may acquire the media content presentation information table through the controller 150. The broadcast receiving apparatus 100 may extract media content presentation information from the media content presentation information table through the controller 150.

The broadcast receiving apparatus 100 may receive media content based on the media content presentation information through the IP transceiver 130 (S711).

The broadcast receiving apparatus 100 may present media content through the controller 150 (S713). In detail, the broadcast receiving apparatus 100 may present media content based on the media content presentation information through the controller 150. In this case, when the broadcast content is transmitted through an IP network as well as a broadcast network, the media content may be presented based on whether media content is presented based on whether transmission of a broadcast stream is stable, which will be described in detail with reference to FIG. 47.

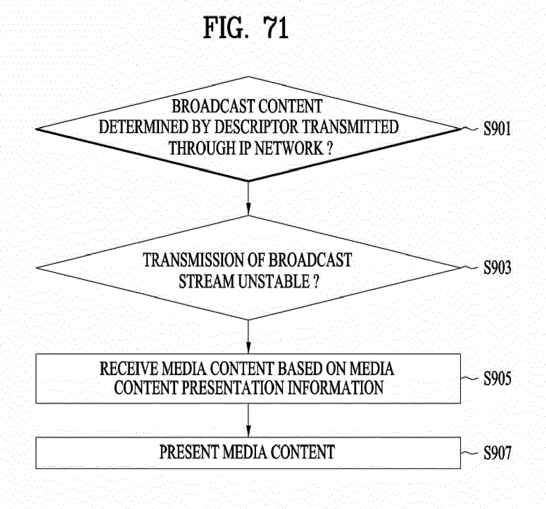

FIG. 71 is a flowchart for explanation of a method of presenting media content by a broadcast receiving apparatus based on whether transmission of a broadcast stream is stable when broadcast content is transmitted through an IP network as well as a broadcast network.

The broadcast receiving apparatus 100 may determine whether the broadcast content determined by the descriptor is transmitted through an IP network as well as a broadcast network through the controller 150 (S901). In detail, the broadcast receiving apparatus 100 may determine whether a value of the simulcast_flag element included in the descriptor is 1 through the controller 150.

When the broadcast content determined by the descriptor is transmitted through an IP network, the broadcast receiving apparatus 100 may determine whether transmission of a broadcast stream is unstable through the controller 150 (S903). In detail, the broadcast receiving apparatus 100 may determine whether a signal of the broadcast stream transmitted through the broadcast network is weaker than a predetermined reference through the controller 150. In another detailed embodiment, the broadcast receiving apparatus 100 may determine whether presentation of the broadcast content is stopped through the controller 150.

When transmission of the broadcast stream is unstable, the broadcast receiving apparatus 100 may receive media content based on the media content presentation information through the IP transceiver 130 (S905).

The broadcast receiving apparatus 100 may present media content through the controller 150 (S907). In detail, the broadcast receiving apparatus 100 may present media content based on the media content presentation information through the controller 150.

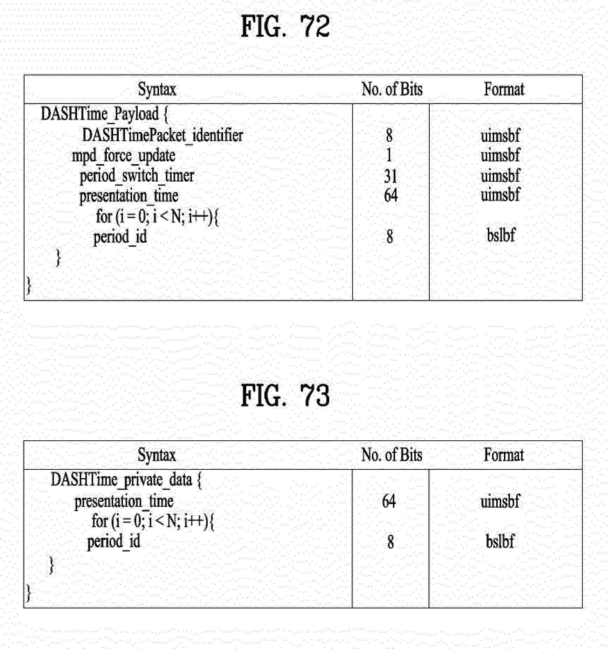

FIG. 72 illustrates the syntax of a broadcast stream packet including synchronization information of media content transmitted through an IP network according to the MPEG-DASH standard.

In the embodiment of FIG. 72, media content may be transmitted according to the MPEG-DASH standard. Accordingly, the synchronization information packet will be referred to as a DASHTime packet.

The DASHTime packet may include a DASHTimePacket_identifier field, an mpd_force_update field, a period_switch_timer field, a presentation_time field, and a period_id field.

The DASHTimePacket_identifier field may indicate an identifier for identifying a DASHTime packet.

The mpd_force_update field may indicate that the MPD needs to be updated prior to presentation time synchronization of the synchronization information packet.

The period_switch_timer field may indicate the remaining time to start time of a period element of the MPD as a synchronization target from a broadcast stream reference time of the DASHTime packet. When a value of the switch_timer field is '0', this may indicate that a period identified by the period_idfield is currently in an active state and media content needs to be immediately synchronized. When a value of the switch_timer field is not '0', the value may indicate that a period identified by the period_idfield is not currently in an active state.

The presentation_time field may indicate presentation time of media content itself transmitted through an IP network to be synchronized with the broadcast content. In this case, synchronized presentation time of the broadcast content received prior to reception of a new DASHTime packet may be acquired using a value of the presentation_time field, which uses the following equation below.

$$MPT = (PT - PT0)/RC + (presentation\_time - TimeOffset)/SegmentBase.timescale$$

In this case, the MPT indicates synchronized presentation time of broadcast content received prior to reception of a new DASHTime packet, PT0 indicates a broadcast stream reference time of the synchronization information packet, PT indicates broadcast stream reference time of broadcast content received prior to reception of a new DASHTime packet, RC indicates a reference clock of a broadcast stream, the presentation_time indicates presentation time of media content itself as a value of the presentation_time field, the TimeOffset indicates start time of media content presentation time of a media content presentation period as a synchronization target of the DASHTime packet, and the SegmentBase.timescale may indicate a value of a timescale element of an MPD.

The period_id field may identify a period element of the MPD and include an ID of a period element of the MPD and URL of the MPD. The broadcast receiving apparatus 100 may identify media content as a synchronization target and a period element as a presentation period of the media content through the period_id.

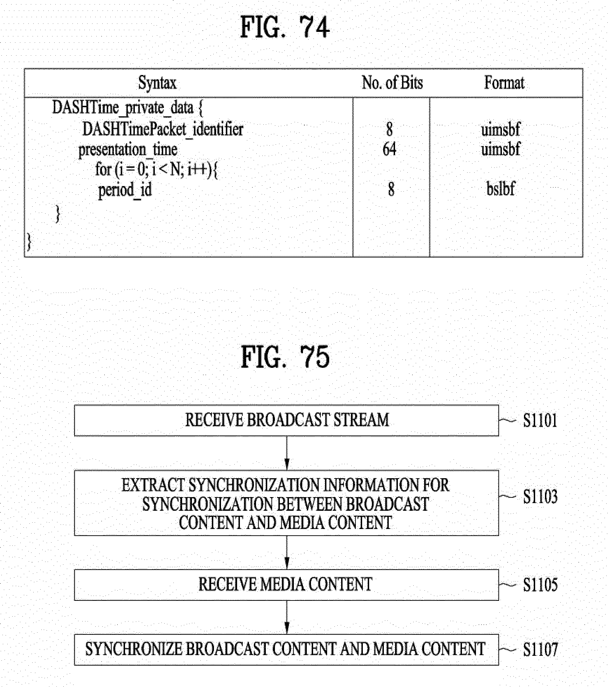

In an embodiment of FIG. 72, when synchronization information is transmitted through a separate synchronization information packet, there is a problem in that media content and broadcast content are synchronized only when the broadcast receiving apparatus 100 receives a separate packet. Accordingly, in order to overcome the problem, a header of a packet including broadcast content such as video and audio may include broadcast content reference time for synchronization between elementary streams, in general. For example, a header of a packet of a broadcast stream according to the MPEG-2 TS standard may include PTS. Accordingly, when synchronization information is transmitted in a header of a packet including broadcast content such as video and audio, the broadcast receiving apparatus 100 may effectively perform synchronization between media content and broadcast content, which will be described below in detail with reference to FIGs. 73 and 74.

A header of a packet including broadcast content such as video and audio may include a presentation_time element indicating presentation time of media content itself to be synchronized with the broadcast content. In addition, the header may also include a period_id element indicating an identifier of a presentation period of media content as a synchronization target. In addition, the header may also include an id element indicating information for synchronization between media content and broadcast content.

FIG. 73 illustrates the syntax of synchronization information included in a header of a packet including broadcast content such as video and audio according to an embodiment of the present invention.

FIG. 74 illustrates the syntax of synchronization information included in a header of a packet including broadcast content such as video and audio according to another embodiment of the present invention.

In the embodiment of FIGs. 73 and 74, a header of a packet including broadcast content such as video and audio may include information for synchronization with media content transmitted according to the MPEG-DASH standard. In this case, information for synchronization will be referred to as DASHTime_private_data. The DASHTime_private_data may include a presentation_time field and a period_id field. The presentation_time field may indicate presentation time of media content synchronized with the broadcast content. The period_id field may identify a period element of the MPD and include an id of the period element of the MPD and URL of the MPD. In the embodiment of FIG. 50, the DASHTime_private_data may further include an id element indicating that the DASHTime_private_data includes information for synchronization between media content and broadcast content.

FIG. 75 is a flowchart illustrating an operation of synchronization between broadcast content and media content by a broadcast receiving apparatus according to an embodiment of the present invention.

The broadcast receiving apparatus 100 may receive a broadcast stream through the broadcast receiver 110 (S1101).

The broadcast receiving apparatus 100 may extract synchronization information for synchronization between broadcast content and media content transmitted through an IP network through the controller 150 (S1103). In a detailed embodiment, the broadcast receiving apparatus 100 may extract synchronization information from a synchronization information packet through the controller 150. In another detailed embodiment, the broadcast receiving apparatus 100 may extract synchronization information from a header of a packet including broadcast content such as video and audio through the controller 150.

The broadcast receiving apparatus 100 may receive media content through the IP transceiver 130 (S1105).

The broadcast receiving apparatus 100 may synchronize broadcast content and media content through the controller 150 (S1107).

Upon receiving media content as well as broadcast content through an IP network, the broadcast receiving apparatus 100 needs to access broadcast content based on media content presentation information in order to enhance efficiency association between broadcast content and media content.

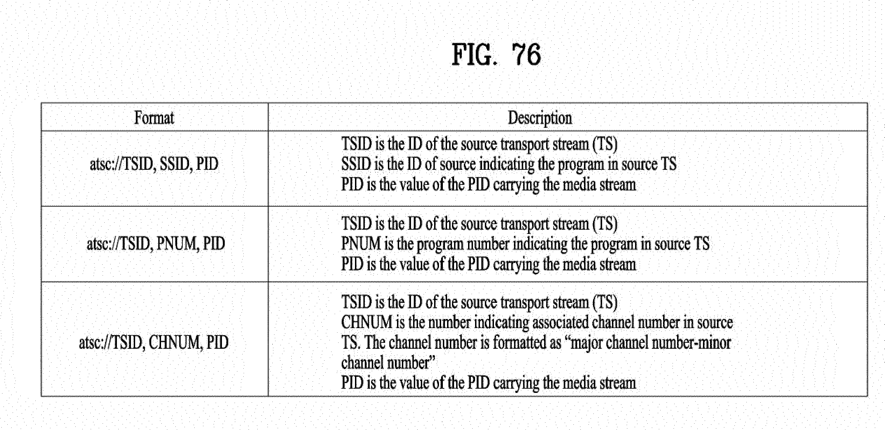

A method of transmitting media content presentation information including information on broadcast content will be described below with reference to FIGs. 76 to 78.

The media content presentation information may include information for identifying broadcast content such that the broadcast receiving apparatus 100 accesses broadcast content based on the media content presentation information. In detail, the media content presentation information may include an identifier for identifying a broadcast stream including the broadcast content. For example, when the broadcast content is transmitted according to the MPEG-2 TS standard, the media content presentation information may include a TSID. The media content presentation information may include an identifier for identifying a broadcast service including broadcast content. For example, when broadcast content is transmitted according to the MPEG-2 TS standard, the media content presentation information may include a program number. When the broadcast content is transmitted according to the ATSC standard, the media content presentation information may include a channel number of a source id and a virtual channel. When the broadcast content is transmitted according to the DVB standard, the media content presentation information may include a service id. In addition, the media content presentation information may include an identifier for identifying a packet including the broadcast content. For example, when the broadcast content is transmitted according to the MPEG-2 TS standard, the media content presentation information may include a PID.

In a detailed embodiment, when the media content presentation information includes one identifier formed by combining an identifier for identifying a broadcast stream including broadcast content, an identifier for identifying a broadcast service including broadcast content, and an identifier for identifying a packet including broadcast content.

FIG. 76 illustrates the format of information for identifying broadcast content included in media content presentation information when broadcast content is transmitted according to the ATSC standard.

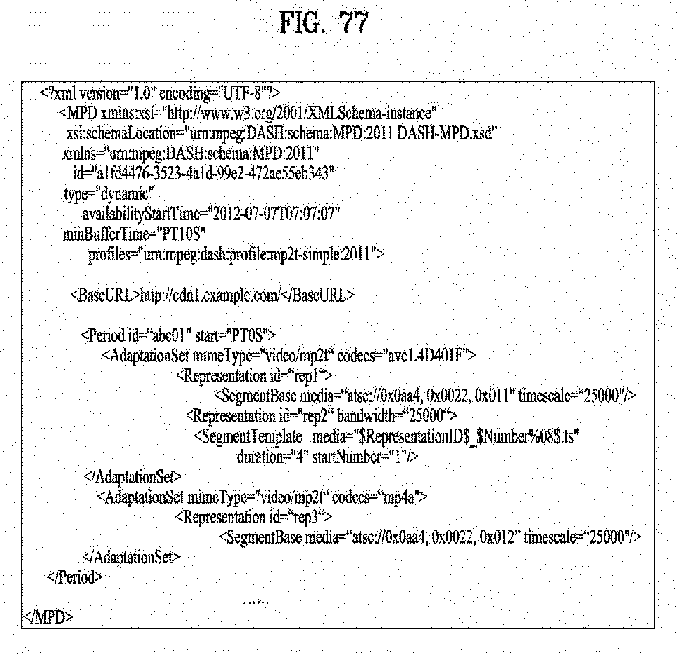

FIG. 77 illustrates an example of MPD of MPEG-DASH including information for identifying broadcast content transmitted according to the ATSC standard.

In the embodiment of FIGs. 76 to 77, information for identifying broadcast content may be a combination of a TSID for identifying a transport stream, an SSID for identifying a source of an elementary stream, and a PID for identifying a packet.

Information for identifying broadcast content may be combination of a TSID for identifying a transport stream, a PNUM for identifying a program stream, and a PID for identifying a packet.

In addition, information for identifying broadcast content may be a combination of a TSID for identifying a transport stream, a CHNUM for identifying a virtual channel, and a PID for identifying a packet. In this case, the CHNUM for identifying a virtual channel may have a form obtained by connecting a major channel number and a minor channel number with "-".

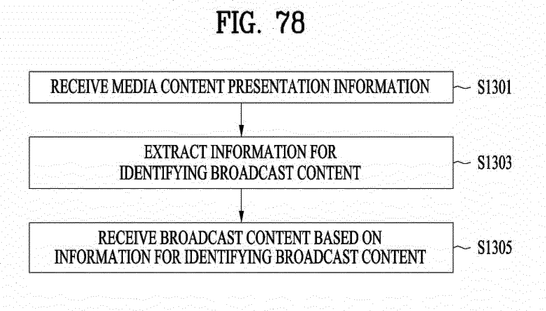

FIG. 78 is a flowchart illustrating an operation for receiving broadcast content by a broadcast receiving apparatus based on media content presentation information.

The broadcast receiving apparatus 100 may receive media content presentation information through the IP transceiver 130 (S1303).

The broadcast receiving apparatus 100 may extract information for identifying broadcast content through the controller 150 (S1303).

The broadcast receiving apparatus 100 may receive broadcast content based on information for identifying broadcast content through the broadcast receiver 110 and the controller 150 (S1305). In detail, the broadcast receiving apparatus 100 may receive a broadcast stream through the broadcast receiver 110. In this case, the broadcast receiving apparatus 100 may receive a broadcast stream based on the identifier of a broadcast stream included in information for identifying broadcast content. The broadcast receiving apparatus 100 may extract broadcast content based on information for identifying broadcast content from the broadcast stream. In this case, the broadcast receiving apparatus 100 may extract broadcast content based on an identifier of a broadcast service including information for identifying broadcast content from the broadcast stream.

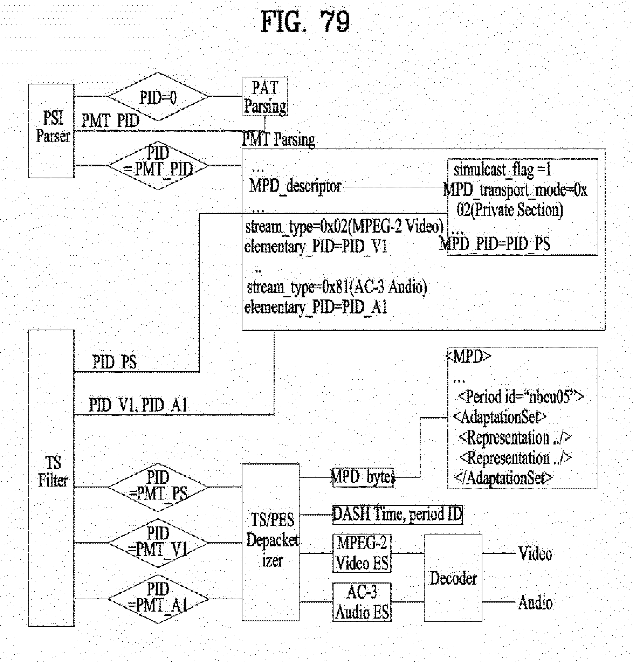

With reference to FIGs. 79 to 81, a method of receiving media content presentation information through a broadcast network by a broadcast receiving apparatus will be described in detail with regard to the aforementioned embodiments. In addition, synchronization between broadcast content and media content by a broadcast receiving apparatus will be described in detail.

FIG. 79 is a block diagram illustrating reception of MPD of MPEG-DASH through a broadcast network for transmitting a broadcast stream by a broadcast receiving apparatus according to the MPEG-2 TS standard.

The controller 150 of the broadcast receiving apparatus 100 according to the embodiment of FIG. 79 may include a PSI parser, a TS filter, a TS/PES depacketizer, and a decoder.

The TS filter may extract a packet with a specific PID from a broadcast stream.

The PSI parser may parse a PSI table such as a program association table (PAT) and a program map table (PMT) to extract signaling information. In particular, in a detailed embodiment, the PSI parser may extract MPD_descriptor included in the PMT.

The TS/PES depacketizer may extract payload data from the TS/PES packet. In a detailed embodiment, when the MPD is transmitted in a separate information table in a broadcast stream, the TS/PES depacketizer may extract MPD from the separate information table based on the MPD_descriptor. In detail, the TS/PES depacketizer may extract an MPD from the information table included in a packet corresponding to a PID included in the MPD_descriptor. In addition, the TS/PES depacketizer may extract a video elementary stream and an audio elementary stream from the TS/PES packet.

The decoder may decode video and audio.

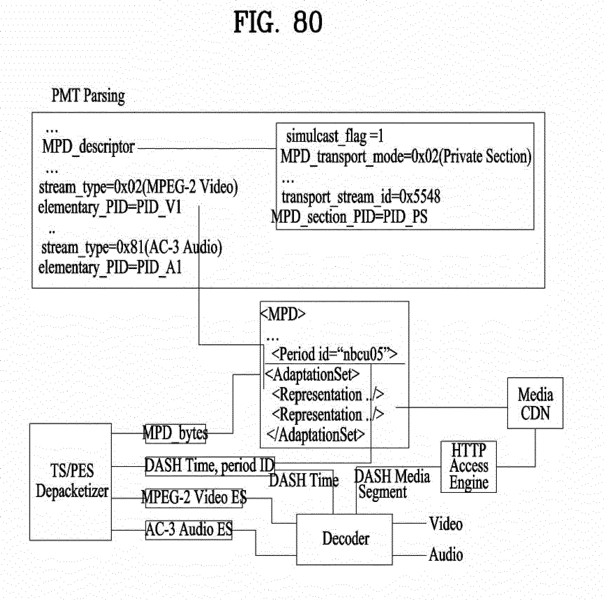

FIG. 80 is a block diagram illustrating synchronization between broadcast content of a broadcast stream transmitted according to the MPEG-2 TS standard and media content transmitted through a communication network by a broadcast receiving apparatus.

The controller 150 of the broadcast receiving apparatus 100 according to the embodiment of FIG. 80 may include a TS/PES depacketizer and a decoder.

The TS/PES depacketizer may extract payload data from the TS/PES packet. In a detailed embodiment, when the MPD is transmitted in a separate information table in a broadcast stream, the MPD may be extracted from a separate information table based on the MPD_descriptor. In detail, the MPD may be extracted from an information table included in the packet corresponding to the PID included in the MPD_descriptor. The TS/PES depacketizer may extract synchronization information for synchronization between media content and broadcast content from the TS/PES packet. In this case, the synchronization information may include presentation time of media content, an identifier for identifying a period element of the MPD, and an MPD URL. In addition, the TS/PES depacketizer may extract a video elementary stream and an audio elementary stream from the TS/PES packet.

The IP transceiver 130 may receive media content from a media CDN server based on the MPD.

The decoder may synchronize and decode the received media content based on the synchronization information.

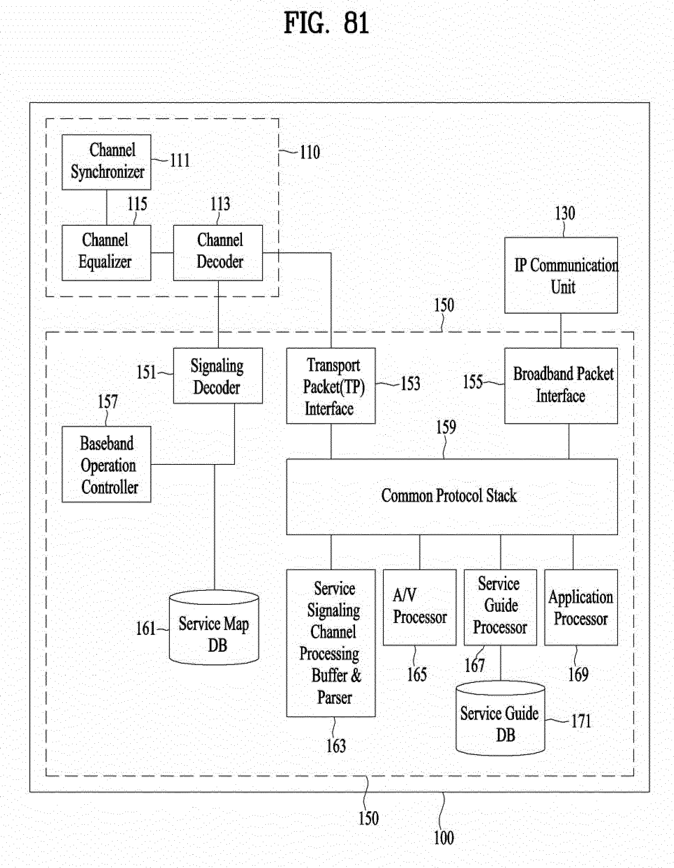

FIG. 81 illustrates a structure of a broadcast receiving apparatus according to an embodiment of the present invention.

In the embodiment of FIG. 81, the broadcast receiving apparatus 100 may include the broadcast receiver 110, the IP transceiver 130, and the controller 150.

The broadcast receiver 110 may include a channel synchronizer 111, a channel equalizer 113, and a channel decoder 115.

The channel synchronizer 111 may synchronize a symbol frequency and timing so as to decode a broadcast signal in a baseband for receiving the broadcast signal.

The channel equalizer 113 may compensate for distortion of the synchronized broadcast signal. In detail, the channel equalizer 113 may compensate for distortion of the synchronized broadcast signal due to multipath interference, Doppler effect, and so on.

The channel decoder 115 may decode the broadcast signal, distortion of which is compensated for. In detail, the channel decoder 115 may extract a transport frame from the broadcast signal, distortion of which is compensated for. In this case, the channel decoder 115 may perform forward error correction (FEC).

The IP transceiver 130 may receive and transmit data through the Internet.

The controller 150 may include a signaling decoder 151, a transport packet interface 153, a broadband packet interface 155, a baseband operation controller 157, a common protocol stack 159, a service map database (DB) 161, a service signaling channel processing buffer and parser 163, an A/V processor 165, a broadcast service guide processor 167, an application processor 169, and a service guide DB 171.

The signaling decoder 151 may decode signaling information of the broadcast signal.

The transport packet interface 153 may extract a transport packet from the broadcast signal. In this case, the transport packet interface 153 may extract data such as signaling information or an IP datagram from the extracted transport packet.

The broadband packet interface 155 may extract the IP packet from the received data through the Internet. In this case, the broadband packet interface 155 may extract the signaling data or the IP datagram from the IP packet.

The baseband operation controller 157 may control an operation associated with reception of received information of broadcast information from a baseband.

The common protocol stack 159 may extract audio or video from the transport packet.

The A/V processor 165 may process audio or video.

The service signaling channel processing buffer and parser 163 may parse and buffer signaling information for signaling a broadcast service. In detail, the service signaling channel processing buffer and parser 163 may parse and buffer the signaling information for signaling the broadcast service from the IP datagram.

The service map DB 165 may store a broadcast service list including information on broadcast services.

The broadcast service guide processor 167 may process terrestrial broadcast service guide data for guiding a program of a terrestrial broadcast service.

The application processor 169 may extract and process application related information from the broadcast signal.

The service guide DB 171 may store program information of a broadcast service.

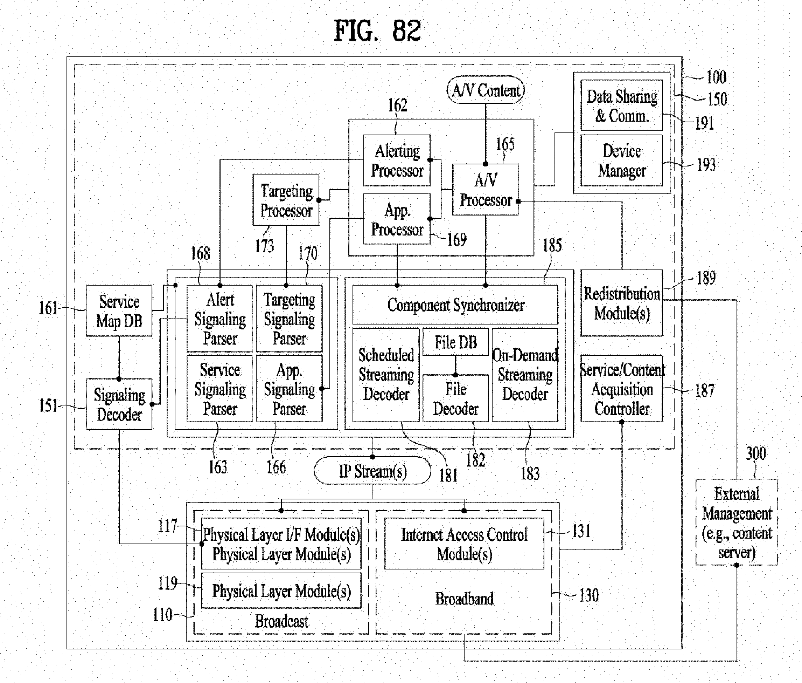

Thus far, a schematic structure and operation of the broadcast receiving apparatus 100 have been described. However, the above description has been given in terms of a typical operation and transmission protocol of the broadcast receiving apparatus 100. However, in order to receive a hybrid broadcast service, the broadcast receiving apparatus 100 needs to process data of various transmission protocols. With reference to FIGs. 82 to 87, a detailed structure and operation of the broadcast receiving apparatus 100 for receiving a hybrid broadcast service will be described below.

FIG. 82 illustrates a structure of a broadcast receiving apparatus according to another embodiment of the present invention.

In the embodiment of FIG. 82, the broadcast receiving apparatus 100 may include the broadcast receiver 110, the IP transceiver 130, and the controller 150.

The broadcast receiver 110 may include one or more processors, one or more circuits, and one or more hardware modules, for performing a plurality of functions performed by the broadcast receiver 110. In detail, the broadcast receiver 110 may be a system on chip (SOC) in which a plurality of semiconductor components are stacked as one structure. In this case, the SOC may be a semiconductor formed by integrating various multimedia components such as graphics, audio, video, and MODEM and a semiconductor such as a processor and a DRAM. The broadcast receiver 110 may include a physical layer module 119 and a physical layer IP frame module 117. The physical layer module 119 may receive and process a broadcast related signal through a broadcast channel of a broadcast network. The physical layer IP frame module 117 may convert a data packet such as an IP datagram acquired from the physical layer module 119 into a specific frame. For example, the physical layer module 119 may convert the IP datagram and so on into an RS Frame, a GSE, or the like.

The IP transceiver 130 may include one or more processors, one or more circuits, and one or more hardware modules, for performing a plurality of functions performed by the IP transceiver 130. In detail, the IP transceiver 130 may be a system on chip (SOC) in which plural semiconductor components are stacked as one structure. In this case, the SOC may be a semiconductor formed by integrating various multimedia components such as graphics, audio, video, and MODEM and a semiconductor such as a processor and a DRAM. The IP transceiver 130 may include an Internet access control module 131. The Internet access control module 131 may control an operation of the broadcast receiving apparatus 100 for acquisition of any one of a service, content, and signaling data through a communication network (a broadband network).

The controller 150 may include one or more processors, one or more circuits, and one or more hardware modules, for performing a plurality of functions performed by the controller 150. In detail, the controller 150 may be a system on chip (SOC) in which a plurality of semiconductor components are stacked as one structure. In this case, the SOC SOC may be a semiconductor formed by integrating various multimedia components such as graphics, audio, video, and MODEM and a semiconductor such as a processor and a DRAM. The controller 150 may include at least one of the signaling decoder 151, the service map DB 161, a service signaling channel parser 163, an application signaling parser 166, an alert signaling parser 168, a targeting signaling parser 170, a targeting processor 173, an A/V processor 165, an alert processor 162, the application processor 169, a scheduled streaming decoder 181, a file decoder 182, an on-demand streaming decoder 183, a file DB 184, a component synchronizer 185, a service/content acquisition controller 187, a redistribution module 189, a device manager 193, and a data sharer 191.

The service/content acquisition controller 187 may control an operation of a receiver for acquisition of a service, content, and signaling data related to the service or content, acquired through a broadcast network or a communication network.

The signaling decoder 151 may decode the signaling information.

The service signaling channel parser 163 may parse the service signaling information.

The application signaling parser 166 may extract and parse signaling information related to a service. In this case, the signaling information related to the service may be signaling information related to service scan. In addition, the signaling information related to a service may be signaling information related to content provided through a service.

The alert signaling parser 168 may extract and parse signaling information related to alerts.

The targeting signaling parser 170 may extract and parse information for signaling targeting information or information for personalization of a service or content.

The targeting processor 173 may process information for personalization of a service or content.

The alert processor 162 may process signaling information related to alerts.

The application processor 169 may control execution of application related information and an application. In detail, the application processor 169 may process a state of a downloaded application and a display parameter.

The A/V processor 165 may process a rendering related operation of audio/video based on decoded audio or video, application data, and so on.

The scheduled streaming decoder 181 may decode scheduled streaming that is content that is streamed according to a schedule predetermined by a content provider such as a broadcaster.

The file decoder 182 may decode a downloaded file. In particular, the file decoder 182 may decode a file downloaded through a communication network.

The on-demand streaming decoder 183 may decode on-demand content provided on-demand.

The file DB 184 may store a file. In detail, the file DB 184 may store a file downloaded through a communication network.

The component synchronizer 185 may synchronize content or a service. In detail, the component synchronizer 185 may synchronize content decoded by at least one of the scheduled streaming decoder 181, the file decoder 182, and the on-demand streaming decoder 183.

The service/content acquisition controller 187 may control an operation of a receiver for acquisition of at least one of a service, content, and signaling information related to the service or content.

When the redistribution module 189 does not receive a service or content through a broadcast network, the redistribution module 189 may perform an operation for supporting acquisition of at least one of a service, content, service related information, and content related information. In detail, at least one of a service, content, service related information, and content related information may be requested to an external management device 300. In this case, the external management device 300 may be the content server 50.

The device manager 193 may manage an associated external device. In detail, the device manager 193 may perform at least one of addition, deletion, and update of an external device. In addition, the external device may be connected to the broadcast receiving apparatus 100 and may exchange data with the broadcast receiving apparatus 100.

The data sharer 191 may perform a data transmission operation between the broadcast receiving apparatus 100 and the external device and process exchange related information. In detail, the data sharer 191 may transmit A/V data or signaling information to the external device. The data sharer 191 may receive the A/V data or the signaling information to the external device.

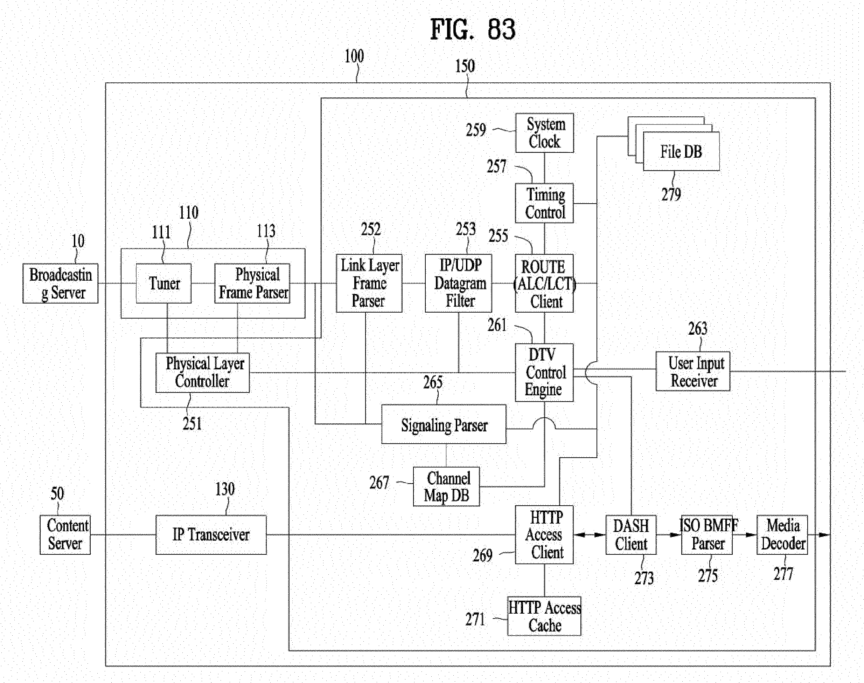

FIG. 83 illustrates a structure of a broadcast receiving apparatus according to another embodiment of the present invention.

In the embodiment of FIG. 83, the broadcast receiving apparatus 100 may include the broadcast receiver 110, the IP transceiver 130, and the controller 150.

The broadcast receiver 110 may include at least one of a tuner 111 and a physical frame parser 113.

The tuner 111 may receive a broadcast signal transmitted through a broadcast network. The tuner 111 may convert the received broadcast signal into a physical frame form.

The physical frame parser 113 may extract a link layer frame from a physical frame of the received broadcast signal.

The IP transceiver 130 may receive and transmit IP data.

The controller 150 may include at least one of a physical layer controller 251, a link layer frame parser 252, an IP/UDP datagram filter 253, a ROUTE (AL/LCT) client 255, a timing control 257, a system clock 259, a DTV control engine 261, a user input receiver 263, a signaling parser 265, a channel map DB 267, an HTTP access client 269, an HTTP access cache 271, a DASH client 273, an ISO BMFF parser 275, a media decoder 277, and a file DB 279.

The physical layer controller 251 may control an operation of the broadcast receiver 110. In detail, the physical layer controller 251 may control transmission parameters of a broadcast signal received by the broadcast receiver 110 to selectively receive a broadcast signal. For example, the physical layer controller 251 may control a frequency of a broadcast signal received by the tuner 111. The physical layer controller 251 may control the physical frame parser 113 to extract a link layer frame from a broadcast signal.

The link layer frame parser 252 may extract data corresponding to a payload of a link layer frame from the link layer frame of a broadcast signal. In detail, the link layer frame parser 252 may extract link layer signaling from a link layer frame. The link layer signaling may signal a broadcast signal through a link layer. Thereby, the broadcast receiving apparatus 100 may acquire information on a broadcast service without extraction of an application layer. Accordingly, the broadcast receiving apparatus 100 may rapidly scan a broadcast service and convert the broadcast service. The link layer frame parser 252 may extract an IP/UDP datagram from the link layer frame.

The IP/UDP datagram filter 253 may extract specific IP/UDP datagram from the IP/UDP datagram. Data transmission through a broadcast network or multicast through a communication network is unidirectional communication and, thus, the broadcast receiving apparatus 100 may receive data items other than data required by the broadcast receiving apparatus 100. Accordingly, the broadcast receiving apparatus 100 may extract data required by the broadcast receiving apparatus 100 from a data stream. The IP/UDP datagram filter 253 may extract the IP/UDP datagram required by the broadcast receiving apparatus 100 from the IP/UDP datagram stream. In detail, the IP/UDP datagram filter 253 may extract an IP/UDP datagram corresponding to the determined IP address and UDP port number. In this case, the IP address may include any one of a source address and a destination address.

The ROUTE (AL/LCT) client 255 may process an application layer transport packet. In detail, the ROUTE (ALC/LCT) client 255 may process a real-time object delivery over unidirectional transport (ROUTE)-based ALC/LCT packet. The ROUTE protocol is an application layer protocol for transmitting data in real time using an ALC/LCT packet. The broadcast receiving apparatus 100 may extract at least one of broadcast service signaling information, NRT data, and media content from an ALC/LCT packet. In this case, the media content may have an MPEG-DASH form. In detail, the media content may be encapsulated in an ISO base media file format and transmitted according to an MPEG-DASH protocol. The broadcast receiving apparatus 100 may extract an MPEG-DASH segment from a ROUTE packet. The broadcast receiving apparatus 100 may extract an ISO BMFF file from the MPEG-DASH segment.

The timing control 257 may process a packet including system time information as a reference of media content presentation. The timing control 257 may control a system clock based on the system time information.

The system clock 259 may provide a reference clock as a reference of an operation of the broadcast receiving apparatus 100.

The DTV control engine 261 may function as an interface between components. In detail, the DTV control engine 261 may transmit a parameter for control of an operation of each component.

The user input receiver 263 may receive user input. In detail, the user input receiver 263 may receive at least one of a remote control input and a key input of a user.

The signaling parser 265 may transmit information on a broadcast service and parse broadcast service signaling information for signaling the broadcast service to extract information on the broadcast service. In detail, the signaling parser 265 may parse the broadcast service signaling information extracted from the application layer to extract information on the broadcast service. In another detailed embodiment, the signaling parser 265 may parse the broadcast service signaling information extracted from the link layer to extract information on the broadcast service.

The channel map DB 267 may store information on a channel map of the broadcast service. In detail, the signaling parser 265 may extract the information on the broadcast service and store information on a channel map in the channel map DB 267. The DTV control engine 261 may acquire information on a channel map of the broadcast service from a channel map DB. In this case, the information on the channel map may include at least one of a channel number indicating the broadcast service and a broadcast service name of the broadcast service.

The HTTP access client 269 may process HTTP data. In detail, the HTTP access client 269 may transmit a request to the content server 50 using HTTP and receive a response to the request from the content server 50.

The HTTP access cache 271 may cache the HTTP data to enhance processing speed of the HTTP data.

The DASH client 273 may process an MPEG-DASH segment. In detail, the DASH client 273 may process the MPEG-DASH segment received through a communication network. In detail, the DASH client 273 may process the MPEG-DASH segment extracted from the application layer of the broadcast signal received through the broadcast network.

The ISO BMFF parser 275 may process an ISO BMFF packet. In detail, the ISO BMFF parser 275 may extract media content from the ISO BMFF packet.

The media decoder 277 may decode media content. In detail, the media decoder 277 may decode the media content and present the media content.

The file DB 279 may store a file required for the broadcast service. In detail, the file DB 279 may store a file extracted from an application layer of the broadcast signal.

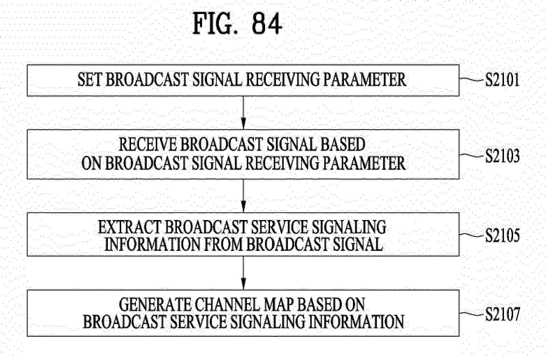

A detailed operation of the broadcast receiving apparatus 100 will be described with reference to FIGs. 84 to 86.

FIG. 84 is a flowchart illustrating an operation for scanning a broadcast service and generating a channel map by the broadcast receiving apparatus 100.

The controller 150 may set a broadcast signal receiving parameter. In detail, the controller 150 may set at least one of a frequency, a bandwidth, a symbol rate, and a physical layer pipe (PLP) identifier, for receiving a broadcast signal. In this case, the physical layer pipe may be a logical data transmission channel for identifying one radio frequency (RF) channel. One RF channel may include one or more physical layer pipes. The physical layer pipe may be referred to as a data pipe (DP). In a detailed embodiment, the controller 150 may set a broadcast signal receiving parameter based on a frequency table for storing a plurality of broadcast signal receiving parameters. For example, the broadcast receiving apparatus 100 may sequentially set broadcast signal receiving parameters stored in the frequency table and sequentially receive broadcast signals corresponding to the respective broadcast signal receiving parameters. In this case, the frequency table may be set according to regional standards or regional broadcast environments.

The broadcast receiver 110 may receive a broadcast signal based on the broadcast signal receiving parameter (S2103). In detail, the broadcast receiver 110 may receive a broadcast signal corresponding to the broadcast signal receiving parameter. The broadcast receiver 110 may demodulate the broadcast signal and extract a physical frame of the broadcast signal.

The controller 150 may extract broadcast service signaling information from the broadcast signal (S2105). In detail, the controller 150 may extract the broadcast service signaling information for signaling information on the broadcast service from the broadcast signal. The information on the broadcast service may include information for identifying the broadcast service. The information for identifying the broadcast service may include a channel number indicating a broadcast service. The information for identifying the broadcast service may include a broadcast service identifier for identifying the broadcast service. The information for identifying the broadcast service may include a channel number indicating the broadcast service. The information for identifying the broadcast service may include a broadcast service name indicating the broadcast service. The information on the broadcast service may include information for receiving the broadcast service. The information for receiving the broadcast service may include a broadcast signal receiving parameter required for setting of a broadcast receiver in order to receive the broadcast service. The information for receiving the broadcast service may include a broadcast stream identifier for identifying a broadcast stream transmitted by the broadcast service. The information for receiving the broadcast service may include an IP address and UDP port number for identifying the IP/UDP datagram transmitted by the broadcast service. The information for receiving the broadcast service may include a session identifier for identifying a session of the session-based transport protocol. The information for receiving the broadcast service may include a packet identifier for identifying a packet of a packet-based transmission protocol. In detail, the controller 150 may extract broadcast service signaling information of link layer signaling extracted from a link layer. In another detailed embodiment, the controller 150 may extract broadcast service signaling information from an application layer. As described above, upon receiving the broadcast service signaling information from the link layer, the controller 150 may reduce broadcast service scan time.

The controller 150 may generate a channel map for storing information on the broadcast service based on the broadcast service signaling information (S2107). In detail, the controller 150 may generate the channel map according to information on a broadcast service provided by the broadcast service signaling information. The channel map may include at least one of information for identifying each of the aforementioned broadcast services and information for receiving each of the broadcast services. The controller 150 may store the generated channel map in the channel map DB 267. The broadcast receiving apparatus 100 may receive the broadcast service based on the channel map, which will be described with reference to FIG. 61.

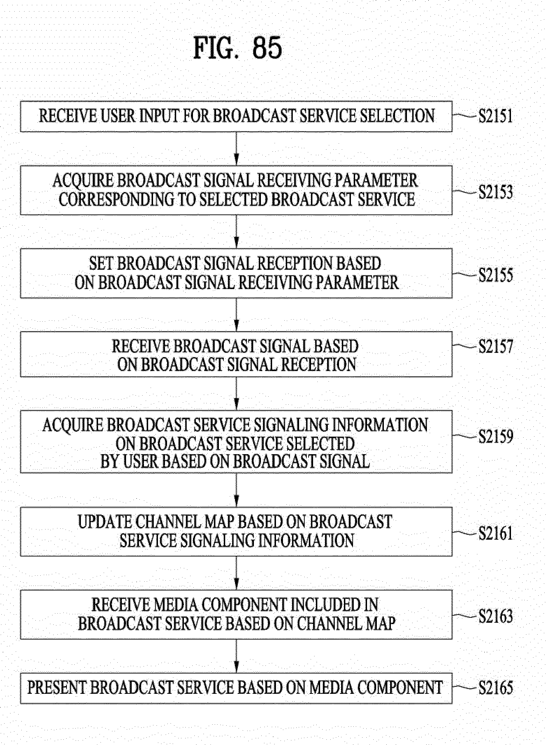

FIG. 85 is a flowchart illustrating an operation for receiving a broadcast signal by the broadcast receiving apparatus 100.

The controller 150 may receive a user input according to selection of the broadcast service (S2151). The controller 150 may receive a user input according to selection of the broadcast signal through the user input receiver 263. In detail, the controller 150 may receive an input for selecting any one broadcast service from a broadcast service list showing broadcast services by a user. The controller 150 may receive user input of a channel number through a remote controller.

The controller 150 may acquire a broadcast signal receiving parameter corresponding to the broadcast service selected by the user (S2153). In detail, the controller 150 may acquire a broadcast signal receiving parameter corresponding to the broadcast service selected by the user from the channel map. As described above, the broadcast signal receiving parameter may include at least one of a frequency, a bandwidth, a symbol rate, and a physical layer pipe identifier, for receiving a broadcast signal.

The controller 150 may set reception of the broadcast signal based on the broadcast signal receiving parameter. In detail, the controller 150 may set the broadcast receiver 110 according to the broadcast signal receiving parameter. For example, the controller 150 may set at least one of a frequency, a bandwidth, a symbol rate, and a physical layer pipe, for receiving the broadcast signal of the broadcast receiver 110. When a broadcast signal receiving parameter of a currently received broadcast signal is the same as an acquired broadcast signal receiving parameter, this operation may be omitted.

The broadcast receiver 110 may receive the broadcast signal based on the broadcast signal receiving setting (S2157). In detail, the broadcast receiver 110 may receive and demodulate the broadcast signal.

The controller 150 may acquire signaling information on the broadcast service selected by the user based on the broadcast signal (S2159). As described above, the controller 150 may acquire the broadcast service signaling information from the link layer. The controller 150 may acquire the broadcast service signaling information from the link layer. Although the channel map includes information on the broadcast service extracted from the broadcast service signaling information, the broadcast service signaling information is re-acquired. This is because information on the broadcast service is changeable after the channel map is generated. In addition, this is because only basic information for generating the channel map may be acquired and information on a component included in the broadcast service or information for broadcast service presentation may not be acquired during generation of the channel map.

The controller 150 may update the channel map based on the broadcast service signaling information. In detail, when the broadcast service signaling information is changed, the controller 150 may update the channel map. In a detailed embodiment, when previously acquired broadcast service signaling information and the broadcast service signaling information are different, the controller 150 may update the channel map. Upon comparing version information of the previously acquired broadcast service signaling information and version information of the broadcast service signaling information to determine that the broadcast service signaling information is changed, the controller 150 may update the channel map.

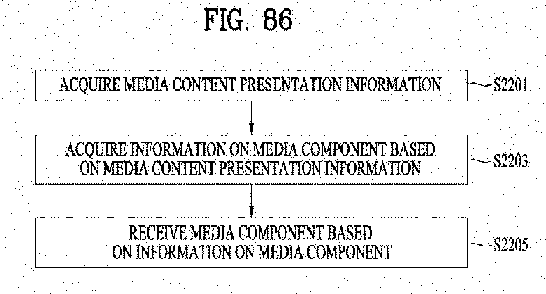

The controller 150 may receive a media component included in the broadcast service based on the channel map (S2163). The channel map may include information on reception of the media component. In detail, the channel map may include information for receiving the media component. The controller 150 may acquire information for receiving the media component from the channel map and receive the media component. For example, the controller 150 may acquire information for identifying an IP/UDP datagram for transmitting the media component from the channel map and information for identifying a session-based transport protocol packet for transmitting the media component and receive the media component. The information for identifying the IP/UDP datagram may include at least one of an IP address and a UDP port number. In this case, the IP address may include at least one of a source address and a destination address. The information for identifying the session-based transport protocol packet may include a session identifier for identifying a session. In detail, the session identifier may be TSI of the ALC/LCT session. In another detailed embodiment, the controller 150 may acquire information for identifying the IP/UDP datagram for transmitting the media component and information for identifying a packet-based transmission protocol packet for transmitting the media component from the channel map and receive the media component. The broadcast receiving apparatus 100 may receive the media component based on the media content presentation information, which will be described with reference to FIG. 86.

FIG. 86 is a flowchart illustrating an operation for acquiring a media component by a broadcast receiving apparatus based on media content presentation information.

The broadcast receiving apparatus 100 may acquire the media content presentation information (S2201). The broadcast receiving apparatus 100 may acquire the media content presentation information through a signaling message of the broadcast signal as described above.

The broadcast receiving apparatus 100 may acquire information on the media component based on the media content presentation information (S2203). The information on the media component may include information for receiving the aforementioned media component. The media content presentation information may include information on a broadcast service and the media component included in the broadcast service.

The broadcast receiving apparatus 100 may receive the media component based on the information on the media component (S2205). The broadcast receiving apparatus 100 may receive the media component through a broadcast network. The broadcast receiving apparatus 100 may receive the media component through a communication network. The broadcast receiving apparatus 100 may receive any one of a plurality of media components and receive another media component through a communication network. For example, the broadcast receiving apparatus 100 may receive a video component through a broadcast network and receive an audio component through a communication network.

Referring back to FIG. 85, an operation of the broadcast receiving apparatus 100 will be described below.

The controller 150 may present the broadcast service based on the media component (S2165).

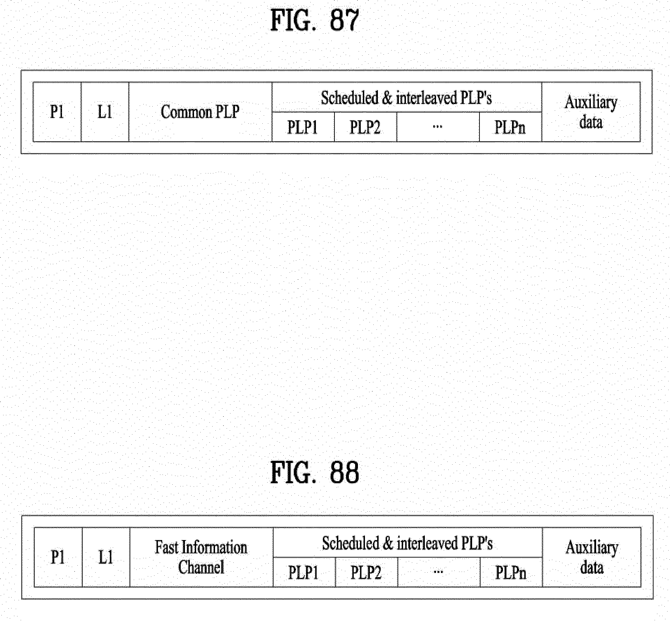

With reference to FIGs. 87 and 88, a transport frame used in hybrid broadcast will be described below.

FIG. 87 illustrates a broadcast transport frame according to an embodiment of the present invention.

In an embodiment of FIG. 87, the broadcast transport frame may include a PI part, an L1 part, a common PLP part, an interleaved PLP (scheduled & interleaved PLP's) part, and an auxiliary data part.

In the embodiment of FIG. 87, the broadcast transmitting apparatus may transmit information for transport signal detection through the PI part of the broadcast transport frame. In addition, the broadcast transmitting apparatus may transmit tuning information for tuning to the broadcast signal through the P1 part.

In the embodiment of FIG. 87, the broadcast transmitting apparatus may transmit configuration of the broadcast frame and characteristics of each PLP through the L1 part. In this case, the broadcast receiving apparatus 100 may decode the L1 part based on the PI to acquire configuration of the broadcast transport frame and characteristics of each PLP.

In the embodiment of FIG. 87, the broadcast transmitting apparatus may transmit information that is commonly applied between PLPs through the common PLP part. According to a detailed embodiment, the broadcast transport frame may not include the common PLP part.

In the embodiment of FIG. 87, the broadcast transmitting apparatus may transmit a plurality of components included in the broadcast service through the interleaved PLP part. In this case, the interleaved PLP part may include a plurality of PLPs.

In the embodiment of FIG. 87, the broadcast transmitting apparatus may signal a PLP through which a component included in each broadcast service is transmitted, through the L1 part or the common PLP part. However, the broadcast receiving apparatus 100 needs to decode a plurality of PLPs to scan a broadcast service.

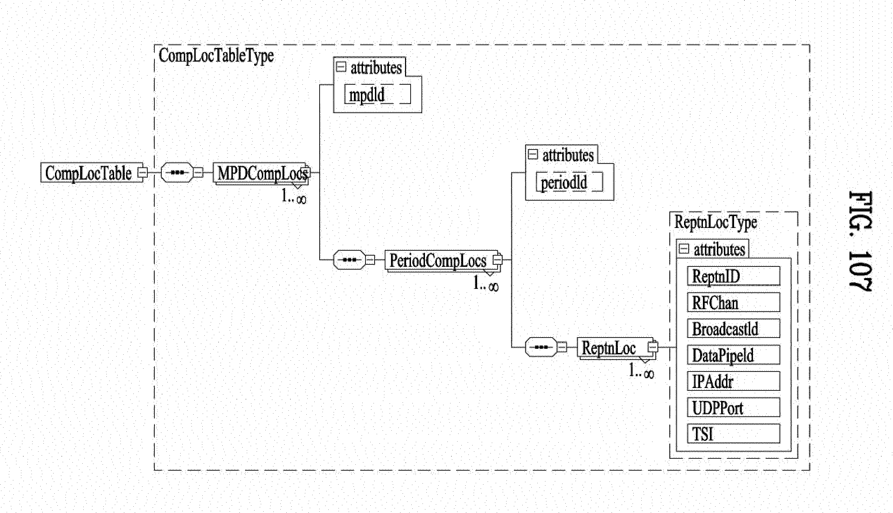

Unlike in the embodiment of FIG. 87, the broadcast transmitting apparatus may transmit a broadcast transport frame including a separate part including information on a broadcast service transmitted through the broadcast transport frame and a component included in the broadcast service. In this case, the broadcast receiving apparatus 100 may rapidly acquire information on a broadcast service and components included in the broadcast service through the separate part, which will be described with reference to FIG. 107.

FIG. 88 illustrates a broadcast transport frame according to another embodiment of the present invention.

In the embodiment of FIG. 88, the broadcast transport frame may include a PI part, an L1 part, a fast information channel (FIC) part, an interleaved PLP (scheduled & interleaved PLP's) part, and auxiliary data.

Other parts other than the FIC part are the same as in the embodiment illustrated in FIG. 87.

The broadcast transmitting apparatus may transmit fast information through the FIC part. The fast information may include configuration information of a broadcast stream transmitted through the transport frame, brief broadcast service information, and component information. The broadcast receiving apparatus 100 may scan the broadcast service based on the FIC part. In detail, the broadcast receiving apparatus 100 may extract information on the broadcast service from the FIC part. The fast information may be referred to as link layer signaling. This is because the broadcast receiving apparatus 100 parses only a link layer to acquire broadcast service information and component information without parsing the application layer.

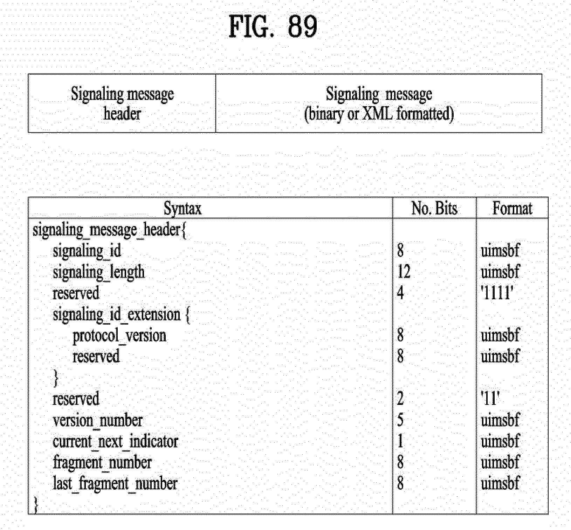

FIG. 89 illustrates configuration of a service signaling message according to an embodiment of the present invention. In detail, FIG. 89 illustrates the syntax of the service signaling message according to an embodiment of the present invention. The service signaling message according to an embodiment of the present invention may include a signaling message header and a signaling message. In this case, the signaling message may be represented in binary or in XML format. The service signaling message may be included in a payload of a transmission protocol packet.

The signaling message header according to the embodiment of FIG. 89 may include identifier information for identifying the signaling message. For example, the signaling message may have a session format. In this case, the identifier information of the signaling message may indicate an identifier (ID) of a signaling table section. A field indicating the identifier information of the signaling message may be singnaling_id. In a detailed embodiment, the signaling_id field may be 8 bits long.

A signaling message header according to the embodiment of FIG. 89 may include length information indicating a length of the signaling message header. A field indicating the length information of the signaling message may be signaling_length. In a detailed embodiment, the signaling_length field may be 12 bits long.

The signaling message header according to the embodiment of FIG. 89 may include identifier extension information for extension of an identifier of a signaling message. In this case, the identifier extension information may be information for identifying signaling together with the signaling identifier information. A field indicating the identifier extension information of the signaling message may be signaling_id extension.

In this case, the identifier extension information may include protocol version information of the signaling message. A field indicating the protocol version information of the signaling message may be protocol_version. In a detailed embodiment, the protocol_version field may be 8 bits long.

A signaling message header according to the embodiment of FIG. 89 may include version information of the signaling message. The version information of the signaling message may be changed when content included in the signaling message is changed. A field indicating the version information of the signaling message may be version_number. In a detailed embodiment, the version_number field may be 5 bits long.

A signaling message header according to the embodiment of FIG. 89 may include information indicating whether the signaling message is currently available. A field indicating whether the signaling message is available may be current_next_indicator. For example, when the current_next_indicator field is 1, the current_next_indicator field may indicate that the signaling message is available. As another example, when the current_next_indicator field is 0, the current_next_indicator field may indicate that the signaling message is not available and another subsequent signaling message including the same signaling identifier information, signaling identifier extension information, or fragment number information is available.

A signaling message header according to the embodiment of FIG. 89 may include fragment number information of a signaling message. One signaling message may be divided into a plurality of fragments and transmitted. Accordingly, information for identifying the plurality of divided fragments by a receiver may be fragment number information. A field indicating the fragment number information may be a fragment_number field. In a detailed embodiment, the fragment_number field may be 8 bits long.

A signaling message header according to the embodiment of FIG. 89 may include number information of a last fragment when one signaling message is divided into a plurality of fragments and transmitted. For example, when information on a last fragment number indicates 3, this may indicate that the signaling message is divided into three parts. In addition, this may indicate that a fragment including a fragment number indicating 3 includes last data of the signaling message. A field indicating number information of a last fragment may be last_fragment_number. In a detailed embodiment, the last_fragment_number field may be 8 bits long.

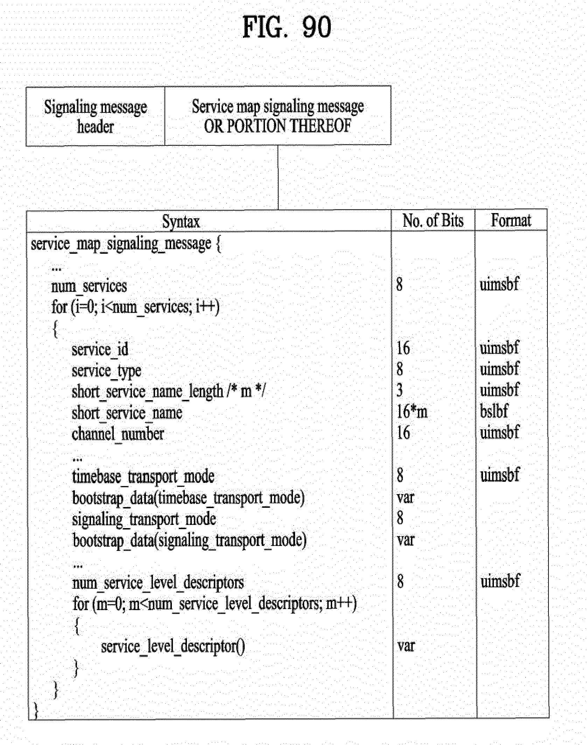

FIG. 90 illustrates a configuration of a broadcast service signaling message in a next-generation broadcast system according to an embodiment of the present invention.

The broadcast service signaling message according to an embodiment of the present invention may correspond to a broadcast service signaling method for receiving at least one of a broadcast service and content by the broadcast receiving apparatus 100 in a next-generation broadcast system.

The broadcast service signaling method according to the embodiment of FIG. 90 may be based on the signaling message configuration illustrated in FIG. 89. The broadcast service signaling message according to the embodiment of FIG. 90 may be transmitted through a service signaling channel. In this case, the service signaling channel may be one type of a physical layer pipe for directly transmitting service signaling information for broadcast service scan without passing through another layer. In a detailed embodiment, the service signaling channel may be referred to as at least one of a fast information channel (FIC) and low layer signaling (LLS). A broadcast service signaling message according to the embodiment of FIG. 90 may be one type of XML.

The service signaling message according to the embodiment of FIG. 90 may include number information of included services. In detail, one service signaling message may include a plurality of services and include information indicating the number of included services. The number information of services may be the num_services field. In a detailed embodiment, the num_services field may be 8 bits long.

The service signaling message according to the embodiment of FIG. 90 may include identifier information on a service. The identifier information may be a service_id field. In a detailed embodiment, the service_idfield may be 16 bits long.

The service signaling message according to the embodiment of FIG. 90 may include service type information. The service type information may be service_type field. In a detailed embodiment, when the service_type field has a value of 0x00, a service type indicated by the signaling message may be a scheduled audio service.

According to another embodiment, when the service_type field has a value of 0x01, a service type indicated by the signaling message may be a scheduled audio/video service. In this case, the scheduled audio/video service may be an audio/video service broadcast according to a predetermined schedule.

According to another embodiment, when the service_type field has a value of 0x02, a service type indicated by the signaling message may be an on-demand service. In this case, the on-demand service may be an audio/video service presented on-demand. The on-demand service may be a service opposite to the scheduled audio/video service.

According to another embodiment, when the service_type field has a value of 0x03, a service type indicated by the signaling message may be an app-based service. In this case, the app-based service may be a non real time (NRT) service but not a real time broadcast service and may be a service provided through an application. The app-based service may include at least one of a service associated with the real time broadcast service and a service that is not associated with the real time broadcast service. The broadcast receiving apparatus 100 may download an application and provide the app-based service.

According to another embodiment, when the service_type field has a value of 0x04, a service type indicated by the signaling message may be rights issuer service. In this case, the rights issuer service may be a service provided only to a user that is issued rights to receive a service.

According to another embodiment, when the service_type field has a value of 0x05, a service type indicated by the signaling message may be a service guide service. In this case, the service guide service may be a service for providing information on a provided service. For example, the information of the provided service may be a broadcast schedule.

The service signaling message according to the embodiment of FIG. 90 may include service name information. The service name information may be short_service_name field.

The service signaling message according to the embodiment of FIG. 90 may include length information of the short_service_name field. The length information of the short_service_name field may be contained in the short_service_name_length field.

The service signaling message according to the embodiment of FIG. 90 may include broadcast service channel number information associated with a signaled service. The associated broadcast service channel number information may be a channel_number field.

The service signaling message according to the embodiment of FIG. 90 may include data required to acquire a time base or a signaling message by a broadcast receiving apparatus according to each transmission mode to be described below. The data for acquisition of the time base or the signaling message may be a bootstrap() field.

The aforementioned transmission mode may be at least one of a time base transmission mode and a signaling transmission mode. The time base transmission mode may be a transmission mode of a time base including metadata about a timeline used in a broadcast service. The timeline may be a series of time information for media content. In detail, the timeline may be a series of reference times as a reference for media content presentation. Information on the time base transmission mode may correspond to a time base_transport_mode field.

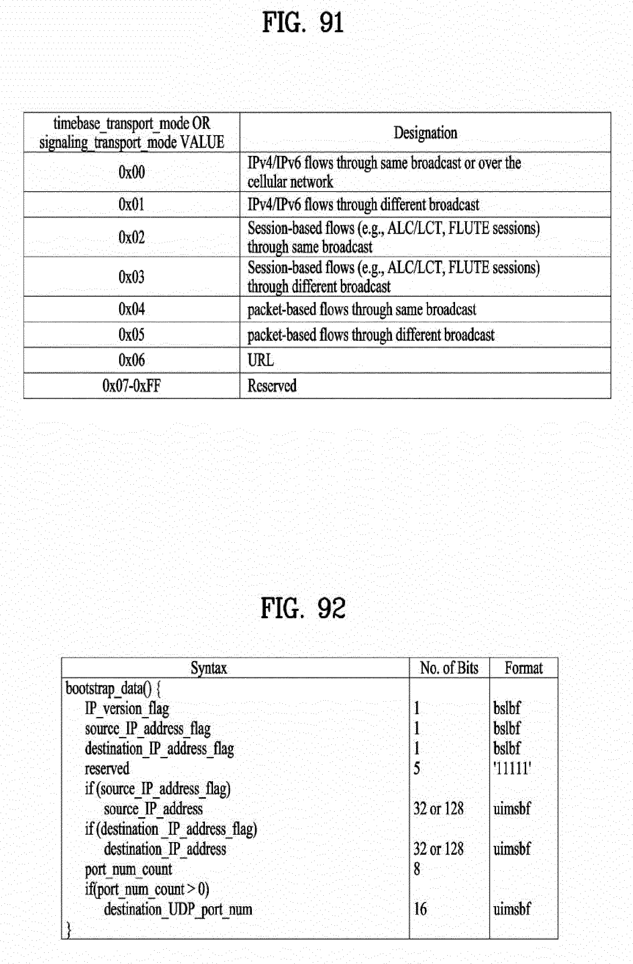

The signaling transmission mode may be a mode for transmitting a signaling message used in the broadcast service. Information on the signaling transmission mode may be contained in the signaling_transport_mode field. Hereinafter, with reference to FIG. 91, the meaning of a value of each field will be described in detail.

FIG. 91 shows the meanings of values of a time base_transport_mode field and signaling_transport_mode field in a service signaling message according to an embodiment of the present invention.

The time base transmission mode may include a mode for acquisition of a time base of the broadcast service through an IP datagram in the same broadcast stream by the broadcast receiving apparatus 100. According to the embodiment of FIG. 91, when the time base_transport_mode field has a value of 0x00, the time base_transport_mode field may indicate that a broadcast receiving apparatus is capable of acquiring a time base of the broadcast service through an IP datagram of the same broadcast stream.

The signaling transmission mode may include a mode in which the broadcast receiving apparatus 100 acquires a signaling message used in a broadcast service through the IP datagram in the same broadcast stream. According to another embodiment illustrated in FIG. 91, when the signaling_transport_mode field has a value of 0x00, the signaling_transport_mode field may indicate that the broadcast receiving apparatus is capable of acquiring a signaling message used in a broadcast service is capable of being acquired through IP datagram in the same broadcast stream. The same broadcast stream may refer to the same broadcast stream as a broadcast stream in which the broadcast receiving apparatus currently receives the service signaling message. The IP datagram may be one transmission unit for encapsulating components included in the broadcast service or content according to Internet protocol. In this case, a bootstrap() field for time base and the signaling message may comply with the syntax illustrated in FIG. 92. The syntax illustrated in FIG. 92 may be represented in XML.

FIG. 92 illustrates the syntax of a bootstrap() field when a time base_transport_mode field and a signaling_transport_mode field have a value of 0x00 according to an embodiment of the present invention.

In the embodiment of FIG. 92, bootstrap data may include information on an IP address format of IP datagram including a time base or a signaling message. The information on the IP address format may be an IP_version_flag field. The information on the IP address format may indicate that the IP address format of the IP datagram is IPv4. According to an embodiment of the present invention, when the information on the IP address format is 0, the information on the IP address format may indicate that the IP address format of the IP datagram is IPv4. The information on the IP address format may indicate that the IP address format of IP datagram is IPv6. According to another embodiment, when the information on the IP address format is 1, the information on the IP address format may indicate that the IP address format of the IP datagram is IPv6.

In the embodiment of FIG. 92, bootstrap data may include information indicating whether the IP datagram including a time base or a signaling message includes a source IP address. In this case, the source IP address may be a source address of the IP datagram. Information indicating whether the IP datagram includes a source IP address may be source_IP_address_flag field. According to an embodiment, when the source_IP_address_flag field is 1, this may indicate that the IP datagram includes the source IP address.

In the embodiment of FIG. 92, the bootstrap data may include information indicating whether an IP datagram including the time base or the signaling message includes a destination IP address. In this case, the destination IP address may be a destination address of the IP datagram. Information indicating whether the IP datagram includes the destination IP address may be destination_IP_address field. According to an embodiment, when the destination_IP_address field is 1, this may indicate that the IP datagram includes the destination IP address.

In the embodiment of FIG. 92, the bootstrap data may include source IP address information of the IP datagram including the time base or the signaling message. The source IP address information may be a source_IP_address field.

In the embodiment of FIG. 92, the bootstrap data may include destination IP address information of the IP datagram including the time base or the signaling message. The destination IP address information may be destination_IP_address field.

In the embodiment of FIG. 92, the bootstrap data may include information on the number of flow ports of the IP datagram including the time base or the signaling message. In this case, the port may be a path for receiving a flow of the IP datagram. The information on the number of user datagram protocol (UDP) ports of the IP datagram may be port_num_count field.

In the embodiment of FIG. 92, the bootstrap data may include information on a UDP port number of the IP datagram including the time base or the signaling message. The UDP may be a communication protocol for unilaterally transmitting information from one side but not exchanging information during transmission and reception of the information via the Internet.

Referring back to FIG. 91, an embodiment of the present invention will be described.

A time base transmission mode may include a mode in which the broadcast receiving apparatus 100 acquires time base of the broadcast service through IP datagram in a different broadcast stream. According to another embodiment of FIG. 91, when the time base_transport_mode field has a value of 0x01, the time base_transport_mode field may indicate that the time base of the broadcast service is capable of being acquired through the IP datagram in a different broadcast stream. The different broadcast stream may be a different broadcast stream from a broadcast stream in which a service signaling message is currently received.

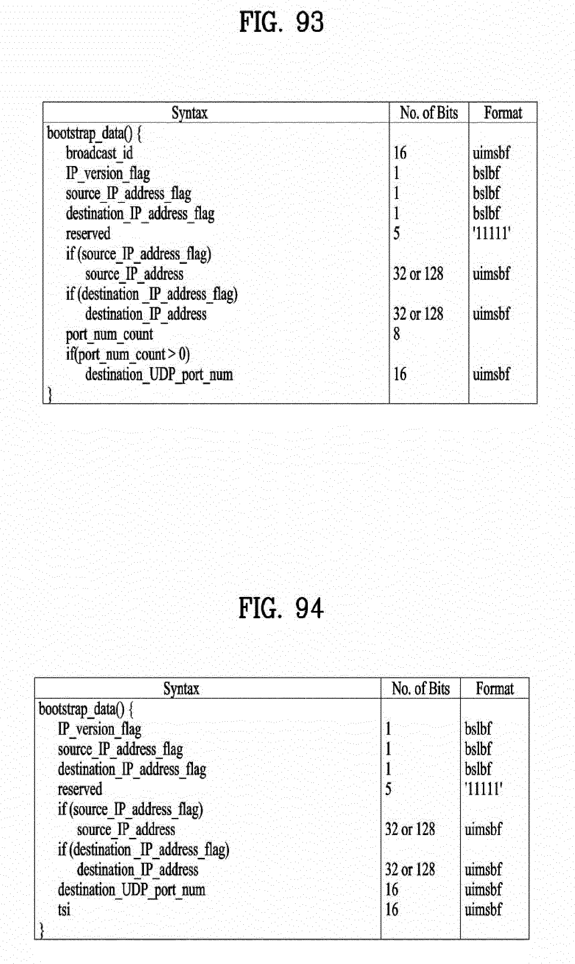

The signaling transmission mode may include a mode in which the broadcast receiving apparatus 100 acquires a signaling message used in a broadcast service through an IP datagram in a different broadcast stream. According to another embodiment of FIG. 91, when the signaling_transport_mode field has a value of 0x01, the signaling_transport_mode field may indicate that the signaling message used in the broadcast service is capable of being acquired through the IP datagram in the different broadcast stream. In this case, the bootstrap() field on the time base and the signaling message may comply with the syntax illustrated in FIG. 93. The syntax illustrated in FIG. 93 may be represented in XML.

FIG. 93 illustrates the syntax of a bootstrap() field when the time base_transport mode field and the signaling_transport_mode field have a value of 0x01 according to an embodiment of the present invention.

The bootstrap data according to the embodiment of FIG. 93 may include identifier information of a broadcaster that transmits a signaling message. In detail, the bootstrap data may include unique identifier information of a specific broadcaster for transmitting a signaling message through a specific frequency or transport frame. The identifier information of the broadcaster may be broadcasting_id field. The identifier information of the broadcaster may be identifier information of a transmission stream for transmitting a broadcast service.

Referring back to FIG. 91, an embodiment of the present invention will be described.

The time base transmission mode may include a mode in which the broadcast receiving apparatus 100 acquires a time base through a session-based flow in the same broadcast stream.

According to another embodiment of FIG. 91, when the time base_transport mode field has a value of 0x02, this may indicate that the time base of the broadcast service is capable of being acquired through a session-based flow in the same broadcast stream. The signaling transmission mode may include a mode in which the broadcast receiving apparatus 100 acquires a signaling message through a session-based flow in the same broadcast stream. When the signaling_transport_mode field has a value of 0x02, this may indicate that a signaling message used in the broadcast service is capable of being acquired through a session-based flow for transmitting an application layer in the same broadcast stream. In this case, session-based flow for transmitting the application layer may be any one of asynchronous layered coding (ALC)/layered coding transport (LCT) sessions and file delivery over unidirectional transport (FLUTE) sessions.

In this case, the bootstrap() field of the time base and the signaling message may comply with the syntax illustrated in FIG. 94. The syntax illustrated in FIG. 94 may be represented in XML.

The bootstrap data according to the embodiment of FIG. 94 may include transport session identifier information of an application layer for transmitting an application layer transport packet including the time base or the signaling message. In this case, the session for transmitting the transport packet may be any one of the ALC/LCT session and the FLUTE session. The identifier information of the application layer transmission session may be a tsi field.

Referring back to FIG. 91, an embodiment of the present invention will be described.

The time base transmission mode may be a mode in which the broadcast receiving apparatus 100 acquires a time base through a session-based flow in a different broadcast stream. According to another embodiment of FIG. 57, when the time base_transport mode field has a value of 0x03, this may indicate that the time base of the broadcast service is capable of being acquired through a session-based flow in a different broadcast stream. In addition, the signaling transmission mode may include a mode in which the broadcast receiving apparatus 100 acquires a signaling message through a session-based flow in the same broadcast stream. When the signaling_transport_mode field has a value of 0x03, this may indicate that the signaling message used in the broadcast service is capable of being acquired through an application layer transmission session-based flow in a different broadcast stream. In this case, the application layer transmission session-based flow may be at least one of asynchronous layered coding (ALC)/layered coding transport (LCT) sessions and file delivery over unidirectional transport (FLUTE) session.

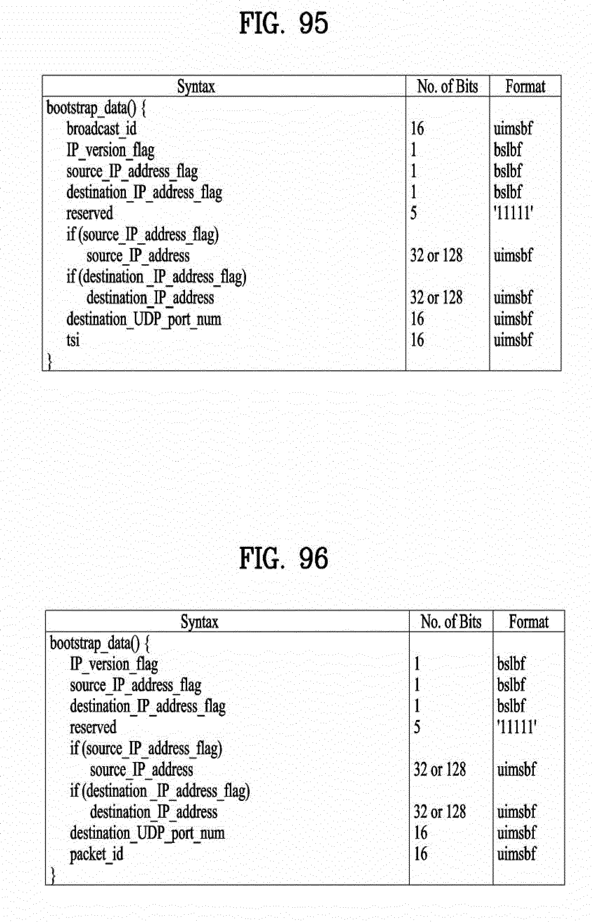

In this case, the bootstrap() field of the time base and the signaling message may comply with the syntax illustrated in FIG. 95. The syntax illustrated in FIG. 95 may be represented in XML.

The bootstrap data according to the embodiment of FIG. 95 may include identifier information of a broadcaster for transmitting the signaling message. In detail, the bootstrap data may include unique identifier information of a specific broadcaster for transmitting a signaling message through a specific frequency or transport frame. The identifier information of a broadcaster may be a broadcasting_id field. The identifier information of a broadcaster may be identifier information of a transmission stream of a broadcast service.

Referring back to FIG. 91, an embodiment of the present invention will be described.

The time base transmission mode may include a mode in which the broadcast receiving apparatus 100 acquires time base through a packet-based flow in the same broadcast stream. According to another embodiment of FIG. 91, when the time base_transport mode field has a value of 0x04, this may indicate that the time base of the broadcast service is capable of being acquired through a packet-based flow in the same broadcast stream. In this case, the packet-based flow may be an MPEG media transport (MMT) packet flow.

In addition, the signaling transmission mode may include a mode in which the broadcast receiving apparatus 100 acquires a signaling message through a packet-based flow in the same broadcast stream. When the signaling_transport mode field has a value of 0x04, this may indicate that a signaling message used in the broadcast service is acquired through a packet-based flow in the same broadcast stream. In this case, the packet-based flow may be an MMT packet flow.

In this case, the bootstrap() field of the time base and the signaling message may comply with the syntax illustrated in FIG. 96. The syntax illustrated in FIG. 96 may be represented in XML.

The bootstrap data according to the embodiment of FIG. 96 may include identifier information of a transport packet for transmitting the time base or the signaling message. The identifier information of the transport packet may be packet_id field. The identifier information of the transport packet may be identifier information of an MPEG-2 transmission stream.

Referring back to FIG. 91, an embodiment of the present invention will be described.

The time base transmission mode may include a mode in which the broadcast receiving apparatus 100 acquires a time base through a packet-based flow in a different broadcast stream.

According to another embodiment of FIG. 91, when the time base_transport mode field has a value of 0x05, this may indicate that the time base of the broadcast service is capable of being acquired through a packet-based flow in a different broadcast stream. In this case, the packet-based flow may be an MPEG media transport packet flow.

In addition, the signaling transmission mode may include a mode in which the broadcast receiving apparatus 100 acquires a signaling message through a packet-based flow in a different broadcast stream. When the signaling_transport_mode field has a value of 0x05, this may indicate that the signaling message used in the broadcast service is capable of being acquired through a packet-based flow in a different broadcast stream. In this case, the packet-based flow may be an MMT packet flow.

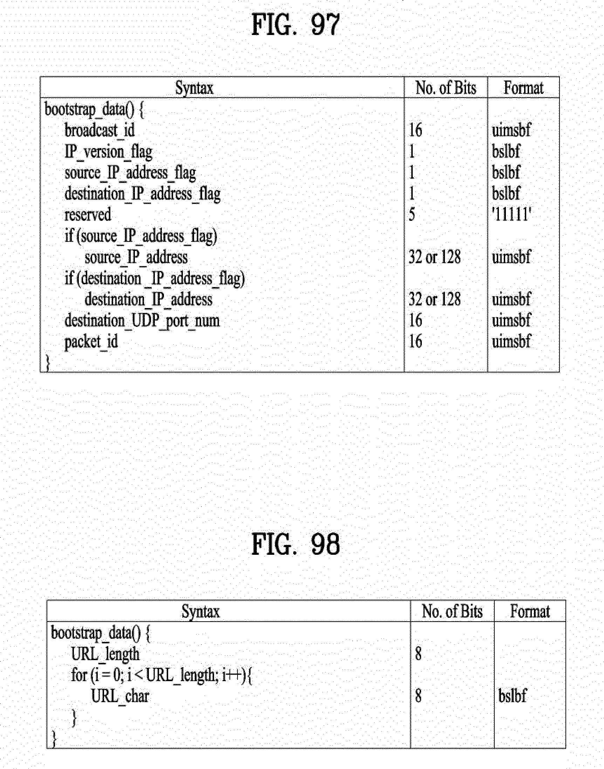

In this case, the bootstrap() field of the time base and the signaling message may conform to the syntax illustrated in FIG. 97. The syntax illustrated in FIG. 97 may be represented in XML.

The bootstrap data according to the embodiment of FIG. 97 may include identifier information of a broadcaster for transmitting a signaling message. In detail, the bootstrap data may include unique identifier information of a specific broadcaster for transmitting a signaling message through a specific frequency or transport frame. The identifier information of the broadcaster may be a broadcasting_id field. The identifier information of a broadcaster may be identifier information of a transmission stream of the broadcast service.

The bootstrap data according to the embodiment of FIG. 97 may include identifier information of a transport packet for transmitting time base or a signaling message. The identifier information of the transport packet may be packet_id field. The identifier information of the transport packet may be identifier information of an MPEG-2 transport stream.

Referring back to FIG. 91, an embodiment of the present invention will be described.

The time base transmission mode may include a mode in which the broadcast receiving apparatus 100 acquires a time base through a URL.

According to another embodiment of FIG. 91, when the time base_transport_mode field has a value of 0x06, this may indicate that the time base of the broadcast service is capable of being acquired through a URL. In addition, the signaling transmission mode may include a mode in which the broadcast receiving apparatus 100 acquires the signaling message through a URL. When the signaling_transport_mode field has a value of 0x06, this may indicate that the signaling message used in the broadcast service is capable of being acquired through an identifier for identifying an address for receiving the signaling message. In this case, an identifier for identifying the address for receiving the signaling message used in the broadcast service may be a URL.

In this case, bootstrap() field of the time base and the signaling message may comply with the syntax illustrated in FIG. 98. The syntax illustrated in FIG. 98 may be represented in XML.

The bootstrap data according to the embodiment of FIG. 98 may include length information on a URL for downloading the time base or the signaling message of the broadcast service. The URL length information may be a URL_length field.

The bootstrap data according to the embodiment of FIG. 98 may include actual data of a URL for downloading the time base or the signaling message of the broadcast service. The actual data of the URL may be a URL_char field.

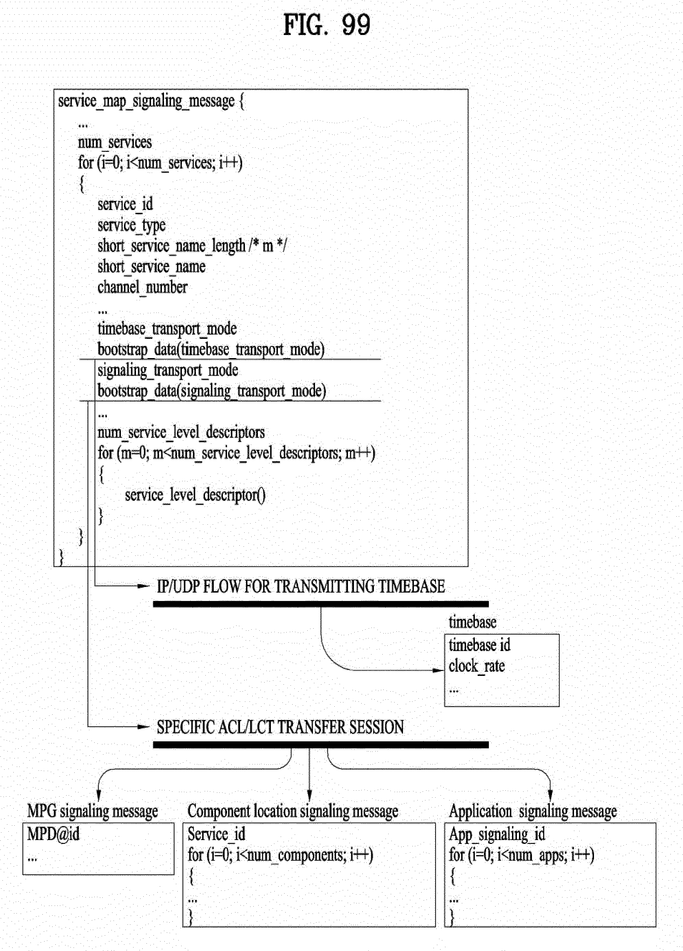

FIG. 99 illustrates a procedure of acquiring a time base and a service signaling message in the embodiment of FIGs. 90 to 98.

As illustrated in FIG. 99, the broadcast receiving apparatus 100 according to an embodiment of the present invention may acquire a time base through a packet-based transmission protocol. In detail, the broadcast receiving apparatus 100 may acquire a time base through an IP/UDP flow using the service signaling message. The broadcast receiving apparatus 100 according to an embodiment of the present invention may acquire a service related signaling message through the session-based transport protocol. In detail, the broadcast receiving apparatus 100 may acquire the service related signaling message through the ALC/LCT transfer session.

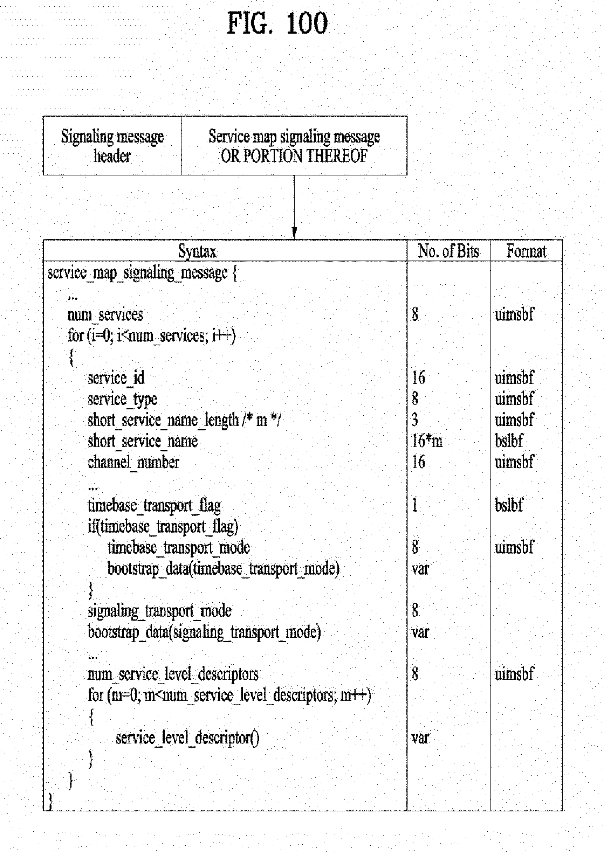

FIG. 100 illustrates a configuration of a broadcast service signaling message in a next-generation broadcast system according to an embodiment of the present invention. The broadcast service signaling message according to an embodiment may correspond to a service signaling method for receiving a broadcast service and content by a broadcast receiving apparatus in a next-generation broadcast system. The broadcast service signaling method according to the embodiment of FIG. 100 may be based on the signaling message configuration illustrated in FIG. 99. The broadcast service signaling message according to the embodiment of FIG. 100 may be transmitted through a service signaling channel. In this case, the service signaling channel may be one form of a physical layer pipe for directly transmitting service signaling information for scanning a broadcast service without passing through another layer.

In a detailed embodiment, the signaling channel may be referred to as at least one of a fast information channel (FIC), low layer signaling (LLS), and an application layer transmission session. In addition, the broadcast service signaling message according to the embodiment of FIG. 100 may be represented in XML.

The service signaling message according to the embodiment of FIG. 100 may include information indicating whether the service signaling message includes information required to acquire a time base. In this case, the time base may include metadata of a timeline used in the broadcast service. The timeline may be a series of time information for media content. Information indicating whether information for acquisition of the time base is included may be a timeline_transport_flag field. According to an embodiment, when the timeline_transport_flag field has a value of 1, this may indicate that the service signaling message includes information for transmitting the time base.

The service signaling message according to the embodiment of FIG. 100 may include data required to acquire a time base or a signaling message by a broadcast receiving apparatus according to each transmission mode to be described below. The data required to acquire the time base or the signaling message may be a bootstrap_data() field.

The aforementioned transmission mode may be at least one of a time base transmission mode and a signaling transmission mode. The time base transmission mode may be a transmission mode about time base including metadata about a time line used in the broadcast service. Information on the time base transmission mode may be a time base_transport mode field.

The signaling transmission mode may be a mode for transmitting the signaling message used in the broadcast service. The information on the signaling transmission mode may be a signaling_transport mode field.

The meaning of a bootstrap_data() field according to the time base_transport_mode field and the signaling_transport_mode field may be the same as the above description.

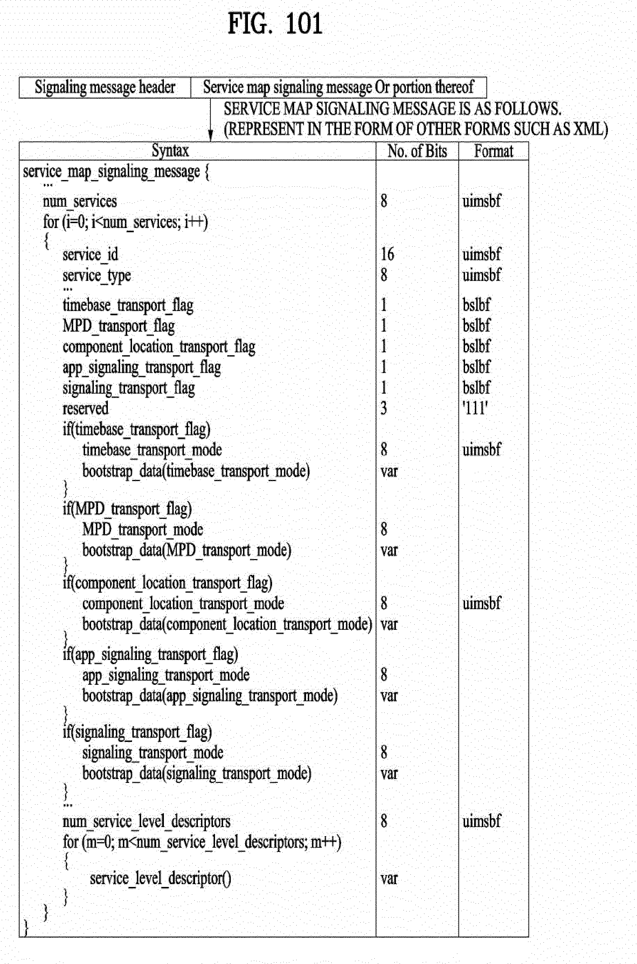

FIG. 101 illustrates a configuration of a broadcast service signaling message in a next-generation broadcast system according to an embodiment of the present invention. The broadcast service signaling message according to an embodiment of the present invention may correspond to a service signaling method for receiving a broadcast service and content by a broadcast receiving apparatus in a next-generation broadcast system. The broadcast service signaling according to the embodiment of FIG. 101 may be based on the signaling message configuration illustrated in FIG. 99. The broadcast service signaling message according to the embodiment FIG. 101 may be transmitted through a service signaling channel. In this case, the service signaling channel may be one form of a physical channel pipe for directly transmitting service signaling information for scanning a broadcast service without passing through another layer. In a detailed embodiment, the signaling channel may be referred to as at least one of a fast information channel (FIC), low layer signaling (LLS), and an application layer transmission session. The broadcast service signaling message according to the embodiment of FIG. 101 may be represented in XML.

The service signaling message according to the embodiment of FIG. 101 may indicate whether the service signaling message includes information required to acquire a time base. In this case, the time base may include metadata about a timeline used in the broadcast service. The timeline may be a series of time information for media content. Information indicating whether the information required to acquire the time base is included may be a timeline_transport_flag field. According to an embodiment of the present invention, when the timeline_transport_flag field has a value of 1, this may indicate that the service signaling message includes information for transmitting the time base.

The service signaling message according to the embodiment of FIG. 101 may indicate whether the service signaling message includes information required to acquire the signaling message. In this case, the signaling message may be a signaling message related to media presentation data (MPD) or MPD URL used in the broadcast service. The information indicating whether the information for acquisition of the signaling message is included may be an MPD transport flag field. According to an embodiment, when the MPD_transport_flag field has a value of 1, this may indicate that the service signaling message includes signaling message transmission related information related to MPD or MPD URL. Adaptive media streaming based on HTTP may be referred to as a dynamic adaptive streaming over HTTP (DASH). In addition, detailed information for acquisition of a segment included in a broadcast service and content in adaptive media streaming by a broadcast receiving apparatus may be referred to as MPD. The MPD may be represented in XML. The MPD URL related signaling message may include address information for acquisition of the MPD.

The service signaling message according to the embodiment of FIG. 101 may indicate whether the service signaling message includes information on an acquisition path for component data. In this case, the component may be one unit of content data for providing the broadcast service. The information indicating whether the path information of acquisition of the component data is included may be a component_location_transport_flag field. According to an embodiment, when the component_location_transport_flag field has a value of 1, the component_location_transport_flag field may indicate that the service signaling message includes path information for acquisition of the component data.

The service signaling message according to the embodiment of FIG. 101 may indicate whether information required for acquisition of an application related signaling message is included. The information indicating whether information required to acquisition of the application related signaling message is included may be an app_signaling_transport_flag field. According to an embodiment, when the app_signaling_transport_flag field has a value of 1, the app_signaling_transport_flag field may indicate that the service signaling message includes path information for acquisition of the component data.

The service signaling message according to the embodiment of FIG. 101 may indicate whether signaling message transmission related information is included. The information indicating whether signaling message transmission related information is included may be a signaling_transport_flag field. According to an embodiment, when the signaling_transport _flag field has a value of 1, the signaling_transport _flag field may indiate that the service signaling message includes the signaling message transmission related information. When the service signaling message does not include the aforementioned MPD related signaling, component acquisition path information, and application related signaling information, the broadcast receiving apparatus may acquire the MPD related signaling, component acquisition path information, and application related signaling information through a signaling message transmission path.

The service signaling message according to the embodiment of FIG. 101 may indicate a mode for transmitting the time base used in the broadcast service. Information on the mode for transmitting time base may be the time base_transport_mode field.

The service signaling message according to the embodiment of FIG. 101 may indicate a mode for transmitting the MPD or MPD URL related signaling message used in the broadcast service. The information on the mode for transmitting the MPD or the MPD URL related signaling message may be MPD_transport_mode field.

The service signaling message according to the embodiment of FIG. 101 may indicate a mode for transmitting a component location signaling message including an acquisition path of component data used in the broadcast service.

The information on the mode for transmitting the component location signaling message including the acquisition path of the component data may be component_location_transport_mode field.

The service signaling message according to the embodiment of FIG. 101 may indicate a mode for transmitting an application related signaling message used in the broadcast service. The information on the mode for transmitting the application related signaling message may be app_signaling_transport_mode field.

The service signaling message according to the embodiment of FIG. 101 may indicate a mode for transmitting the service related signaling message used in the broadcast service. The information on the mode for transmitting the service related signaling message may be signaling_transport_mode field.

The meanings of values of the aforementioned time base_transport mode field, MPD_transport_mode field, component_location_transport_mode field, app_signaling_transport_mode field, and signaling_transport_mode field will be described below with reference to FIG. 92.

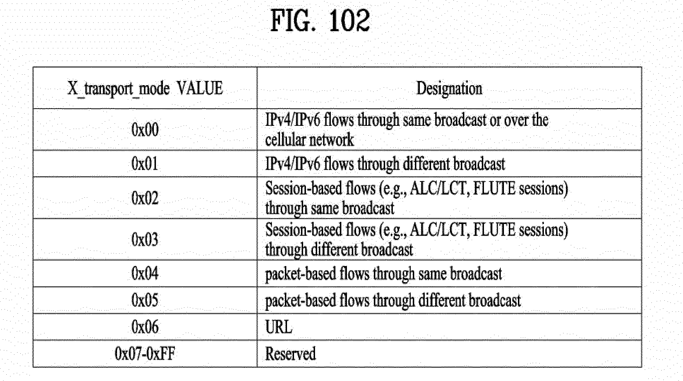

FIG. 102 illustrates the meaning of a value of each transmission mode described with reference to FIG. 101. The X_transport_mode of FIG. 78 may include a time base_transport_mode, an MPD_transport_mode, a component_location_transport_mode, an app_signaling_transport_mode, and a signaling_transport_mode. Detailed meaning of a value of each transmission mode is the same as in the description given with reference to FIG. 91. Referring back to FIG. 101, an embodiment of the present invention will be described.

The service signaling message according to the embodiment of FIG. 101 may include information required to acquire the time base or the signaling message by a broadcast receiving apparatus according to a value of each mode of FIG. 102. The information required to acquire the time base or the signaling message may be bootstrap_data() field. In detail, information included in the bootstrap_data() field is the same as in the above description given with reference to FIGs. 92 to 98.

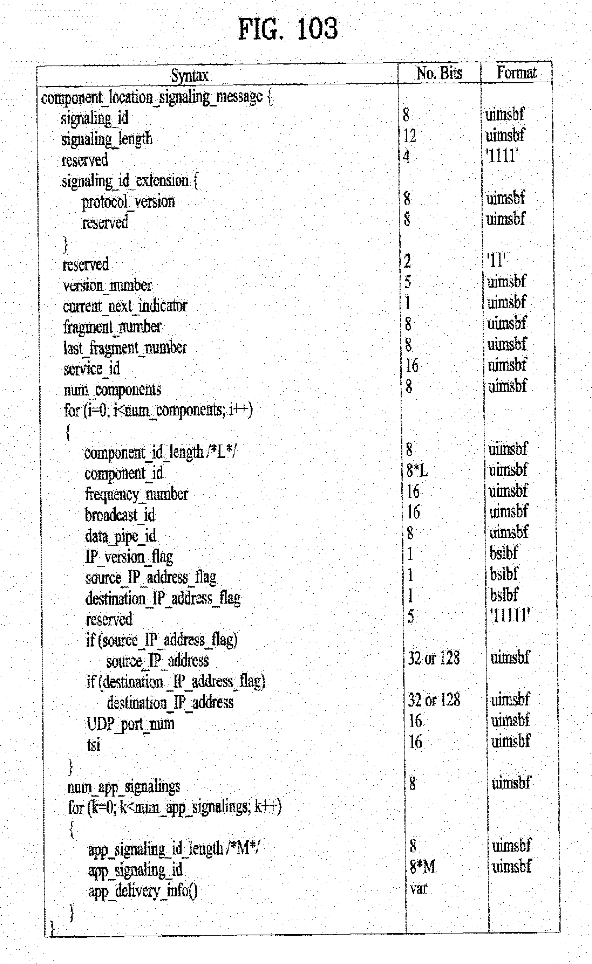

FIG. 103 illustrates a configuration of a signaling message for signaling a component data acquisition path of a broadcast service in a next-generation broadcast system. In the next-generation broadcast system, one broadcast service may include one or more components. Based on the signaling message according to the embodiment of FIG. 103, the broadcast receiving apparatus may acquire information of an acquisition path of component data and related application in a broadcast stream. In this case, the signaling message according to the embodiment of FIG. 103 may be represented in XML.

The signaling message according to the embodiment of FIG. 103 may include information for identifying that a signaling message is a message for signaling a component location. The information for identifying that the signaling message is a message for signaling a component location may be a signaling_id field. In a detailed embodiment, the signaling_id field may be 8 bits long.

The signaling message according to the embodiment of FIG. 103 may include extension information for identifying that the signaling message is a message for singaling the component location. In this case, the extension information may include a protocol version of a message for signaling of the component location. The extension information may be signaling_id extension field.

The signaling message according to the embodiment of FIG. 103 may include version information of a message for signaling component location. In this case, the version information may indicate that a message for signaling the component location is changed. The version information may be version_number field.

The signaling message according to the embodiment of FIG. 103 may include identifier information of an associated broadcast service. In this case, the identifier information of the associated broadcast service may be service_id field.

The signaling message according to the embodiment of FIG. 103 may include the number of components associated with the broadcast service. In this case, information on the number of associated components may be num_component field.

The signaling message according to the embodiment of FIG. 103 may include an identifier of each component. The component identifier may be configured by combining MPD@id, period@id, and representation@id of MPEG DASH. In this case, the identifier information of each component may be component_id field.

The signaling message according to the embodiment of FIG. 103 may include length information of the component_id field. In this case, the length information of the component_id field may be component_id_length field.

The signaling message according to the embodiment of FIG. 103 may include frequency information indicating a frequency for acquisition of component data. The component data may be a DASH segment. In this case, the frequency information for acquisition of the component data may be frequency_number field.

The signaling message according to the embodiment of FIG. 103 may include a unique identifier of a broadcaster. The broadcaster may transmit component data through a specific frequency or a transmitted transport frame. In this case, the unique identifier information of a broadcaster may be broadcast_id field. The broadcast_id field may indicate an identifier of a transmission stream of a broadcast service.

The signaling message according to the embodiment of FIG. 103 may include an identifier of a physical layer pipe for transmitting the component data. In this case, the identifier information of the physical layer pipe for transmitting the component data may be datapipe_id field.

The signaling message according to the embodiment of FIG. 103 may include an IP address format of an IP datagram including component data. The IP address format information of the IP datagram may be IP version flag field. In a detailed embodiment, when the IP_version_flag field has a field value of 0, this may indicate IPv4 format and when the IP_version_flag field has a field value of 1, this may indicate IPv6 format.

The signaling message according to the embodiment of FIG. 103 may include information indicating whether an IP datagram including component data includes a source IP address. The information indicating whether the IP datagram includes the source IP address may be source_IP_address_flag field. According to an embodiment, when the source_IP_address_flag field has a value of 1, this may indicate that the IP datagram includes the source IP address.

The signaling message according to the embodiment of FIG. 103 may include information indicating whether an IP datagram including component data includes the destination IP address. The information indicating whether the IP datagram includes the destination IP address may be a destination_IP_address_flag field. In an embodiment, when the destination_IP_address_flag field has a value of 1, this may indicate that the IP datagram includes the destination IP address.

The signaling message according to the embodiment of FIG. 103 may include source IP address information of IP datagram including component data. According to an embodiment, when the source_IP_address_flag field has a value of 1, the signaling message may include the source IP address information. The source IP address information may be a source_IP_address field.

The signaling message according to the embodiment of FIG. 103 may include destination IP address information of IP datagram including the component data. According to an embodiment, when the destination_IP_address_flag field has a value of 1, the signaling message may include the destination IP address information. The destination IP address information may be destination_IP_addres field.

The signaling message according to the embodiment of FIG. 103 may include UDP port number information of IP datagram including component data. The UDP port number information may be UDP_port_num field.

The signaling message according to the embodiment of FIG. 103 may include information of a transport session identifier of an application layer for transmitting a transport packet including component data. The session for transmitting the transport packet may be at least one of an ALC/LCT session and a FLUTE session. The identifier information of the session may be tsi field.

The signaling message according to the embodiment of FIG. 103 may include identifier information of a transport packet including component data. The identifier information of the transport packet may be packet_id field.

The signaling message according to the embodiment of FIG. 103 may include the number of application signaling messages associated with the broadcast service. In this case, the broadcast service may be a broadcast service identified according to service_id field. The number information of the application signaling messages may be num_app_signaling field.

The signaling message according to the embodiment of FIG. 103 may include identifier information of the application signaling message. The identifier information of the application signaling message may be app_signaling_id field.

The signaling message according to the embodiment of FIG. 103 may include length information of app_signaling_id field. The length information of the app_signaling_id field may be app_signaling_id _length field.

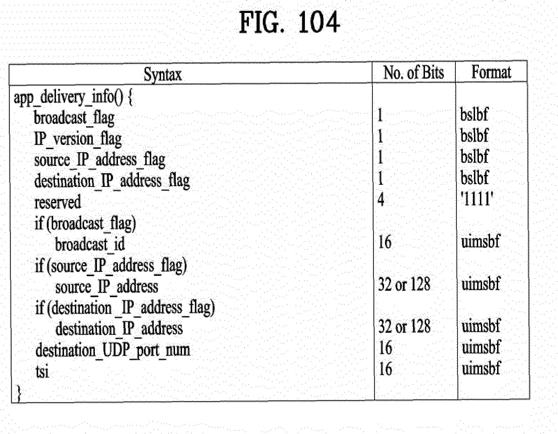

The signaling message according to the embodiment of FIG. 103 may include data about a path for acquisition of data of an application included in a signaling message associated with an identifier of the application signaling message. The path information for acquisition of the application included in the signaling message associated with the identifier of the application signaling message may be app_delivery_info() field. Hereinafter, an embodiment of app_delivery_info() field of FIG. 104 will be described.

FIG. 104 illustrates the syntax of app_delevery_info() field according to an embodiment of the present invention.

Data about a path for acquisition of data of an application included in a signaling message associated with an identifier of the application signaling message according to the embodiment of FIG. 104 may include information indicating whether an application or related data is transmitted through a different broadcast stream. The information indicating whether the application or related data is transmitted through the different broadcast stream may be broadcasting_flag field.

The data about a path for acquisition of data of an application included in a signaling message associated with an identifier of the application signaling message according to the embodiment of FIG. 104 may include IP address format of IP datagram including an application or related data. Information of IP address format of IP datagram may be IP version flag field. According to an embodiment, when the IP_version_flag field is 0, the IP datagram including the application or related data may use IPv4 format and when the IP_version_flag field is 1, the IP datagram including the application or related data may use IPv6 format.

The data about a path for acquisition of data of an application included in a signaling message associated with an identifier of the application signaling message according to the embodiment of FIG. 104 may indicate whether the IP datagram including the application or related data includes a source IP address. In this case, the associated data may be data required to execute an application.

The information indicating whether the IP datagram including the application or related data includes a source IP address may be source_IP_address_flag field. According to an embodiment, when the source_IP_address_flag field is 1, this may indicate that the IP datagram includes a source IP address.

The data about a path for acquisition of data of an application included in a signaling message associated with an identifier of the application signaling message according to the embodiment of FIG. 104 may include information indicating whether IP datagram including an application or related data includes the destination IP address. The information indicating whether the IP datagram including the application or related data includes the destination IP address may be destination_IP_address_flag field. According to an embodiment, when the destination_IP_address_flag field is 1, this may indicate that the IP datagram includes the destination IP address.

The data about a path for acquisition of data of an application included in a signaling message associated with an identifier of the application signaling message according to the embodiment of FIG. 104 may include a unique identifier of a broadcaster for transmitting an application or related data through a specific frequency or a transmitted transport frame.

In other words, the data about a path for acquisition of data of an application included in a signaling message associated with an identifier of the application signaling message may include an identifier of the broadcast service transmission stream. The unique identifier information of a broadcaster for transmitting an application or related data through a specific frequency or a transmitted transport frame may be a broadcast_id field. The broadcast_id field may indicate an identifier of a transmission stream of the broadcast service.

The data about a path for acquisition of data of an application included in a signaling message associated with an identifier of the application signaling message according to the embodiment of FIG. 104 may include a source IP address of IP datagram of an application or related data when the source_IP_address_flag field has a value of 1. The source IP address information of the IP datagram including the application or related data may be source_IP_address field.

The data about a path for acquisition of data of an application included in a signaling message associated with an identifier of the application signaling message according to the embodiment of FIG. 104 may include a destination IP address of IP datagram including an application or related data when the destination_IP_address_flag field has a value of 1. The destination IP address information of the IP datagram including the application or related data may be destination_IP_address field.

The data about a path for acquisition of data of an application included in a signaling message associated with an identifier of the application signaling message according to the embodiment of FIG. 104 may include information on the number of ports of IP datagram flows including the application or related data. The information on the number of ports of IP datagram flows including the application or related data may be port_num_count field.

The data about a path for acquisition of data of an application included in a signaling message associated with an identifier of the application signaling message according to the embodiment of FIG. 104 may include information on the number of IP datagram UDP ports including the application or related data.

The data about a path for acquisition of data of an application included in a signaling message associated with an identifier of the application signaling message according to the embodiment of FIG. 104 may include an identifier of a transmission session for transmitting the application or related data. The transmission session for transmitting the application or related data may be any one of an ALC/LCT session and a FLUTE session. The identifier information of the transmission session for transmitting the application or related data may be tsi field.

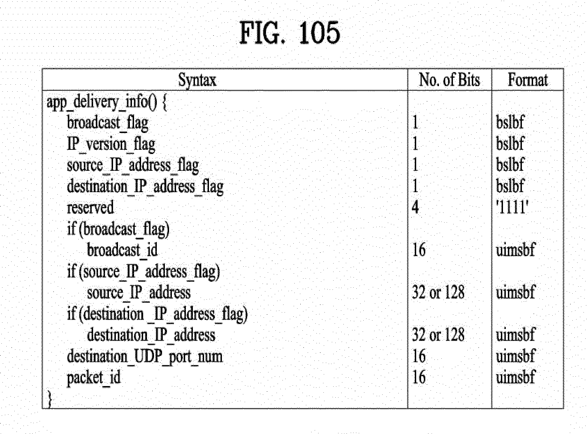

FIG. 105 illustrates the syntax of app_delevery_info() field according to another embodiment of the present invention.

Data about a path for acquisition of data of an application included in a signaling message related to an identifier of an application signaling message according to the embodiment of FIG. 105 may indicate an identifier of a transport packet for transmitting an application or related data. The transport packet for transmitting the application or related data may comply with a protocol based on a packet-based transmission flow. For example, the packet-based transmission flow may include an MPEG media transport protocol. The transport packet for transmitting the application or related data may be packet_id field.

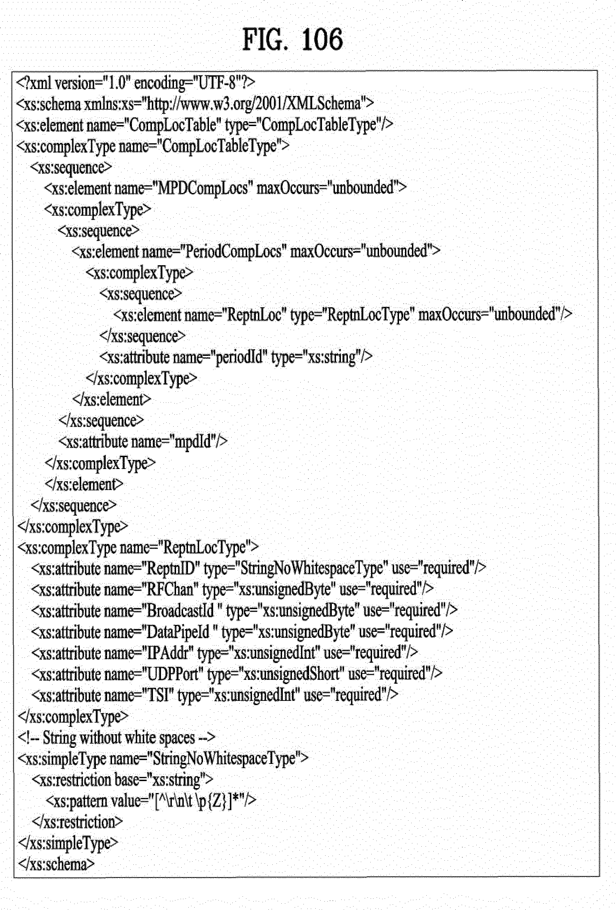

FIG. 106 illustrates component location signaling including path information for acquisition of one or more component data items included in the broadcast service. In detail, FIG. 106 illustrates path information for acquisition of component data including a DASH segment when one or more components included in the broadcast service is represented in a segment of the MPEG DASH.

FIG. 107 illustrates a configuration of the component location signaling of FIG. 106.

The component location signaling according to the embodiment of FIG. 107 may include identifier information of MPEG DASH MPD related to the broadcast service. The identifier information of the MPEG DASH MPD may be mpdip field.

The component location signaling according to the embodiment of FIG. 107 may include an identifier of period attributes in the MPEG DASH MPD indicated by the mpdip field. Identifier information of the period attributes in the MPEG DASH MPD may be periodid field.

The component location signaling according to the embodiment of FIG. 107 may include an identifier of representation attributes in a period indicated by the periodid field. The identifier information of the representation attributes in the period may be ReptnID field.

The component location signaling according to the embodiment of FIG. 107 may include a frequency number for acquisition of a DASH segment included in the representation attributes in the period indicated by the ReptnID field. The frequency number for acquisition of the DASH segment may be an RF channel number. The frequency number information for acquisition of the DASH segment may be RFChan field.

The component location signaling according to the embodiment of FIG. 107 may include unique identifier of a broadcaster for transmitting the DASH segment through a specific frequency or a transmitted transport frame. The unique identifier information of a broadcaster for transmitting the DASH segment may be Broadcastingid field.

The component location signaling according to the embodiment of FIG. 107 may include an identifier of a physical layer pipe for transmitting the DASH segment. The physical layer pipe may be a data pipe for transmitting a physical layer. The identifier information for transmitting the DASH segment may be DataPipeId field.

The component location signaling according to the embodiment of FIG. 107 may include a destination IP address of IP datagram including the DASH segment. The destination IP address information of the IP datagram including the DASH segment may be IPAdd field.

The component location signaling according to the embodiment of FIG. 107 may include a UDP port number of the IP datagram including the DASH segment. The UDP port number information of the IP datagram including the DASH segment may be UDPPort field.

The component location signaling according to the embodiment of FIG. 107 may include a transport session identifier for transmitting a transport packet including the DASH segment. An identifier of the session for transmitting the transport packet may be at least one of an ALC/LCT session and a FLUTE session. The identifier information of the session for transmitting the transport packet may be TSI field.

The component location signaling according to the embodiment of FIG. 107 may include an identifier of a transport packet including the DASH segment. The identifier information of the transport packet may be PacketId field.

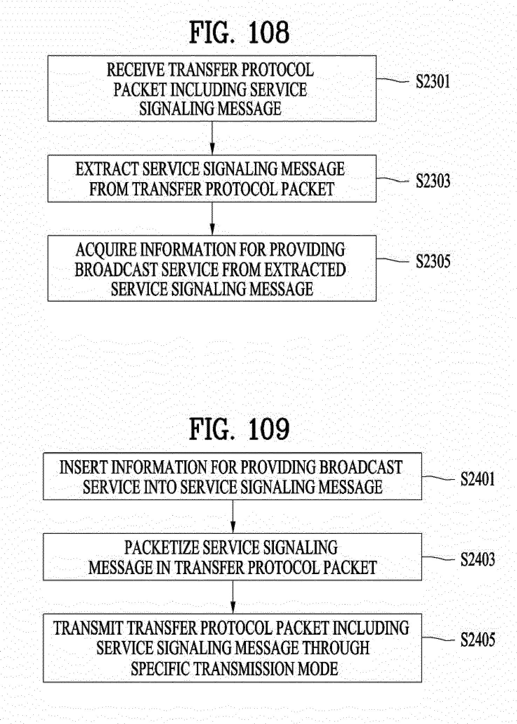

FIG. 108 is a flowchart illustrating an operation of a broadcast receiving apparatus according to an embodiment of the present invention.

A receiver of the broadcast receiving apparatus may receive a transmission protocol packet including a service signaling message (S2301). The receiver may include an Internet protocol communicator and a broadcast receiver. The service signaling message may be information for signaling at least one of a broadcast service and media content. According to an embodiment, the transmission protocol may be an Internet protocol (IP). In an embodiment, the service signaling message may be represented in the form of at least one of binary format and XML format. The transmission protocol packet may include a signaling message header and a signaling message.

A controller of the broadcast receiving apparatus may extract the service signaling message from a received transmission protocol packet (S2303). In detail, the controller may parse the transmission protocol packet to extract a service signaling message. The controller may acquire Internet protocol datagram from the hierarchical transmission protocol packet. The acquired Internet protocol datagram may include a service signaling message.

The controller of the broadcast receiving apparatus may acquire information for providing a broadcast service from the service signaling message (S2305). The information for providing the broadcast service may be a portion of the service signaling message.

According to an embodiment, the information for providing the broadcast service may be transmission mode information for time base including metadata about a timeline as series of time information for content.

The information for providing the broadcast service according to another embodiment may be transmission mode information for detailed information for acquisition of segments included in content in the adaptive media streaming. The detailed information for acquisition of the segments included in content in the adaptive media streaming may be referred to as media presentation description (MPD).

The information for providing the broadcast service according to another embodiment may be transmission mode information for a path for acquisition of component data included in content from the broadcast service. The component data may be objects included in the broadcast service or content. In this case, the acquisition path information of the component data may be identification information of a physical layer pipe for transmitting the component data. The hierarchical transmission protocol packet may include a physical layer pipe transmitted through a physical layer. A plurality of physical layer pipes may be present. Accordingly, it may be necessary to identify a physical layer pipe including component data to be acquired among the plurality of physical layer pipes.

The information for providing the broadcast service according to another embodiment may be transmission mode information for a signaling message for an application used in the broadcast service. In this case, the transmission mode information for a signaling message for an application may be at least one of identifier information of a broadcaster for transmitting an application, a source IP address of Internet protocol datagram including an application, a destination IP address of Internet protocol datagram including an application, a port number of a user data protocol (UDP) of Internet protocol datagram including the application, identifier information for a transmission session for transmitting the application, and identifier information of a packet for transmitting the application.

The information for providing the broadcast service according to another embodiment may be transmission mode information for a signaling message for a service used in the broadcast service. In this case, the service may be one content item.

The information for providing the broadcast service according to another embodiment may include transmission mode information for component data included in the service. In this case, the transmission mode information for component data may indicate at least one of a transmission mode for supporting a non real service, a transmission mode for supporting a real time service, and a transmission mode for packet transmission.

The information for providing the broadcast service according to another embodiment may include information for receiving a file type of real service.

FIG. 109 is a flowchart illustrating an operation of a broadcast transmitting apparatus according to an embodiment of the present invention.

A controller of the broadcast transmitting apparatus may insert information for providing the broadcast service into a service signaling message (S2401). According to an embodiment, the controller of the broadcast transmitting apparatus may insert the information for providing the broadcast service into the service signaling message in XML. The controller of the broadcast transmitting apparatus according to another embodiment may insert the information for providing the broadcast service into the service signaling message in the binary form.

The controller of the broadcast transmitting apparatus may packetize the service signaling message into which the information for providing the broadcast service is inserted, in the transmission protocol packet (S2403). In this case, the transmission protocol may be any one of a session-based transport protocol (ALC/LCT, FLUTE) and a packet-based transmission protocol (MPEG-2 TS, MMT).

A transmitter of the broadcast transmitting apparatus may transmit the transmission protocol packet in which the service signaling message is packetized to the broadcast receiving apparatus through a specific transmission mode (S2405). According to an embodiment, the transmission mode for transmitting the packetized transmission protocol packet may be a transmission mode for time base including metadata for a timeline as series of time information for content used in the broadcast service. According to another embodiment, the transmission mode for transmitting the packetized transmission protocol packet may be a transmission mode for detailed information for acquisition of segments included in content in adaptive media streaming. According to another embodiment, the transmission mode for transmitting the packetized transmission protocol packet may be a transmission mode for a path for acquisition of component data included in content from the broadcast service. According to another embodiment, the transmission mode for transmitting the packetized transmission protocol packet may be a transmission mode for a signaling message for an application used in the broadcast service. According to another embodiment, the transmission mode for transmitting the packetized transmission protocol packet may be a transmission mode for a signaling message for a service used in the broadcast service.

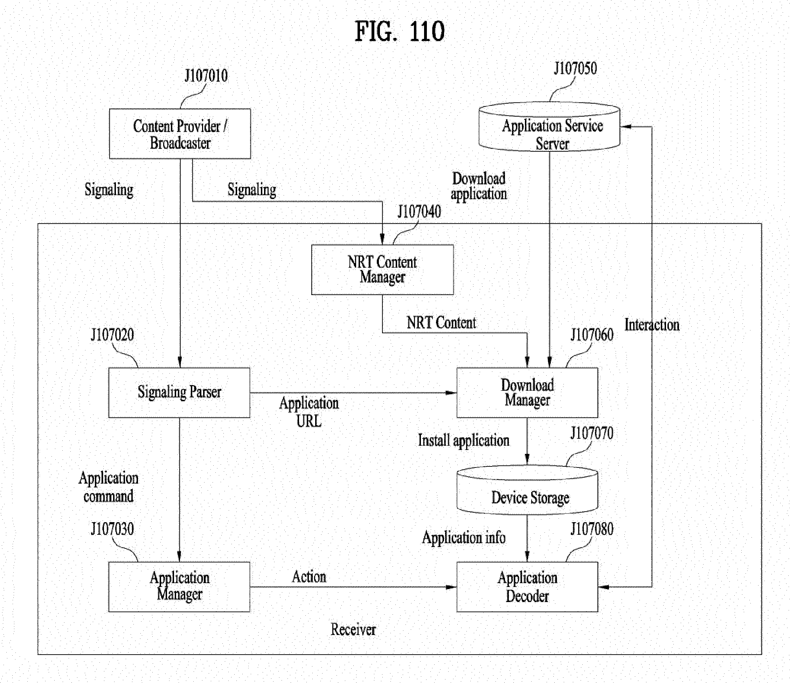

FIG. 110 is a block diagram illustrating a structure of a media content transceiving system according to an embodiment of the present invention.

The media content transceiving system according to an embodiment of the present invention may include at least one of a content provider/broadcaster J107010, an application service server J107050, and/or a broadcast receiving apparatus (receiver).

The content provider/broadcaster J107010 may indicate a content provider or a broadcast transmitting apparatus. The content provider/broadcaster J107010 may include the content provider and/or broadcast transmitting apparatus J107010.

The content provider J107010 may provide media content to the broadcast transmitting apparatus J107010 and/or the application service server J107050.

The broadcast transmitting apparatus J107010 may transmit a broadcast stream including media content using at least one of satellite, terrestrial, and cable broadcast networks. The broadcast transmitting apparatus J107010 may include a controller (not shown) and a transmitter (not shown) of the broadcast transmitting apparatus J107010. The controller may control an operation of the broadcast transmitting apparatus J107010.

The application service server J107050 may transmit media content based on a request of the broadcast receiving apparatus. The application service server J107050 may be an application service server for providing an application. The application service server may be provided from a content provider or a broadcaster and, in this case, may be included in the content provider/broadcaster J107010.

The broadcast receiving apparatus according to an embodiment of the present invention may include at least one of a broadcast receiver (not shown), an IP transceiver (not shown), and/or a controller. The broadcast receiving apparatus may control operations of the IP transceiver and the broadcast receiver using the controller. The broadcast receiving apparatus may receive a broadcast stream including media content using the broadcast receiver. In this case, the broadcast stream may be transmitted using at least one of satellite, terrestrial, and cable broadcast networks. Accordingly, the broadcast receiver may include at least one of a satellite tuner, a terrestrial tuner, and a cable tuner in order to receive a broadcast stream. The broadcast receiving apparatus may make a request for media content to the application service server J107050 using the IP transceiver. The broadcast receiving apparatus may receive the media content from the application service server J107050 using the IP transceiver. The broadcast receiving apparatus may decode the media content using the decoder.

The controller of the broadcast receiving apparatus according to an embodiment of the present invention may include a signaling parser J107020, an application manager J107030, an NRT content manager J107040, a download manager J107060, device storage J107070, and/or an application decoder J107080.

The signaling parser J107020 may be a module for parsing a broadcast signal provided by the broadcast transmitting apparatus J107010. The broadcast signal may include a signaling data/element, broadcast content data, broadcast-related additional data, and/or application data.

The application manager J107030 may be a module for managing a corresponding application when an application is included in the broadcast signal. The application manager J107030 may control a position, an operation, and operation execution timing of an application using the aforementioned signaling information, a signaling element, TPT, and/or trigger. Here, the action of the application may be activate (launch), suspend, resume, or terminate (exit).

The NRT content manager J107040 may be a module for managing non real time (NRT) content.

The download manager J107060 may be a module for receiving and/or processing information related to NRT content or an application provided by the content provider/broadcaster J107010 and/or the application service server J107050. The download manager J107060 may acquire NRT related signaling information included in the broadcast signal and extract NRT content included in the broadcast signal based on the signaling information. The download manager J107060 may receive and/or process an application provided by the application service server J107050.

The device storage J107070 may store the received broadcast signal, data, content, and/or signaling information (signaling element).

The application decoder J107080 may decode the received application and perform a process of indicating the application.

Each device included in the media content transceiving system may be embodied in a hardware or software configuration. When each device is configured in a hardware configuration, the term "manager" may be replaced with the term "processor".

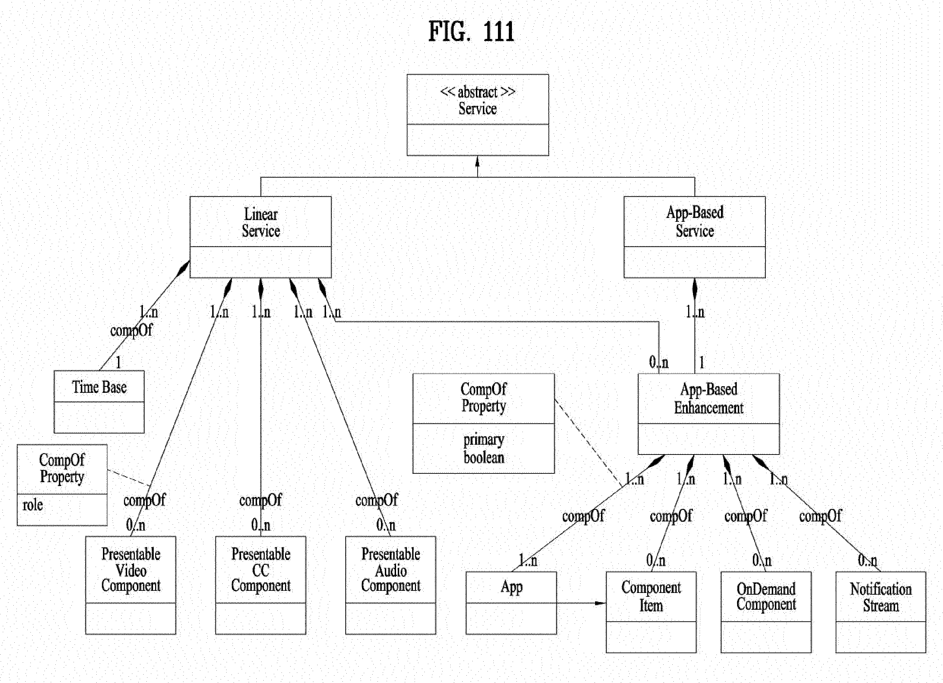

FIG. 111 illustrates service types and component types of the service types according to an embodiment of the present invention.

A linear service may transmit a broadcast signal to a broadcast receiving apparatus (e.g. TV). The linear service may be used for a service appropriate for a broadcast receiver without video decoding/display capability. For example, the linear service may transmit a service including only an audio component to the broadcast receiving apparatus. The linear service may include at least one of a time base, a presentable video component, a presentable audio component, presentable CC components, and app-based enhancement.

The application (App) may indicate a content item (or data item) for an ATSC application. The application (App) may be included in a content item (or data item).

The app-based enhancement may indicate application based enhancement for a TV service (or linear service). The app-based enhancement may include at least one of essential capabilities attribute, non-essential capabilities attribute, and/or target device attribute. The target device attribute may have a value indicating a primary device and/or a value indicating a companion device.

The app-based enhancement may include at least one of an application (App), a content item (or data item) component, a notification stream, and/or an on-demand component.

The time base may indicate metadata used to generate a time line for synchronizing components of the linear service. The time base may include clock rate attribute indicating a clock rate of the time base.

The app-based service may indicate an application-base service. The app-based service may include app-based enhancement. The app-based service may be included in a service.

The app-based enhancement may include at least one of a notification stream, an application (App), a content item, and/or an on-demand component. The notification stream may transmit notification information of a performed operation. The application may be represented as App. The content item may include a data item and/or an NRT content item. The content item may be used by the application. The on-demand component may be managed by the application.

An application of the app-based enhancement may be determined as a primary application. When a predetermined primary application is present, the primary application may be activated as soon as a service to which the primary application belongs is selected. The application may be activated by notification information included in the notification stream. The application may be activated by a pre-executed different application.

The app-based service may be at least one service including app-based enhancement. Enhancement based on one application included in the app-based service may include a predetermined primary application. The app-based service may selectively include a time base.

The application (App) may be a special case of the content item (or data item). That is, the application may include at least one file. A set of at least one file may constitute an application.

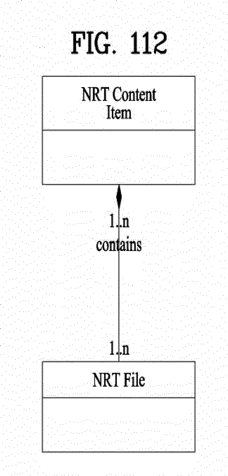

FIG. 112 illustrates a relationship between an NRT content item and an NRT file according to an embodiment of the present invention.

The NRT content item may include at least one NRT file. The NRT file may be included in at least one NRT content item.

The NRT content item may include a presentable NRT file-based component. That is, the NRT content item may include a set of NRT files that are consumable without necessity of combination with other files. In addition, the NRT file may be an elementary NRT file-based component. That is, the NRT file may be a component of an atomic unit.

The NRT content item may include at least one of a continuous component, a non- continuous component, and/or a combination of the continuous component and the non- continuous component.

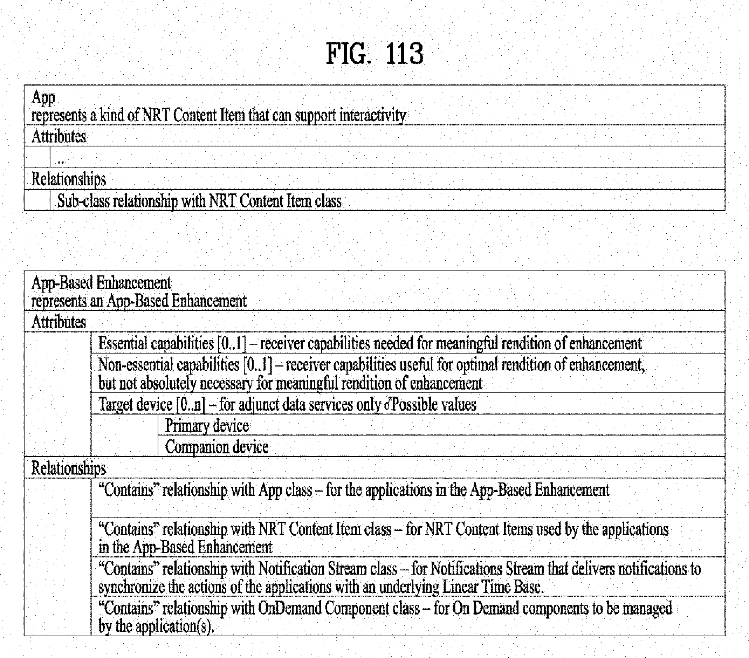

FIG. 113 is a table showing attributes according to a service type and a component type according to an embodiment of the present invention.

An application (App) may be a type of an NRT content item for supporting bilateralness. The attribute of the application may be provided by signaling data such as TPT. The application may be a subclass of an NRT content item class. For example, the NRT content item may include one or more applications.

The app-based enhancement may refer to events/content enhanced based on an application.

The attribute of the app-based enhancement may include the following information.

The app-based enhancement may include essential capabilities attribute indicating receiver performance required for meaningful rendition of enhancement.

The app-based enhancement may not be required for meaningful rendition of enhancement but may include non-essential capabilities attribute indicating receiver performances used for optimal rendition of enhancement.

The app-based enhancement may include target device attribute indicating a target device used by an application.

The target device may be classified into a primary device and a companion device. The primary device may include a device such as a TV receiver. The companion device may include a smartphone, a tablet PC, a laptop PC, and/or a small-sized monitor.

The app-based enhancement may include a relationship with an application class and may be used for a relationship with an application included in the app-based enhancement.

The app-based enhancement may include a relationship with an NRT content item class and may be used for a relationship with an NRT content item used by an application included in the app-based enhancement.

The app-based enhancement may include a relationship with a notification stream and may be used for a relationship with a notification stream for transmitting notifications for synchronization with an action of the application and a basic linear time base.

The app-based enhancement may include a relationship with an on-demand component class and may be used for a relationship with an on-demand component managed by application(s).

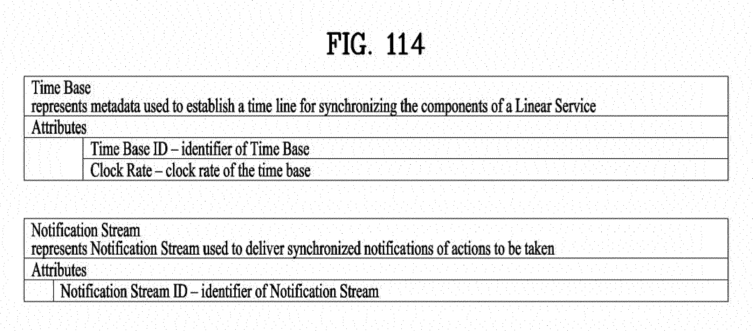

FIG. 114 is another table showing attributes according to a service type and a component type, according to an embodiment of the present invention.

The time base may indicate metadata used to generate a time line for synchronization with at least one component of a linear service.

The time base may include time base ID attribute and/or clock rate attribute.

The time base ID attribute may be an identifier of time base. The clock rate attribute time base may correspond to a clock rate.

The notification stream may transmit synchronized notification information of a performed operation.

The notification stream may include notification stream ID attribute as an identifier of the notification stream.

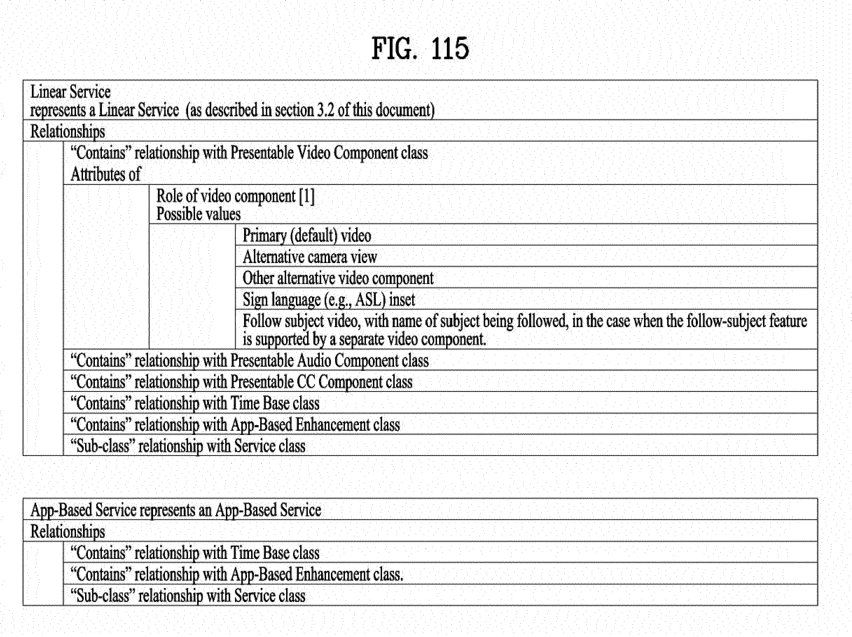

FIG. 115 is another table showing attribute according to a service type and a component type, according to an embodiment of the present invention.

The linear service element may indicate a linear service.

The linear service may include a presentable video component. A video component may include at least one of primary (default) video, alternative camera view, other alternative video component, sign language (e.g., ASL) inset, and/or follow subject video. When follow-subject feature is supported by a separate video component, the follow subject video may be video with a name with a subsequent subject.

The linear service may include at least one of a presentable audio component, a presentable CC component, time base, and/or app-based enhancement. The linear service may be included in a service.

The app-based service element may refer to an application-based service.

The app-based service may include at least one of time base and/or app-based enhancement. The app-based service may be included in a service.

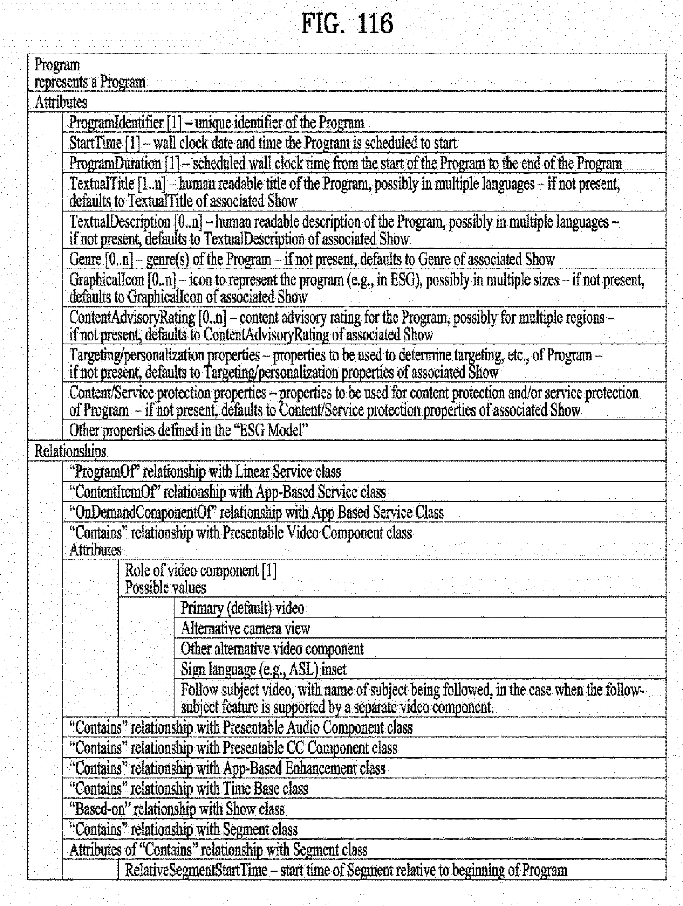

FIG. 116 is another table showing attribute according to a service type and a component type, according to an embodiment of the present invention.

A program element may indicate a program.

The program may include at least one of ProgramIdentifier attribute, StartTime attribute, ProgramDuration attribute, TextualTitle attribute, TextualDescription attribute, Genre attribute, CrraphicaIIcon attribute, ContentAdvisoryRating attribute, Targeting/personalization properties, Content/Service protection properties, and/or other properties in an electronic service guide (ESG) model.

The ProgramIdentifier attribute may be a unique identifier of a program.

The StartTime attribute may indicate a wall clock date and time at which a program is scheduled to be started.

The ProgramDuration attribute may indicate a wall clock time at which program start to program end is scheduled.

The TextualTitle attribute may indicate a title of a program readable by the human. The TextualTitle may include a title with a plurality of languages. In the case of non-presence, the TextualTitle attribute may indicate information of TextualTitle of related show.

The TextualDescription attribute may indicate description of a program readable by the human. The TextualDescription may include description with a plurality of languages. In the case of non-presence, the TextualDescription attribute may indicate information of TextualDescription of related show.

The Genre attribute may indicate program genre.

The GraphicalIcon attribute may indicate an icon for indicating a program. In the case of non-presence, the GraphicalIcon attribute may indicate information of GraphicalIcon of related show.

The ContentAdvisoryRating attribute may indicate content advisory rating of a program. The ContentAdvisoryRating attribute may include a plurality of content content advisory rating based on a plurality of regions. In the case of non-presence, the ContentAdvisoryRating attribute may indicate ContentAdvisoryRating information of related show.

The targeting/personalization properties may indicate properties used to determine targeting. For example, the targeting/personalization properties may indicate properties used to determine a program. In the case of non-presence, the targeting/personalization properties may indicate targeting/personalization properties of related show.

The content/service protection properties may indicate properties used for program content protection and/or service protection. In the case of non-presence, the content/service protection properties may indicate content/service protection properties of related show.

The program element may correspond to a program of a linear service. The program element may correspond to a content item of the app-based service. The program element may correspond to an on-demand component of the app-based service. The program element may include at least one of a presentable video component, a presentable audio component, a presentable CC component, an app-based enhancement, time base, and/or a segment. The program element may be based on show. The program element may be based on show.

With regard to the presentable video component, the program element may include "role of video component" attribute. The "role of video component" attribute may indicate one of primary (default) video, alternative camera view, other alternative video component, sign language (e.g., ASL) inset, and/or follow subject video. When the follow-subject feature is supported by a separate video component, the follow subject video may be video with a name of a subsequent subject.

With regard to a segment, the program element may include RelativeSegmentStartTime attribute. The RelativeSegmentStartTime attribute may indicate start time of a segment related to program start.

The NRT content item component may have the same structure as the program. However, the NRT content item component may be transmitted in the form of a file, but not in a streaming form. The program may include an additional data service such as an interactive service and a service related thereto.

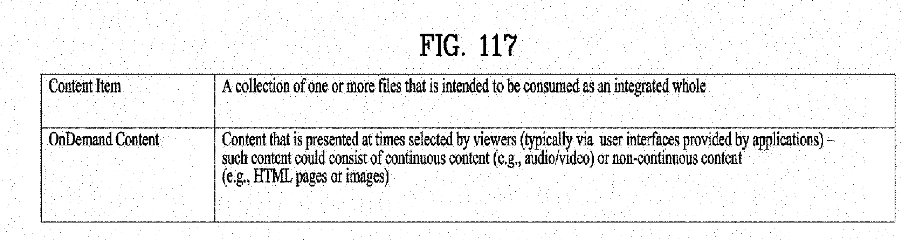

FIG. 117 is a diagram illustrating definition of a content item and on-demand content according to an embodiment of the present invention.

A next-generation hybrid broadcast system may include a linear service and/or an app-based service as a type of a service. The linear service may include a continuous component presented according to a schedule and/or time base defined in broadcast. The linear service may include triggered app-based enhancements.

Hereinafter, types of a service including presentable content component may be defined. In addition, types of other services and components may be defined.

The linear service may be a service including at least one continuous component included in primary content. The continuous component may be consumed according to schedule and/or time base defined by broadcast. The linear service may not include various types of time-shifted viewing mechanisms used to change consumption time by a consumer.

The service component may include at least one of a video component, an audio component, a closed caption component, time base, triggered app-based enhancement, and/or auto-launch app-based enhancement. The time base may be used to synchronize at least one component.

With regard to the triggered app-based enhancement, each enhancement may include at least one application that is launched or operated in a synchronized fashion according to activation notification transmitted as a portion of a service.

The enhancement component may include at least one of a stream of activation notification, an application, a content item, and/or an on-demand component. The application may be an application as a target of notification.

Selectively, any one of applications may be determined as a primary application. When the determined primary application is present, the primary application may be activated as soon as a corresponding service is selected. Another application may be activated according to notification included in the notification stream. The application may be activated according to another pre-activated application.

With regard to auto-launched app-based enhancement, each enhancement may include an automatically launched application when a service is selected.

The enhancement component may include at least one of an automatically launched application, a stream of activation notification, and/or a content item.

Here, the linear service may include auto-launched app-based enhancement and/or triggered app-based enhancement. For example, the auto-launched app-based enhancement may include enhancement for performing targeted advertisement insertion. The triggered app-based enhancement may include enhancement for providing interactive viewing experience.

The app-based service may be a service for launching a determined application whenever a service is selected. The app-based service may include app-based enhancement. App-based enhancement included in the app-based service may include a predetermined primary application.

The application may be a special case of a content item. That is, the application may include at least one file. A set of at least one file may constitute an application. At least one service component may be shared in at least one service.

The application included in the app-based service may begin presentation of on-demand content.

There are several approaches for merging notion of an auto-launched app-based service including at least one packaged application.

A next-generation broadcast receiving apparatus (e. g. TV set) may have the following features.

A user may select an auto-launched app-based service in service guide. The user may determine the auto-launched app-based service as one of a favorite service, an acquired service, and/or other services. As a result, an application for forming service base may be downloaded or installed in a broadcast receiving apparatus. Then, the user may make a request for show of a favorite application or an acquired application. Then, the user may receive all downloaded and/or installed applications from a display of a broadcast receiving apparatus and/or a smartphone. Then, the user may select at least one of applications for execution. As a result, the service guide may perform an operation such as app store.

An application programming interface (API) may be present. The API may identify an auto-launched app-based service as a favorite service and/or an acquired service by an application. In order to prevent execution of a rogue application behind a user back, execution of the API may include a question such as "Are You Sure" to a user. This may provide the same effect as in the case in which a packetized application is installed.

Each service may include a content item corresponding to content. The content item may include at least one file consumed as an integrated set. The on-demand content may be content presented at a specific time selected by a viewer. The on-demand content may be selected through a user interface provided by an application. The on-demand content may include continuous content and/or non-continuous content. The continuous content may include video content/audio content. The non-continuous content may include at least one HTML page and/or at least one image.

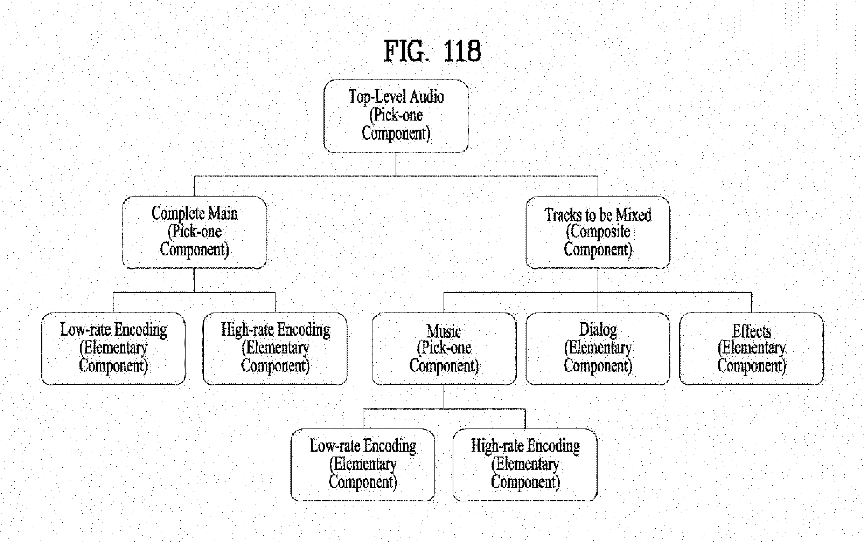

FIG. 118 is a diagram illustrating an example of a complex audio component according to an embodiment of the present invention.

The presentable audio component may be a PickOne component. The PickOne component may include a complete main component. The PickOne component may include at least one of music track, dialog track, and/or effects track. The music track, the dialog track, and/or the effects track may be mixed.

According to this approach, only a list of presentable components of a service may be directly provided. Then, this approach may hierarchically provide a list of at least one member component included in complex components.

In order to bind possible unbounded recursion of a component model, several proposals may be introduced. A continuous component may be fit into a three level hierarchy. The three level hierarchy may include a top level, a middle level, and/or a bottom level. The top level may include at least one PickOne component. The middle level may include at least one composite component. The bottom level may include at least one PickOne component. A particular continuous component may include all three levels and include at least one of the three levels. The continuous component may not include three levels and the continuous component may be a simple elementary component.

The hybrid broadcast may provide a service through an application. In detail, the broadcaster may provide information related to broadcast content through an application. For example, the broadcaster may provide an application for purchasing a product used by a character of content of broadcast. For this application, the broadcast server 10 may transmit application signaling information for signaling an application. The application signaling information may include at least one of trigger for triggering an action of an application and triggering application information for signaling information on a triggered application, which will be described with reference to the following drawings.

The triggering application information may include additional information required to execute an application. In detail, the triggering application information may include attribute of an application. The triggering application information may include a position for downloading a file included in the application. The triggering application information may include a position for receiving an NRT content item used by an application.

The triggering application information may signal a life-cycle change of an application. In detail, the life-type of the application may include at least one of preparing, executing, terminating, and suspending. For example, the application may prepare execution through a preparation state. In the preparation state, the application may be executed. The application may be suspended to be executed and may enter a terminating state. In addition, the application may be momentarily suspended and may enter a suspending state.

The triggering application information may include an action to be executed by an application. In detail, the triggering application information may include data required to perform an application operation.

The triggering application information may include media time. In detail, the triggering application information may include media time of content synchronized with an application.

In detail, the broadcast server 10 may transmit a trigger for triggering an action of an application. The broadcast receiving apparatus 100 may perform a specific operation by an application based on the trigger. In detail, the trigger may have the following format.

The trigger may include a domain part indicating a registered Internet domain name. The trigger may include a directory path part indicating a random character string for identifying a directory path with a domain name indicated by a domain part. The trigger may include a parameter part indicating a parameter for triggering an application. In detail, the trigger may have the following format.

<domain name part>/<directory path>[? <parameter>]

In the case, the domain name part and the directory path part may each be a necessary part that is necessarily included in the trigger. The parameter part may be a selection part that is selectively included in the trigger. The parameter part may include at least one of an event identifier for identifying an event, an application identifier for identifying an application as a target of trigger, and a timing value indicating time at which an event is performed. The parameter part may include media time of content. The parameter part may include a content identifier for identifying content presented by the broadcast receiving apparatus 100. The parameter part may include distribution information for distributing triggering application information request traffic of the broadcast receiving apparatus 100. The parameter part may include version information indicating a version of triggering application information related to the trigger.

In detail, the parameter part may include at least one of the following strings.

<media time>
<media time> and <spread>
<media time> and <version>
<media time> and <version> and <spread>
<event time>
<event time> and <spread>
<event time> and <version>
<event time> and <version> and <spread>

The <event time> may include an event identifier (ID) for identifying an event. In this case, the event may indicate that an application performs an operation according to a trigger. In this case, the event identifier may be determined as "e=". The event identifier may include two or three decimal numbers subsequent to "e=". In this case, the decimal numbers may be differentiated by a period ".". The <event time> may include an application identifier for identifying an application as a target of triggering. In this case, the application may be referred to as a triggered declarative object (TDO). In addition, the application identifier may be matched with an application identifier of triggering application information. Accordingly, the broadcast receiving apparatus 100 may acquire information on an application as a target of triggering from triggering application information based on an application identifier of a trigger. In this case, the triggering application information may be a TDO parameter table (TPT) for signaling trigger information. The parameter part may include a data identifier for identifying a data element used in an event. The parameter part may include a timing value indicating time at which an event is performed. In this case, the timing value may be determined as "t=". In a detailed embodiment, the timing value may be determined according to a hexadecimal number indicating one to eight letters subsequent to "t=". When the <event time> does not include a timing value, the trigger may trigger that a corresponding event is performed on an application at a time of receiving a trigger.

The <media time> may include media time of content. In detail, the <media time> may indicate a media time stamp of content synchronized with an application triggered by a trigger. In detail, the media time may be determined as "m=". The media time may be determined according to a hexadecimal number indicating one to eight letters subsequent to "m=". A unit of the media time may be a millisecond unit. The <media time> may indicate a content identifier for identifying content that is currently presented by the broadcast receiving apparatus 100. The content identifier may be determined by "c=". In detail, when an application is executed according to a direct execution model, the <media time> may include a content identifier. In a detailed embodiment, the broadcast receiving apparatus 100 may receive a time base trigger for transmitting reference time for application synchronization and extract a content identifier from the time base trigger. In this case, the broadcast receiving apparatus 100 may transmit the content identifier to a server for an interaction service to a server and receive the interaction service for content that is currently presented content by the broadcast receiving apparatus 100.

The <version> may include version information indicating a version of triggering application information associated with a trigger. In this case, the triggering application information may be TPT. In detail, the version information may be determined as "v=". In addition, the version information may be determined according to a decimal number indicated by one to three characters subsequent to "v=". The broadcast receiving apparatus 100 may extract version information from the trigger and acquire triggering application information based on the version information.

The <spread> may include distributed information as a reference for calculation of a time period taken to wait for a request for triggering application information to a server for providing application signaling information by the broadcast receiving apparatus 100. In detail, the broadcast receiving apparatus 100 may calculate a random value based on time indicated by the distributed information, may be on standby by as much as the random value and, then may make a request for triggering application information. The distributed information may be determined as "s=". In detail, the distributed information may be determined according to a decimal number indicating one to three letters subsequent to "s=". A plurality of broadcast receiving apparatuses 100 may make a request for triggering application information through distributed information in one go so as to prevent server traffic provided by the triggering application information from being concentrated at a time of receiving the trigger.

The <other> may include information other than the aforementioned parameter. The broadcast receiving apparatus 100 may disregard an irrecognizable parameter.

The trigger including media time of content may be referred to as a time base trigger. In detail, the time base trigger may transmit the media time stamp of content presented by the broadcast receiving apparatus 100. The broadcast receiving apparatus 100 may generate reference time as reference for synchronization of an application operation and content based on the time base trigger.

The trigger including event time may be referred to as an activation trigger. This is because the activation trigger determines time for performing a corresponding event. The broadcast receiving apparatus 100 may perform an operation triggered based on the event time of the trigger. In detail, the broadcast receiving apparatus 100 may extract the event time from the trigger and perform an operation triggered at the event time.

A parameter of the trigger may include a timing value indicating time of terminating the corresponding event as well as a timing value indicating time in which the event begins to be performed. Upon receiving the triggered before the event is terminated after the event begins to be performed, the broadcast receiving apparatus 100 may perform the event triggered by the corresponding trigger. In detail, the parameter part may include <event start time> and <event end time>.

The <event start time> may include a timing value indicating a time at which the event begins to be performed. The timing value may be determined by "st=" subsequent to "e=" for identifying an event.

The <event end time> may include a timing value indicating a time at which an event is terminated. The timing value may be determined as "et=" subsequent to "e=" for identifying an event.

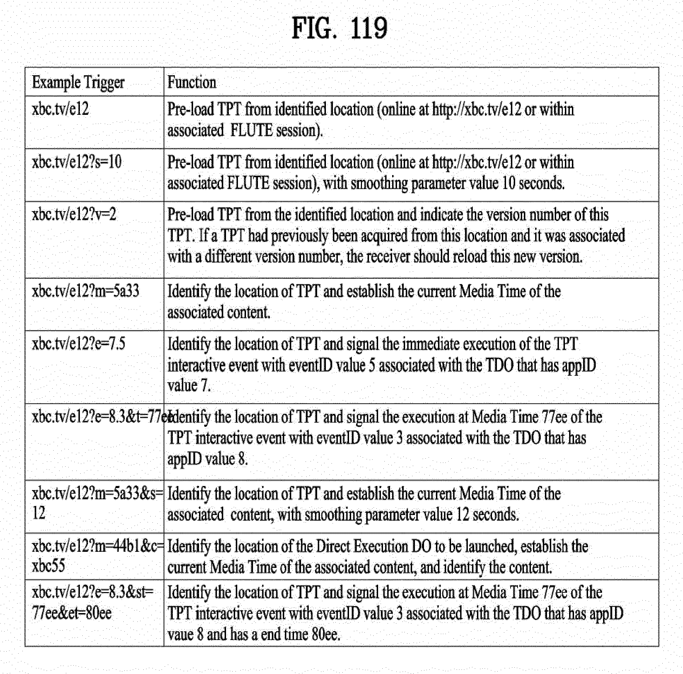

FIG. 119 illustrates a trigger according to the aforementioned trigger syntax.

The trigger syntax according to another detailed embodiment may have a time text format indicated at a predetermined time. In detail, the timed text may be a closed caption.

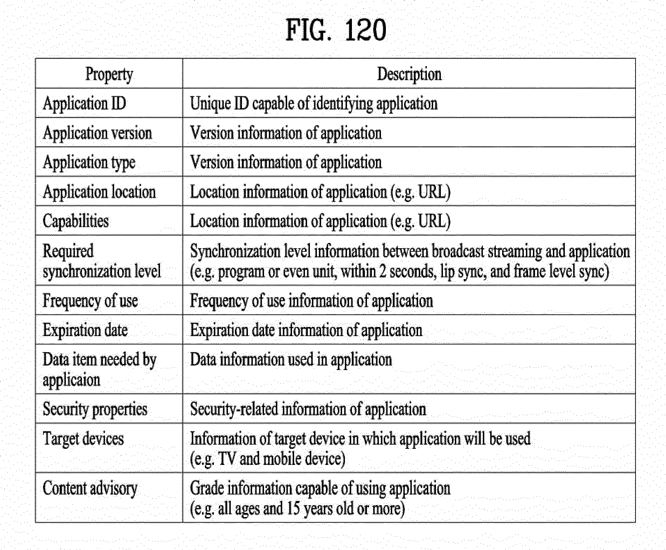

FIG. 120 illustrates attribute information related to an application according to an embodiment of the present invention.

The attribute information related to an application may include content advisory information.

The added attribute information related to an application according to an embodiment of the present invention may include Application ID information, application version information, application type information, application location information, capabilities information, required synchronization level information, frequency of use information, expiration date information, data item needed by application information, security properties information, target devices information, and/or content advisory information.

The application ID information may indicate a unique ID for identifying an application.

The application version information may indicate a version of an application.

The application type information may indicate a type of an application.

The application location information may indicate a position of an application. For example, the application location information may include a URL for receiving an application.

The capabilities information may indicate capability attribute for rendering an application.

The required synchronization level information may indicate synchronization level information between broadcast streaming and an application. For example, the required synchronization level information may indicate information such as a program or event unit, a time unit (e.g., within 2 seconds), lip sync, and/or frame level sync.

The frequency of use information may indicate a use frequency of an application.

The expiration date information may indicate use expiration data/expiration time of an application.

The data item needed by application information may indicate data information used in an application.

The security properties information may indicate security related information of an application.

The target devices information may indicate target device information for receiving an application. For example, the target devices information may indicate that a target device for executing a corresponding application is a TV and/or a mobile device.

The content advisory information may indicate a level for using an application. For example, the content advisory information may include age rating information for using an application.

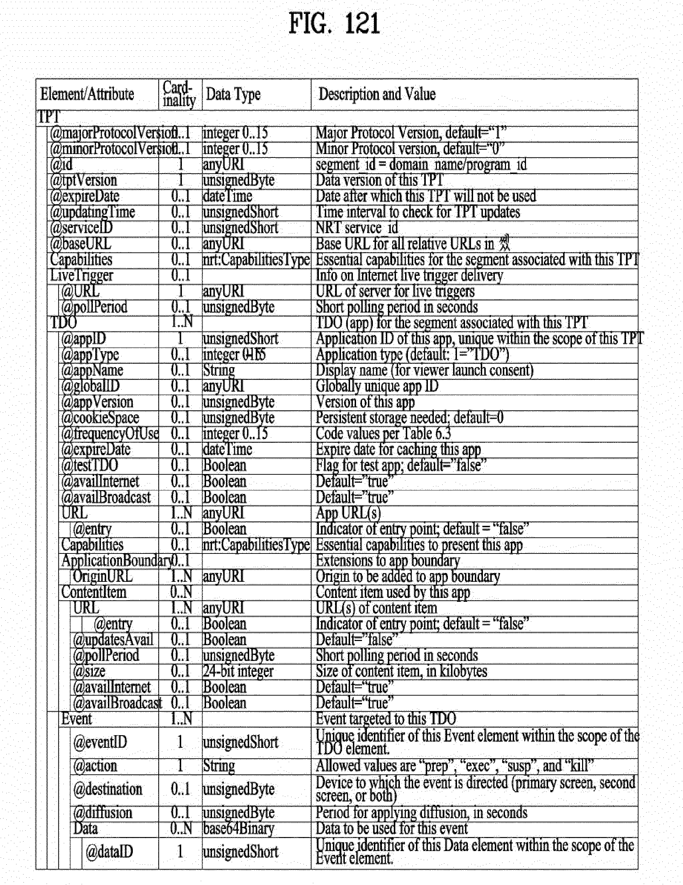

FIG. 121 illustrates the syntax of triggering application information according to an embodiment of the present invention.

As described above, the triggering application information may be referred to as TPT. The triggering application information may signal a corresponding application corresponding to all program segments or some program segments according to time. In this case, the program segment may indicate a time period including a program.

The triggering application information may include protocol version information indicating a protocol version of triggering application information. In detail, the triggering application information may include major protocol version information indicating main version information of a protocol and minor protocol version information indicating additional version information of a protocol. In this case, the major protocol version information may correspond to a 3-bit integer. When the broadcast receiving apparatus 100 is not capable of supporting any one of the major protocol version information and the minor protocol information, the broadcast receiving apparatus 100 may disregard the triggering application information. The major protocol version information may be referred to as MajorProtocolVersion. The minor protocol version information may be referred to as MinorProtocolVersion. In a detailed embodiment, the major protocol version information may be a 3-bit element. The minor protocol version information may be a 4-bit element.

The triggering application information may include an identifier for identifying the triggering application information. In detail, the triggering application information may be an identifier for identifying a program segment. In a detailed embodiment, the identifier for identifying the program segment may be generated by combining a domain name and a program ID. For example, the identifier may be domain_name/program_id.

The triggering application information may include version information for indicating an update history of the triggering application information. A value of the version information may be changed whenever the triggering application information is changed. The broadcast receiving apparatus 100 may determine whether detailed information included in the triggering application information is extracted based on the version information. In a detailed embodiment, the version information may be referred to as tptVersion. In a detailed embodiment, the version information may be an 8-bit element.

The triggering application information may include expiration time information indicating expiration date and time of the triggering application information. In detail, the broadcast receiving apparatus 100 may store the triggering application information and reuse the triggering application information prior to the expiration date and time indicated by the expiration time information. In a detailed embodiment, the expiration time information may be referred to as expirationDate. In a detailed embodiment, the expiration time information may be a 16-bit element.

The triggering application information may include time interval information indicating a time interval for checking update of the triggering application information. In detail, the broadcast receiving apparatus 100 may update the triggering application information at a time interval indicated by the time interval information. In a detailed embodiment, the time interval information may be referred to as updatingTime. In a detailed embodiment, the time interval information may be a 16-bit integer.

The triggering application information may include a service identifier for identifying a service including an application. In a detailed embodiment, the service identifier may indicate an identifier of an NRT service defined in the ATSC standard. In a detailed embodiment, the service identifier may be referred to as serviceId. In a detailed embodiment, the service identifier may be a 16-bit integer.

The triggering application information may include a base URL indicating a basic address of a URL included in the application information. In a detailed embodiment, the base URL may be referred to as baseURL.

The triggering application information may include capability information indicating capability required for presentation of an application signaled by the application information. The capability information may comply with a definition of capabilities descriptor defined in the ATSC standard. In a detailed embodiment, the capability information may be referred to as capabilities.

The triggering application information may include live trigger information that is generated in real time and transmitted via the Internet together with transmission of content. In detail, the live trigger information may include a URL of a server for transmitting a live trigger. The live trigger information may include a polling period when a live trigger is transmitted using a polling method. In a detailed embodiment, the live trigger information may be referred to as LiveTrigger. In addition, a URL of a server for transmitting the live trigger may be referred to as a URL. In addition, the polling period may be referred to as pollPeriod.

The triggering application information may include information on an application. The application information may include detailed information on an application as a sub-element. In a detailed embodiment, the application information may be referred to as TDO.

The application information may include an application identifier for identifying an application. In a detailed embodiment, the application identifier may be referred to as appID. In a detailed embodiment, the application identifier may be a 16-bit element.

The application information may include application type information indicating a type of an application. In a detailed embodiment, when a value of the application type information is 1, the application type information may indicate TDO. In a detailed embodiment, the application type information may be referred to as appType. In a detailed embodiment, application type information may be a 16-bit element.

The application information may include application name information indicating a name of an application. In a detailed embodiment, the application name information may be referred to as appName.

The application information may include a global identifier for globally uniquely identifying an application. The global identifier may be used to indicate the same application as in other application information as well as corresponding triggering application information. In a detailed embodiment, the global identifier may be referred to as globalID.

The application information may include application version information that is version information indicating an update history of an application. In a detailed embodiment, the application version information may be referred to as appVersion. In a detailed embodiment, the appVersion may be an 8-bit element.

The application information may include cookie space information indicating a size of a persistent storage space required to execute an application by the broadcast receiving apparatus 100. The cookie space information may indicate a size of a storage space required to execute an application in kilobytes. In a detailed embodiment, the cookie space information may be referred to as cookieSpace. In a detailed embodiment, the cookie space information may be an 8-bit element.

The application information may include use frequency information indicating a use frequency of an application. The use frequency information may indicate at least one of only once, every time, every day, every week, and every month. In a detailed embodiment, the use frequency information may have a value of 1 to 16. In a detailed embodiment, the use frequency information may be referred to as frequencyOfUse.

The application information may include expiration time information indicating expiration time and date of an application. In a detailed embodiment, expiration time information may be referred to as expireDate.

The application information may include test application information indicating an application for test broadcast. The broadcast receiving apparatus 100 may disregard an application for test broadcast based on test application information. In a detailed embodiment, the test application information may be referred to as testTDO. In a detailed embodiment, the test application information may be a Boolean element.

The application information may include Internet available information indicating that an application is capable of being received through the Internet. In a detailed embodiment, the Internet available information may be referred to as availableInternet. In a detailed embodiment, the Internet available information may be a Boolean element.

The application information may include broadcast available information indicating that an application is capable of being received through a broadcast network. In a detailed embodiment, the broadcast available information may be referred to as availableBroadcast. In a detailed embodiment, the broadcast available information may be a Boolean element.

The application information may include URL information for identifying a file as a part of an application. In a detailed embodiment, the application information may be referred to as URL.

The URL information may include entry information indicating whether a corresponding file is an entry file. In detail, the entry file may indicate a file to be first executed in order to execute a corresponding application.

The application information may include capability information indicating necessary capability information required for presentation of an application. In a detailed embodiment, the capability information may be referred to as Capabilities.

The application information may include application boundary information indicating a boundary of an application. In a detailed embodiment, the application boundary information may be referred to as ApplicationBoundary.

The application boundary information may include origin URL information required to add a boundary of an application. The origin URL information may be referred to as originURL.

The application information may include content item information indicating information on a content item used by an application. The content item information may include detailed information content item. In a detailed embodiment, the content item information may be referred to as contentItem.

The content item may include URL information for identifying a file as a part of a corresponding content item. The URL information may be referred to as URL.

The URL information may include entry information indicating whether a corresponding file is an entry content file. In detail, the entry file may indicate a file to be first executed in order to execute a corresponding content item. In a detailed embodiment, the entry information may be referred to as entry.

The content item information may include update information indicating whether a corresponding content item is capable of being updated. In detail, the update information may indicate whether a content item includes a fixed file or the content item is real time data feed. In a detailed embodiment, the update information may be referred to as updateAvail. The update information may be a Boolean element.

The content item information may include a polling period when the content item is updated and when whether a file included in the content item is updated is checked using a polling method. In detail, the broadcast receiving apparatus 100 may check whether the content item is updated based on the polling period. The polling period may be referred to as pollPeriod.

The content item information may include size information indicating a size of the content item. In a detailed embodiment, the size information may indicate a size of the content item in a kilo byte. The size information may be referred to as a size.

The content item information may include Internet available information indicating that the content item is capable of being received through the Internet. In a detailed embodiment, the Internet available information may be referred to as availableInternet. In a detailed embodiment, the Internet available information may be a Boolean element.

The content item information may include broadcast available information indicating that the content item is capable of being received through a broadcast network. In a detailed embodiment, the broadcast available information may be referred to as availableBroadcast. In a detailed embodiment, the broadcast available information may be a Boolean element.

The application information may include event information indicating information on an event of an application. In a detailed embodiment, the event information may be referred to as event.

The event information may include an event identifier for identifying an event. In detail, the event identifier may uniquely identify an event within a corresponding application range. In a detailed embodiment, the event identifier may be referred to as eventID. In a detailed embodiment, the event identifier may be a 16-bit element.

The event information may include action information indicating an operation of an event. In detail, the event information may include preparing, execution, termination or kill, and/or suspending. In a detailed embodiment, the action information may be referred to as an action.

The event information may include destination information indicating target information targeted by an application. The destination information may indicate that an application is used only for a primary device for receiving a broadcast signal. The destination information may indicate that an application is used only for one or more associated devices that are operatively associated with a primary device for receiving a broadcast signal. The destination information may indicate that an application is used for both a primary device and an associated device. In a detailed embodiment, the destination information may be referred to as destination.

The event information may include diffusion information for diffusion of a triggering application information request. In detail, the broadcast receiving apparatus 100 may calculate a random value based on diffusion information, may be on standby by as much as the random value and, then may make a request for the triggering application information to a server. In detail, the broadcast receiving apparatus 100 may be on standby by as much as a value obtained by multiplying the random value by 10 ms and then may make a request for the triggering application information to the server. In a detailed embodiment, the diffusion information may be referred to as diffusion. In a detailed embodiment, the diffusion information may be an 8-bit element.

The event information may include data information indicating data associated with an event. Each event may have a data element associated with an event. In a detailed embodiment, the data information may be referred to as data.

The data information may include a data identifier for identifying data. The data identifier may be referred to as dataID. The data identifier may be a 16-bit element.

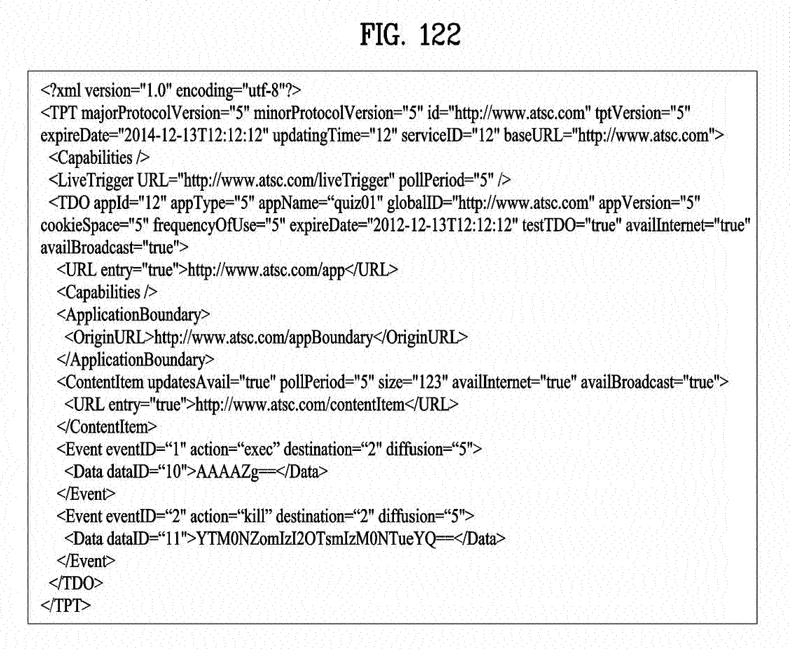

FIG. 122 illustrates XML format of triggering application information according to an embodiment of the present invention.

Referring to the drawing, an embodiment of XML of attribute information related to an application and/or triggering application information (application property) of a next-generation hybrid broadcast system is illustrated.

The xml version may indicate "1.0". The encoding may indicate "utf-8".

The majorProtocolVersion of the TPT may indicate "5". The minorProtocolVersion of the TPT may indicate "5". An ID of the TPT may indicate "http://www.atsc.com". The tptVersion of the TPT may indicate "5". The expireDate of the TPT may indicate "2014-12-13T12:12:12". The updatingTime of TPT may indicate "12". The serviceID of the TPT may indicate "12". The baseURL of the TPT may indicate http://www.atsc.com.

The Capabilities of the TPT may indicate a default value.

The LiveTrigger URL of the TPT may indicate "http://www.atsc.com/liveTrigger". The pollPeriod of the TPT may indicate "5".

The appId of the TDO may indicate "12". The appType of the TDO may indicate "5". The appName of the TDO may indicate "quiz01". The globalID of the TDO may indicate http://www.atsc.com. The appVersion of the TDO may indicate "5". The cookieSpace of the TDO may indicate "5". The frequencyOfUse of the TDO may indicate "5". The expireDate of the TDO may indicate "2012-12-13T12:12:12". The testTDO of the TDO may indicate "true". The availInternet of the TDO may indicate "true". The availBroadcast of the TDO may indicate "true".

An entry of URL of the TDO may indicate "true". The URL of the TDO may indicate "http://www.atsc.com/app".

The Capabilities of the TDO may indicate a default value.

The ApplicationBoundary of the TDO may include OriginURL.

The OriginURL of the TDO may indicate "http://www.atsc.com/appBoundary".

The updatesAvail of the content item may indicate "true". The pollPeriod of a content item may indicate "5". A size of the content item may indicate "123". The availInternet of the content item may indicate "true". The availBroadcast of the content item may indicate "true".

An entry of a URL of the content item may indicate "true". The URL of the content item may indicate http://www.atsc.com/contentItem.

The TDO may include a first event and a second event.

The eventide of the first event may indicate "1". An action of the first event may indicate "exec". A destination of the first event may indicate "2". Diffusion of the first event may indicate "5".

The dataID of data of the first event may indicate "10". Data of the first event may indicate "AAAAZg==".

The eventID of the second event may indicate "2". An action of the second event may indicate "kill". A destination of the second event may indicate "2". Diffusion of the second event may indicate "5".

The dataID of data of the second event may indicate "11". Data of the second event may indicate "YTM0NZomIzI2OTsmIzM0NTueYQ==".

In hybrid broadcast, media content may be transmitted using an MPEG-DASH protocol and an MMT protocol as described above. During transmission of the media content, it may be necessary to transmit a trigger for triggering an application associated with the media content. Accordingly, there is a method of transmitting a trigger using the MPEG-DASH protocol and the MMT protocol, which will be described with reference to the drawings below.

The MPEG-DASH may define an event in order to transmit aperiodic information to a DASH client or an application. The MPEG-DASH may define a related event sequence as an event stream. In detail, an event of the MPEG-DASH may be used to transmit timed information to be transmitted according to a specific time. In this case, detailed information included in the event of the MPEG-DASH may be a message of the event. The event of the MPEG-DASH may be transmitted through the MPD. The event of the MPEG-DASH may be transmitted through an inband of representation. The broadcast transmitting apparatus 100 may transmit a trigger for triggering an application as an event of the MPEG-DASH.

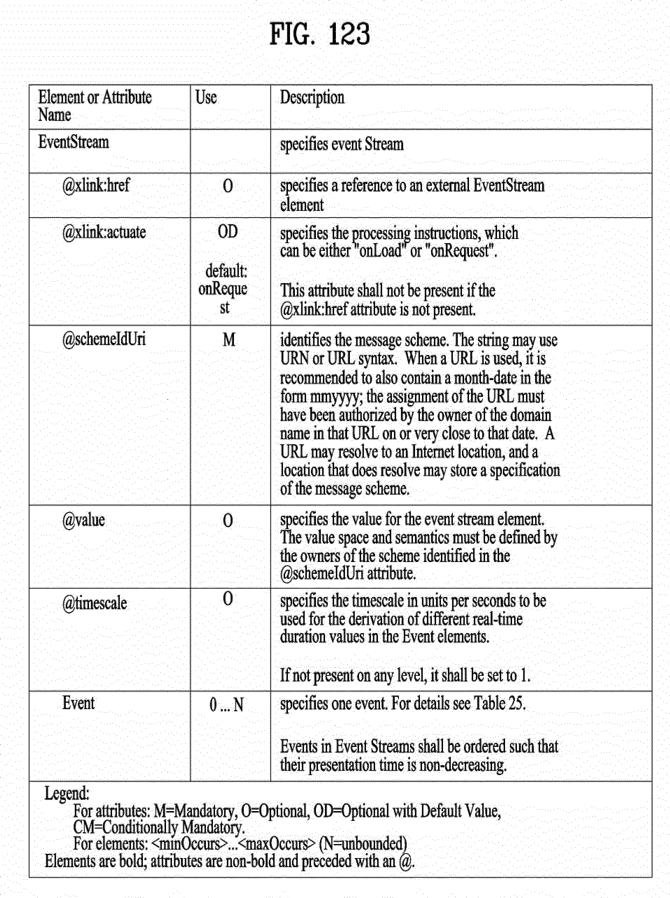

Transmission of the event of the MPEG-DASH through the MPD will be described below with reference to FIGs. 123 to 124.

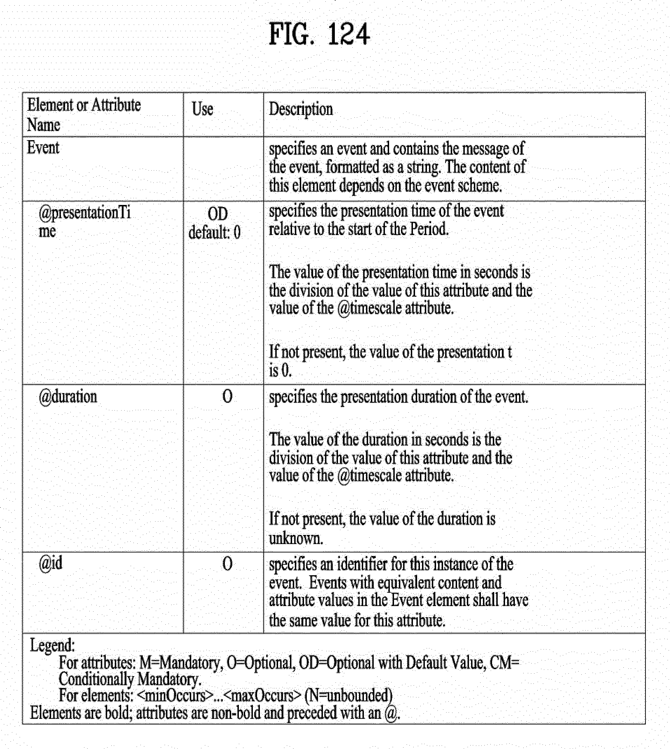

FIG. 123 illustrates the syntax of an event stream element including an MPD according to an embodiment of the present invention. FIG. 124 illustrates the syntax of an event element of an event stream element included in the MPD according to an embodiment of the present invention.

Presentation time of an event sequence of the MPEG-DASH may be provided at a period level. In detail, the period element of the MPD may include an event stream element indicating information on an event stream. The broadcast receiving apparatus 100 may terminate an event when termination time of a period including an event elapses. In particular, even if an event is started at a boundary time of a period, the broadcast receiving apparatus 100 may also terminate the event when the termination time of the period including the event elapses.

The period element may include an event stream element including information on an event stream. In a detailed embodiment, the event stream element may be referred to as an event stream.

The event stream element may include a format identifier element for identifying format of a message included in an event. In a detailed embodiment, the format identifier element may be referred to as schemeIDUri.

The event stream element may include a value element indicating a value for an event stream. In a detailed embodiment, value attribute may be referred to as a value.

When an event including an event stream is a timed event, the event stream element may include time scale attribute indicating a time unit. In a detailed embodiment, the time scale attribute may be referred to as a timescale.

The event stream element may specify each event and include an event element including a message that is information of the event. In a detailed embodiment, the event element may be referred to as an event.

The event element may include presentation start time attribute indicating presentation start time of an event.

In detail, the presentation start time attribute may indicate relative presentation start time based on the period start time. When the presentation start time attribute is not present, a value of the presentation start time may be 0. In a detailed embodiment, the presentation start time attribute may be referred to as presentationTime.

The event element may include presentation duration attribute indicating event presentation duration. When the presentation duration attribute is not present, a value of the presentation duration may be unknown. In a detailed embodiment, the presentation duration attribute may be referred to as duration.

The event element may include identifier attribute for identifying an event. Events with the same content and events with the same attribute value of an event element may have the same identifier element value.

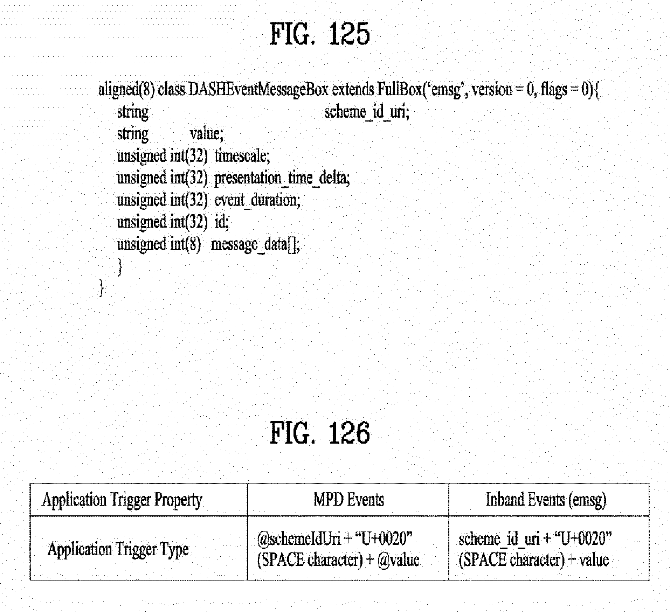

Transmission of an event of the MPEG-DASH through an inband stream will be described with reference to FIG. 125.

FIG. 125 illustrates the syntax of an event message box for inband event signaling according to an embodiment of the present invention.

The broadcast server 10 may multiplex an event stream of the MPEG-DASH together with representation. In detail, the broadcast server 10 may multiplex the event stream of the MPEG-DASH as a part of a segment together with representation.

The event stream of the MPEG-DASH may be inserted into selected representation. In a detailed embodiment, the broadcast server 10 may insert an event stream into partial representation included in an adaptation set. In another detailed embodiment, the broadcast server 10 may insert the event stream into all representation included in the adaptation set.

The inband event stream included in representation may be represented by an inband event stream element included in the adaptation set or representation level. In a detailed embodiment, the inband event stream element may be referred to as InbandEventStream. In a detailed embodiment, one representation may include a plurality of inband event streams. Each of the plurality of inband event streams may be represented by a separate inband event stream element.

An event message box 'emsg' may provide signaling for a general event related to media presentation time. The event message box may signal a specific operation related to the DASH operation. When a media segment is encapsulated in the form of ISO BMFF, the media segment may include one or more event message boxes. The event message box may be positioned prior to a moof box 'moof'.

A scheme of the event message box may be defined in the MPD. The broadcast receiving apparatus 100 may disregard the event message box with a scheme that is not defined in the MPD.

The event message box may include a scheme identifier field for identifying a scheme of the event message box. In a detailed embodiment, the scheme identifier field may be referred to as shceme_id_uri.

The event message box may include a value field indicating a value of an event. A value of the value field may have a different scheme and meaning according to a scheme identified according to a scheme identifier field. In a detailed embodiment, the value field may be referred to as a value.

The event message box may include a time scale field indicating a unit of time related to the event message box. In detail, the event message box may indicate a presentation start time delay field including the event message box and a time unit of the presentation duration field. In a detailed embodiment, the time scale field may be referred to as timescale.

The event message box may include a presentation start time delay field indicating a degree by which presentation start time of an event is delayed from an earliest presentation time of a segment. In detail, the broadcast receiving apparatus 100 may extract earliest presentation time of a segment from a segment index box 'sidx'. In this case, the broadcast receiving apparatus 100 may add time indicated by the presentation start time delay field to the segment presentation time to acquire event presentation start time. In a detailed embodiment, the event presentation start time may be referred to as presentation_time_delta.

The event message box may include an event presentation duration field indicating presentation duration of an event. When a value of the event presentation duration field is 0xffff, this may indicate that the event presentation duration is unknown. In a detailed embodiment, the event presentation duration may be referred to as event_duartion.

The event message box may include identifier attribute for identifying an event. Events with the same content and events with the same attribute value of the event message box may have the same identifier element value.

The event message box may include a message data field indicating a body of the message box. Data of the message data field may be changed according to a scheme of the message box.

Attribute of a trigger may be matched with the event message box indicating the inband event stream and an element of the MPD indicating an event stream of the MPEG-DASH and the application signaling information may be transmitted, which will be described below.

First, for clarity for distinguishing terms, an event of MPEG-DASH and an event described with regard to the triggering application information will be described. The event of the MPEG-DASH may be additional information related to media time for aperiodic transmission to a DASH client and/or an application. The event described with regard to the triggering application information may indicate a time for triggering by a trigger. In detail, the event triggered by the trigger may indicate that an application performs a specific operation. In addition, the event triggered by the trigger may indicate a state change of an application. For distinguishing between the event of the MPEG-DASH and the event triggered by the trigger, the event triggered by the trigger will be referred to as a triggering event. In detail, the triggering event may indicate an event that is generated by the trigger.

FIG. 126 illustrating a matching relationship of trigger attribute, the MPD element, and the event message box, for signaling trigger type information, according to an embodiment of the present invention.

The trigger type information may indicate a type of a trigger for triggering an application. For example, the trigger type information may include at least one of a trigger for signaling a position of triggering application information (i.e. TPT), a trigger for signaling a state of an application, a trigger for signaling an action of an application, and/or a trigger for signaling media time.

The broadcast server 10 may transmit the trigger type information as the event of the MPEG-DASH. In this case, the scheme identifier element included in the event stream element of the MPD may include information for identifying a scheme of a message included in the event. For example, the scheme identifier element may include information using syntax of uniform resource name (URN) or uniform resource locator (URL). The value element included in the event stream element of the MPD may include a value for the event stream. For example, the value element may include trigger type information indicating a type of a trigger for triggering an application. The broadcast receiving apparatus 100 may receive the trigger type information based on the event stream element of the MPD. In detail, the broadcast receiving apparatus 100 may extract a scheme identifier element and/or a value element from the event stream element of the MPD and receive the trigger type information.

In another detailed embodiment, a scheme identifier field included in the event message box may include information for identifying a scheme of the event message box. for example, the scheme identifier field may include information using syntax of uniform resource name (URN) or uniform resource locator (URL). The value field including the event message box may include a value of an event. For example, the value field may include trigger type information indicating a type of a trigger for triggering an application. The broadcast receiving apparatus 100 may receive the trigger type information based on the event message box. In detail, the broadcast receiving apparatus 100 may extract a scheme identifier field and/or value field of the event message box and receive trigger type information.

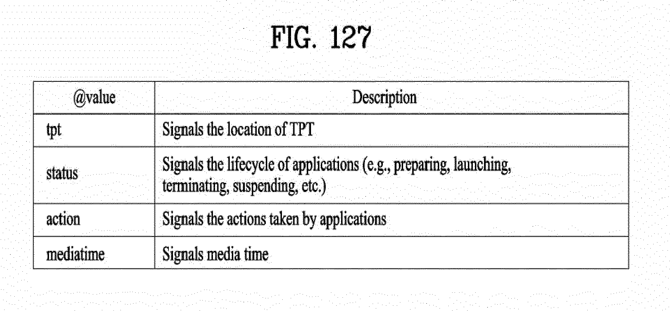

FIG. 127 illustrates trigger type information according to an embodiment of the present invention.

The trigger type information may indicate a type of a trigger for triggering an application. For example, the trigger type information may include at least one of a trigger for signaling a location of triggering application information (i.e. TPT), a trigger for signaling a state of an application, a trigger for signaling an action of an application, and/or a trigger for signaling media time.

According to an embodiment of the present invention, the broadcast server 10 may identify the trigger type information based on a value field of the value element and/or the event message box of the event stream element of the MPD and transmit the trigger type information to the broadcast receiving apparatus 100. Hereinafter, the value element and/or the value field value will be referred to as value information. A value corresponding to the value information may be changed and/or added.

For example, when the value information indicates "tpt", the trigger type information may indicate a trigger for triggering a location of the triggering application information (i.e. TPT). The location of the triggering application information may be represented in the form of a uniform resource identifier (URI). The URI may include uniform resource locator (URL) and/or uniform resource name (URN). The URL may be information indicating a location of a network of web resource. The URN may be information for identifying resource according to a name of a specific namespace. When the URN indicates a location in On-line, a location of the triggering application information may be represented as "http://[domain]/[directory]". When the URN indicates a location on a session (e.g. FLUTE session, ROUTE session, and ALC/LCT session), the location of the triggering application information may be represented as "file://[ip_address]/[path]". That is, the scheme identifier element and/or the scheme identifier field may be represented as http://[domain]/[directory] and/or "file://[ip_address]/[path]".

When the value information indicates "status", the trigger type information may indicate a trigger for signaling a status (or lifecycle) of an application. The status of the application may include at least one of preparing, execution, termination, and/or suspending.

When the value information indicates "action", the trigger type information may indicate a trigger for signaling an action of an application.

When the value information indicates "mediatime", the trigger type information may indicate a trigger for signaling media time.

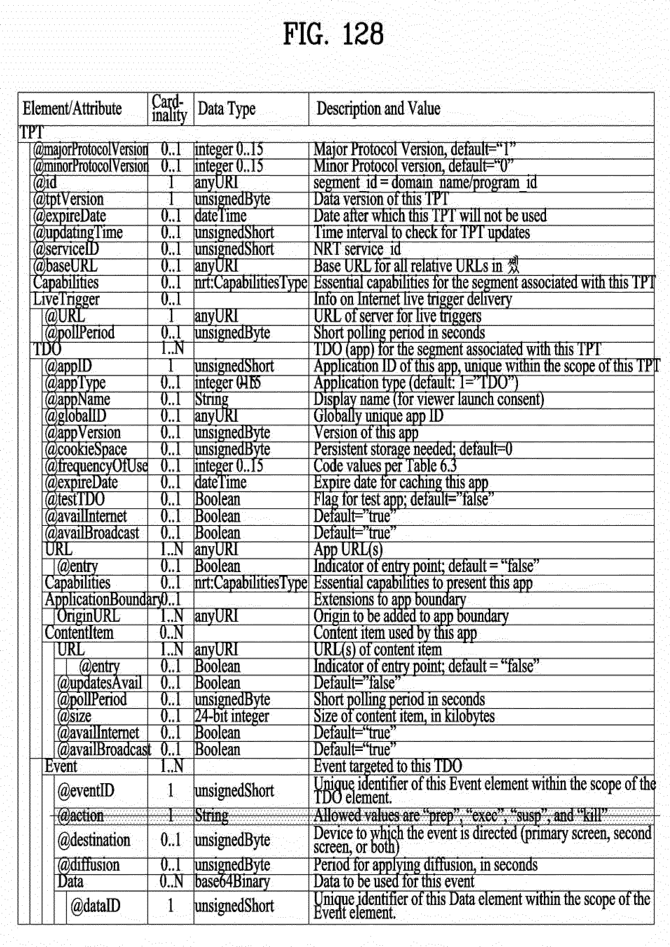

FIG. 128 illustrates the syntax of triggering application information according to an embodiment of the present invention.

According to an embodiment of the present invention, in a next-generation hybrid broadcast system, when the broadcast server 10 transmits trigger type information using a trigger, action information may be omitted from the aforementioned triggering application information.

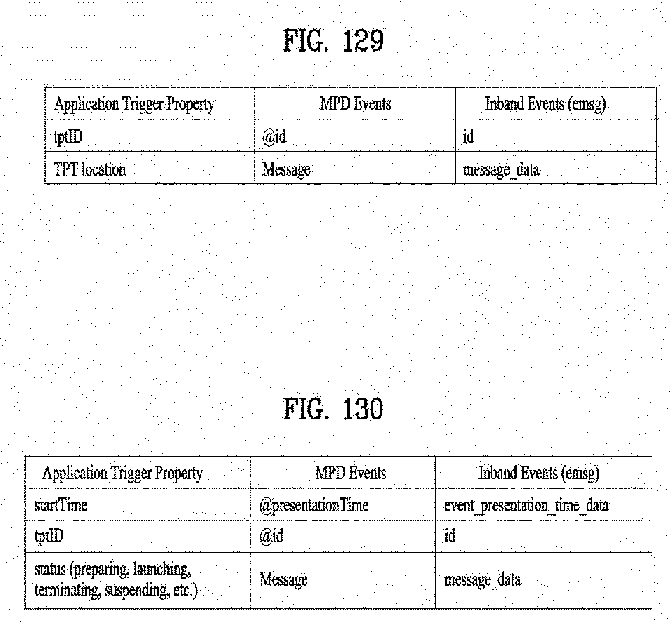

FIG. 129 illustrates a matching relationship of trigger attribute, the MPD element, and the event message box, for signaling a position of information on a triggered application, according to an embodiment of the present invention.

The broadcast server 10 may transmit a position of the triggering application information as an event of MPEG-DASH. In this case, the identifier attribute included in the event element of the MPD may indicate an identifier for identifying the triggering application information. In addition, the position of the event may indicate a position of the triggering application information. The broadcast receiving apparatus 100 may receive triggering application information based on the event element. In detail, the broadcast receiving apparatus 100 may extract a position of the triggering application information from a message of the event and receive triggering application information.

In another detailed embodiment, an identifier field included in the event message box may indicate an identifier for identifying triggering application information. The message data field included in the event message box may indicate a position of the triggering application information. The broadcast receiving apparatus 100 may receive triggering application information based on the event message box. In detail, the broadcast receiving apparatus 100 may extract a position of the triggering application information from the message data field of the event message box and receive the triggering application information.

As described above, the triggering application information may be TPT.

FIG. 130 illustrates a matching relationship of trigger attribute, the MPD element, and the event message box, for signaling a status of an application, according to an embodiment of the present invention.

The broadcast server 10 may transmit the status of the application as an event of MPEG-DASH. In this case, the presentation start time element included in the event element of MPD may indicate start time of the triggering event. The identifier attribute included in the event element of the MPD may indicate an identifier for identifying the triggering application information. A message included in the event element may indicate a status of an application. The broadcast receiving apparatus 100 may change the application status based on the event element. In detail, the broadcast receiving apparatus 100 may extract the application status from the message included in the event element and change the application status. In detail, the broadcast receiving apparatus 100 may extract a state of an application from a message included in an event element, extract event start time from the presentation start time element, and change the state of the application at start time of the triggering event.

In another detailed embodiment, a presentation start delay time field including the event message box may indicate start tie of the triggering event. An identifier field including the event message box may indicate an identifier for identifying the triggering application information. A message data field included in the event message box may indicate a state of an application. The broadcast receiving apparatus 100 may change a state of the application based on the event message box. In detail, the broadcast receiving apparatus 100 may extract the state of the application from the message data field of the event message box and change the state of the application. In a detailed embodiment, the broadcast receiving apparatus 100 may extract the state of the application from the message data field of the event message box, extract start time of the triggering event from the presentation start time delay field, and change the state of the application at start time of the triggering event.

The state of the application may indicate at least one of preparing, execution, termination, and suspending.

As described above, the triggering application information may be TPT.

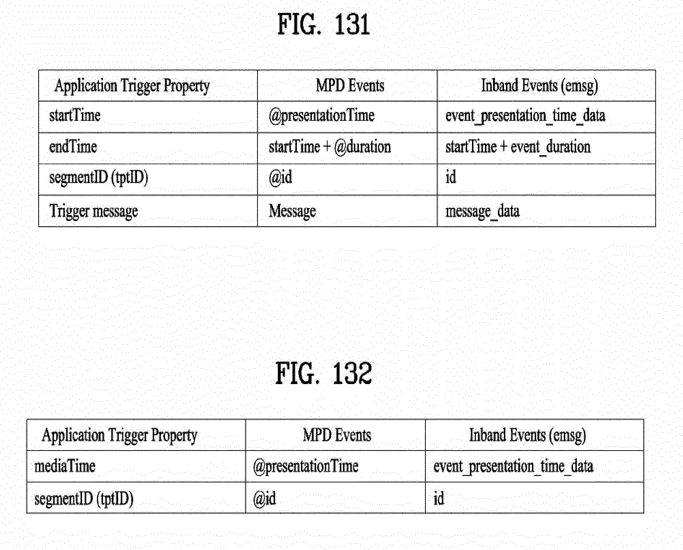

FIG. 131 is a matching relationship of trigger attribute, an MPD element, and an event message box, for signaling an action of an application, according to an embodiment of the present invention.

The broadcast server 10 may transmit an action of an application as an event of MPEG-DASH. In this case, a presentation start time element included in an event element of MPD may indicate start time of the triggering event. The presentation duration element included in the event element of the MPD may indicate a difference between start time of the triggering event and termination time of the triggering event. In another detailed embodiment, the presentation duration element included in the event element of MPD may indicate termination time of the triggering event. The identifier attribute included in the event element of MPD may indicate an identifier for identifying the triggering application information. A message included in the event element may indicate a carried-out action of an application. In detail, the message included in the event element may include at least one of an application identifier for identifying a triggered application, an identifier of an event for identifying a triggering event, and a data identifier for identifying data. In detail, the message included in the event element may have the aforementioned trigger format. In this case, the message included in the event element may not include start time of the triggering event included in the aforementioned attribute, termination time of the triggering event, and an identifier for identifying the program segment. For example, the message included in the event element may be xbc.tv/e12?e=7.5. The broadcast receiving apparatus 100 may perform the action of the application based on the event element. In detail, the broadcast receiving apparatus 100 may extract the action of the application from the message included in the event element and perform the action of the application. In detail, the broadcast receiving apparatus 100 may extract the action of the application from the message included in the event element, extract start time of the triggering event from the presentation start time element, and perform the action of the application at start time of the triggering event. In a detailed embodiment, the broadcast receiving apparatus 100 may extract the action of the application from the message included in the event element, extract start time of the triggering event from the presentation start time element, and perform the action of the application prior to termination time of the triggering event after start time of the triggering event. The broadcast receiving apparatus 100 may disregard the event message of MPEG-DASH upon receiving the MPEG-DASH event message after the termination time of the triggering event.

In another detailed embodiment, a presentation start delay time field including the event message box may indicate start time of the triggering event. The presentation duration field included in the event message box of the MPD may indicate a difference between start time of the triggering event and termination time of the triggering event. In another detailed embodiment, a presentation duration field including the event message box of the MPD may indicate termination time of the triggering event. The identifier field included in the event message box may indicate an identifier for identifying the triggering application information. The message data field included in the event message box may indicate the action of the application. In detail, the message data field included in the event message box may include at least one of an application identifier for identifying a triggered application, an identifier of an event for identifying a triggering event, and a data identifier for identifying data. In detail, the message data field included in the event message box may have the aforementioned trigger format. In this case, the message data field included in the event message box may not include start time of a triggering event included in the aforementioned attribute, termination time of the triggering event, and an identifier for identifying the program segment. For example, the message data field included in the event message box may be xbc.tv/e12?e=7.5. The broadcast receiving apparatus 100 may perform the action of the application based on the event message box. In detail, the broadcast receiving apparatus 100 may extract the action of the application from the message data field of the event message box and perform the action of the application. In a detailed embodiment, the broadcast receiving apparatus 100 may extract the action of the application from the message data field of the event message box, extract start time of the triggering event from the presentation start time delay field, and perform the action of the application at start time of the triggering event. In a detailed embodiment, the broadcast receiving apparatus 100 may extract the action of the application from the message data field of the event message box, extract start time of the triggering event from the presentation start time delay field, and perform the action of the application prior to termination time of the triggering event after start time of the triggering event. The broadcast receiving apparatus 100 may disregard the event message box upon receiving the event message box after termination time of the triggering event.

FIG. 132 is a matching relationship of trigger attribute, an MPD element, and an event message box, for signaling media time, according to an embodiment of the present invention.

The broadcast server 10 may transmit media time of content as an event of MPEG-DASH. In this case, the presentation start time element included in the event element of MPD may indicate media time of the content. In this case, the content may be content presented by the broadcast receiving apparatus 100. The identifier attribute included in the event element of the MPD may indicate an identifier for identifying the triggering application information. The broadcast receiving apparatus 100 may extract media time of content based on the event element. The broadcast receiving apparatus 100 may generate a time line as a reference of synchronization between a triggering event and content based on the media content of the content. In detail, the broadcast receiving apparatus 100 may extract the media time of the content from the presentation start time element included in the event element and generate a time line as a reference of synchronization between the triggering event and the content.

The presentation start time delay field included in the event message box of MPD may indicate media time of the content. In this case, the content may be content presented by the broadcast receiving apparatus 100. The identifier attribute included in the event element of MPD may indicate an identifier for identifying the triggering application information.

The broadcast receiving apparatus 100 may extract media time of the content based on the event message box. The broadcast receiving apparatus 100 may generate a time line as a reference of synchronization between the triggering event and the content based on the media time of the content. In this case, the content may be content presented by the broadcast receiving apparatus 100. In detail, the broadcast receiving apparatus 100 may extract media time of content from the presentation start time delay field included in the event message box and generate a time line as a reference of synchronization between the triggering event and the content.

Thereby, the broadcast receiving apparatus 100 may synchronize content and triggering event even if the media time information included in the content is not extracted.

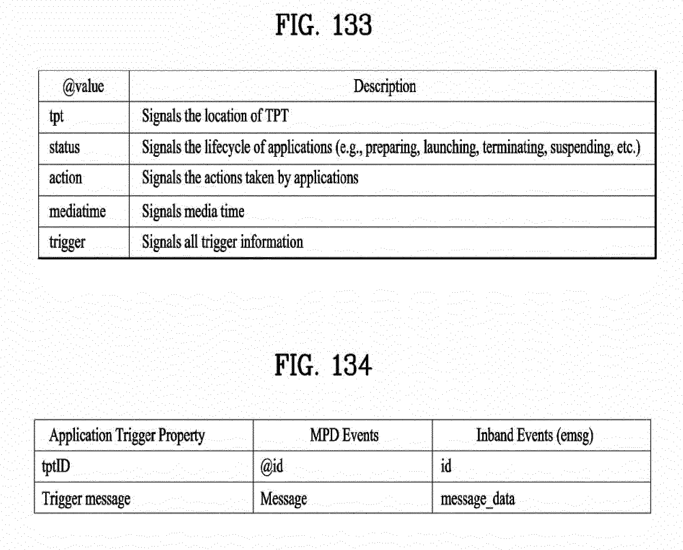

FIG. 133 illustrates definition of value attribute for signaling all trigger attributes as one event according to an embodiment of the present invention.

In order to transmit a trigger as an event of MPEG-DASH, an event element may indicate a type of information signaled by a trigger. In detail, value attribute included in the event stream element may indicate that a trigger included in the message of an event signals a position of the triggering application information. In this case, a value of the value attribute may be tpt. The value attribute included in the event stream element may indicate that a trigger included in the message of the event signals a state of the application. In this case, the value of the value attribute may be status. The value attribute included in the event stream element may indicate that a trigger included in the message of the event signals the action of the application. In this case, the value of the value attribute may be an action. The value attribute included in the event stream element may indicate that a trigger included in the message of the event signals media time of the content. In this case, the value of the value attribute may be mediatime. The value attribute included in the event stream element may indicate that all information items included in the trigger included in the message of the event are included. In this case, the value of the value attribute may be a trigger.

In another detailed embodiment, the value field included in the event message box may indicate that a trigger included in the data message field of the event message box signals a position of the triggering application information. In this case, the value of the value field may be tpt. The value field included in the event message box may indicate that a trigger included in the data message field of the event message box signals a state of the application. In this case, the value of the value field may be status. The value field included in the event message box may indicate that a trigger included in the data message field of the event message box signals the action of the application. In this case, the value of the value field may be action. The value field included in the event message box may indicate that a trigger included in the data message field of the event message box signals media time of content. In this case, the value of the value field may be mediatime. The value field included in the event message box may indicate that all trigger attributes included in a trigger of the data message field of the event message box are included. In this case, the value of the value field may be trigger, which will be described below in detail.

FIG. 134 illustrates a matching relationship of identifier attribute and message attribute of an event element, an identifier field of an event message box, and a message data field, for signaling all trigger attributes as one event, according to an embodiment of the present invention.

As described above, all attributes to be included in a trigger may be signal as one event of MPEG-DASH.

When value information indicates "trigger", the trigger type information may indicate a trigger for signaling all trigger attributes as one event.

In detail, the message of the event of the MPEG-DASH may include at least one of an identifier for identifying a triggered application, an identifier for identifying a triggering event, an identifier for identifying data, start time of a triggering event, and termination time of the triggering event.

In this case, the identifier attribute of the event element may indicate an identifier for identifying triggering application information. The message included in the event element may include a trigger itself. In detail, the message of the event element may have the aforementioned trigger format. The message included in the event element may be timed text format of trigger.

The identifier field of the event message box may indicate an identifier for identifying the triggering application information. The message data field included in the event message box may include a trigger itself. In detail, the message data field included in the event message box may include the aforementioned format of trigger. The message data field included in the event message box may include the timed text format of trigger.

Thereby, the broadcast server 10 may transmit a plurality of trigger attributes through one MPEG-DASH event message. The broadcast receiving apparatus 100 may acquire a plurality of trigger attributes through one MPEG-DASH event message.

A trigger may be signaled through an MMT protocol, which will be described with reference to the following drawings.

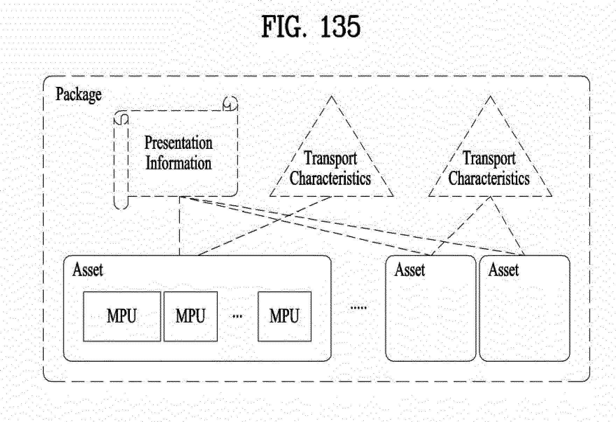

FIG. 135 illustrates a configuration of a package of an MMT protocol according to an embodiment of the present invention.

As described above, an MMT protocol may be used as a protocol for transmitting media content by hybrid broadcast. Transmission of media content through an MMT protocol will be described with regard to package, asset, a media processing unit (MPU), and presentation information (PI).

The package may be a logical unit of content transmitted through the MMT protocol. In detail, the package may include a PI and an asset.

The asset may be an encoded media data unit included in the package. In a detailed embodiment, the asset may indicate an audio track included in the content. The asset may indicate a subtitle track included in the content. A service provider asset for providing the asset may include one or more MPUs.

The MPU may be a media processing unit of content transmitted according to an MMT protocol. In detail, the MPU may include a plurality of access units. The MPU may include different format of data such as MPEG-4 AVC or MPEG-TS.

PI may be aforementioned media content presentation information. In detail, the PI may include at least one of spatial information and temporal information required to consume the asset. In a detailed embodiment, the PI may be composition information defined n the ISO-IEC 23008-1.

The broadcast server 10 may transmit the package in an MMTP packet that is a transfer unit of the MMT protocol. A type included in a payload of the MMTP packet will be described with reference to the following drawings.

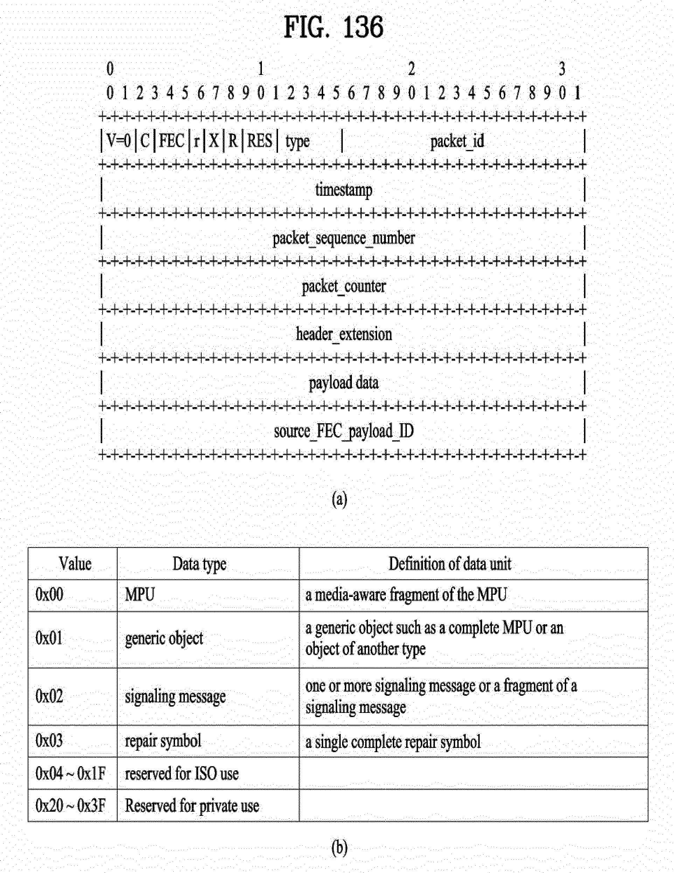

FIG. 136 illustrates a configuration of an MMTP packet and a type of data included in the MMTP packet according to an embodiment of the present invention.

According to an embodiment of the present invention, the MMTP packet may have the configuration illustrated in FIG. 112(a). In particular, the MMTP packet may indicate a type of data included in a corresponding packet through the field.

The MMTP packet may include a fragment of MPU in a payload. The MMTP packet may include a generic object indicating general data in a payload. In detail, the general object may be one complete MPU. In addition, the generic object may be a different type of object. The MMTP packet may include a signaling message in a payload. In detail, the MMTP packet may include one or more signaling messages. The MMTP packet may include a fragment of the signaling message. The signaling message may be a unit of signaling information for signaling media content transmitted according to an MMT protocol. The MMTP packet may include one repair symbol. In a detailed embodiment, the broadcast transmitting apparatus 100 may transmit application signaling information through the MMTP packet including a fragment of MPU. In detail, the broadcast transmitting apparatus 100 may transmit a trigger through the MMTP packet including the fragment of the MPU, which will be described below with reference to the following drawings.

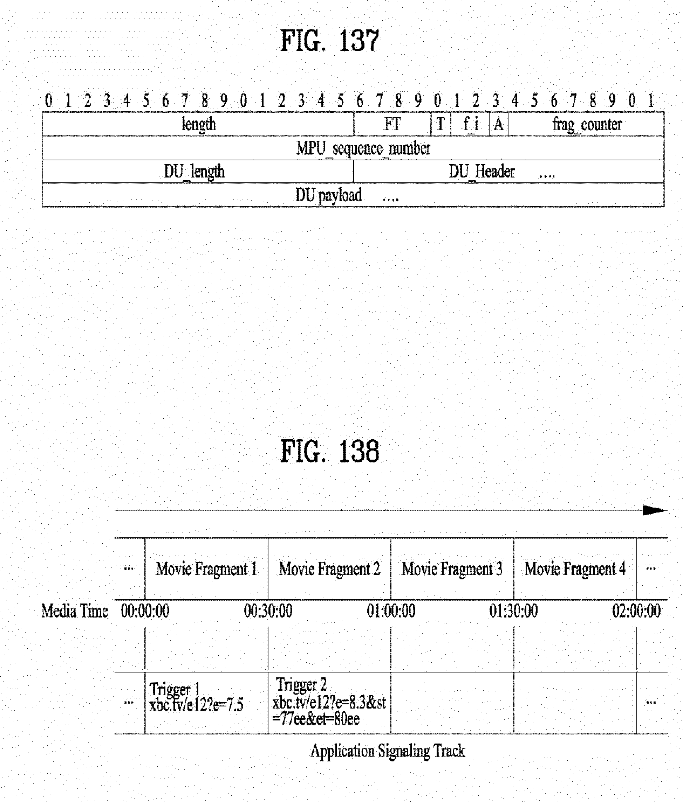

FIG. 137 illustrates the syntax of an MMTP payload header when an MMTP packet includes a fragment of MPU according to an embodiment of the present invention.

When the MMTP packet includes the fragment of the MPU, the payload header of the MMTP packet may include a length field indicating length information of the payload of the MMTP packet. In a detailed embodiment, the length field may be referred to as length. In a detailed embodiment, the length field may be a 16-bit field.

When the MMTP packet includes the fragment of the MPU, the payload header of the MMTP packet may include a type field indicating a type of MPU included in the payload of the MMPT packet. In detail, when the MMTP packet includes the fragment of the MPU, the payload of the MMTP packet may include at least one of a media fragment unit, an MPU metadata, and movie fragment metadata. The MPU metadata may include other boxes between ftyp, mmpu, moov, and ftyp, mmpu, moov of ISO BMFF. The movie fragment metadata may include a moof box and an mdat box from which the media data is excluded. The fragment unit may include at least one of a media data sample and a sub sample. In this case, the media data may be any one of timed media data presented at predetermined time or non-timed media data, of which presentation time is not determined. In a detailed embodiment, the type field may be referred to as FT. In a detailed embodiment, the type field may be a 4-bit field.

When the MMTP packet includes a fragment of MPU, a payload header of the MMTP packet may include a timed flag indicating whether the fragment of the MPU includes timed media. In detail, when a value of the timed flag is 1, the timed flag may indicate that the fragment of the MPU included in the MMTP packet includes timed media. In a detailed embodiment, the timed flag may be referred to as T. In a detailed embodiment, the timed flag may be a 1-bit flag.

When the MMTP packet includes the fragment of the MPU, a payload header of the MMTP packet may include a fragment indicator indicating fragment information of a data unit included in the payload. The data unit may indicate a unit of data included in the payload of the MMTP packet. The payload of the MMTP packet may include one or more data units. In a detailed embodiment, the fragment indicator may be referred to as f_i. In a detailed embodiment, the fragment indicator may be a 2-bit field.

When the MMTP packet includes the fragment of the MPU, the payload header of the MMTP packet may include an aggregation flag indicating that one or more data units are included in the payload. In a detailed embodiment, the aggregation flag may be referred to as A. In a detailed embodiment, the aggregation flag may be a 1-bit flag.

When the MMTP packet includes the fragment of the MPU, the payload header of the MMTP packet may include a fragment counter field indicating the number of fragments include in the same data unit included in the payload. When the aggregation flag indicates that one or more data units are included in the payload, a value of the fragment counter field may be 0. In a detailed embodiment, the fragment counter field may be referred to as frqg_counter. In a detailed embodiment, the fragment counter field may be an 8-bit field.

When the MMTP packet includes the fragment of the MPU, the payload header of the MMTP packet may include an MPU sequence field indicating the number of a sequence included in the fragment of the MPU. In a detailed embodiment, the MPU sequence field may be referred to as MPU_sequence_number.

When the MMTP packet includes the fragment of the MPU, the payload header of the MMTP packet may include a data unit length field indicating a length of a data unit. In detail, when the payload of the MMTP packet includes one or more data units, the payload header of the MMTP packet may include a data unit length field indicating a length of the data unit. In a detailed embodiment, the data unit length field may be referred to as DU_length field. In a detailed embodiment, the data unit length field may be a 16-bit field.

When the MMTP packet includes a fragment of MPU, a payload header of an MMTP packet may include a data unit header field indicating a header of the data unit. The data unit header field may be changed according to a type of data included in the data unit. In detail, the data unit header field may have format that is changed according to a value of the aforementioned type field. Transmission of the application signaling information using syntax of the payload header will be described with reference to the following drawings.

FIG. 138 illustrates synchronization of a trigger transmitted through content and MPU according to an embodiment of the present invention.

The broadcast server 10 may transmit application signaling information to the MPU so as to transmit the information to a track of ISO BMFF. Thereby, the broadcast server 10 may transmit the application signaling information so as to be synchronized in content and frame units. In detail, the broadcast server 10 may transmit the application signaling information so as to be synchronized in content and frame units through syntax of a payload header of the aforementioned MMTP packet. In a detailed embodiment, the broadcast server 10 may set a fragment of the MPU as a media fragment unit, insert the application signaling message into the data unit payload, and transmit the result. The broadcast server 10 may set the timed flag to transmit timed media. In detail, when the application signaling information needs to be transmitted at specific time like a trigger, the broadcast server 10 may set the timed flag to transmit the timed media. When the application signaling information included in the data unit is a trigger, the trigger may have the aforementioned format. In another detailed embodiment, the trigger may have timed text format. The trigger may have XML format. The trigger may include an application identifier for identifying a triggered application. The trigger may include a triggering event identifier for identifying a triggering event. The trigger may include an action indicating an action of the triggered application. The trigger may include a data identifier for identifying data required by the triggering event. The trigger may include start time of the triggering event. The trigger may include termination time of the triggering event. As described above, the broadcast receiving apparatus 100 may perform an action prior to termination time of the triggering event after start time of the triggering event. In detail, thereby, the trigger may synchronize the application signaling information with the movie fragment presented in a predetermined sequence and at predetermined time. In a detailed embodiment, the broadcast server 10 may set start time of the triggering event and termination time of the triggering event using media time in the movie fragment as a reference. The broadcast server 10 may set the start time of the triggering event and the termination time of the triggering event as relative time inside the trigger. The broadcast server 10 may set the start time of the triggering event and the termination time of the triggering event as time based on a wall-clock provided in out-of-band. For example, the broadcast server 10 may set the start time of the triggering event and the termination time of the triggering event as time based on a wall-clock provided by CI. The broadcast server 10 may set the start time of the triggering event and the termination time of the triggering event as time based on wall-clock provided by the timestamp descriptor().

In the embodiment of FIG. 138, a first trigger (trigger 1) may be synchronized with a first movie fragment (Movie Fragment 1). A second trigger (trigger 2) may be synchronized with a second movie fragment (Movie Fragment 2). In detail, the first trigger may signal a position of triggering application information and trigger immediate execution of a triggering event with a triggering event identifier of 5 with respect to an application with an application identifier of 7, according to the aforementioned trigger format. According to the aforementioned trigger format, the second trigger may signal a position of the triggering application information and trigger execution of a triggering event with a triggering event identifier of 3 with respect to an application with an application identifier of 8 between 77ee and 80ee, according to the aforementioned trigger format.

The broadcast server 10 may transmit an application signaling message as one of signaling messages of an MMT protocol, which will be described with reference to the following drawings.

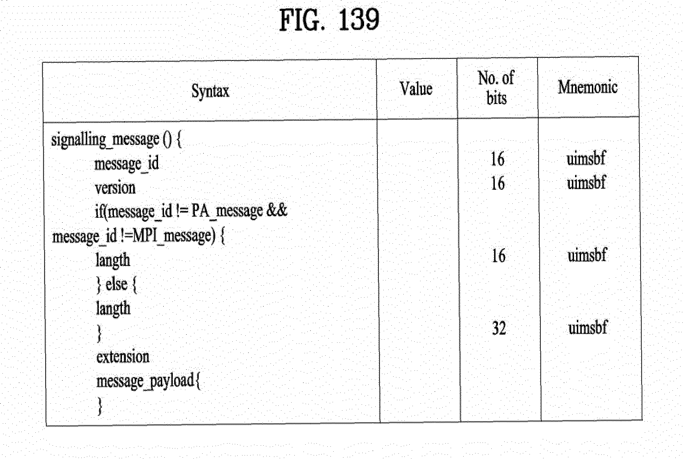

FIG. 139 illustrates the syntax of an MMT signaling message according to another embodiment of the present invention.

According to an embodiment of the present invention, the MMT signaling message may include a message identifier for identifying a signaling message. In a detailed embodiment, the message identifier may be referred to as message_id. In a detailed embodiment, the message identifier may be a 16-bit field.

The MMT signaling message may include version information indicating an update history of a signaling message. In a detailed embodiment, the version information may be referred to as version. In a detailed embodiment, the version information may be an 8-bit field.

The signaling message may include length information indicating a length of data included in the signaling message. The length information may be referred to as length. In a detailed embodiment, the length information may be a 16-bit field or a 32-bit field.

The signaling message may include future extension of the signaling message as extension information. The signaling message may include various information items, which will be described below with reference to the drawings.

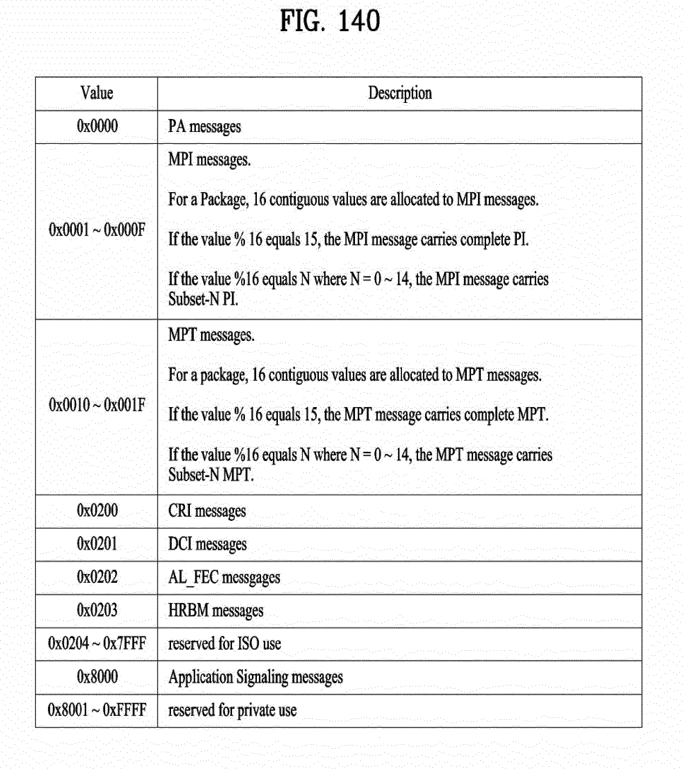

FIG. 140 illustrates a relationship between an identifier for identifying an MMT signaling message and data signaled by the MMT signaling message according to an embodiment of the present invention.

In detail, the signaling message may be a PA message indicating information of all other signaling tables. In this case, a value of the message identifier may be 0x0000. The signaling message may be an MPI message including media content presentation information. In this case, a value of the message identifier may be 0x0001 to 0x000F. The signaling message may be an MPT message including an MP table indicating information of an asset included in the package. In this case, a value of the message identifier may be 0x0011 to 0x001F. The signaling message may be a CRI message including a CRI table indicating synchronization information. In this case, a value of the message identifier may be 0x0200. The signaling message may be a DCI message including a DCI table indicating device capability required to consume the package. In this case, a value of the message identifier may be 0x0201. The signaling message may be an AL_FEC message indicating FEC information required to receive the asset. In this case, a value of the message identifier may be 0x0202. The signaling message may be an HRBM message indicating a memory required by the broadcast receiving apparatus 100 and end to end transmission delay. In this case, a value of the message identifier may be 0x0203. In order to transmit the application signaling information, the signaling message may be an application signaling message including the application signaling information other than this type of message. The broadcast receiving apparatus 100 may identify a type of a message included in the signaling message by the aforementioned message identifier. In this case, a value of the message identifier may be 0x8000. Format of the application signaling message will be described with reference to the following diagram.

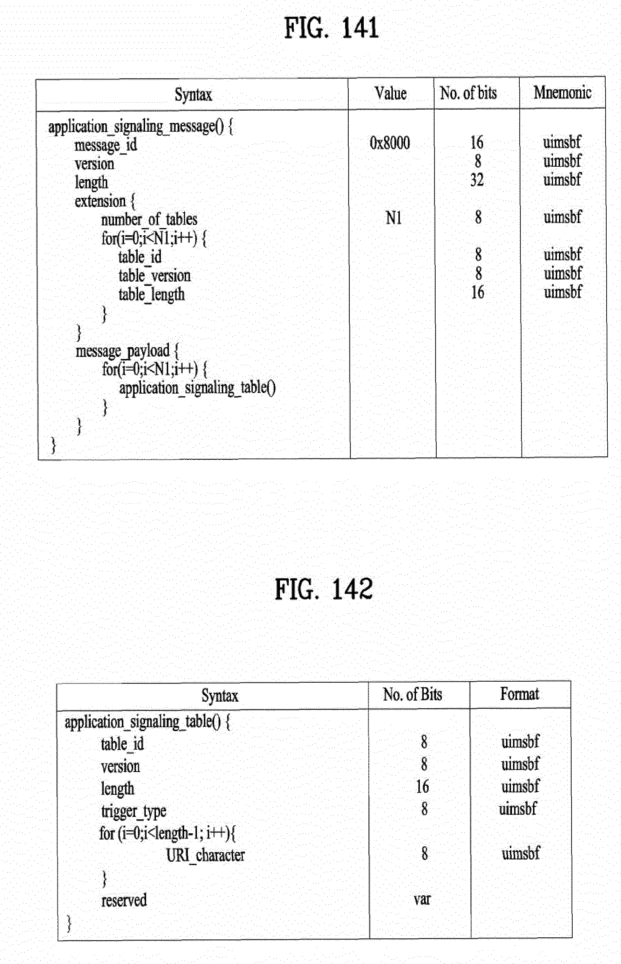

FIG. 141 illustrates the syntax of a signaling message including application signaling information according to another embodiment of the present invention.

According to another embodiment of the present invention, the application signaling message may include an application signaling table including application signaling information in a signaling message. In a detailed embodiment, the signaling message may include a plurality of application signaling tables.

The application signaling message may include table number information indicating the number of application tables included in the application signaling message. In a detailed embodiment, the table number information may be referred to as number_of_tables. The table number information may be an 8-bit field.

The application signaling message may include table identifier information for identifying an application table included in the application signaling message. In a detailed embodiment, the table identifier information may be referred to as table_id. The table identifier information may be an 8-bit field.

The application signaling message may include table version information indicating an update history of the signaling table. In a detailed embodiment, the table version information may be referred to as table_version. In a detailed embodiment, the table version information may be an 8-bit field.

The application signaling message may include table length information indicating a length of the signaling table. In a detailed embodiment, the table length information may be referred to as table_length. In a detailed embodiment, the table length information may be an 8-bit field. Detailed syntax of the application signaling table will be described with referenced to the following drawings.

FIG. 142 illustrates the syntax of an application signaling table including application signaling information according to another embodiment of the present invention.

According to another embodiment of the present invention, the application signaling table may include an identifier for identifying the application signaling table. In a detailed embodiment, the identifier may be referred to as table_id. The identifier may be an 8-bit field.

The application signaling table may include version information indicating an update history of the application signaling table. In a detailed embodiment, the version information may be referred to as version. In a detailed embodiment, the version information may be an 8-bit field.

The application signaling table may include length information indicating a length of the application signaling table. In a detailed embodiment, the length information may be referred to as length. In a detailed embodiment, the length information may be a 16-bit field.

The application signaling table may include trigger type information indicating a type of a trigger included in the application signaling table. The trigger included in the signaling table may have various types, which will be described with reference to the following drawings.

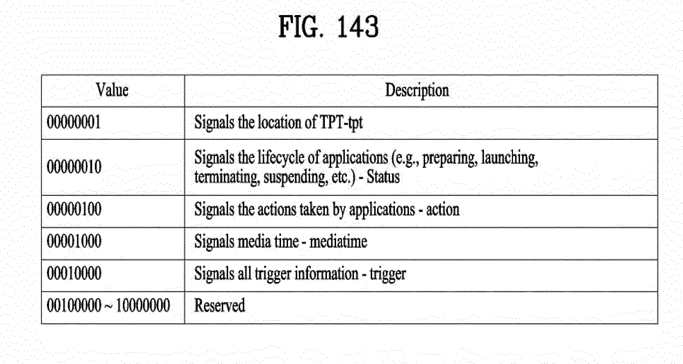

FIG. 143 illustrates a relationship of trigger type information included in an application signaling table and trigger attribute included in a trigger according to another embodiment of the present invention.

The trigger included in the signaling table may signal a position of the triggering application information. In this case, a value of the trigger type information may be 1. The trigger included in the signaling table may signal a lifecycle of an application. In detail, the t rigger included in the signaling table may signal a state of the application. In this case, a value of the trigger type information may be 2. The trigger included in the signaling table may signal an action of the application. In this case, a value of the trigger type information may be 3. The trigger included in the signaling table may signal media time of content. In this case, a value of the trigger type information may be 4. The trigger included in the signaling table may include all information items included in the trigger. In this case, a value of the trigger type information may be 5, which will be described referring back to FIG. 142.

In a detailed embodiment, the trigger type information may be referred to as trigger_type. In a detailed embodiment, the trigger type information may be an 8-bit field.

The signaling information table may include a text indicating a trigger. In detail, the signaling information table may include character information indicating character included in the trigger. In a detailed embodiment, the signaling information table may include a plurality of character information items. In a detailed embodiment, the character information may be referred to as URI_character. In addition, the trigger may have aforementioned format. In a detailed embodiment, the character information, an 8-bit field.

However, in the embodiment described with reference to FIGs. 142 and 143, a type of a trigger may be indicated through trigger type information in the application signaling message table. However, in this case, the broadcast receiving apparatus 100 may recognize a type of the trigger by parsing the application signaling table. Accordingly, there is a need in that the broadcast receiving apparatus 100 is not capable of selectively receiving only a necessary type of trigger. A method for overcoming this problem will be described with reference to the following drawing.

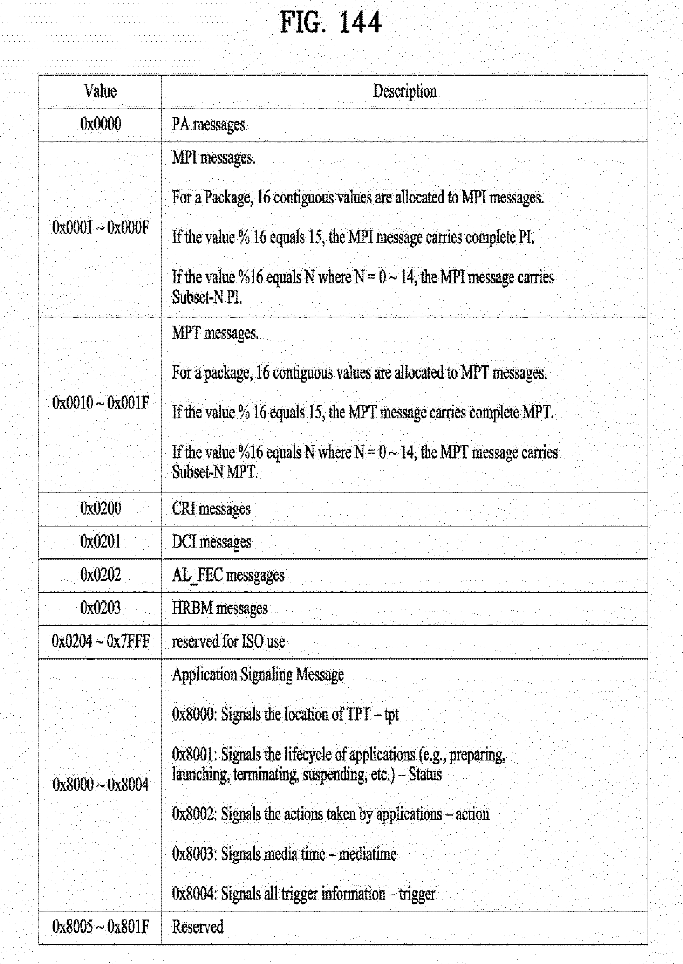

FIG. 144 illustrates a relationship of a value of an identifier for identifying an MMT signaling message and data signaled by an MMT signaling message according to another embodiment of the present invention.

The broadcast server 10 may change a value of a message identifier for identifying an application signaling message based on a type of a trigger included in the application signaling message. In detail, the broadcast server 10 may differently set a value of the message identifier according to whether a type of a trigger is a trigger for signaling a position of the triggering application information, a trigger for signaling a lifecycle of an application, a trigger for signaling an action of an application, a trigger for signaling media time of content, or a trigger including all information items to be included in the trigger. In detail, when a value of the message identifier is 0x8000 to 0x8004, this may indicate that the signaling message is an application signaling message. In a detailed embodiment, when a trigger included in the application signaling message signals a position of the triggering application information, a value of the message identifier may be 0x8000. When a trigger included in the application signaling message signals a lifecycle of an application, a value of the message identifier may be 0x8001. When the trigger included in the application signaling message signals an action of an application, a value of the message identifier may be 0x8002. When the trigger included in the application signaling message signals media time of content, a value of the message identifier may be 0x8003. When the trigger included in the application signaling message includes all information items included in the trigger, a value of the message identifier may be 0x8004. A message identifier of the signaling message indicates a type of the trigger included in the application signaling message and, thus, the application signaling table may not include the trigger type information.

In the embodiment of FIG. 145, the application signaling table may not include trigger type information unlike the aforementioned application signaling table.

As such, when a value of the message identifier for identifying the application signaling message is changed according to a type of a trigger included in the signaling message, the broadcast receiving apparatus 100 may recognize a type of a trigger without parsing the application signaling table included in the application signaling message. Accordingly, the broadcast receiving apparatus 100 may be effectively and selectively receive a specific type of trigger.

The broadcast server 10 may transmit application signaling information through a generic packet, which will be described with reference to the following diagram.

FIG. 146 illustrates a configuration of an MMTP packet according to another embodiment of the present invention.

First, syntax of the MMTP packet will be described.

The MMTP packet may include version information indicating a version of an MMTP protocol. In a detailed embodiment, the version information may be referred to as V. In a detailed embodiment, the version information may be a 2-bit field.

The MMTP packet may include packet counter flag information indicating presence of packet counting information. In a detailed embodiment, the packet counter flag information may be referred to as C. In a detailed embodiment, the packet counter flag information may be a 1-bit field.

The MMTP packet may include FEC type information indicating a scheme of an FEC algorithm of error prevention of a packet MMTP packet. In a detailed embodiment, the FEC type information may be referred to as FEC. In a detailed embodiment, the FEC type information may be a 2-bit field.

The MMTP packet may include extension flag information indicating presence of header extension information. In a detailed embodiment, the extension flag information may be referred to as X. In a detailed embodiment, the extension flag information may be a 1-bit field.

The MMTP packet may include random access point (RAP) flag information indicating RAP for data random access of a payload. In a detailed embodiment, the RAP flag information may be referred to as R. In a detailed embodiment, the RAP flag information may be a 1-bit field.

The MMTP packet may include type information indicating a type of data of a payload. In a detailed embodiment, the type information may be referred to as type. In a detailed embodiment, the type information may be a 6-bit field.

The MMTP packet may include packet identifier information indicating an identifier for identifying a packet. The broadcast receiving apparatus 100 may determine an asset included in the corresponding packet based on the packet identifier information. The broadcast receiving apparatus 100 may acquire a relationship between the asset and the packet identifier from the signaling message. The packet identifier information may have a unique value during a life time of a corresponding transmission session. In a detailed embodiment, the packet identifier information may be referred to as packet_id. In a detailed embodiment, the packet identifier information may be a 16-bit field.

The MMTP packet may include packet sequence number information indicating the number of packet sequences. In a detailed embodiment, the packet sequence number information may be referred to as packet_sequence_number. In a detailed embodiment, the packet sequence number information may be a 32-bit field.

The MMTP packet may include time stamp information for specifying a time instance value of transmission of an MMTP packet. The time stamp information may be based on a UTC value. The time stamp information may indicate time for transmitting a first type of the MMTP packet. In a detailed embodiment, the time stamp information may be referred to as timestamp. In a detailed embodiment, the time stamp information may be 32-bit field.

The MMTP packet may include packet counting information indicating a count of transmitted packets. In a detailed embodiment, the packet counting information may be referred to as packet_counter. In a detailed embodiment, the packet counting information may be a 32-bit field.

The MMTP packet may include required FEC information according to an FEC protection algorithm. In a detailed embodiment, the FEC information may be referred to as Sourece_FEC_payload_ID. In a detailed embodiment, the FEC information may be a 32-bit field.

The MMTP packet may include header extension information reserved for future header extension. In a detailed embodiment, the header extension information may be referred to as header_extension.

The broadcast server 10 may insert the application signaling information into a payload of a packet of a generic type and transmit the result. In detail, the broadcast server 10 may insert the application signaling information into a payload of a packet of a generic type and transmit the result. In this case, the broadcast server 10 may allocate different packet identifiers to respective files. The broadcast receiving apparatus 100 may extract application signaling information from the generic packet. In detail, the broadcast receiving apparatus 100 may extract a file including the application signaling information from the generic packet. In detail, the broadcast receiving apparatus 100 may extract the file including the application signaling information based on the packet identifier of the generic packet. For example, the broadcast receiving apparatus 100 may determine whether a corresponding packet includes required application signaling information based on a packet identifier value of a generic packet.

The broadcast server 10 may transmit the application signaling information using the header extension information of the MMTP packet, which will be described with reference to the following drawings.

FIG. 147 illustrates the syntax of a header extension field for transmitting application signaling information and a configuration of an MMTP packet according to another embodiment of the present invention.

The broadcast server 10 may insert the application signaling information into a header of an MMTP packet and transmit the result. In detail, the broadcast server 10 may insert the application signaling information into header extension information and transmit the result.

In a detailed embodiment, the header extension information may include header extension type information indicating a type of header extension information included in the header extension information. In this case, the header extension type may indicate that the header extension information includes an application signaling message. In another detailed embodiment, the header extension type information may indicate a type of application signaling information included in the header extension information. In this case, the type of the application signaling information may include a type of a trigger according to attribute included in the aforementioned trigger. In a detailed embodiment, the header extension type information may be referred to as type.

In a detailed embodiment, the header extension information may be a 16-bit field. In a detailed embodiment, the header extension information may include header extension length information indicating a length of the header extension information. In this case, the header extension length information may indicate a length of the application signaling information included in the header extension information. In a detailed embodiment, the header extension length information may be referred to as length. In a detailed embodiment, the header extension length information may be a 16-bit field.

In a detailed embodiment, the header extension information may include a header extension value indicating extension information included in the header extension information. In this case, the header extension value may indicate application signaling information included in the header extension information. In this case, the application signaling information may be a trigger. A type of the application signaling information may be a string type of URI. The string type of URI may be the aforementioned string type of trigger. In a detailed embodiment, the header extension value may be referred to as header_extension_value.

Accordingly, the broadcast receiving apparatus 100 may extract application signaling information from the header extension information. In detail, the broadcast receiving apparatus 100 may extract the application signaling information based on the header extension type information included in the header extension information. In detail, the broadcast receiving apparatus 100 may determine whether the corresponding header extension information includes application signaling information based on the header extension type information. The broadcast receiving apparatus 100 may extract the application signaling information when the corresponding header extension information includes application signaling information. The broadcast receiving apparatus 100 may determine a type of the application signaling information included in the corresponding header extension information based on the header extension type information. Accordingly, the broadcast receiving apparatus 100 may selectively acquire the application signaling information.

According the aforementioned embodiment of the present invention, operations of the broadcast server 10 and the broadcast receiving apparatus 100 according to transmission and reception of the application signaling information will be described in detail with reference to the following drawings.

FIG. 148 illustrates transmission of a broadcast signal based on application signaling information by a broadcast transmitting apparatus according to embodiments of the present invention.

The broadcast server 10 may acquire information on an application included in a broadcast service (S2501). In detail, the broadcast server 10 may acquire information on the application included in the broadcast service through a controller.

The broadcast server 10 may generate application signaling information based on information on the application (S2503). In detail, the broadcast server 10 may generate the application signaling information based on information on the application through the controller. In this case, the application signaling information may include a trigger for triggering an action of an application and triggering application information for signaling information on the triggered application, as described above.

The broadcast server 10 may transmit a broadcast signal based on the application signaling information (S2505). In detail, the broadcast server 10 may transmit a broadcast signal based on the application signaling information through a transmitter. In detail, as described above, the broadcast server 10 may transmit application signaling information using an MPEG-DASH protocol. In detail, the broadcast server 10 may transmit application signaling information in an event stream of MPD of MPEG-DASH. The broadcast server 10 may transmit the application signaling information in an inband event stream. For example, the broadcast server 10 may transmit the application signaling information through an event message box. In another detailed embodiment, the broadcast server 10 may transmit application signaling information using an MMT protocol. In detail, the broadcast server 10 may transmit the application signaling message based on packet format including the MPU of the MMT protocol. The broadcast server 10 may transmit the application signaling message based on packet format including a generic object of the MMT protocol. The broadcast server 10 may transmit the application signaling message based on packet format including the signaling message of the MMT protocol. The broadcast server 10 may transmit the application signaling message based on the header extension information of the packet of the MMT protocol.

FIG. 149 illustrates acquisition of application signaling information based on a broadcast signal by a broadcast receiving apparatus according to embodiments of the present invention.

The broadcast receiving apparatus 100 may receive a broadcast signal (S2601). In detail, the broadcast receiving apparatus 100 may receive a broadcast signal through the broadcast receiver 110.

The broadcast receiving apparatus 100 may acquire application signaling information based on the broadcast signal (S2603). In detail, the broadcast receiving apparatus 100 may acquire the application signaling information based on the broadcast signal through the controller 150. In detail, as described above, the broadcast receiving apparatus 100 may acquire the application signaling information based on the MPEG-DASH protocol. In detail, the broadcast receiving apparatus 100 may acquire the application signaling information based on an event stream of MPD of MPEG-DASH. The broadcast receiving apparatus 100 may acquire application signaling information based on the inband event stream. For example, the broadcast receiving apparatus 100 may transmit application signaling information from an event message box. In another detailed embodiment, the broadcast receiving apparatus 100 may acquire application signaling information based on the MMT protocol. In detail, the broadcast receiving apparatus 100 may acquire the application signaling message based on packet format including the MPU of the MMT protocol. The broadcast receiving apparatus 100 may acquire the application signaling message based on packet format including a generic object of the MMT protocol. The broadcast receiving apparatus 100 may acquire an application signaling message based on packet format including the signaling message of the MMT protocol. The broadcast receiving apparatus 100 may acquire the application signaling message based on the header extension information of the packet of the MMT protocol. The application signaling information may include at least one of a trigger for triggering an action of an application and triggering application information for signaling information on the triggered application, as described above.

The broadcast receiving apparatus 100 may execute an application based on the application signaling information (S2605). In detail, the broadcast receiving apparatus 100 may execute the application based on the application signaling information through a controller. In a detailed embodiment, the broadcast receiving apparatus 100 may change a state of an application based on the application signaling information. In detail, the broadcast receiving apparatus 100 may change a state of the application based on the application signaling information of the triggering event start time. The broadcast receiving apparatus 100 may change the state of the application based on the application signaling information prior to triggering event termination time after triggering event start time. In another detailed embodiment, the broadcast receiving apparatus 100 may perform an operation triggered to an application based on the application signaling information. In detail, the broadcast receiving apparatus 100 may perform an operation triggered to an application based on the application signaling information of the triggering event start time. The broadcast receiving apparatus 100 may perform an operation triggered to an application based on the application signaling information prior to triggering event termination time after triggering event start time. In another detailed embodiment, the broadcast receiving apparatus 100 may receive triggering application information based on the application signaling information. In another detailed embodiment, the broadcast receiving apparatus 100 may acquire media time of content based on the application signaling information. In detail, the broadcast receiving apparatus 100 may acquire media time of presented content. The broadcast receiving apparatus 100 may acquire media time and generate a time line as a reference of synchronization between triggering event and content based on the media time of content.

Through this operating method, the broadcast server 10 may effectively transmit the application signaling information. In particular, the broadcast server 10 may transmit the application signaling information through the MPEG-DASH protocol or the MMT protocol. The broadcast receiving apparatus 100 may effectively receive the application signaling information. In particular, the broadcast server 10 may transmit the application signaling information through the MPEG-DASH protocol or the MMT protocol.

FIG. 150 is a view showing notification for entry into a synchronized application according to an embodiment of the present invention.

The synchronized application is an application expressed while being interlocked with a content of a non-real time broadcast and/or a real time broadcast. The synchronized application is an application set such that a corresponding application can be executed or expressed in a broadcast content at a necessary appropriate time.

An application may be used as a meaning of a general application. Alternatively, an application may be used as a meaning indicating an object displayed on a broadcast content while being related to the content. For example, in a case in which a profile of a specific player is displayed on a screen during broadcasting of a sport game, an application may be defined as a subject enabling the corresponding profile to be displayed.

A non-real time broadcast is a kind of broadcast in which a broadcast signal or data for a real time broadcast are not transmitted and data for a broadcast content are transmitted / received through an unused band of the broadcast signal. The unused band may be defined as a time domain in which a real time broadcast is not provided. Alternatively, in a case in which a bandwidth of a broadcast signal is left even while a real time broadcast is being transported, the unused band may be defined as the bandwidth. Since a broadcast content is transported to the unused band, the broadcast content may be discontinuously transported while being separated into one or more files (or objects). A receiver may receive and store such files and, upon receiving all files included in a broadcast content, may reproduce the corresponding broadcast content according to a user's request.

According to an embodiment of the present invention, a user interface and/or format for notification of the synchronized application may be controlled by the receiver.

Referring to (a) of the figure, for an application related to an existing data broadcast, notification for notifying the application of an entry route includes a simple notification in the form of a red dot provided by a broadcaster.

On the other hand, the present invention provides a method and/or apparatus for enabling the receiver to adjust or realize notification of such an application. In a case in which the receiver adjusts notification of an application, information for adjusting the notification may be configured based on information provided by a content provider and a broadcaster.

According to the present invention, the details of notification may be displayed in a unique form per channel and/or per application. At this time, data regarding the form and/or operating attributes of application notification synchronized to be suitable for characteristics per channel or per application may be received from the content provider and the broadcaster per channel and/or per application. This scheme is different from an application of an existing data broadcast in that the synchronized application notification may be reconfigured by the receiver based on information provided by the content provider and the broadcaster. In addition, the receiver may internally intercept collection of viewing information (for example, information such as a time when a user pushes application notification to enter an application immediately after the user starts to view a broadcast) excluding real use information of the application by the content provider and the broadcaster to set protection of personal in-formation of the user. On the other hand, the receiver may be set such that viewing information, internally allowed in the receiver, excluding the real use information of the application, is provided to the content provider and the broadcaster. Information that can be provided for a form of the synchronized application notification may include notification location information on a screen, display size information of the notification, the details of a message, an image indicating the application, and/or a logo of the broadcaster (or the content provider). Information that can be provided for an operating attribute may include information regarding a time when notification appears for the first time, information regarding duration of the notification, and/or information regarding cycle of the notification.

(b) of the figure shows an embodiment in which notification for entry into an synchronized application is created and displayed using display size information of a notification, notification location information on a screen, the details of a message, and information regarding a logo of the broadcaster provided from the broadcaster per channel.

FIG. 151 illustrates notification for entrance into a synchronized application according to an embodiment of the present invention.

Referring to (a), in the case of an application related to existing data broadcast, notification indicating an entrance path into an application may include simple notification in the form of a red dot provided by a broadcaster.

(b) illustrates an embodiment in which notification for entrance into a synchronized application is generated and display using display size information of notification provide from a broadcast for each channel, position information in an image of notification, and information of message information and broadcaster logo.

In general, when application notification provided by a broadcaster, the broadcaster may want to provide application notification differentiated from other application notification provided by another broadcaster.

According to an embodiment of the present invention, the receiver may manage Opt-in and/or Opt-out of an application. According to an embodiment of the present invention, the receiver may provide application notification differentiated for each broadcaster to the user.

FIG. 152 is a view showing a user interface for interlocking synchronized application notification and a user agreement interface according to an embodiment of the present invention.

A synchronized application or notification therefor may be set to be executed or expressed after user agreement is obtained. For example, whether to obtain user agreement may be set per application, program, or channel.

In a case in which user agreement is not set, a corresponding synchronized application may be intercepted. In this case, a receiver does not provide the corresponding application to a user. In a case in which whether to obtain user agreement is not set, on the other hand, all applications may be intercepted or all application may be provided without interception.

An interface for user agreement to a synchronized application may be configured in the receiver. Various conditions and schemes of user agreement may be provided.

For smooth interlocking between the user agreement interface and the application, the receiver may more actively control the application.

For example, for an existing data broadcast, even when an application is finished by a user for the reason that the user does not wish to view the application, the receiver cannot control the application with the result that notification of the application is exposed again.

In an embodiment of the present invention, as shown, a scheme in which, for an application agreed or disagreed by the user once, the details of the corresponding agreement are set to be continuously maintained within a current program / current channel / all channels on the assumption that each broadcast program does not maximally disturb user's viewing of a broadcast in connection with user agreement.

According to an embodiment of the present invention, the user interface for user agreement to a synchronized application may include an item for setting agreement to the use of the synchronized application (an application) (or expression of application notification).

The user interface may further include an item for setting a range of agreement or disagreement to the use of an application.

For example, whether to agree to the use of an application may be applied within a range of a current program. In a case in which user agreement is obtained, the user agreement may be effective only for a corresponding broadcast program. When the corresponding broadcast program is finished, the user agreement interface for the corresponding application may be initialized. In a case in which user disagreement is obtained, the user disagreement may be effective only for a corresponding broadcast program. When the corresponding broadcast program is finished, the user agreement interface for the corresponding application may be initialized.

For example, whether to agree to the use of an application may be applied within a range of a current channel. In a case in which user agreement is obtained, the user agreement may be effective for all broadcast programs of the corresponding channel. When the user changes the channel, the user agreement interface for the corresponding application may be initialized. In a case in which user disagreement is obtained, the user disagreement may be effective only for a corresponding broadcast channel. When the broadcast channel is changed, the user agreement interface for the corresponding application may be initialized.

For example, whether to agree to the use of all applications may be applied. In a case in which user agreement is obtained, the user agreement may be effective for all broadcast programs of all channels, which may be applied until the user changes a set value on a user agreement interface menu for a corresponding application. In a case in which user disagreement is obtained, all applications are not provided to the user until another user setting is performed.

Although a specific setting is selected by the proposed illustration, an additional user agreement interface menu may be provided such that the user can change setting of an application afterwards.

FIG. 153 is a view showing a user interface for agreement to the use of an application according to another embodiment of the present invention.

A user interface as shown may be provided to the above-described user interface by addition or change.

Referring to (a) of the figure, a receiver may provide a user with a user interface (an application notification block timer) for setting application notification to be blocked for a predetermined period of time after the application notification is exposed. For example, the application notification block timer provided by the receiver may include items for setting application notification to be blocked on a per time basis (for example, 15 minutes or 30 minutes) or on a per program basis (for example, setting a period of time to a time when a current program is finished).

Similarly, although the user disagrees to the use of an application (or application notification), application notification may be exposed again in a case in which a set time or condition is satisfied.

Referring to (b) of the figure, a link for enabling detailed information of an application, such as introduction of the application, interaction timeline information of the application, and/or real time user statistics of the application, to be shown may be provided before setting user agreement to the use of an application (or application notification). The user may acquire information necessary to decide whether to use the corresponding application through this link.

FIG. 154 is a view showing a portion of a TDO parameter table (TPT) (or a TDO parameter element) according to an embodiment of the present invention.

The TDO parameter table (or the TDO parameter element) according to the embodiment of the present invention includes metadata regarding an application (or TDP) associated with a segment and/or an event.

The TDO parameter table includes a TPT element, a MajorProtocolVersion element, a MinorProtocolVersion element, an id element, a tptVersion element, an expireDate element, a serviceID element, a baseURL element, a Capabilities element, a LiveTrigger element, a URL element, a pollPeriod element, a TDO element, an appID element, an appType element, an appName element, a globalID element, an appVersion element, a cookieSpace element, a frequencyOfUse element, an expireDate element, a testTDO element, an availInternet element, an availBroadcast element, a URL element, a Capabilities element, a ContentItem element, a URL element, a updatesAvail element, a pollPeriod element, a Size element, an availInternet element, an availBroadcast element, an Event element, an eventID element, an action element, a destination element, a diffusion element, and a Data element.

The TPT element is a root element of the TPT.

The MajorProtocolVersion element indicates a major version number of definition of a table. A receiver may discard a TPT having a major version number which is not supported by the receiver.

The MinorProtocolVersion element indicates a minor version number of definition of a table. A receiver does not discard a TPT having a minor version number which is not supported by the receiver. In this case, the receiver ignores the information or element which is not supported by the receiver so as to process the TPT.

The id element may have a URI form and identifies an interactive programming segment (or an interactive service segment) related to this TPT. This id element may become "locator_part" of a corresponding trigger.

The tptVersion element indicates version information of the TPT identified by the id element.

The expireDate element indicates an expiration date and time of information included in a TPT instance. When the receiver stores the TPT, the TPT may be reused until the date and time indicated by the expireDate element.

The serviceID element indicates the identifier of the NRT service related to an interactive service described in the TPT instance.

The baseURL element indicates a base URL combined and used in a front end of a URL in the TPT. The baseURL element indicates absolute URLs of files.

The Capabilities element indicates essential capabilities for displaying an interactive service related to the TPT.

The LiveTrigger element includes information used when an activation trigger is provided via the Internet. The LiveTrigger element provides information necessary for the receiver to obtain the activation trigger.

The URL element indicates the URL of a server for transmitting the activation trigger. The activation trigger may be transmitted via the Internet using HTTP short polling, HTTP long polling or HTTP streaming.

If the pollPeriod element is present, this indicates that short polling is used to transmit the activation trigger. The pollPeriod element indicates a polling period.

The TDO element includes information about an application (e.g., TDO) for providing a part of an interactive service during a segment described by a TPT instance.

The appID element identifies an application (e.g., TDO) within the range of the TPT. The activation trigger identifies a target application for applying a trigger using the appID element.

The appType element identifies a format type of an application. For example, if the value of the appType element is set to "1", then this indicates that the application is a TDO.

The appName element indicates the name of an application which is displayed to a viewer and is human-readable.

The globalID element indicates a global identifier of an application. If the global ID element is present, the receiver may store an application code and reuse the application code for later display of the same application in the segment of the same or different broadcast station.

The appVersion element indicates the version number of an application (TDO).

The cookieSpace element indicates the size of a space necessary to store data required by an application between application invocations.

The frequencyOfUse element indicates how frequently the application is used in a broadcast. For example, the frequencyOfUse element may indicate that the application is repeatedly used on a time-to-time, day-to-day, weekly or monthly basis or is used only once.

The expireDate element indicates a date and time when the receiver securely deletes an application and/or resources related thereto.

The testTDO element indicates whether the application is used for the purpose of testing. If the application is used for the purpose of testing, a general receiver may ignore this application.

The availInternet element indicates whether the application may be downloaded via the Internet.

The availBroadcast element indicates whether the application may be extracted from a broadcast signal.

Each instance of the URL element identifies a file which is a part of an application. If one or more instances are present, a first instance specifies a file which is an entry point. The file which is the entry point should be executed in order to execute the application.

The Capabilities element indicates capabilities of the receiver necessary to meaningfully display the application. Information about capabilities will be described below with reference to FIG. 34.

The ContentItem element includes information about a content item composed of one or more files required by the application. The URL element identifies a file which is a part of the content item. The URL element may identify URL information provided by the content item. If one or more instances are present, a first instance specifies a file which is an entry point.

The updatesAvail element indicates whether the content item can be updated. The updatesAvail element may indicate whether the content item is composed of static files or is an RT data feed.

If the pollPeriod element is present, short polling is used to transmit the activation trigger. The pollPeriod indicates a time used by the receiver as a polling period.

The Size element indicates the size of the content item.

The availInternet element indicates whether the content item may be downloaded via the Internet.

The availBroadcast element indicates whether the content item may be extracted from a broadcast signal.

The event element includes information about an event for a TDO.

The eventID element serves to identify an event within the range of the TDO. The activation trigger identifies a target application and/or event, to which a trigger is applied, using a combination of the appID element and the eventID element.

The action element indicates the type of a TDO action which should be applied when an event occurs. The action value may include the following meanings.

"register" means that resources of the application are acquired and pre-cached, if possible.

"suspend-execute" means that another application which is currently being executed is suspended and a current application is executed. If a target application is suspended, the receiver resumes the application in a previous state.

"terminate-execute" means that another application which is currently being executed is terminated and a current application is executed. If a target application is suspended, the receiver resumes the application in a previous state.

"terminate" means that the application is terminated.

"suspend" means that the application is suspended. A UI and/or application engine state is required to be preserved until the application is re-executed.

"stream_event" means that a specific action defined by the application is appropriately performed. The destination element indicates a target device type for an event. For example, the value of the destination element may indicate that the event is executed on a main screen and/or a secondary screen. The destination element may be used as a placeholder.

The diffusion element indicates a parameter for smoothing server peak load. The diffusion element may indicate a period T in seconds. The receiver may compute a random time in a range from 0 to T seconds and perform delay by the computed time before accessing an Internet server in order to obtain content referred to by URLs of the TPT.

The data element includes information about data related to the event. If the event occurs, the target application may read and use this data in order to perform desired operation.

According to an embodiment of the present invention, the link regarding detailed information of the above-described application may be transmitted to a URL element of a ContentItem element included in a TDO as in an embodiment of the TDO parameter table (TPT).

In a state in which the detailed information of the application is treated as one content included in the application, link information of the corresponding content may be provided.

FIG. 155 is a view showing a portion of a TDO parameter table (TPT) (or a TDO parameter element) according to another embodiment of the present invention.

In order for a receiver to adjust the form and operating attribute of the abovedescribed synchronized application notification, information regarding to notification of an application provided by a broadcaster or a content provider may be transported while being included in the above-described TDO parameter element. That is, information regarding the form and operating attribute of notification of the synchronized application provided by the broadcaster may be transmitted through extension of a signaling element (for example, TPT) defining parameter for an application trigger that can be used in a next generation hybrid broadcast.

Consequently, the above-described TDO parameter element may further include a NotificationInfo element and attributes belonging thereto.

Attributes added to below the NotificationInfo element may include a topMargin element and/or rightMargin element that is capable of deciding the location of notification, a message element indicating a message of the notification, a logo element which may indicate a logo per channel, a show element that is capable of indicating a time when the notification appears for the first time, a lasting element that is capable of indicating duration of the notification, and/or an interval element that is capable of setting a notification appearance interval.

That is, the elements added to the TDO parameter element shown in the figure include the following signaling information.

The NotificationInfo element is information regarding the form and operating attribute of notification of a synchronized application (for example, an application or TDO).

The topMargin element indicates a top margin value, which is one of the attributes indicating location information of the notification.

The rightMargin element indicates a right margin value, which is one of the attributes indicating location information of the notification.

The message element includes information, such as a welcome message, included in the notification.

The logo element includes logo or image information per content provider or broadcaster included in the notification. The logo image may be received through URL of a content item.

The show element indicates a time when the notification is shown to a user after a broadcast program is started.

The lasting element indicates duration in which the notification is shown to the user.

The interval element, which is an interval time between notifications, includes information for enabling the notification to be periodically shown to the user.

The receiver may set the location of the notification on the screen using the topMargin element and the rightMargin element. The receiver may adjust a time when the notification is shown to the user for the first time and timing based on characteristics of each broadcast program using the show element, the lasting element, and the interval element.

A subject that realizes the notification of a synchronized application may be the receiver such that it is possible to prevent outflow of unnecessary viewing information. In addition, the receiver may actively control an application. Meanwhile, an application or the form and/or operating attributes of application notification may be flexibly used by the content provider or the broadcaster.

On the other hand, the receiver may modify information of corresponding items of the above-described elements. In this case, information provided by the broadcaster or the content provider may be used for reference and the receiver may change corresponding information of corresponding elements according to a value set by the user or a preset value of the receiver. In this case, it is possible for the receiver to control a state of application notification. The above-described change of information is possible since the TPT (or the TDO parameter element) is transported to and stored in the receiver in advance and the receiver can change the stored information.

FIG. 156 is a diagram illustrating an embodiment of XML format of TPT according to another embodiment of the present invention.

Referring to the drawing, the TPT include NotificationInfo element. The information on the element and/or the attribute illustrated other drawings has been described thus far.

The NotificationInfo element may include at least one of topMargin element, rightMargin element, message element, logo element, show element, lasting element, and/or interval element.

The topMargin element may indicate "500".

The rightMargin element may indicate "40".

The message element may indicate "Enjoy MBC Quiz!".

The logo element may indicate "7J207KeE7JuQ7Yq57Zel7Jil7KCc...".

The show element may indicate "120".

The lasting element may indicate "15".

The interval element may indicate "300".

FIG. 157 is a view showing a screen on which notification of a synchronized application is expressed using information of a NotificationInfo element according to an embodiment of the present invention.

Referring to the figure, the notification may be located at a position distant by 500 pixels from the top of the screen and 40 pixels from the right of the screen. A message included in the notification may be "Enjoy MBC Quiz!" The notification may be exposed to a user for the first time 120 second after the notification of the application is executed according to set values of a shown element and a lasting element. In a case in which the user takes no action with respect to the exposed notification, the notification may disappear after 15 seconds, which is the set value of the lasting element. The notification may be exposed to the user again 300 seconds after the notification disappears according to a set value of an interval element. The set values related to the notification exposure time are relative time values based on a time when the synchronized application is executed for the first time.

FIG. 158 illustrates application notification information according to an embodiment of the present invention.

According to an embodiment of the present invention, a transceiving system may include at least one of a transmitter (or broadcaster), a first receiver (or primary device), and/or a second receiver (or companion device).

The transmitter may transmit application notification information. The application notification information may include application notification information for the first receiver and/or application notification information for the second receiver.

According to an embodiment of the present invention, the application notification information (or NoficiationInfo) may include information for the application notification. The application notification information may indicate attribute application notification displayed in the first receiver and/or the second receiver. The application notification information may include at least one of targetDevice attribute, topMargin attribute, rightMargin attribute, show attribute, lasting attribute, interval attribute, message element, and/or logo element.

The targetDevice attribute may indicate a device for displaying the application notification. For example, the targetDevice attribute may indicate whether the target device is the first receiver or the second receiver.

The topMargin attribute may indicate top margin of application notification.

The rightMargin attribute may indicate right margin of application notification.

The show attribute may indicate time for first displaying application notification.

The lasting attribute may indicate lasting time for displaying application notification.

The interval attribute may indicate interval time between application notifications.

The message element may indicate a notification message of application notification.

The logo element may indicate a logo image of application notification.

The first receiver may receive the application notification information. The first receiver may configure application notification based on the application notification information. The first receiver may display the application notification based on the application notification information. The first receiver may display the application notification using the first receiver and/or the second receiver. For example, the first receiver may display the application notification on the second receiver paired with the first receiver based on the application notification information.

The first receiver may control Opt-in/Opt-out of the application based on the application notification information. The first receiver may control Opt-in/Opt-out of the application using the second receiver. For example, the first receiver may receive information for controlling Opt-in/Opt-out from the second receiver using API (action) and process information for controlling Opt-in/Opt-out. The API provided by the first provider may be different for each manufacturer.

The second receiver may display the application notification. For example, the second receiver may receive the application notification information from the first receiver and display the application notification based on the application notification information.

The second receiver may control Opt-in/Opt-out of the application. For example, the second receiver may control Opt-in/Opt-out of the application using API (action) provided by the first receiver.

In an exceptional case such as a case in which topMargin attribute and/or rightMargin attribute are not within a range of a screen of the second receiver, the first receiver and/or the second receiver may use information set by default.

Hereinafter, a method of transmitting application notification information received from a broadcaster by the first receiver to the second receiver will be described.

FIG. 159 is a diagram illustrating a state variable for application notification according to an embodiment of the present invention.

According to an embodiment of the present invention, a transceiving system may include at least one of a transmitter (or broadcaster), a first receiver (or primary device), and/or a second receiver (or companion device). The first receiver and/or the second receiver may each include an App transceiver. The App transceiver of the first receiver and the App transceiver of the second receiver may transmit and/or receive data. For example, the App transceiver may transmit the application notification information to the second receiver from the first receiver. The App transceiver may be referred to as an application signaling service. The Service Type may be defined according to urn:atsc.org:service-Id:atsc3.0:applicationsignaling:1.

(a) of the drawing illustrates NotificationInfo variable and/or A_ARG_TYPE_NotificationInfo variable for application notification.

The NotificationInfo variable may include overall information on application notification for the second receiver as a required state variable. For example, the NotificationInfo variable may include application notification information. The application notification information included in the NotificationInfo variable may be transmitted to the second receiver from the first receiver using an eventing method.

A_ARG_TYPE_NotificationInfo variable may include overall information on application notification for the second receiver as the required state variable. For example, The A_ARG_TYPE_NotificationInfo variable may include application notification information. The application notification information included in the A_ARG_TYPE_NotificationInfo variable may be transmitted to the second receiver from the first receiver in response to a request of the second receiver.

(b) of the drawing illustrates an embodiment of XML format of application notification information (or NotificationInfo). The targetDevice may indicate "CD". That is, a target device may indicate the second receiver. The topMargin may indicate "500". The rightMargin may indicate "40". The Show may indicate "120". The Lasting may indicate "15". The Interval may indicate "300". The Message may indicate "Enjoy MBC Quiz!". The Logo may indicate "7J207KeE7JuQ7Yq57ZeI7JiI7KCc...".

(c) of the drawing illustrates GetNotificationInfo() for requesting application notification information. The GetNotificationInfo() may be used when the second receiver is connected to the first receiver and then the application notification information is requested as the required action.

(d) of the drawing illustrates application notification information included in the A_ARG_TYPE_NotificationInfo variable. Upon receiving a request for application notification information from the second receiver, the first receiver may transmit application notification information to the second receiver as a response. The second receiver may use application identifier (or appID) as input argument in order to acquire information on a wanted application. The first receiver may transmit the application notification information (or NotificationInfo argument) to the second receiver as a return value (output argument) of the identifier.

FIG. 160 is a view showing a procedure for broadcast personalization according to an embodiment of the present invention.

As previously described, a receiver may control notification of an application. However, a case in which the receiver does not or cannot control notification of an application may be considered. In this case, a user may perform opt-in/out setting per application.

In this case, a PDI (profiles, demographics, and interests) table may be used. In the broadcasting system according to the embodiment of the present invention, a broadcast content and application personalized per profile, area, and/or interest may be shown to a user using the PDI table for personalization setting. Opt-in/out setting per application may be performed using the PDI table for personalization. The opt-in is a scheme in which, only in a case in which a user sets notification of a specific application to be received, the corresponding notification is display-processed by the receiver. On the other hand, the opt-out is a scheme in which, in a case in which a user does not set the reception of notification of a specific application to be refused, the corresponding notification is received and processed.

The figure illustrates a personalization broadcast system including a digital broadcast receiver (or a receiver) for a personalization service. The personalization service according to the present embodiment is a service for selecting and supplying content appropriate for a user based on user information. In addition, the personalization broadcast system according to the present embodiment may provide a next generation broadcast service for providing a boradcast service or a personalization service.

According to an embodiment of the present invention, as an example of the user information, user's profiles, and demographics and interests information (or PDI data) are defined. Hereinafter, elements of the personalization broadcast system will be described.

The answers to the questionnaires, taken together, represent the user's Profile, Demographics, and Interests (PDI). The data structure that encapsulates the questionnaire and the answers given by a particular user is called a PDI Questionnaire or a PDI Table. A PDI Table, as provided by a network, broadcaster or content provider, includes no answer data, although the data structure accommodates the answers once they are available. The question portion of an entry in a PDI Table is informally called a "PDI Question" or "PDI-Q." The answer to a given PDI question is referred to informally as a "PDI-A." A set of filter criteria is informally called a "PDI-FC."

The client device such as an ATSC 2.0-capable receiver includes a function allowing the creation of answers to the questions in the questionnaire (PDI-A instances). This PDI-generation function uses PDI-Q instances as input and produces PDI-A instances as output. Both PDI-Q and PDI-A instances are saved in non-volatile storage in the receiver. The client also provides a filtering function in which it compares PDI-A instances against PDI-FC instances to determine which content items will be suitable for downloading and use.

On the service provider side as shown, a function is implemented to maintain and distribute the PDI Table. Along with content, content metadata are created. Among the metadata are PDI-FC instances, which are based on the questions in the PDI Table.

The personalization broadcast system may include a content provider (or broadcaster) J16070 and/or a receiver J16010. The receiver J16010 according to the present embodiment may include a PDI engine (not depicted), a filtering engine J16020, a PDI store J16030, a content store J16040, a declarative content module J16050, and/or a PDI Manipulation application J16060. The receiver J16010 according to the present embodiment may receive content, etc. from the content provider J16070. The structure of the aforementioned personalization broadcast system may be changed according to a designer's intention. The content provider J16070 according to the present embodiment may transmit content, PDI questionnaire, and/or filtering criteria to the receiver J16010. The data structure that encapsulates the questionnaire and the answers given by a particular user is called a PDI questionnaire. According to an embodiment of the present invention, the PDI questionnaire may include questions (or PDI questions) related to profiles, demographics and interests, etc. of a user.

The receiver J16010 may process the content, the PDI questionnaire, and/or the filtering criteria, which are received from the content provider J16070. Hereinafter, the digital broadcast system will be described in terms of operations of modules included in the receiver J16010.

The PDI engine according to the present embodiment may receive the PDI questionnaire provided by the content provider J16070. The PDI engine may transmit PDI questions contained in the received in the PDI questionnaire to the PDI Manipulation application J16060. When a user's input corresponding to a corresponding PDI question is present, the PDI engine may receive a user's answer and other information (hereafter, referred to as a PDI answer) related to the corresponding PDI question from the PDI Manipulation application J16060. Then, the PDI engine may process PDI questions and PDI answers in order to supply the personalization service to generate PDI data. That is, according to an embodiment of the present invention, the PDI data may contain the aforementioned PDI questions and/or PDI answers. Therefore, the PDI answers to the PDI questionnaires, taken together, represent the user's profile, demographics, and interests (or PDI).

In addition, the PDI engine according to the present embodiment may update the PDI data using the received PDI answers. In detail, the PDI engine may delete, add, and/or correct the PDI data using an ID of a PDI answer. The ID of the PDI answer will be described below in detail with regard to an embodiment of the present invention. In addition, when another module requests the PDI engine to transmit PDI data, the PDI engine may transmit PDI data appropriate for the corresponding request to the corresponding module.

The filtering engine J16020 according to the present embodiment may filter content according to the PDI data and the filtering criteria. The filtering criteria refers to a set filtering criterions for filtering only contents appropriate for a user using the PDI data. In detail, the filtering engine J16020 may receive the PDI data from the PDI engine and receive the content and/or the filtering criteria from the content provider J16070.

In addition, when the convent provider J16070 transmits a parameter related to declarative content, the convent provider J16070 may transmit a filtering criteria table related to the declarative content together. Then, the filtering engine J16020 may match and compare the filtering criteria and the PDI data and filter and download the content using the comparison result. The downloaded content may be stored in the content store J16040.

According to an embodiment of the present invention, the PDI Manipulation application J16060 may display the PDI received from the PDI engine and receive the PDI answer to the corresponding PDI question from the user. The user may transmit the PDI answer to the displayed PDI question to the receiver J16010 using a remote controller. The PDI Manipulation application J16060 may transmit the received PDI answer to the PDI engine 701.

The declarative content module J16050 according to the present embodiment may access the PDI engine to acquire PDI data. In addition, the declarative content module J16050 may receive declarative content provided by the content provider J16070. According to an embodiment of the present invention, the declarative content may be content related to application executed by the receiver J16010 and may include a declarative object (DO) such as a triggered declarative object (TDO).

The declarative content module J16050 according to the present embodiment may access the PDI store J16030 to acquire the PDI question and/or the PDI answer. In this case, the declarative content module J16050 may use an application programming interface (API). In detail, the declarative content module J16050 may retrieve the PDI store J16030 using the API to acquire at least one PDI question. Then, the declarative content module J16050 may transmit the PDI question, receive the PDI answer, and transmit the received PDI answer to the PDI store J16030 through the PDI Manipulation application J16060.

The PDI store J16030 according to the present embodiment may store the PDI question and/or the PDI answer.

The content store J16040 according to the present embodiment may store the filtered content.

The PDI engine may receive the PDI questionnaire from the content provider J16070. The receiver J16010 may display PDI questions of the PDI questionnaire received through the PDI Manipulation application J16060 and receive the PDI answer to the corresponding PDI question from the user. The PDI engine may transmit PDI data containing the PDI question and/or the PDI answer to the filtering engine J16020. The filtering engine J16020 may filter content through the PDI data and the filtering criteria. Thus, the receiver J16010 may provide the filtered content to the user to embody the personalization service.

FIG. 161 is a diagram illustrating a procedure of personalization of broadcast according to an embodiment of the present invention.

Referring to the drawing, a personalization broadcast system may include a content provider J16070 (or broadcaster) and/or a receiver J16010. The receiver J16010 according to an embodiment of the present invention may include at least one of a PDI engine (not shown), a filtering engine J16020, a PDI store J16030, a content store J16040, a declarative content module J16050, and/or a PDI Manipulation application J16060. A detailed description of the personalization broadcast system according to an embodiment of the present invention is the same as above description.

In a next-generation hybrid broadcast system, personalized broadcast content and application for each profile, region, and interest may be shown to a user using a PDI table for setting personalization. Opt-in/Opt-out may be set for each application using the PDI table for setting personalization.

A transmitter and/or a broadcaster may configure application notification.

However, the PDI Table is capable of being stored in a storage in a receiver and, thus, the receiver may configure a menu for setting Opt-in/Opt-out for each application and provide the menu to the user. In this case, the receiver may configure a menu for setting Opt-in/Opt-out for each application using an application manager and provide the menu to the user.

The transmitter may set the PDI Table ID in the same way as the corresponding application ID for each application and then transmit application setting related questions. In this case, during transmission of signaling information indicating that an application related to a service provided by the transmitted is present, the transmitter may also transmit PDI Table information related to the an application.

The receiver may store and mange a PDI Table matched for each application and may delete a related PDI Table when a corresponding application is not available any longer.

FIG. 162 is a view showing a signaling structure for user setting per application according to an embodiment of the present invention.

For opt-in/out setting per application (for example, user setting for on/off of notification of an application), a globally unique application ID used for a trigger to execute an application may be used as a PDI Table ID. The details of an application trigger table may be extracted through the above-described app signaling parser and the details of PDI table may be extracted through the above-described targeting signaling parser. The application trigger table may correspond to the above-described TPT or TDO parameter element.

Before executing an application described in the application trigger table, a receiver identifies a global ID of the corresponding application in the application trigger table. The global ID is an unique value for a specific application selected from among all applications provided by the broadcasting system. That is, the global ID is information for identifying a specific application.

The receiver identifies a PDI Table ID having the same information as the global ID of the corresponding application and sets notification of an application per user using information per user in the corresponding PDI Table.

A description of other information included in the application trigger table is replaced with a description of the above-described TPT or shown in the figure. In addition, a description of other information included in the PDI table is replaced with a description of the above-described PDI Table or shown in the figure.

FIG. 163 illustrates XML format for user setting for each application according to an embodiment of the present invention.

(a) of the drawing illustrates XML format of Application Trigger Table (or TPT).

The Application Trigger Table (or TPT, triggering application information) may include TDO (or application information) including information on an application. A detailed description of the TDO is the same as the above description. The TDO may include at least one of appId for identifying an application, appType indicating a type of an application, appName indicating a name of an application, and/or globalID for globally uniquely identifying an application.

According to an embodiment of the present invention, appId may indicate "12", appType may indicate "5", and appName may indicate "quiz01". In addition, globalID may indicate "http://www.atsc.com/mbcapplication1".

(b) of the drawing illustrates XML format of a PDI Table.

The PDI Table may include at least one of protocolVersion indicating a version of a protocol, pdiTableId for uniquely identifying the PDI Table, pdiTableVersion indicating a version of the PDI Table, and/or time indicating time at which questions are lastly updated in the PDI Table.

According to an embodiment of the present invention, the protocolVersion may indicate "0FB7", the pdiTableId may indicate "http://www.atsc.com/mbcapplication1", pdiTableVersion may indicate "5", and time may indicate "2014-12-13T12:12:12".

A transmitter may set globalID and pdiTableId in the same way for each application and then transmit application setting related questions.

The receiver may identify pdiTableId with the same information as globalID of the corresponding application and set notification of an application according to a user using information for each user in the corresponding PDI table.

FIG. 164 is a view showing a signaling structure for user setting per application according to another embodiment of the present invention.

Referring to the figure, appID or globalID may be added to a PDI table to designate an application to which information of the corresponding PDI table is applied.

Before display-processing notification of an application, a receiver identifies whether PDI-related information applied to the corresponding application is present using the appID included in the PDI table. The receiver may decide whether to display-process notification of the corresponding application based on the PDI-related information.

FIG. 165 is a view showing a procedure for opt-in/out setting of an application using a PDI table according to an embodiment of the present invention.

A service provider may have a PDI table including PDI questions related to optin/out setting of an application. Information included in the PDI table may be created based on information provided by a user or information collected by the service provider (step 1).

The PDI table related to setting of agreement/disagreement for an application may be transmitted to a receiver (TV). At this time, an ID of the PDI table may have the same value as an ID (appID or globalID) of the application (step 2).

The service provider may send a trigger and/or PTP for the corresponding application to the receiver (TV) (step 3).

The user may select "Setting" for opt-in/out setting of an application and an PDI setting app for the application may be executed (step 4).

User setting for opt-in/out setting of the application may be stored in a PDI store by the PDI setting app (step 5).

FIG. 166 illustrates a procedure of setting Opt-in/out of an application using a PDI table according to an embodiment of the present invention.

In addition to the above description, a user may select "Setting" in order to set Opt-in/out for an application and execute PDI setting app for the application. In this case, a receiver may search for PDI Tables with the same ID using an ID (or globalID of an application) of an application (step 4).

User setting for Opt-in/out of an application may be stored PDI store according to PDI setting app (step 5).

FIG. 167 is a view showing a user interface (UI) for opt-in/out setting of an application according to an embodiment of the present invention.

Upon receiving a trigger, a receiver may display a user interface (UI) as shown in (a). A user may directly execute the corresponding application (enter) or perform setting of the corresponding application.

In a case in which the user selects 'setting', a PDI setting app or a UI of the receiver may be further executed, through which the user may set whether the user will agree to use the corresponding application. Such information may be stored together with a PDI table.

FIG. 168 is a view showing a processing procedure in a case in which a receiver (TV) receives a trigger of an application having the same application ID from a service provider after completing opt-in/out setting of an application using a PDI table according to an embodiment of the present invention.

A service provider transmits a trigger of an application, opt-in/out setting of which is completed, to the receiver (step 1).

An application manager of the receiver (TV) may parse the corresponding trigger to acquire an application ID (step 2).

The receiver may retrieve a relevant PDI table from a PDI store using the acquired application ID and find out an answer to opt-in/out of the application, i.e. user setting.

The receiver may execute or may not execute the application according to opt-in/out setting of the application.

FIG. 169 illustrates a processing procedure when Opt-in/out setting of an application is completed using a PDI table and then a receiver (TV) receives a trigger of an application with the same application ID from a service provider according to an embodiment of the present invention.

The service provider may transmit filtering criteria information in a table (e.g., triggering application information or TPT) including application attribute information.

The receiver may parse the received filtering criteria information and compare the filtering criteria information with application related PDI information that is previously stored in the receiver. In this case, the receiver may perform the comparison using an application ID in order to search for the previously stored application.

FIG. 170 illustrates data format of filtering criteria according to an embodiment of the present invention.

The filtering criteria information may be aggregation of filtering criteria for filtering only contents appropriate for a user using the PDI data. The filtering criteria may include at least one of QIACriterion element, QBACriterion element, QSACriterion element, QTACriterion element, and/or QAACriterion element.

QIACriterion element, QBACriterion element, QSACriterion element, QTACriterion element, and/or QAACriterion element may each include at least one of iD attribute and/or CriterionValue element.

The ID attribute may identify a question corresponding to filter criteria.

The QIACriterion element may indicate filter criteria corresponding to a question with an integer value. When the CriterionValue element included in the QIACriterion element does not include extent attribute, the CriterionValue element may indicate integer answer for a question corresponding to the filtering criteria. When the CriterionValue element included in the QIACriterion element includes extent attribute, the CriterionValue element may indicate lower end of a numeric range of an answer for a question. In addition, the extent attribute may indicate integers in the range.

The QBACriterion element may indicate filter criteria corresponding to a question with a Boolean value. The CriterionValue element included in the QBACriterion element may indicate Boolean answer for a question corresponding to the filtering criteria.

The QSACriterion element may indicate filter criteria corresponding to a question with a selection value. The CriterionValue element included in the QSACriterion element may indicate an identifier of selection answer for a question corresponding to the filtering criteria.

The QTACriterion element may indicate filter criteria corresponding to a question with a string value. The CriterionValue element included in the QTACriterion element may indicate text answer for a question corresponding to the filtering criteria.

The QAACriterion element may indicate filter criteria corresponding to a question with only text answer without a question. The CriterionValue element included in the QAACriterion element may indicate text answer for a question corresponding to the filtering criteria.

FIG. 171 is a view showing an UI for setting an option of an application per user and a question thereto according to an embodiment of the present invention.

Referring to (a) of the figure, there are shown a UI for setting whether a corresponding application will be exposed to a user and a question per application classified by an application ID. In this case, the user may set whether to use per application and information, for which whether to use has been set, may be stored in a receiver. The detailed operation of the receiver may refer to the above description.

Referring to (b) of the figure, there are shown an extended setting UI for classifying whether an application classified by an application ID will be exposed to a user and a question therefor. Basically, the user may set whether to use an application. In addition, the user may set whether this setting is effective only within a current broadcast program, within all broadcast programs of a current channel, or within all broadcast programs of all channels.

FIG. 172 illustrates XML data format of a PDI Table according to an embodiment of the present invention.

The PDI Table may include at least one of protocolVersion indicating a version of a protocol, pdiTableId for uniquely identifying the PDI Table, pdiTableVersion indicating a version of the PDI Table, and/or time indicating time at which questions are lastly updated in the PDI Table.

The PDI Table may include QSACriterion element indicating filter criteria corresponding to a question with a selection value. The QSACriterion element may include at least one of QText attribute indicating a text of a question and/or a selection element indicating selection of a question. The selection element may include at least one of selectionId attribute indicating an identifier for selection and/or selectionText attribute indicating a text of selection.

According to an embodiment of the present invention, the protocolVersion may indicate "0FB7", pdiTableId may indicate "http://www.atsc.com/mbcapplication1", pdiTableVersion may indicate "5", and time may indicate "2014-12-13T12:12:12".

The QText may indicate "Interactive Application agreement". The selection element may include first selection element and/or second selection element. The selectionId of the first selection may indicate "1" and the selectionText may indicate "Yes". The selectionId of second selection may indicate "2" and the selectionText may indicate "No".

Here, "http://www.atsc3.com/mbcapplication1" as the pdiTableId may correspond to application ID provided in a corresponding service.

A receiver may display a UI or a question for setting whether a corresponding application is exposed to a user for each application identified according to the application ID. In this case, the user may set whether an application is used for each application and store information on setting of whether the application is used, in the receiver. A detailed operation of the receiver may refer to the above description.

FIG. 173 illustrates XML data format of a PDI Table according to an embodiment of the present invention.

The PDI Table may include at least one of protocolVersion indicating a version of a protocol, pdiTableId for uniquely identifying a PDI Table, pdiTableVersion indicating a version of the PDI Table, and/or time indicating time at which questions are lastly updated in the PDI Table.

The PDI Table may include QSACriterion element indicating filter criteria corresponding to a question with a selection value. In this case, the PDI Table may include a first QSACriterion element indicating a UI or a query for setting of whether a corresponding application is exposed to a user and/or a second QSACriterion element indicating a extended setting UI and query therefor for identifying whether an application identified according to the application ID is exposed to the user.

A detailed description of the first QSACriterion element is the same as the above description.

The second QSACriterion element may include at least one of QText attribute and a selection element. The selection element may include a first selection element, a second selection element, and/or a third selection element.

The QText may indicate "option". The selectionId of the first selection element may indicate "1" and the selectionText may indicate "current broadcast Program". The selectionId of the second selection element may indicate "2" and the selectionText may indicate "all broadcast programs of a current channel". The selectionId of the third selection element may indicate "3" and the selectionText may indicate "all broadcast programs of all channels".

Here, "http://www.atsc3.com/mbcapplication1" as pdiTableId may correspond to an application ID provided in a corresponding service.

A user may set whether an application is used and set whether the setting is valid only in a current broadcast program, is valid in all broadcast programs of a current channel, or is valid in all broadcast programs of all channels.

FIG. 174 is a view showing a Rated_dimension element in a ContentAdvisoryInfo element according to an embodiment of the present invention.

The Rated_dimension element may indicate the number of rating regions predefined per nation. As shown in the figure, USA defined by rating_region has 8 rating regions and Canada defined by rating_region has 2 rating regions.

FIG. 175 is a view showing a TPT including content advisory information (ContentAdvisoryInfo element) according to an embodiment of the present invention.

A receiver may decide whether a synchronized application provided by a broadcaster can be used in the receiver based on rating information set for a TV by a user.

An application (for example, TDO) that can be used in next generation hybrid broadcasting may be configured as a content according to set rating information and provided as an app service.

The content advisory information may be transported as signaling information while being included in a broadcast signal. Alternatively, the content advisory information may be included in the above-described TPT.

In order to include the content advisory information in the TPT, the ContentAdvisoryInfo element may be further signaled in the TPT.

The ContentAdvisoryInfo element includes rating information of given ContentItem or Event. This value may have the same value as rating information per region declared in a rating region table (RRT).

In order to include the content advisory information in the TPT, one or more of the following elements may be signaled through the TPT.

A contentAdvisoryId element indicates a delimiter that is capable of only recognizing ContentAdvisoryInfo from a TDO element scope.

A rating_region element means a rating region. For example, in a case in which a value of the rating_region element is 1, it may indicate USA. On the other hand, in a case in which a value of the rating_region element is 2, it may indicate Canada.

A rating_description element includes text expressing a rating value in an abbreviated form.

A Rated_dimension element may indicate the number of rating regions predefined per nation.

A rating_dimension element indicates a dimension index in the rating region table (RRT).

A rating_value element indicates a rating value of a dimension indicated by the rating_dimension element. For example, the rating_value element may have a value of TV-G,TV-PG, etc. according to the dimension.

The contentAdvisoryId element may be added to a TDO element, ContentItem element, or Event element. Consequently, the rating information may be applied to the entirety of the TDO. Alternatively, the rating information may be applied per Con-tentItem or Event. In a case in which a corresponding element has no rating information, a value of 0 is provided as a default value. In a case in which a corresponding element is associated with rating information, a value of the contentAdvisoryId element is provided below the ContentAdvisoryInfo element.

FIG. 176 is a view showing an application programming interface (API) for acquiring a rating value according to an embodiment of the present invention.

In order to obtain a rating value set in a TV from an application (or TDO), an API for the application is needed.

As shown in the figure, a function for obtaining a rating value may be added to an API for an existing broadcasting system.

The application provides rating_region information to the API to obtain a rating information value set by a user. A rating information value stored in a receiver may be transmitted to the above-described ContentAdvisoryInfo element.

FIG. 177 is a diagram illustrating a structure of a transceiving system according to an embodiment of the present invention.

According to an embodiment of the present invention, the transceiving system may include at least one of a transmitter C10, a first receiver C100, and/or a second receiver C200.

The transmitter C10 may provide a broadcast service. For example, the broadcast service may include at least one of content (or linear service), an application (or non-linear service), and/or signaling information. The transmitter C10 may transmit a broadcast stream including a broadcast service using at least one of satellite, terrestrial, and cable broadcast networks. The transmitter C10 may transmit the broadcast service according to requests of the first receiver C100 and/or the second receiver C200. The transmitter C10 may include at least one of the aforementioned broadcast transmitting apparatus (not shown), a content provider (not shown), a content server (not shown), controller (not shown), and/or a transmitter (not shown).

The first receiver C100 may receive the broadcast service through the broadcast network and/or the Internet. The first receiver C100 may be represented as a broadcast receiving apparatus, a receiver, a first screen device, a master device, and/or a primary device. The first receiver C100 may include at least one of a broadcast receiver C110, an IP transceiver C130, an app transceiver C140, a decoder (not shown), a display (not shown), and/or a controller C150.

The broadcast receiver C110 may receive a broadcast stream including a broadcast service. In this case, the broadcast stream may be transmitted using at least one of satellite, terrestrial, and cable broadcast networks. Accordingly, the broadcast receiver C110 may include at least one of a satellite tuner, a terrestrial tuner, and a cable tuner in order to receive the broadcast stream.

The IP transceiver C130 may make a request for a broadcast service to the transmitter C10. The IP transceiver C130 may receive the broadcast service from the transmitter C10.

The app transceiver C140 may transmit and/or receive the broadcast service to and from an app transceiver C240 of the second receiver C200. The app transceiver C140 may transmit signaling information to the second receiver from the first receiver and may be referred to as an application signaling service.

A decoder (not shown) may decode a broadcast service.

A display (not shown) may display the broadcast service.

The controller C150 may control operations of the broadcast receiver C110, the IP transceiver C130, the app transceiver C140, the decoder, and/or the display.

The second receiver C200 may receive the broadcast service through the Internet. The second receiver C200 may be represented as a second broadcast receiving apparatus, a second receiver, a second screen device, a slave device, and/or a companion device. The second receiver C200 may include at least one of an IP transceiver C230, the app transceiver C240, a decoder (not shown), a display (not shown), and/or a controller C250. However, according to an embodiment, the second receiver C200 may further include a broadcast receiver (not shown). The second receiver C200 may have a plural number.

The IP transceiver C230 may make a request for a broadcast service to the transmitter C10. The IP transceiver C230 may receive the broadcast service from the transmitter C10.

The app transceiver C240 may transmit and/or receive the broadcast service to and from the app transceiver C140 of the first receiver C100. The app transceiver C240 may transmit signaling information to the first receiver from the second receiver and may be referred to as an application signaling service.

A decoder (not shown) may decode a broadcast service.

A display (not shown) may display a broadcast service.

The controller C250 may control operations of a broadcast receiver C210, an IP transceiver C230, the app transceiver C240, a decoder, a broadcast receiver, and/or a display.

A detailed description of the transmitter C10, the first receiver C100, and/or the second receiver C200 may include the entire above description.

FIG. 178 is a diagram illustrating event information according to an embodiment of the present invention.

According to an embodiment of the present invention, the first receiver may receive signaling information through a broadcast network and/or the Internet. In detail, the first receiver may receive application signaling information including a trigger and/or triggering application information (e.g., TPT). The first receiver may store event information included in the triggering application information in a storage (or primary device storage) included in the first receiver.

According to an embodiment of the present invention, the first receiver may transmit the signaling information to the second receiver. In detail, the first receiver may transmit the application signaling information to the second receiver (e.g. companion device).

For example, the signaling information may include application signaling information. The application signaling information may include at least one of a trigger for triggering an operation of an application and triggering application information for signaling information on a triggered application.

The trigger may include at least one of a trigger for signaling a state (or life cycle) of an application, a trigger for signaling an operation of an application, and/or a trigger for signaling media time. The state of the application may include at least one of preparing, execution, termination, and/or suspending.

The triggering application information may include additional information required to execute an application.

According to an embodiment of the present invention, the triggering application information may include application information (TDO). The application information may include event information indicating information on an event of an application. In a detailed embodiment, the event information may be referred to as event.

The event information may include an event identifier for identifying an event. In detail, the event identifier may uniquely identify an event in a corresponding application range. In a detailed embodiment, the event identifier may be referred to as eventID. In a detailed embodiment, the event identifier may be a 16-bit element.

The event information may include action information indicating an operation of an event. In detail, the event information may include preparing, execution, termination or kill, and/or suspending. In a detailed embodiment, the action information may be referred to as action.

The event information may include destination information indicating target information targeted by an application. The destination information may indicate that an application is used for only the first receiver (or primary device) for receiving a broadcast signal. The destination information may indicate that an application is used for only one or more second receivers (or companion device) that are operatively associated with the first receiver (or primary device) for receiving a broadcast signal. The destination information may indicate that an application is used for both the first receiver and the second receiver. In a detailed embodiment, the destination information may be referred to as destination.

The event information may include diffusion information for diffusing a triggering application information request. In detail, the first receiver may calculate a random value based on the diffusion information, may be on standby by as much as the random value and, then may make a request for triggering application information to a server. In detail, the receiver may be on standby by as much as a value obtained by multiplying the random value by 10 ms and then may make a request for the triggering application information to the server. In a detailed embodiment, the diffusion information may be referred to as diffusion. In a detailed embodiment, the diffusion information may be an 8-bit element.

The event information may include data information indicating data associated with an event. Each event may have a data element associated with an event. In a detailed embodiment, the data information may be referred to as data.

The data information may include a data identifier for identifying data. The data identifier may be referred to as dataID. The data identifier may be a 16-bit element.

FIG. 179 is a diagram illustrating XML format of event information according to an embodiment of the present invention.

The drawing illustrates XML format of triggering application information received by the first receiver according to an embodiment of the present invention. Hereinafter, event information included in the triggering application information will be described.

The application information may include first event information and/or second event information.

The first event information may include eventID, action, destination, and/or dataID. The eventID may indicate "1". The action may indicate "exec". The destination may indicate "2". Diffusion may indicate "5". The dataID may indicate "10". The data may indicate "AAAAZg==".

The second event information may include eventID, action, destination, and/or dataID. The eventID may indicate "2". The action may indicate "kill". The destination may indicate "2". The diffusion may indicate "5". The dataID may indicate "11". The data may indicate "YTM0NZomIzI2OTsmIzM0NTueYQ==".

FIG. 180 is a diagram illustrating UPnP Action Mechanism according to an embodiment of the present invention.

Referring to the drawing, one method of communication between devices applied to an embodiment of the present invention may be a communication protocol between devices, obtained by combining protocols of IP-TCP/UDP-HTTP among technology of various layers.

According to an embodiment of the present invention, the technology of layer will be described.

First, according to an embodiment of the present invention, communication between devices may be represented to exchange message, command, call, action, and/or request/response.

Second, according to an embodiment of the present invention, in order to stably transmit a message used during communication between devices to a desired target device, various protocols such as an Internet control message protocol (ICMP) and an Internet group management protocol (IGMP) as well as an Internet protocol (IP) may be applied and may not be limited to a specific protocol.

Third, according to an embodiment of the present invention, in order to stably transmit a message used during communication between devices, to control a message flow, to overcome collision or congestion between a plurality of messages, and to support multiplexing, various protocols such as a datagram congestion control protocol (DCCP) and a stream control transmission protocol (SCTP) as well as a transmission control protocol (TCP) and a user datagram protocol (UDP) and may not be limited to a specific protocol.

Fourth, according to an embodiment of the present invention, in order to transmit various information items in a message used during communication between devices for various purposes, various protocols such as a hypertext transfer protocol (HTTP), a real-time transport protocol (RTP), an extensible messaging and presence protocol (XMPP), and a file transfer protocol (FTP) may be applied and may not be limited to a specific protocol.

Fifth, according to an embodiment of the present invention, when a message used during communication between devices is transmitted through the aforementioned various protocols, desired message data may be transmitted in various message component such as a message header and a message body among message components defined in each protocol and a specific message component may not be limited.

Sixth, according to an embodiment of the present invention, when a message used during communication between devices is transmitted, data to be transmitted may be transmitted using various types (string, integer, floating point, boolean, character, array, list, etc.) defined in each protocol. In order to more structurally represent, transmit, and store data with complex information, a markup method such as extensible markup language (XML), hypertext markup language (HTML), extensible hypertext markup language (XHTML), and javascript object notation (JSON) or text, image format, etc. and a specific method may not be limited.

Seventh, according to an embodiment of the present invention, data included in a message used during communication between devices may be transmitted using various data compression technologies such as "gzip" (RFC 1952), "deflate" (RFC 1950), and "compress" (RFC 2616) and a specific method may not be limited.

UPnP action proposed according to an embodiment of the present invention may be one of various methods of communication between devices and data to be actually transmitted may be transmitted in XML format in an HTTP POST message body using a POST method defined in the HTTP to a control URL acquired during UPnP discovery and description. In the case of a UPnP protocol, an action name is defined and used for each action and is transmitted together with the HTTP POST message body transmitted in XML and, thus, only one URL may be present with respect to a communication target device and an infinite type of action (message) may be exchanged even if only one HTTP POST method is used.

All UPnP actions proposed according to an embodiment of the present invention may be applied via various types of combinations of the aforementioned various technologies of layer and all contents proposed by an embodiment of the present invention may not be limited to the UPnP method.

FIG. 181 is a diagram illustrating a REST mechanism according to an embodiment of the present invention.

Referring to the drawing, a REST method as one method of communication between devices applied to an embodiment of the present invention may define a plurality of URIs to be accessed to a communication target device.

For example, when various methods GET, HEAD, PUT, DELETE, TRACE, OPTIONS, CONNECT, and PATCH as well as POST among HTTP methods are used and a plurality of URIs to be accessed to a communication target device are defined, communication between devices proposed by an embodiment of the present invention may be applied without definition of an action name. Data to be transmitted may be appended to a corresponding URL or may be transmitted and transmitted in an HTTP body in various forms. A plurality of URI values required in the REST method may be acquired during a discovery or description procedure.

FIG. 182 is a diagram illustrating state variables for transmitting a trigger according to an embodiment of the present invention.

According to an embodiment of the present invention, a transceiving system may receive signaling information using the first receiver (or primary device) and execute an event by the second receiver based on signaling information.

For example, the first receiver may receive the signaling information. The first receiver may receive the signaling information through a broadcast network. The signaling information may include application signaling information. The application signaling information may include a trigger and/or triggering application information. The triggering application information may include event information. The event information may include destination information. According to an embodiment, the destination may indicate "2". When the destination indicates "2", a target device may indicate the second receiver (or companion device) and the corresponding event may be executed by the second receiver.

Hereinafter, a method of receiving signaling information by the first receiver through a broadcast network and executing an event through the second receiver based on the signaling information will be described. For example, the first receiver may receive a trigger for executing an event with destination="2" through a broadcast network. The first receiver may transmit the trigger to the second receiver. The second receiver (or companion device) may execute the event using the trigger. According to an embodiment of the present invention, an example of UPnP will be described.

The first receiver and/or the second receiver may each include an app transceiver. The app transceiver may transmit signaling information to the second receiver (or CD) from the first receiver (or PD). According to an embodiment, the app transceiver may be referred to as an application signaling service. According to an embodiment, a service type may be defined as urn:atsc.orgaerviceId:atsc3.0:applicationsignaling:1.

The app transceiver of the first receiver may transmit the signaling information (e.g., application signaling information) received through a broadcast network by the first receiver to the second receiver. In addition, the first receiver may allow the second receiver to directly receive the signaling information (or application signaling information) from a transmitter through the Internet using the app transceiver.

The drawing illustrates trigger transmission information for transmitting a trigger. The trigger transmission information may include trigger list information and/or trigger position information. The trigger transmission information may be included in the signaling information and/or the application signaling information. The trigger transmission information may be transmitted to the second receiver from the first receiver using an eventing method and in response to a request of the second receiver.

The trigger list information may include overall information items on a trigger for the second receiver (or CD) as a required state variable. According to an embodiment of the present invention, the trigger list information may be referred to as TriggerInfoList variable. The trigger list information may be transmitted to the second receiver from the first receiver using an eventing method and/or in response to a request of the second receiver.

The trigger position information may indicate a position at which the second receiver (or CD) makes a request for trigger information to a transmitter (or content server) as a required state variable. According to an embodiment, the trigger position information may be referred to as A_ARG_TYPE_NotificationInfo variable. The trigger position information may be transmitted to the second receiver from the first receiver in response to a request of the second receiver. However, the present invention is not limited thereto and the trigger position information may be transmitted o the second receiver from the first receiver using an eventing method.

FIG. 183 is a diagram illustrating trigger list information according to an embodiment of the present invention.

Referring to the drawing, the trigger list information may include overall information on a trigger for the second receiver (or CD) as a required state variable. The trigger list information may include trigger information for at least one trigger for the second receiver (or CD).

The trigger information may include at least one of trigger type information, action information, event start time information, event termination time information, data information, and/or data position information.

The trigger type information may indicate a type of a trigger for triggering an application. The trigger type information may be application trigger type information for the second receiver (or CD). The trigger type information may be referred to as triggerType. The application trigger type may include action, status, and/or mediaTime. For example, when the trigger type information indicates "action", the triggering application information for signaling information on a triggered application may include an action to be executed by the application. When the trigger type information indicates "status", the triggering application information may signal change in a life cycle of an application. When the trigger type information indicates "mediaTime", the triggering application information may include media time. Each type may be the same as in the above description and may be changed or added.

The action information may indicate an operation of a triggered application. The action information may be application trigger action information for the second receiver (or CD). The action information may be referred to as action. The application trigger action may be the same as prep, exec, suspend, and kill. The action may be changed or added in the future. When the application trigger type is an action, the application trigger type may be related to a lifecycle of an application. When the application trigger type is a status, the application trigger type may be related to contained data.

The event start time information may indicate time at which a trigger for the second receiver (or CD) is started. The event start time information may be referred to as eventStartTime.

The event termination time information may indicate time at which a trigger for the second receiver (or CD) is terminated. The event termination time information may be referred to as eventEndTime.

The data information may be trigger related data for the second receiver (or CD). The data information may be referred to as data.

The data position information may indicate a position on a content server of the trigger related data for the second receiver (or CD). The data position information may be referred to as dataURI.

FIG. 184 is a diagram illustrating XML format of trigger list information according to an embodiment of the present invention.

Referring to the drawing, the trigger list information may include first trigger information and/or second trigger information.

The first trigger information may include at least one of trigger type information, action information, event start time information, event termination time information, data information, and/or data position information. The trigger type information may indicate "action". The action information may indicate "exec". The event start time information may indicate "77ee". The event termination time information may indicate 7870". The data information may indicate "AAAAZg==". The data position information may indicate "http://www.atsc.com/trigger/data".

The second trigger information may include at least one of trigger type information, action information, and/or event start time information. The trigger type information may indicate "status". The action information may indicate "kill". The event start time information may indicate "9a33".

FIG. 185 is a diagram illustrating trigger transmission information according to an embodiment of the present invention.

(a) of the drawing illustrates trigger transmission information. The trigger transmission information may include trigger list information and/or trigger position information. The trigger transmission information may be transmitted to the second receiver from the first receiver in response to a request of the second receiver.

The second receiver may make a request for the trigger list information to the first receiver. Information for requesting the trigger list information to the first receiver by the second receiver may be referred to as GetTriggerInfoList(). For example, GetTriggerInfoList() may be information for requesting valid trigger information to the first receiver by the second receiver (or CD). For example, the GetTriggerInfoList() may be used to check whether valid trigger information is present in the second receiver (or CD) at a current time point when the second receiver (or CD) is connected to the first receiver (or PD) in the middle of a specific program as a required action.

The second receiver may make a request for trigger position information to the first receiver. The information for requesting trigger position information to the first receiver by the second receiver may be referred to as GetTrigger-InfoURI(). For example, the GetTriggerInfoURI() may be used to request trigger related information from a content server through the Internet by the second receiver (or CD) as a required action. As a return value of GetTriggerInfoURI action, a position of trigger information on the second receiver (or CD) on TriggerURI, i.e., the content server may be acquired in the form of URL.

(b) of the drawing illustrates trigger list information. The first receiver may transmit trigger list information in response to a request of the second receiver. For example, the second receiver may acquire trigger list information as a return value of the GetTriggerInfoList action. A state variable related to the trigger list information may be TriggerInfoList.

(c) of the drawing illustrates trigger position information. The first receiver may transmit trigger position information in response to the request of the second receiver. For example, the second receiver may acquire trigger position information as a return value of the GetTriggerInfoURI action. The state variable related to the trigger position information may be A_ARG_TYPE_TriggerURI.

FIG. 186 is a diagram illustrating trigger transmission information according to an embodiment of the present invention.

The trigger list information may include an application identifier (AppID). The application identifier may be included in application attribute related information (e.g., TPT or triggering application information) to be received by the first receiver through the broadcast network and/or the Internet. The application identifier information may identify a specific application that is currently executed or to be executed by the second receiver.

In this case, the trigger transmission information may include at least one of trigger list information, trigger position information, trigger information, and/or application identifier. The trigger transmission information may be included in signaling information and/or application signaling information. The trigger transmission information may be transmitted to the second receiver from the first receiver using an eventing method and/or in response to a request of the second receiver. Alternatively, the trigger transmission information may be transmitted to the first receiver from the second receiver using an eventing method and/or in response to a request of the first receiver.

The trigger list information may include trigger information on at least one trigger for the second receiver (or CD) as a required state variable. According to an embodiment of the present invention, the trigger list information may be referred to as TriggerInfoList variable. The trigger list information may be transmitted to the second receiver from the first receiver using an eventing method and/or in response to a request of the second receiver.

The trigger position information may indicate a position at which the second receiver (or CD) is capable of making a request for trigger information to the transmitter (or content server) as a required state variable. According to an embodiment, the trigger position information may be referred to as A_ARG_TYPE_NotificationInfo variable. The trigger position information may be transmitted to the second receiver from the first receiver in response to a request of the second receiver.

The trigger information may indicate attribute or information on a trigger as a required state variable. According to an embodiment, the trigger information may be referred to as A_ARG_TYPE_TriggerInfo variable. The trigger information may be transmitted to the second receiver from the first receiver in response to a request of the second receiver.

The application identifier list information may indicate a list of an application identifier (or AppID) as a required state variable. According to an embodiment, the application identifier list information may be referred to as A_ARG_TYPE_AppIDs variable. The application identifier list information may be transmitted to the second receiver from the first receiver in response to a request of the second receiver.

FIG. 187 is a diagram illustrating trigger list information according to an embodiment of the present invention.

The trigger list information may include trigger information on at least one trigger for the second receiver (or CD).

The trigger information may include trigger type information indicating a type of a trigger for triggering an application, action information indicating an operation of a triggered application, event start time information indicating time at which a trigger for the second receiver (or CD) is started, event termination time information indicating time at which a trigger for the second receiver (or CD) is terminated, data information indicating trigger related data for the second receiver (or CD), and/or data position information indicating a position in the content server of trigger related data for the second receiver (or CD).

The trigger information may further include an application identifier for identifying an application. The application identifier may be referred to as appID attribute.

The first receiver may transmit signaling information of an application executed by the first receiver and/or an action for the application to the second receiver.

When the trigger information includes an application identifier, the first receiver may transmit the signaling information on execution of an application with another application identifier to be executed in the future and/or an action of the application as well as the currently executed application and/or an action of the application, to the second receiver.

FIG. 188 is a diagram illustrating an XML data format of trigger list information according to an embodiment of the present invention.

Referring to the drawing, the trigger list information may include first trigger information and/or second trigger information.

The first trigger information may include at least one of application identifier, trigger type information, action information, event start time information, event termination time information, data information, and/or data position information. The application identifier may indicate "12". The trigger type information may indicate "action". The action information may indicate "exec". The event start time information may indicate "77ee". The event termination time information may indicate 7870". The data information may indicate "AAAAZg==". The data switching information may indicate "http://www.atsc.com/trigger/data".

The second trigger information may include at least one of application identifier, trigger type information, action information, and/or event start time information. The application identifier may indicate "13". The trigger type information may indicate "status". The action information may indicate "kill". The event start time information may indicate "9a33".

FIG. 189 is a diagram illustrating trigger transmission information according to an embodiment of the present invention.

(a) of the drawing illustrates trigger transmission information. The trigger transmission information may include trigger list information and/or trigger position information. The trigger transmission information may be transmitted to the second receiver from the first receiver in response to a request of the second receiver.

The second receiver may make a request for application identifier list information to the first receiver 의 application identifier list information. Information for requesting application identifier list information to the first receiver by the second receiver may be referred to as GetAppIDs(). For example, the GetAppIDs() may be a required action. The GetAppIDs() may be used to acquire an application identifier list included in trigger information by the second receiver after the second receiver is connected to the first receiver. The trigger information may be received through a broadcast network and/or the Internet by the first receiver.

The second receiver may make a request for trigger information to the first receiver. Information for requesting trigger information to the first receiver by the second receiver may be referred to as GetTriggerInfo(). For example, the GetTriggerInfo() may be a required action. The GetTriggerInfo()may be used to acquire trigger information on a specific application after the second receiver is connected to the first receiver.

(b) of the drawing illustrates application identifier list information. The first receiver may transmit application identifier list information in response to a request of the second receiver. For example, the second receiver may acquire application identifier list information as a return value of the GetAppIDs action. A state variable related to the application identifier list information may be A_ARG_TYPE_AppIDs.

(c) of the drawing illustrates application identifier list information and/or trigger information. The first receiver may transmit trigger information in response to a request of the second receiver.

The second receiver may use application identifier and/or application identifier list information as input argument in order to acquire information on a desired application. The first receiver may transmit a return value thereof as TriggerInfo argument.

For example, the second receiver may acquire trigger information as a return value of the GetTriggerInfo action. A state variable related to application identifier list information may be appIDs. A state variable related to trigger information may be A_ARG_TYPE_TriggerInfo.

FIG. 190 is a flow diagram when trigger type information indicates "action" according to an embodiment of the present invention.

Referring to the drawing, a transceiving system according to an embodiment of the present invention may include at least one of the transmitter C10, the first receiver C100, and/or the second receiver C200.

The transmitter C10 may provide a broadcast service. For example, the broadcast service may include at least one of content (or linear service), an application (or non-linear service), and/or signaling information. The transmitter C10 may include at least one of the aforementioned broadcast transmitting apparatus (not shown), a content provider (not shown), a content server (not shown), a controller (not shown), and/or a transmitter (not shown).

The first receiver C100 may receive the broadcast service through a broadcast network and/or the internet. The first receiver C100 may be referred to as a TV receiver and/or PD.

The second receiver C200 may receive the broadcast service through the Internet. The second receiver may be referred to as a mobile phone and/or a CD.

Hereinafter, an operation of a transceiving system according to an embodiment of the present invention when the trigger type information indicates "action" will be described.

The first receiver C100 may perform a discovery and/or pairing operation with respect to the second receiver C200. For example, the first receiver C100 may discover the second receiver and may be electrically connected to the second receiver so as to transmit and receive data.

Then, the first receiver C100 may subscribe an application signaling service of the second receiver C200. The second receiver C200 may subscribe the application signaling service of the first receiver C100. For example, the first receiver C100 may subscribe an app transceiver of the second receiver C200 using the app transceiver of the first receiver C100.

Then, the first receiver C100 may receive a broadcast signal from the transmitter C10. The first receiver C100 may acquire signaling information based on the broadcast signal. In detail, the first receiver C100 may acquire application signaling information based on the signaling information. As described above, the first receiver C100 may acquire application signaling information based on an MPEG-DASH protocol and/or an MMT protocol. The application signaling information may include at least one of a trigger for triggering an operation of an application and triggering application information (or TPT) for signaling information on a triggered application.

Then, the first receiver C100 may store the received signaling information in storage. For example, the first receiver C100 may store the received triggering application information in the storage.

Then, the first receiver C100 may further receive signaling information from the transmitter C10. The signaling information may include a trigger. For example, the trigger may include a trigger that is transmitted to the second receiver from the first receiver or is to be processed by the second receiver.

The trigger may include at least one of an application identifier for identifying a triggered application, a triggering event identifier for identifying a triggering event, and/or a data identifier for identifying data required by a triggering event. The trigger may include at least one of trigger type information indicating a type of a trigger for triggering an application, action information indicating an operation of the triggered application, start time of a triggering event, termination time of a triggering event, and/or data information including trigger related data.

According to an embodiment, when the trigger type information indicates "action", the trigger type information may indicate a trigger for signaling an operation of an application.

Then, the first receiver C100 may perform an action of signaling information. The first receiver C100 may transmit signaling information to the second receiver C200. For example, the first receiver may transmit trigger transmission information for acquiring a trigger by the second receiver based on signaling information to the second receiver. For example, the first receiver C100 may transmit the trigger list information to the second receiver C200. That is, the first receiver C100 may transmit the trigger list information to the second receiver C200 using an eventing method. Transmission of the trigger list information using an eventing method may indicate occurrence of an event for transmitting the trigger list information to the second receiver by the first receiver.

Hereinafter, an operation for transmitting trigger list information by the first receiver C100 will be described in detail.

The first receiver C100 may parse a trigger based on signaling information. The first receiver C100 may parse an application identifier (or appID) in the received trigger, an event identifier (or eventID), and/or a data identifier (or dataID).

Then, the first receiver C100 may check a target device. For example, the first receiver C100 may check event information included in the triggering application information based on the trigger information in the trigger. The first receiver C100 may search for a corresponding application and/or event based on the application identifier and/or the event identifier and check whether a destination of an event indicates the second receiver. For example, when the destination indicates "2", the destination of the event may indicate the second receiver (or second screen).

Then, the first receiver C100 may transmit trigger list information (or TriggerInfoList information) including information on the received trigger to the second receiver C200 using an eventing method. When the trigger type information indicates "action", a tape may be included in an event. When the destination of the event is "second receiver" and data is included in the event, the first receiver C100 may notify the second receiver C200 of the trigger list information (or TriggerInfoList information) using an eventing method. For example, when the destination of the event is '2' and data is included in the event, the first receiver C100 may generate an event of transmitting the trigger list information to the second receiver.

The second receiver C200 may receive signaling information from the first receiver C100. For example, the second receiver C200 may receive trigger list information including information on a trigger. For example, the trigger may be a trigger for executing (or exec) contained data, up to "7870" starting from "77ee" based on media time. The second receiver C200 may execute an application based on the trigger included in the trigger list information.

FIG. 191 illustrates XML format of TriggerInfoList when trigger type information indicates "action" according to an embodiment of the present invention.

Referring to the drawing, the trigger list information (or TriggerInfoList) may include trigger information. The trigger information may include at least one of trigger type information, action information, event start time information, event termination time information, and/or data information.

According to an embodiment, the trigger type information (or triggerType) may indicate "action". The action information (or action) may indicate "exec". The event start time information (or eventStartTime) may indicate "77ee". The event termination time information (or eventEndTime) may indicate "7870". The data information may indicate "AAAAZg==".

FIG. 192 is a flow diagram when trigger type information indicates "action" according to an embodiment of the present invention.

Referring to the drawing, a transceiving system according to an embodiment of the present invention may include at least one of the transmitter C10, the first receiver C100, and/or the second receiver C200. A description of the transceiving system according to an embodiment of the present invention may include the entire above description of the aforementioned transceiving system.

The signaling information according to an embodiment of the present invention may include a trigger. The trigger may include at least one of an application identifier for identifying a triggered application, a triggering event identifier for identifying a triggering event, and/or a data identifier for identifying data required by the triggering event. In addition, the trigger may further include trigger type information indicating a type of a trigger for triggering an application, action information indicating an action of the triggered application, start time of a triggering event, termination time of a triggering event, data information including trigger related data, and/or data position information indicating a position in a content server of data information. According to an embodiment, the data position information may be referred to as dataURI.

The first receiver C100 may transmit trigger list information including information on the received trigger to the second receiver C200. For example, the first receiver C100 may transmit trigger list information to the second receiver C200 using an eventing method.

The second receiver C200 may receive signaling information from the first receiver C100. For example, the second receiver C200 may receive trigger list information including information on a trigger. For example, the trigger may be a trigger for executing (or exec) of contained data, up to "7870" starting from "77ee" based on media time.

The second receiver C200 may execute an application based on the trigger included in the trigger list information and/or data information received from a content server. In this case, the second receiver C200 may make a request for data information including trigger related data to the transmitter C10 based on data position information (or dataURI). A routine for requesting data to a content server based on the data position information by the second receiver C200 may be changed according to a mechanism of embodying the second receiver C200.

FIG. 193 illustrates XML format of TriggerInfoList when trigger type information indicates "action" according to an embodiment of the present invention.

Referring to the drawing, the trigger list information (or TriggerInfoList) may include trigger information. The trigger information may include at least one of trigger type information, action information, event start time information, event termination time information, data information, and/or data position information.

According to an embodiment, the trigger type information (or triggerType) may indicate "action". The action information (or action) may indicate "exec". The event start time information (or eventStartTime) may indicate "77ee". The event termination time information (or eventEndTime) may indicate "7870". The data information may indicate "AAAAZg==". The data position information (or dataURI) may indicate http://www.atsc.com/trigger/data.

FIG. 194 is a flow diagram when trigger type information indicates "status" according to an embodiment of the present invention.

Referring to the drawing, a transceiving system according to an embodiment of the present invention may include at least one of the transmitter C10, the first receiver C100, and/or the second receiver C200.

A description of the transceiving system according to an embodiment of the present invention may include entire aforementioned transceiving system.

According to an embodiment, the first receiver C100 may receive a trigger including trigger type information (or application trigger type) indicating "status". When the trigger type information indicates "status", the trigger type information may indicate a trigger for signaling a status (or lifecycle) of an application. When the trigger type information indicates "status", the triggering application information may signal change in lifecycle of an application. The status of the application may include at least one of preparing, execution, termination, and/or suspending.

Hereinafter, an operation for transmitting trigger list information by the first receiver C100 when the trigger type information indicates "status" will be described in detail.

The first receiver C100 may parse a trigger based on the signaling information. The first receiver C100 may parse at least one of an application identifier (or appID), an event identifier (or eventID), and/or a data identifier (or dataID) in the received trigger.

Then, the first receiver C100 may check a target device. For example, the first receiver C100 may check event information included in triggering application information based on the trigger information in the trigger. The first receiver C100 may search for a corresponding application and/or event based on the application identifier and/or the event identifier and check whether a destination of the event indicates the second receiver. For example, when the destination indicates "2", the destination of the event may indicate teh second receiver (or second screen).

Then, the first receiver C100 may transmit trigger list information (or TriggerInfoList information) including information on the received trigger to the second receiver C200 using an eventing method. When the destination of the event is "second receiver", the first receiver C100 may notify the second receiver C200 of the trigger list information (or TriggerInfoList information) using an eventing method. For example, when the destination of the event is '2', the first receiver C100 may generate an event for transmitting the trigger list information to the second receiver.

The second receiver C200 may receive signaling information from the first receiver C100. For example, the second receiver C200 may receive trigger list information including information on a trigger. For example, the trigger may be a trigger for terminating (or killing) an application being executed by the second receiver C200 to "9a33" based on media time. The second receiver C200 may perform an application based on the trigger included in the trigger list information.

FIG. 195 is a diagram illustrating XML format of TriggerInfoList when trigger type information indicates "status" according to an embodiment of the present invention.

Referring to the drawing, the trigger list information (or TriggerInfoList) may include trigger information. The trigger information may include at least one of trigger type information, action information, and/or event start time information.

According to an embodiment of the present invention, the trigger type information (or triggerType) may indicate "status". The action information (or action) may indicate "kill". The event start time information (or eventStartTime) may indicate "9a33".

FIG. 196 is a flow diagram when trigger type information indicates "mediaTime" according to an embodiment of the present invention.

Referring to the drawing, a transceiving system according to an embodiment of the present invention may include at least one of the transmitter C10, the first receiver C100, and/or the second receiver C200. A description of the transceiving system according to an embodiment of the present invention may include the entire description of the aforementioned transceiving system.

According to an embodiment, the first receiver C100 may receive a trigger including trigger type information (or application trigger type) indicating "mediaTime". When the trigger type information indicates "mediatime", the trigger type information may indicate a trigger for signaling media time. When the trigger type information indicates "mediaTime", the triggering application information may include media time.

Hereinafter, an operation for transmitting trigger list information by the first receiver C100 when trigger type information indicates "mediaTime" will be described in detail.

The first receiver C100 may parse a trigger based on signaling information. The first receiver C100 may parse at least one of an application identifier (or appID), an event identifier (or eventID), and/or a data identifier (or dataID) in the received trigger.

Then, the first receiver C100 may acquire a target device. For example, the first receiver C100 may check event information included in the triggering application information based on the trigger information in the trigger. The first receiver C100 may search for a corresponding application and/or event based on the application identifier and/or the event identifier and check whether a destination of an event indicates the second receiver. For example, when the destination indicates "2", the destination of the event may indicate the second receiver (or second screen).

Then, the first receiver C100 may transmit trigger list information (or TriggerInfoList information) including information on the received trigger to the second receiver C200 using an eventing method. When the destination of the event is "second receiver", the first receiver C100 may notify the second receiver C200 of the trigger list information (or TriggerInfoList information) using an eventing method. For exmaple, when the destination of the event is '2', the first receiver C100 may generate an event for generating the trigger list information to the second receiver.

The second receiver C200 may receive the signaling information from the first receiver C100. For example, the second receiver C200 may receive trigger list information including information on the trigger. For example, the trigger may be a trigger indicating that current media time is "9a33" to the second receiver C200. When the trigger type information indicates "mediaTime", the second receiver C200 may omit processing of action information. The second receiver C200 may perform an application based on the trigger included in the trigger list information.

FIG. 197 is a diagram illustrating XML format of TriggerInfoList when trigger type information indicates "media-Time" according to an embodiment of the present invention.

Referring to the drawing, the trigger list information (or TriggerInfoList) may include trigger information. The trigger information may include at least one of trigger type information, action information and/or event start time information.

According to an embodiment, the trigger type information (or triggerType) may indicate "mediaType". The action information (or action) may indicate "exec". The event start time information (or eventStartTime) may indicate "9a33".

FIG. 198 is a flow diagram when a first receiver and a second receiver are not paired with each other according to an embodiment of the present invention.

Referring to the drawing, a transceiving system according to an embodiment of the present invention may include at least one of the transmitter C10, the first receiver C100, and/or the second receiver C200. A description of the transceiving system according to an embodiment of the present invention may include the entire description of the aforementioned transceiving system.

According to an embodiment of the present invention, the first receiver C100 and the second receiver C200 may not be pared with each other. Hereinafter, a flow diagram of the case in which the first receiver C100 is not paired with the second receiver C200 prior to reception of a trigger will be described.

The first receiver C100 may receive a broadcast signal from the transmitter C10. The first receiver C100 may acquire signaling information based on the broadcast signal. In detail, the first receiver C100 may acquire application signaling information based on the signaling information. As described above, the first receiver C100 may acquire the application signaling information based on the MPEG-DASH protocol and/or the MMT protocol. The application signaling information may include at least one of a trigger for triggering an action of an application and triggering application information (or TPT) for signaling information on a triggered application.

Then, the first receiver C100 may store the received signaling information in storage. For example, the first receiver C100 may store the received triggering application information (or TPT) in the storage.

Then, the first receiver C100 may further receive the signaling information from the transmitter C10. The signaling information may include a trigger. For example, the trigger may include a trigger that is transmitted to the second receiver from the first receiver or is processed by the second receiver.

However, the first receiver C100 may not be connected to the second receiver C200. Accordingly, even if a destination of an event indicates "2", the first receiver C100 may not transmit the signaling information and/ the trigger to the second receiver.

Then, the first receiver C100 may perform a discovery and/or pairing operation with respect to the second receiver C200. For example, the first receiver C100 may discover the second receiver and may be electrically connected to the second receiver so as to transmit and receive data.

Then, the second receiver C200 may subscribe an application signaling service of the first receiver C100. The first receiver C100 may subscribe an application signaling service of the second receiver C200. For example, the second receiver C200 may subscribe an app transceiver of the first receiver C100 using an app transceiver of the second receiver C200. The second receiver may make a request for trigger list information to the first receiver using GetTriggerInfoList action and, thus, it may not be necessary to subscribe the application signaling service of the first receiver.

Then, the first receiver C100 may receive a request for the trigger list information from the second receiver and transmit trigger list information including information on a trigger to the second receiver.

The second receiver C200 may check whether a trigger for the second receiver C200 is present among triggers received by the first receiver C100 using GetTriggerInfoList action. For example, the second receiver C200 may make a request for trigger list information (or TriggerInfoList) including information on a trigger for the second receiver C200 to the first receiver C100 and receive the trigger list information(또는, TriggerInfoList) from the first receiver C100.

Then, the second receiver C200 may check whether a trigger to be executed based on a current time point is present using the received trigger list information (or TriggerInfoList information). For example, the second receiver C200 may recognize whether an action to be currently performed based on at least one of trigger type information, event start time information, and/or event termination time information of the received trigger.

Then, the second receiver C200 may perform an action based on the trigger. For example, the second receiver C200 may execute an application based on the trigger included in the trigger list information.

FIG. 199 is a flow diagram of the case in which the first receiver and the second receiver are not paired according to an embodiment of the present invention.

Referring to the drawing, a transceiving system according to an embodiment of the present invention may include at least one of the transmitter C10, the first receiver C100, and/or the second receiver C200. A description of the transceiving system according to an embodiment of the present invention may include the entire above description of the aforementioned transceiving system.

According to an embodiment of the present invention, the first receiver C100 and the second receiver C200 may not be paired with each other. Hereinafter, a flow diagram using an application identifier when the first receiver C100 is not paired with the the second receiver C200 prior to reception of a trigger will be described.

The first receiver C100 may receive a request for application identifier list information from the second receiver and transmit the application identifier list information to the second receiver. The application identifier list information may indicate a list of the application identifier (or AppID) as a required state variable. For example, the application identifier list information may be referred to as A_ARG_TYPE_AppIDs variable. The application identifier list information may be transmitted to the second receiver from the first receiver in response to a request of the second receiver.

Then, the first receiver C100 may receive a request for trigger information from the second receiver and transmit the trigger information to the second receiver. For example, the first receiver C100 may receive trigger information on a specific application based on the application identifier list information from the second receiver C200 and transmit trigger information to the second receiver.

The second receiver C200 may make a request for application identifier list information to the first receiver C100 and receive application identifier list information in response thereto. For example, the second receiver C200 may acquire application identifiers corresponding to a trigger for the second receiver C200 among triggered received by the first receiver C100 using GetAppID action.

Then, the second receiver may make a request for trigger information to the first receiver C100 and receive trigger information in response to the trigger information. For example, the second receiver C200 may acquire whether a trigger for the second receiver C200 is present among triggers received by the first receiver C100 using GetTriggerInfo action. In this case, in order to acquire trigger information (or TriggerInfo information) of a specific application, the second receiver C200 may use application identifier information as input argument. For example, the second receiver C200 may make a request for trigger information on a corresponding application based on the application identifier indicating "12" and receive trigger information in response thereto.

Then, the second receiver C200 may check whether a trigger to be executed based on a current time point is present using trigger information. For example, the second receiver C200 may recognize whether an action to be currently performed using triggerType, eventStartTime, and/or eventEndTime information of the received trigger.

Then, the second receiver C200 may perform an action based on the trigger. For example, the second receiver C200 may perform an application based on the trigge 있다 .

FIG. 200 is a flow diagram of reception of triggering application information by a second receiver from a transmitter according to an embodiment of the present invention.

Referring to the drawing, a transceiving system according to an embodiment of the present invention may include at least one of the transmitter C10, the first receiver C100, and/or the second receiver C200. A description of the transceiving system according to an embodiment of the present invention may include the entire above description of the aforementioned transceiving system.

According to an embodiment of the present invention, the first receiver C100 and the second receiver C200 may not be paired with each other. Hereinafter, a flow diagram of the case in which the first receiver C100 is not paired with the second receiver C200 prior to reception of a trigger will be described.

Then, the second receiver C200 may subscribe an application signaling service of the first receiver C100. The first receiver C100 may subscribe an application signaling service of the second receiver C200. For example, the second receiver C200 may subscribe an app transceiver of the first receiver C100 using an app transceiver of the second receiver C200. The second receiver is capable of making a request for trigger position information to the first receiver using GetTriggerInfoURI action and, thus, it may not be necessary to subscribe the application signaling service of the first receiver.

Then, the first receiver C100 may receive a request for trigger position information indicating a position of a trigger from the second receiver and transmit the trigger position information to the second receiver.

The second receiver C200 may check whether trigger position information for the second receiver C200 is present among trigger position information received by the first receiver C100 using the GetTriggerInfoURI action. For example, the second receiver C200 may make a request for trigger position information (or TriggerInfoURI) to the first receiver C100 and receive the trigger position information (or TriggerInfoURI) from the first receiver C100.

The second receiver C200 may check a trigger to be executed based on a current time point using the received trigger position information (or TriggerInfoURI). For example, the second receiver C200 may recognize whether an operation to be currently performed is present based on at least one of trigger type information, event start time information, and/or event termination time information of the received trigger.

The second receiver C200 may acquire all triggers (or application trigger information) for the second receiver C200 from the transmitter C10 (or content server). The second receiver C200 may recognize whether an operation to be currently performed is present based on at least one of trigger type information, event start time information, and/or event termination time information of the received trigger and pre-recognize whether an operation to be performed in the future according to media time.

Then, the second receiver C200 may perform an operation based on the trigger. For example, the second receiver C200 may execute an application based on the trigger.

This method may be useful in that the second receiver C200 does not necessarily and continuously receive a trigger for the second receiver C200 from the first receiver C100. In addition, this method may be useful in that data about an event included in a trigger is pre-downloaded so as to reduce data loading time.

Then, the second receiver C200 may transmit trigger information (or TriggerInfo information) from the first receiver C100 using an eventing method. For example, the second receiver C200 may receive a media Time trigger from the first receiver C100 using an eventing method.

FIG. 201 is a flowchart illustrating an operation of a broadcast receiving apparatus according to an embodiment of the present invention.

A transceiving system according to an embodiment of the present invention may include at least one of a transmitter, a broadcast receiving apparatus (or first receiver), and/or a second screen device (or second receiver). A description of the transceiving system according to an embodiment of the present invention may include the entire above description of the aforementioned transceiving system. Hereinafter, an operation of the broadcast receiving apparatus will be described.

The broadcast receiving apparatus may receive a broadcast signal using a broadcast receiver (CS2100). For example, the broadcast receiving apparatus may receive the broadcast signal using the broadcast receiver and/or the IP transceiver.

The broadcast receiving apparatus may acquire application signaling information for signaling an application included in the broadcast server from the broadcast signal using a controller (CS2200). For example, the broadcast receiving apparatus may acquire signaling information from the broadcast signal using the controller and acquire application signaling information from the signaling information.

The broadcast receiving apparatus may acquire application signaling information based on an MPEG-DASH protocol and/or an MMT protocol.

The application signaling information may include at least one of a trigger, trigger position information, and triggering application information. The trigger may trigger an operation of an application. For example, the trigger may perform a timing related signaling operation for supporting an interactive service. The trigger position information may indicate a position of the trigger. The triggering application information may signal information on the triggered application. For example, the triggering application information may include an application and metadata about an event targeted to the application.

The broadcast receiving apparatus may transmit the trigger to the second screen device based on the application signaling information using the app transceiver (CS2300).

The broadcast receiving apparatus may transmit trigger transmission information for transmitting the trigger to the second screen device using the app transceiver.

The trigger transmission information may include at least one of trigger information indicating attribute for a trigger, trigger list information including at least one trigger information item, trigger position information indicating a position of a trigger, and application identifier list information indicating a list of an application identifier.

The trigger information may include at least one of an application identifier for identifying an application, trigger type information indicating a type of a trigger, action information indicating an operation of an application, event start time information indicating start time of a trigger, event termination time information indicating termination time of a trigger, data information including data related to a trigger, and/or data position information indicating data related to a trigger.

The broadcast receiving apparatus may further transmit application notification information including information on application notification for the second screen device using the app transceiver.

The application notification information may include at least one of targetDevice attribute indicating a device on which application notification is displayed, topMargin attribute indicating top margin of application notification, right-Margin attribute indicating right margin of application notification, show attribute indicating time at which application notification is first displayed, lasting attribute indicating lasting time at which application notification is displayed, interval attribute indicating an interval time between application notifications, a message element indicating a notification message of application notification, and/or a logo element indicating a logo image of application notification.

The broadcast receiving apparatus may transmit the signaling information, the application signaling information, the trigger transmission information, and/or the application notification information to a second screen device based on an event and/or in response to a request of the second screen device. The broadcast receiving apparatus transmits data based on the event and in response to the second screen device, as described above.

A module, a processor, a device, or a unit may be processors for execution of consecutive procedures stored in a memory (or storage unit). Each operation described in the aforementioned embodiments may be performed by hardware/processors. Each module/block/units described in the aforementioned embodiments may be executed as code. The code may be written in a storage medium readable by a processor and, accordingly, readable by a processor provided by an apparatus.

A method invention according to the present invention may be embodied in the form of a program command to be executed through various computer elements and recorded in a computer readable medium.

The computer readable medium may include a program command, a data file, a data configuration, and so on alone or in combination thereof. The program command stored in the medium may be particularly designed and configured for the present invention or may be well known or used by one of the ordinary skill in the art of computer software. Examples of the computer readable medium may include magnetic media such as a hard disk, a floppy disk, and a magnetic tape, optical media such as CD-ROM and DVD, magneto-optical media such as floptical disks, and a hardware device that is particularly configured to store and execute a program command such as a read only memory (ROM), a random access memory (RAM), and a flash memory. Examples of the program command may include a high-level language code to be executed by a computer using an interpreter or the like as well as a machine code generated by a compiler. The hardware device may be configured to operate as one or more software modules in order to perform the operation according to the present invention and vice versa.

It will be apparent to those skilled in the art that various modifications and variations can be made in the present invention without departing from the spirit or scope of the inventions. Thus, it is intended that the present invention cover the modifications and variations of this invention provided they come within the scope of the appended claims and their equivalents.

Accordingly, it will be apparent to those skilled in the art that various modifications and variations can be made in the present invention within the scope of the appended claims and their equivalents.

In addition, throughout this specification, both device and method inventions have been described. As necessary, the description of the device and method inventions may be applied supplementarily.

[Mode for Invention]

Various embodiments have been described in the best mode for carrying out the invention.

[Industrial Applicability]

The present invention may be used in all fields related to broadcasting.

## Claims

1. A broadcast receiving apparatus comprising:

   a broadcast receiver configured to receive a broadcast signal;
   a controller configured to acquire application signaling information for signaling an application included in a broadcast service, from the broadcast signal; and
   an app transceiver configured to transmit a trigger to a second screen device based on the application signaling information.

2. The broadcast receiving apparatus according to claim 1, wherein the application signaling information comprises at least one of a trigger for performing a timing related signaling operation for supporting an interactive service, trigger position information indicating a position of the trigger, and triggering application information comprising the application and metadata about an event targeted to the application.

3. The broadcast receiving apparatus according to claim 2, wherein the app transceiver transmits trigger transmission information for transmitting the trigger to the second screen device.

4. The broadcast receiving apparatus according to claim 3, wherein the trigger transmission information comprises at least one of trigger information indicating attributes of the trigger, trigger list information comprising at least one trigger information item, trigger position information indicating a position of the trigger, and application identifier list information indicating a list of an application identifier.

5. The broadcast receiving apparatus according to claim 4, wherein the trigger information comprises at least one of an application identifier for identifying the application, trigger type information indicating a type of the trigger, action information indicating an action of the application, event start time information indicating start time of the trigger, event termination time information indicating termination time of the trigger, data information comprising data related to the trigger, and/or data position information indicating a position of data related to the trigger.

6. The broadcast receiving apparatus according to claim 3, wherein the app transceiver further transmits application notification information indicating attributes of application notification displayed on the second screen device.

7. The broadcast receiving apparatus according to claim 6, wherein the application notification information comprises at least one of a targetDevice attribute indicating a device on which application notification is displayed, a topMargin attribute indicating a top margin of application notification, a rightMargin attribute indicating a right margin of application notification, a show attribute indicating a time at which application notification is first displayed, a lasting attribute indicating a lasting time for displaying application notification, an interval attribute indicating an interval time between application notifications, a message element indicating a notification message of application notification, and/or a logo element indicating a logo image of application notification.

8. A method of receiving broadcast, the method comprising:

   receiving a broadcast signal;
   acquiring application signaling information for signaling an application included in a broadcast service, from the broadcast signal; and
   transmitting a trigger to a second screen device based on the application signaling information.

9. The method according to claim 8, wherein the application signaling information comprises at least one of a trigger for performing a timing related signaling operation for supporting an interactive service, trigger position information indicating a position of the trigger, and triggering application information comprising the application and metadata about an event targeted to the application.

10. The method according to claim 9, wherein the transmitting comprises transmitting trigger transmission information for transmitting the trigger to the second screen device.

11. The method according to claim 10, wherein the trigger transmission information comprises at least one of trigger information indicating attributes of the trigger, trigger list information comprising at least one trigger information item, trigger position information indicating a position of the trigger, and application identifier list information indicating a list of an application identifier.

12. The method according to claim 11, wherein the trigger information comprises at least one of an application identifier for identifying the application, trigger type information indicating a type of the trigger, action information indicating an action of the application, event start time information indicating start time of the trigger, event termination time information indicating termination time of the trigger, data information comprising data related to the trigger, and/or data position information indicating a position of data related to the trigger.

13. The method according to claim 10, wherein the transmitting comprises further transmitting application notification information indicating attributes of application notification displayed on the second screen device.

14. The method according to claim 13, wherein the application notification information comprises at least one of a targetDevice attribute indicating a device on which application notification is displayed, a topMargin attribute indicating a top margin of application notification, a rightMargin attribute indicating a right margin of application notification, a show attribute indicating a time at which application notification is first displayed, a lasting attribute indicating a lasting time for displaying application notification, an interval attribute indicating an interval time between application notifications, a message element indicating a notification message of application notification, and/or a logo element indicating a logo image of application notification.

## FIG. 1

EP 3 163 889 A1

# FIG. 2

(a)

Single Input Stream (TS/IP/GS) →

**Mode adaptation** — 2000
- CRC Encoder
- BB Frame Slicer
- BB Frame Header Insertion

**Stream adaptation** — 2010
- Stuffing Insertion
- BB Frame Scrambler →

(b)

Management Information →

Physical Layer Signaling Generation — 2020

PLS1 → PLS Scrambler →
PLS2 → PLS Scrambler → — 2030

# FIG. 3

EP 3 163 889 A1

Multiple Input Streams → Input Stream Splitter (3000)

Data Pipe 0 → Input stream Synchronizer (3010) → Comp-ensating delay (3020) → Null-packet Deletion (3030) → Header Compression (3040) → CRC Encoder (3050) → BB Frame Slicer (3060) → BB Frame Header Insertion (3070) → Stream Adaptation

Data Pipe n-1 → Input stream Synchronizer → Comp-ensating delay → Null-packet Deletion → Header Compression → CRC Encoder → BB Frame Slicer → BB Frame Header Insertion

## FIG. 4

EP 3 163 889 A1

## FIG. 5

## FIG. 6

Cell Mapper 7010

DP 0

⋮

DP n

BICM

PLS1

PLS1

Delay Compensation 7000

Assembly of PLS cells

Assembly of EAS cells

Assembly of Base DP cells

Assembly of FIC cells

Assembly of Normal DP cells

Frequency Interleaver 7020

OFDM Generation

- - - - - MIMO path

EAS, FIC, Section

**FIG. 7**

FIG. 8

Rx Signal input

Rx ant. 1 Signal ··· Rx ant. m Signal

9000 Synchronization & Demodulation

Rx 1 path ··· Rx m path

9010 Frame Parsing

Data Pipe 0 ··· Data Pipe n

9020 Demapping & Decoding (Bit-deinterleaving)

9030 Output Processor

Ts, IP or GS output streams

9040 Signaling Decoding

Physical Layer Signaling (PLS)

# FIG. 9

(a) Super-frame    1 Super-frame = 8 FRUs

(b) FRU #0 | FRU #1 | FRU #2 | FRU #3 | FRU #4 | FRU #5 | FRU #6 | FRU #7    1 FRU = 1 ~ 4 Frames

(c) Base profile | Handheld profile | FEF

(d) Preamble | FSS #0 | FSS #1 | FSS #2 | FSS #3 | Normal data symbol #0 | ... | Normal data symbol #$N_{Normal}$-1 | FSS

1 ~ 4 FSSs    $N_{Normal}$: number of normal data symbols

EP 3 163 889 A1

# FIG. 10

| frame (n-1) | frame (n) | frame (n+1) |
|---|---|---|

11010      11020

| Preamble | PLS1 | PLS2 | DP(n) |
|---|---|---|---|

11000

| signaling PLS1 | PLS2 static signaling | PLS2 dynamic signaling |
|---|---|---|

# FIG. 11

| Content | Bits |
|---|---|
| PHY_PROFILE | 3 |
| FFT_SIZE | 2 |
| GI_FRACTION | 3 |
| EAC_FLAG | 1 |
| PILOT_MODE | 1 |
| PAPR_FLAG | 1 |
| FRU_CONFIGURE | 3 |
| RESERVED | 7 |

# FIG. 12

| Content | Bits |
|---|---|
| PREAMBLE_DATA | 20 |
| NUM_FRAME_FRU | 2 |
| PAYLOAD_TYPE | 3 |
| NUM_FSS | 2 |
| SYSTEM_VERSION | 8 |
| CELL_ID | 16 |
| NETWORK_ID | 16 |
| SYSTEM_ID | 16 |
| for i = 0:3 | |
|     FRU_PHY_PROFILE | 3 |
|     FRU_FRAME_LENGTH | 2 |
|     FRU_GI_FRACTION | 3 |
|     RESERVED | 4 |
| end | |
| PLS2_FEC_TYPE | 2 |
| PLS2_MOD | 3 |
| PLS2_SIZE_CELL | 15 |
| PLS2_STAT_SIZE_BIT | 14 |
| PLS2_SYN_SIZE_BIT | 14 |
| PLS2_REP_FLAG | 1 |
| PLS2_REP_SIZE_CELL | 15 |
| PLS2_NEXT_FEC_TYPE | 2 |
| PLS2_NEXT_MODE | 3 |
| PLS2_NEXT_REP_FLAG | 1 |
| PLS2_NEXT_REP_SIZE_CELL | 15 |
| PLS2_NEXT_REP_STAT_SIZE_BIT | 14 |
| PLS2_NEXT_REP_DYN_SIZE_BIT | 14 |
| PLS2_AP_MODE | 2 |
| PLS2_AP_SIZE_CELL | 15 |
| PLS2_NEXT_AP_MODE | 2 |
| PLS2_NEXT_AP_SIZE_CELL | 15 |
| RESERVED | 32 |
| CRC 32 | 32 |

## FIG. 13

| Content | Bits |
|---|---|
| FIC_FLAG | 1 |
| AUX_FLAG | 1 |
| NUM_DP | 6 |
| for i = 1: NUM_DP | |
|     DP_ID | 6 |
|     DP_TYPE | 3 |
|     DP_GROUP_ID | 8 |
|     BASE_DP_ID | 6 |
|     DP_FEC_TYPE | 2 |
|     DP_COD | 4 |
|     DP_MOD | 4 |
|     DP_SSD_FLAG | 1 |
|     if PHY_PROFILE = '010' | |
|         DP_MIMO | 3 |
|     end | |
|     DP_TI_TYPE | 1 |
|     DP_TI_LENGTH | 2 |
|     DP_TI_BYPASS | 1 |
|     DP_FRAME_INTERVAL | 2 |
|     DP_FIRST_FRAME_IDX | 5 |
|     DP_NUM_BLOCK_MAX | 10 |
|     DP_PAYLOAD_TYPE | 2 |
|     DP_INBAND_MODE | 2 |
|     DP_PROTOCOL_TYPE | 2 |
|     DP_CRC_MODE | 2 |
| | |
|     if DP_PAYLOAD_TYPE == TS('00') | |
|         DNP_MODE | 2 |
|         ISSY_MODE | 2 |
|         HC_MODE_TS | 2 |
|         if HC_MODE_TS == '01' or '10' | |
|             PID | 13 |
|         end | |
|     if DP_PAYLOAD_TYPE = IP('01') | |
|         HC_MODE_IP | 2 |
|     end | |
|     RESERVED | 8 |
| end | |
| if FIC_FLAG == 1 | |
|     FIC_VERSION | 8 |
|     FIC_LENGTH_BYTE | 13 |
|     RESERVED | 8 |
| end | |
| if AUX_FLAG == 1 | |
|     NUM_AUX | 4 |
|     AUX_CONFIG_RFU | 8 |
|     for - 1 : NUM_AUX | |
|         AUX_STREAM_TYPE | 4 |
|         AUX_PRIVATE_CONF | 28 |
|     end | |
| end | |

## FIG. 14

| Content | | Bit |
|---|---|---|
| FRAME_INDEX | | 5 |
| PLS_CHANGE_COUNTER | | 4 |
| FIC_CHANGE_COUNTER | | 4 |
| RESERVED | | 16 |
| for i = 1: NUM_DP | | |
| | DP_ID | 6 |
| | DP_START | 15 (or13) |
| | DP_NUM_BLOCK | 10 |
| end | RESERVED | 8 |
| EAC_FLAG | | 1 |
| EAS_WAKE_UP_VERSION_NUM | | 8 |
| if EAC_FLAG = 1 | | |
| | EAC_LENGTH_BYTE | 12 |
| else | | |
| | EAC_COUNTER | 12 |
| end | | |
| for i=1:NUM_AUX | | |
| | AUX_PRIVATE_DYN | 48 |
| end | | |
| CRC 32 | | 32 |

## FIG. 15

| Preamble | PLS1 | PLS2 | EAC | FIC | DPs | Auxiliary streams | Dummy |
|---|---|---|---|---|---|---|---|

# FIG. 16

# FIG. 17

# FIG. 18

(a)

(b)

## FIG. 19

$N_{ldpc}$ bits

$N_{bch}$ bits ( $= K_{ldpc}$ bits )

$K_{bch}$ bits

| BBFRAME | BCH Parity | LDPC Parity |

# FIG. 20

FIG. 21

(a)

(b)

## FIG. 22

## FIG. 23

$N_{xBLOCK\_TI}(0,0) = 3$

$N_{xBLOCK\_TI}(1,0) = 6$

$N_{xBLOCK\_TI}(2,0) = 5$

EP 3 163 889 A1

FIG. 24

$N_{xBLOCK\_TI}(0,0) = 3$

$N_{xBLOCK\_TI}(1,0) = 6$

$N_{xBLOCK\_TI}(2,0) = 5$

# FIG. 25

FEC block-0
FEC block-1

FEC block-0
FEC block-1
FEC block-2

FEC block-0
FEC block-1

$(N_{FEC\_NUM}-1)$
$(FEC\ block\text{-}(N_{FEC\_NUM}-1))$

TI-0        TI-1        TI-2        TI-$(N_{TI\_NUM}-1)$

Super-frame

$N_{TI\_NUM}$ : total number of TI groups
$N_{BLOCK\_TI}$ : total number of FEC blocks within a TI group

EP 3 163 889 A1

FIG. 26

# FIG. 27

$for \ 0 \le k \le N_{cells}N'_{BLOCK\_TI} -1$

$\quad r_k = \mathrm{mod}(k, N_{cells}),$

$\quad t_k = \mathrm{mod}(S_T \times r_k, N'_{BLOCK\_TI}),$

$\quad c_k = \mathrm{mod}\left(t_{j,k} + \left\lfloor \dfrac{k}{N_{cells}} \right\rfloor, N'_{BLOCK\_TI}\right),$

$\quad \pi(k) = N_{cells}c_k + r_k$

$end$

$where \ S_T \ is \ defined \ as$

$$S_T = \frac{N'_{BLOCK\_TI} -1}{2} +1 \ for \ \begin{cases} N'_{BLOCK\_TI} = N_{BLOCK\_TI} +1, & if \ N_{BLOCK\_TI} \, \mathrm{mod}\, 2 = 0 \\ N'_{BLOCK\_TI} = N_{BLOCK\_TI}, & if \ N_{BLOCK\_TI} \, \mathrm{mod}\, 2 = 1 \end{cases}$$

$\pi(k)$: the k-th address for reading memory data

$S_T$ : shift value for use in interleaving (constant value)

## FIG. 28

$N'_{BLOCK\_TI\_MAX}$ : Maximum number of FEC blocks in a TI group

$N_{BLOCK\_TI}$ : The actual number of FEC blocks in a TI group

$N_{BLOCK\_TI\_Diff} = N'_{BLOCK\_TI\_MAX} - N_{BLOCK\_TI}$

$$\begin{cases} N'_{BLOCK\_TI\_MAX} = N_{BLOCK\_TI\_MAX} + 1, & if \ N_{BLOCK\_TI\_MAX} \bmod 2 = 0 \\ N'_{BLOCK\_TI\_MAX} = N_{BLOCK\_TI\_MAX}, & if \ N_{BLOCK\_TI\_MAX} \bmod 2 = 1 \end{cases}$$

$$N_{BLOCK\_TI\_Diff,j} = N'_{BLOCK\_TI\_MAX} - N_{BLOCK\_TI,j}$$

EP 3 163 889 A1

# FIG. 29

$$for \ \ 0 \leq k \leq N_{cells} N'_{BLOCK\_TI\_MAX} - 1$$

$$r_k = \text{mod}(k, N_{cells}),$$

$$t_k = \text{mod}(S_T \times r_k, N'_{BLOCK\_TI\_MAX}),$$

$$c_k = \text{mod}(t_k + \left\lfloor \frac{k}{N_{cells}} \right\rfloor, N'_{BLOCK\_TI\_MAX}),$$

$$V(k) = N_{cells} c_k + r_k,$$

Skip virtual FEC blocks

$$if \ \ V(k) \geq N_{cells} N_{BLOCK\_TI\_Diff}$$

$$\pi(C_{cnt}) = \theta(k),$$

$$C_{cnt} = C_{cnt} + 1,$$

$$end$$

$$end$$

$$where$$

$$C_{cnt} = 0,$$

$$S_T = \frac{N'_{BLOCK\_TI\_MAX} - 1}{2} + 1 \ \ for \ \begin{cases} N'_{BLOCK\_TI\_MAX} = N_{BLOCK\_TI\_MAX} + 1, & if \ N_{BLOCK\_TI\_MAX} \bmod 2 = 0 \\ N'_{BLOCK\_TI\_MAX} = N_{BLOCK\_TI\_MAX} \ \ , & if \ N_{BLOCK\_TI\_MAX} \bmod 2 = 1, \end{cases}$$

$$N_{BLOCK\_TI\_Diff} = N'_{BLOCK\_TI\_MAX} - N_{BLOCK\_TI}$$

# FIG. 30

start

Set-up of initial values — S67000

Writing operation for the actual FEC blocks considering virtual FEC blocks — S67100

Temporal TI reading address generation — S67200

Evaluate the availability of the generated TI reading address — S67300

Final TI reading address generation — S67400

Reading operation for the actual FEC blocks — S67500

# FIG. 31

$N_{TI\_NUM}=2$, $N_{cells}=30$,

$N_{BLOCK\_TI,0}=5$,

$N_{BLOCK\_TI,1}=6$,

▫ At that time, $N_{cells}=30$, $N_{BLOCK\_TI\_MAX}=\max(5,6)=6$

$$S_T=\frac{N'_{BLOCK\_TI\_MAX}-1}{2}+1 \;\; for \begin{cases} N'_{BLOCK\_TI\_MAX}=N_{BLOCK\_TI\_MAX}+1, & if\ N_{BLOCK\_TI\_MAX}\bmod 2=0 \\ N'_{BLOCK\_TI\_MAX}=N_{BLOCK\_TI\_MAX}, & if\ N_{BLOCK\_TI\_MAX}\bmod 2=1 \end{cases}$$

$\boxed{S_T=4}$ $\qquad \boxed{N'_{BLOCK\_TI\_MAX}=7}$

FIG. 32

FIG. 33

# FIG. 34

| | 0 | 1 | 2 | 3 | 4 |
|---|---|---|---|---|---|
| 0 | 1 | 13 | 25 | 7 | 19 |
| 1 | 3 | 15 | 27 | 9 | 21 |
| 2 | 4 | 16 | 28 | 10 | 22 |
| 3 | 5 | 17 | 29 | 11 | 23 |
| 4 | 6 | 18 | 0 | 12 | 24 |
| 5 | 8 | 20 | 2 | 14 | 26 |
| 6 | 10 | 22 | 4 | 16 | 28 |
| 7 | 11 | 23 | 5 | 17 | 29 |
| 8 | 12 | 24 | 6 | 18 | 0 |
| 9 | 13 | 25 | 7 | 19 | 1 |
| 10 | 15 | 27 | 9 | 21 | 3 |
| 11 | 17 | 29 | 11 | 23 | 5 |
| 12 | 18 | 0 | 12 | 24 | 6 |
| 13 | 19 | 1 | 13 | 25 | 7 |
| 14 | 20 | 2 | 14 | 26 | 8 |
| 15 | 22 | 4 | 16 | 28 | 10 |
| 16 | 24 | 6 | 18 | 0 | 12 |
| 17 | 25 | 7 | 19 | 1 | 13 |
| 18 | 26 | 8 | 20 | 2 | 14 |
| 19 | 27 | 9 | 21 | 3 | 15 |
| 20 | 29 | 11 | 23 | 5 | 17 |
| 21 | 1 | 13 | 25 | 7 | 19 |
| 22 | 2 | 14 | 26 | 8 | 20 |
| 23 | 3 | 15 | 27 | 9 | 21 |
| 24 | 4 | 16 | 28 | 10 | 22 |
| 25 | 6 | 18 | 0 | 12 | 24 |
| 26 | 8 | 20 | 2 | 14 | 26 |
| 27 | 9 | 21 | 3 | 15 | 27 |
| 28 | 10 | 22 | 4 | 16 | 28 |
| 29 | 11 | 23 | 5 | 17 | 29 |

$N_{BLOCK\_T1,0}=5$

| | 0 | 1 | 2 | 3 | 4 | 5 |
|---|---|---|---|---|---|---|
| 0 | 1 | 6 | 11 | 16 | 21 | 26 |
| 1 | 2 | 7 | 12 | 17 | 22 | 27 |
| 2 | 3 | 8 | 13 | 18 | 23 | 28 |
| 3 | 4 | 9 | 14 | 19 | 24 | 29 |
| 4 | 5 | 10 | 15 | 20 | 25 | 0 |
| 5 | 6 | 11 | 16 | 21 | 26 | 1 |
| 6 | 8 | 13 | 18 | 23 | 28 | 3 |
| 7 | 9 | 14 | 19 | 24 | 29 | 4 |
| 8 | 10 | 15 | 20 | 25 | 0 | 5 |
| 9 | 11 | 16 | 21 | 26 | 1 | 6 |
| 10 | 12 | 17 | 22 | 27 | 2 | 7 |
| 11 | 13 | 18 | 23 | 28 | 3 | 8 |
| 12 | 15 | 20 | 25 | 0 | 5 | 10 |
| 13 | 16 | 21 | 26 | 1 | 6 | 11 |
| 14 | 17 | 22 | 27 | 2 | 7 | 12 |
| 15 | 18 | 23 | 28 | 3 | 8 | 13 |
| 16 | 19 | 24 | 29 | 4 | 9 | 14 |
| 17 | 20 | 25 | 0 | 5 | 10 | 15 |
| 18 | 22 | 27 | 2 | 7 | 12 | 17 |
| 19 | 23 | 28 | 3 | 8 | 13 | 18 |
| 20 | 24 | 29 | 4 | 9 | 14 | 19 |
| 21 | 25 | 0 | 5 | 10 | 15 | 20 |
| 22 | 26 | 1 | 6 | 11 | 16 | 21 |
| 23 | 27 | 2 | 7 | 12 | 17 | 22 |
| 24 | 29 | 4 | 9 | 14 | 19 | 24 |
| 25 | 0 | 5 | 10 | 15 | 20 | 25 |
| 26 | 1 | 6 | 11 | 16 | 21 | 26 |
| 27 | 2 | 7 | 12 | 17 | 22 | 27 |
| 28 | 3 | 8 | 13 | 18 | 23 | 28 |
| 29 | 4 | 9 | 14 | 19 | 24 | 29 |

$N_{BLOCK\_T1,0}=6$

**FIG. 35**

TDI input
$N_{BLOCK\_TI,0}=5$

Writing result

Memory address array

# FIG. 36

**Memory address array**

|    | 0 | 1 | 2 | 3 | 4 | 5 | 6 |
|----|---|---|---|---|---|---|---|
| 0  | 0 | 30 | 60 | 90 | 120 | 150 | 180 |
| 1  | 1 | 31 | 61 | 91 | 121 | 151 | 181 |
| 2  | 2 | 32 | 62 | 92 | 122 | 152 | 182 |
| 3  | 3 | 33 | 63 | 93 | 123 | 153 | 183 |
| 4  | 4 | 34 | 64 | 94 | 124 | 154 | 184 |
| 5  | 5 | 35 | 65 | 95 | 125 | 155 | 185 |
| 6  | 6 | 36 | 66 | 96 | 126 | 156 | 186 |
| 7  | 7 | 37 | 67 | 97 | 127 | 157 | 187 |
| 8  | 8 | 38 | 68 | 98 | 128 | 158 | 188 |
| 9  | 9 | 39 | 69 | 99 | 129 | 159 | 189 |
| 10 | 10 | 40 | 70 | 100 | 130 | 160 | 190 |
| 11 | 11 | 41 | 71 | 101 | 131 | 161 | 191 |
| 12 | 12 | 42 | 72 | 102 | 132 | 162 | 192 |
| 13 | 13 | 43 | 73 | 103 | 133 | 163 | 193 |
| 14 | 14 | 44 | 74 | 104 | 134 | 164 | 194 |
| 15 | 15 | 45 | 75 | 105 | 135 | 165 | 195 |
| 16 | 16 | 46 | 76 | 106 | 136 | 166 | 196 |
| 17 | 17 | 47 | 77 | 107 | 137 | 167 | 197 |
| 18 | 18 | 48 | 78 | 108 | 138 | 168 | 198 |
| 19 | 19 | 49 | 79 | 109 | 139 | 169 | 199 |
| 20 | 20 | 50 | 80 | 110 | 140 | 170 | 200 |
| 21 | 21 | 51 | 81 | 111 | 141 | 171 | 201 |
| 22 | 22 | 52 | 82 | 112 | 142 | 172 | 202 |
| 23 | 23 | 53 | 83 | 113 | 143 | 173 | 203 |
| 24 | 24 | 54 | 84 | 114 | 144 | 174 | 204 |
| 25 | 25 | 55 | 85 | 115 | 145 | 175 | 205 |
| 26 | 26 | 56 | 86 | 116 | 146 | 176 | 206 |
| 27 | 27 | 57 | 87 | 117 | 147 | 177 | 207 |
| 28 | 28 | 58 | 88 | 118 | 148 | 178 | 208 |
| 29 | 29 | 59 | 89 | 119 | 149 | 179 | 209 |

**TDI input**  
$N_{BLOCK\_T1,0}=6$

|    | 0 | 1 | 2 | 3 | 4 | 5 |
|----|---|---|---|---|---|---|
| 0  | 1 | 6 | 11 | 16 | 21 | 26 |
| 1  | 2 | 7 | 12 | 17 | 22 | 27 |
| 2  | 3 | 8 | 13 | 18 | 23 | 28 |
| 3  | 4 | 9 | 14 | 19 | 24 | 29 |
| 4  | 5 | 10 | 15 | 20 | 25 | 0 |
| 5  | 6 | 11 | 16 | 21 | 26 | 1 |
| 6  | 8 | 13 | 18 | 23 | 28 | 3 |
| 7  | 9 | 14 | 19 | 24 | 29 | 4 |
| 8  | 10 | 15 | 20 | 25 | 0 | 5 |
| 9  | 11 | 16 | 21 | 26 | 1 | 6 |
| 10 | 12 | 17 | 22 | 27 | 2 | 7 |
| 11 | 13 | 18 | 23 | 28 | 3 | 8 |
| 12 | 15 | 20 | 25 | 0 | 5 | 10 |
| 13 | 16 | 21 | 26 | 1 | 6 | 11 |
| 14 | 17 | 22 | 27 | 2 | 7 | 12 |
| 15 | 18 | 23 | 28 | 3 | 8 | 13 |
| 16 | 19 | 24 | 29 | 4 | 9 | 14 |
| 17 | 20 | 25 | 0 | 5 | 10 | 15 |
| 18 | 22 | 27 | 2 | 7 | 12 | 17 |
| 19 | 23 | 28 | 3 | 8 | 13 | 18 |
| 20 | 24 | 29 | 4 | 9 | 14 | 19 |
| 21 | 25 | 0 | 5 | 10 | 15 | 20 |
| 22 | 26 | 1 | 6 | 11 | 16 | 21 |
| 23 | 27 | 2 | 7 | 12 | 17 | 22 |
| 24 | 29 | 4 | 9 | 14 | 19 | 24 |
| 25 | 0 | 5 | 10 | 15 | 20 | 25 |
| 26 | 1 | 6 | 11 | 16 | 21 | 26 |
| 27 | 2 | 7 | 12 | 17 | 22 | 27 |
| 28 | 3 | 8 | 13 | 18 | 23 | 28 |
| 29 | 4 | 9 | 14 | 19 | 24 | 29 |

**Writing result**

|    | 0 | 1 | 2 | 3 | 4 | 5 | 6 |
|----|---|---|---|---|---|---|---|
| 0  |   | 0 | 0 | 0 | 0 | 0 | 0 |
| 1  | 1 | 1 | 1 |   | 1 | 1 | 1 |
| 2  | 2 | 2 | 2 | 2 | 2 | 2 |   |
| 3  | 3 | 3 |   | 3 | 3 | 3 | 3 |
| 4  | 4 | 4 | 4 | 4 | 4 |   | 4 |
| 5  | 5 |   | 5 | 5 | 5 | 5 | 5 |
| 6  | 6 | 6 | 6 | 6 |   | 6 | 6 |
| 7  |   | 7 | 7 | 7 | 7 | 7 | 7 |
| 8  | 8 | 8 | 8 |   | 8 | 8 | 8 |
| 9  | 9 | 9 | 9 | 9 | 9 | 9 |   |
| 10 | 10 | 10 |   | 10 | 10 | 10 | 10 |
| 11 | 11 | 11 | 11 | 11 | 11 |   | 11 |
| 12 | 12 |   | 12 | 12 | 12 | 12 | 12 |
| 13 | 13 | 13 | 13 | 13 |   | 13 | 13 |
| 14 |   | 14 | 14 | 14 | 14 | 14 | 14 |
| 15 | 15 | 15 | 15 |   | 15 | 15 | 15 |
| 16 | 16 | 16 | 16 | 16 | 16 | 16 |   |
| 17 | 17 | 17 |   | 17 | 17 | 17 | 17 |
| 18 | 18 | 18 | 18 | 18 | 18 |   | 18 |
| 19 | 19 |   | 19 | 19 | 19 | 19 | 19 |
| 20 | 20 | 20 | 20 | 20 |   | 20 | 20 |
| 21 |   | 21 | 21 | 21 | 21 | 21 | 21 |
| 22 | 22 | 22 | 22 |   | 22 | 22 | 22 |
| 23 | 23 | 23 | 23 | 23 | 23 | 23 |   |
| 24 | 24 | 24 |   | 24 | 24 | 24 | 24 |
| 25 | 25 | 25 | 25 | 25 | 25 |   | 25 |
| 26 | 26 |   | 26 | 26 | 26 | 26 | 26 |
| 27 | 27 | 27 | 27 | 27 |   | 27 | 27 |
| 28 |   | 28 | 28 | 28 | 28 | 28 | 28 |
| 29 | 29 | 29 | 29 |   | 29 | 29 | 29 |

EP 3 163 889 A1

# FIG. 37

$$for \ 0 \le k \le N_{cells}N'_{BLOCK\_TI\_MAX} - 1$$

$$r_k = \mathrm{mod}(k, N_{cells}),$$

$$t_k = \mathrm{mod}(S_R \times r_k, N'_{BLOCK\_TI\_MAX}),$$

$$c_k = \mathrm{mod}\left(t_k + \left\lfloor \frac{k}{N_{cells}} \right\rfloor, N'_{BLOCK\_TI\_MAX}\right),$$

$$V(k) = N_{cells}c_k + r_k,$$

Skip virtual FEC blocks

$$if \ V(k) \ge N_{cells}N_{BLOCK\_TI\_Diff}$$

$$\pi(C_{cnt}) = \theta(k),$$

$$C_{cnt} = C_{cnt} + 1,$$

$$end$$

$$end$$

$$where$$

$$C_{cnt} = 0,$$

$$S_R = N'_{BLOCK\_TI\_MAX} - S_T,$$

$$N_{BLOCK\_TI\_Diff} = N'_{BLOCK\_TI\_MAX} - N_{BLOCK\_TI}$$

# FIG. 38

start

Set-up of initial values — S75000

Writing processing for the actual FEC blocks considering skipped virtual FEC blocks — S75100

Temporal TDI reading address generation — S75200

Evaluate the availability of the generated TDI reading address — S75300

Final TDI reading address generation — S75400

Reading processing for the actual FEC blocks — S75500

# FIG. 39

```
            ┌─ FI scheme 1
┌──────────┐
│ FI_mode  │
└──────────┘
            └─ FI scheme 2


            ┌─ even
┌──────────┐
│  N_sym   │
└──────────┘
            └─ odd
```

# FIG. 40

|  |  | FI_mode | |
|---|---|---|---|
|  |  | 0 | 1 |
| N_sym | even | FI scheme #1 | FI scheme #1 |
|  | odd | FI scheme #1 | FI scheme #2 |

## FIG. 41

|  |  | FI_mode | |
|---|---|---|---|
|  |  | 0 | 1 |
| N_sym | even | off | off |
|  | odd | on | off |

## FIG. 42

t50010 — $O_{m,l} = [x_{m,l,0}, \ldots, x_{m,l,p}, \ldots, x_{m,l,N_{data}-1}]$  $l = 0, \ldots, N_{sym} - 1$

t50020 — $P_{m,l} = [v_{m,l,0}, \ldots, v_{m,l,N_{data}-1}]$  $l = 0, \ldots, N_{sym} - 1$

## FIG. 43

t51010 — $v_{m,l,H_i(p)} = x_{m,l,p}$  $l = 0, 1, \ldots, N_{sym} - 1$  $p = 0, 1, \ldots, N_{data} - 1,$

t51020 — $v_{m,l,p} = x_{m,l,H_i(p)}$  $l = 0, 1, \ldots, N_{sym} - 1$  $p = 0, 1, \ldots, N_{data} - 1,$

## FIG. 44

Resetting of symbol offset generator

Preamble

PLS part

Frame #0

Symbol-0(FSS)
Symbol-1
Symbol-2
Symbol-3
Symbol-4
Symbol-5
Symbol-6
Symbol-7(FES)

#0
#1
#2
#3

Frame #1

Symbol-0
Symbol-1
Symbol-2
Symbol-3
Symbol-4
Symbol-5
Symbol-6
Symbol-7

#0
#1
#2
#3

Frame #2

Symbol-0
Symbol-1
Symbol-2
Symbol-3
Symbol-4
Symbol-5
Symbol-6
Symbol-7

#0
#1
#2
#3

# FIG. 45

FIG. 46

FIG. 47

EP 3 163 889 A1

# FIG. 48

# FIG. 49

# FIG. 50

# FIG. 51

```
Media Presentation Description (MPD)
┌─────────────────────────────────────────────────────────────┐
│ Period                                                        │
│  ┌──────────────────────────────────────────────────────┐    │
│  │ Adaptation Set                                         │    │
│  │  ┌──────────────────────────────────────────────────┐ │    │
│  │  │ Representation  Sub-Representation    Sub-Representation│ │
│  │  │  ┌──────────┬─────────────┬────────┬──────────────┐│ │    │
│  │  │  │ Segment  │  Sub-       │........ │    Sub-      ││ │    │
│  │  │  │          │  Segment    │  ....   │    Segment   ││ │    │
│  │  │  │          ├─────────────┤        │              ││ │    │
│  │  │  │          │ ...........  │        │              ││ │    │
│  │  │  ├──────────┤             │        │              ││ │    │
│  │  │  │ Segment  │             │        │              ││ │    │
│  │  │  └──────────┴─────────────┴────────┴──────────────┘│ │    │
│  │  │              ...........                           │ │    │
│  │  └──────────────────────────────────────────────────┘ │    │
│  │  ┌──────────────────────────────────────────────────┐ │    │
│  │  │ Representation                                     │ │    │
│  │  └──────────────────────────────────────────────────┘ │    │
│  └──────────────────────────────────────────────────────┘    │
│              ...........                                       │
│  ┌──────────────────────────────────────────────────────┐    │
│  │ Adaptation Set                                         │    │
│  │                                                        │    │
│  └──────────────────────────────────────────────────────┘    │
└─────────────────────────────────────────────────────────────┘
              ...........
┌─────────────────────────────────────────────────────────────┐
│ Period                                                        │
│                                                               │
└─────────────────────────────────────────────────────────────┘
```

# FIG. 52

```
<!-- MPD Type -->
<xs:complexType name="MPDtype">
    <xs:sequence>
        <xs:element name="ProgramInformation" type="ProgramInformationType" minOccurs="0" maxOccurs="unbounded"/>
        <xs:element name="BaseURL" type="BaseURLType" minOccurs="0" maxOccurs="unbounded"/>
        <xs:element name="Location" type="xs:anyURI" minOccurs="0" maxOccurs="unbounded"/>
        <xs:element name="Period" type="PeriodType" maxOccurs="unbounded"/>
        <xs:element name="Metrics" type="MetricsType" minOccurs="0" maxOccurs="unbounded"/>
        <xs:any namespace="##other" processContents="lax" minOccurs="0" maxOccurs="unbounded"/>
    </xs:sequence>
    <xs:attribute name="id" type="xs:string"/>
    <xs:attribute name="profiles" type="xs:string" use="required"/>
    <xs:attribute name="type" type="PresentationType" default="static"/>
    <xs:attribute name="availabilityStartTime" type="xs:dateTime"/>
    <xs:attribute name="availabilityEndTime" type="xs:dateTime"/>
    <xs:attribute name="mediaPresentationDuration" type="xs:duration"/>
    <xs:attribute name="minimumUpdatePeriod" type="xs:duration"/>
    <xs:attribute name="minBufferTime" type="xs:duration" use="required"/>
    <xs:attribute name="timeShiftBufferDepth" type="xs:duration"/>
    <xs:attribute name="suggestedPresentationDelay" type="xs:duration"/>
    <xs:attribute name="maxSegmentDuration" type="xs:duration"/>
    <xs:attribute name="maxSubsegmentDuration" type="xs:duration"/>
    <xs:anyAttribute namespace="##other" processContents="lax"/>
</xs:complexType>

<!-- Presentation Type enumeration -->
<xs:simpleType name="PresentationType">
    <xs:restriction base="xs:string">
        <xs:enumeration value="static"/>
        <xs:enumeration value="dynamic"/>
    </xs:restriction>
</xs:simpleType>
```

## FIG. 53

```
<!-- Period -->
<xs:complexType name="PeriodType">
    <xs:sequence>
        <xs:element name="BaseURL" type="BaseURLType" minOccurs="0" maxOccurs="unbounded"/>
        <xs:element name="SegmentBase" type="SegmentBaseType" minOccurs="0"/>
        <xs:element name="SegmentList" type="SegmentListType" minOccurs="0"/>
        <xs:element name="SegmentTemplate" type="SegmentTemplateType" minOccurs="0"/>
        <xs:element name="AdaptationSet" type="AdaptationSetType" minOccurs="0" maxOccurs="unbounded"/>
        <xs:element name="Subset" type="SubsetType" minOccurs="0" maxOccurs="unbounded"/>
        <xs:any namespace="##other" processContents="lax" minOccurs="0" maxOccurs="unbounded"/>
    </xs:sequence>
    <xs:attribute ref="xlink:href"/>
    <xs:attribute ref="xlink:actuate" default="onRequest"/>
    <xs:attribute name="id" type="xs:string" />
    <xs:attribute name="start" type="xs:duration"/>
    <xs:attribute name="duration" type="xs:duration"/>
    <xs:attribute name="bitstreamSwitching" type="xs:boolean" default="false"/>
    <xs:anyAttribute namespace="##other" processContents="lax"/>
</xs:complexType>
```

# FIG. 54

| RECEIVE MEDIA CONTENT PRESENTATION INFORMATION | ~ S101 |

↓

| RECEIVE MEDIA CONTENT | ~ S103 |

↓

| PRESENT MEDIA CONTENT | ~ S105 |

## FIG. 55

| Syntax | No.Bits | Format |
|---|---|---|
| MPD_section () { | | |
|     table_id | 8 | '0xFA' |
|       section_syntax_indicator | 1 | '0' |
|       private_indicator | 1 | '1' |
|     reserved | 2 | '11' |
|       private_section_length | 12 | uimsbf |
|     table_id_extension{ | | |
|       protocol_version | 8 | uimsbf |
|       sequence_number | 8 | uimsbf |
|   } | | |
|   reserved | 2 | '11' |
|   mpd_data_version | 5 | uimsbf |
|     current_next_indicator | 1 | '1' |
|   section_number | 8 | uimsbf |
|   last_section_number | 8 | uimsbf |
|   MPD_id_length/*M*/ | 16 | uimsbf |
|   MPD_id_bytes() | 8*M | |
|   reserved | 2 | '11' |
|   MPD_coding | 2 | uimsbf |
|   MPD_byte_length/*N*/ | 12 | uimsbf |
|   MPD_bytes() | 8*N | |
| } | | |

# FIG. 56

| | |
|---|---|
| RECEIVE BROADCAST STREAM | ~ S301 |

↓

| | |
|---|---|
| EXTRACT MEDIA CONTENT PRESENTATION INFORMATION TABLE FROM BROADCAST TABLE | ~ S303 |

↓

| | |
|---|---|
| EXTRACT MEDIA CONTENT PRESENTATION INFORMATION BASED ON MEDIA CONTENT PRESENTATION INFORMATION TABLE | ~ S305 |

↓

| | |
|---|---|
| RECEIVE MEDIA CONTENT BASED ON MEDIA CONTENT PRESENTATION INFORMATION | ~ S307 |

↓

| | |
|---|---|
| PRESENT MEDIA CONTENT | ~ S309 |

# FIG. 57

| Syntax | No.Bits | Format |
|---|---|---|
| MPD_URL_section () { | | |
|   table_id | 8 | '0xFA' |
|     section_syntax_indicator | 1 | '0' |
|     private_indicator | 1 | '1' |
|   reserved | 2 | '11' |
|     private_section_length | 12 | uimsbf |
|   table_id_extension{ | | |
|     protocol_version | 8 | uimsbf |
|     sequence_number | 8 | uimsbf |
|   } | | |
|   reserved | 2 | '11' |
|   mpd_data_version | 5 | uimsbf |
|     current_next_indicator | 1 | '1' |
|   section_number | 8 | uimsbf |
|   last_section_number | 8 | uimsbf |
|   MPD_id_length/*M*/ | 16 | uimsbf |
|   MPD_id_bytes() | 8*M | |
|   reserved | 4 | '1111' |
|   MPD_URL_length/*N*/ | 12 | uimsbf |
|   MPD_URL_bytes() | 8*N | |
| } | | |

# FIG. 58

| | |
|---|---|
| RECEIVE BROADCAST STREAM | ~ S401 |

↓

| | |
|---|---|
| EXTRACT MEDIA CONTENT PRESENTATION INFORMATION TABLE INCLUDING MEDIA CONTENT PRESENTATION INFORMATION LINK FROM BROADCAST STREAM | ~ S403 |

↓

| | |
|---|---|
| EXTRACT MEDIA CONTENT PRESENTATION LINK BASED ON MEDIA CONTENT PRESENTATION INFORMATION TABLE | ~ S405 |

↓

| | |
|---|---|
| RECEIVE MEDIA CONTENT PRESENTATION INFORMATION BASED ON MEDIA CONTENT PRESENTATION LINK | ~ S407 |

↓

| | |
|---|---|
| RECEIVE MEDIA CONTENT BASED ON MEDIA CONTENT PRESENTATION INFORMATION | ~ S409 |

↓

| | |
|---|---|
| PRESENT MEDIA CONTENT | ~ S411 |

# FIG. 59

| | | MPD payload | | | MPD payload | | | |
|---|---|---|---|---|---|---|---|---|
| | UDP Hdr | UDP Payload | | UDP Hdr | UDP Payload | | | |
| IP Hdr | IP Payload | | IP Hdr | IP Payload | | IP Hdr | IP Payload | |

# FIG. 60

| Syntax | No.Bits | Format |
|---|---|---|
| MPD_UDP_datagram() { | | |
|   UDP_header | | |
|   reserved | 4 | '1111' |
|    MPD_payload_type | 4 | uimsbf |
|   MPD_payload | N | |
| } | | |

# FIG. 61

| Syntax | No.Bits | Format |
|---|---|---|
| MPD_payload() { | | |
|     sequence_number | 8 | uimsbf |
|   MPD_coding | 2 | uimsbf |
|     MPD_byte_length /* N */ | 14 | uimsbf |
|   MPD_bytes() | 8*N | |
| } | | |

# FIG. 62

```
RECEIVE BROADCAST STREAM        ～ S501
```

```
EXTRACT IP DATAGRAM FROM BROADCAST STREAM   ～ S503
```

```
EXTRACT UDP DATAGRAM
FROM IP DATAGRAM            ～ S505
```

```
EXTRACT MEDIA CONTENT PRESENTATION
INFORMATION BASED ON UDP DATAGRAM    ～ S507
```

```
RECEIVE MEDIA CONTENT BASED ON MEDIA
CONTENT PRESENTATION INFORMATION     ～ S509
```

```
PRESENT MEDIA CONTENT         ～ S511
```

# FIG. 63

| Syntax | No. of Bits | Format |
|---|---|---|
| MPD_descriptor{ | | |
| descriptor_tag | 8 | uimsbf |
| descriptor_length | 8 | uimsbf |
| simulcast_flag | 1 | uimsbf |
| MPD_version | 4 | uimsbf |
| MPD_transport_mode | 3 | uimsbf |
| MPD_bootstrap_data(MPD_transport_mode) | | |
| } | | |

# FIG. 64

| Syntax | No. of Bits | Format |
|---|---|---|
| MPD_bootstrap_data (){ | | |
| MPD_data_length | 8 | |
| for (i = 0; i < MPD_data_length; i++){ | | |
| MPD_data_byte | 1 | bslbf |
| } | | |
| } | | |

## FIG. 65

| Syntax | No. of Bits | Format |
|---|---|---|
| MPD_bootstrap_data (){ | | |
|   MPD_URL_length | 8 | |
|     for (i = 0; i < MPD_URL_length; i++){ | | |
|       MPD_URL | 8 | bslbf |
|     } | | |
| } | | |

# FIG. 66

| Syntax | No. of Bits | Format |
|---|---|---|
| MPD_bootstrap_data (){ | | |
| reserved | 3 | bslbf |
| MPD_pid | 13 | uimsbf |
| } | | |

# FIG. 67

| Syntax | No. of Bits | Format |
|---|---|---|
| MPD_bootstrap_data (){ | | |
| transport_stream_id | 16 | uimsbf |
| reserved | 3 | bslbf |
| MPD_pid | 13 | uimsbf |
| } | | |

# FIG. 68

| Syntax | No. of Bits | Format |
|---|---|---|
| MPD_bootstrap_data (){ | | |
| IP_version_flag | 1 | bslbf |
| source_IP_address_flag | 1 | bslbf |
| if(source_IP_address_flag) | | |
| source_IP_address | 32or128 | uimsbf |
| destination_IP_address | 32or128 | uimsbf |
| destination_port_number | 16 | uimsbf |
| dataPipe_id | 8 | uimsbf |
| } | | |

# FIG. 69

| Syntax | No. of Bits | Format |
|---|---|---|
| MPD_bootstrap_data (){ | | |
| IP_version_flag | 1 | bslbf |
| source_IP_address_flag | 1 | bslbf |
| if(source_IP_address_flag) | | |
| source_IP_address | 32or128 | uimsbf |
| destination_IP_address | 32or128 | uimsbf |
| destination_port_number | 16 | uimsbf |
| dataPipe_id | 8 | uimsbf |
| flute_tsi | | |
| } | | |

# FIG. 70

| | |
|---|---|
| RECEIVE BROADCAST STREAM | ～ S701 |

↓

| | |
|---|---|
| EXTRACT INFORMATION TABLE INCLUDING DESCRIPTOR INCLUDING METHOD OF TRANSMITTING MEDIA CONTENT PRESENTATION INFORMATION | ～ S703 |

↓

| | |
|---|---|
| EXTRACT DESCRIPTOR INCLUDING METHOD OF TRANSMITTING MEDIA CONTENT PRESENTATION INFORMATION FROM INFORMATION TABLE | ～ S705 |

↓

| | |
|---|---|
| EXTRACT METHOD OF TRANSMITTING MEDIA CONTENT PRESENTATION INFORMATION FROM INFORMATION TABLE | ～ S707 |

↓

| | |
|---|---|
| ACQUIRE MEDIA CONTENT PRESENTATION INFORMATION BASED ON METHOD OF TRANSMITTING MEDIA CONTENT PRESENTATION INFORMATION | ～ S709 |

↓

| | |
|---|---|
| RECEIVE MEDIA CONTENT BASED ON MEDIA CONTENT PRESENTATION INFORMATION | ～ S711 |

↓

| | |
|---|---|
| PRESENT MEDIA CONTENT | ～ S713 |

# FIG. 71

BROADCAST CONTENT
DETERMINED BY DESCRIPTOR TRANSMITTED
THROUGH IP NETWORK ? — S901

TRANSMISSION OF BROADCAST
STREAM UNSTABLE ? — S903

RECEIVE MEDIA CONTENT BASED ON MEDIA
CONTENT PRESENTATION INFORMATION — S905

PRESENT MEDIA CONTENT — S907

# FIG. 72

| Syntax | No. of Bits | Format |
|---|---|---|
| DASHTime_Payload { | | |
| DASHTimePacket_identifier | 8 | uimsbf |
| mpd_force_update | 1 | uimsbf |
| period_switch_timer | 31 | uimsbf |
| presentation_time | 64 | uimsbf |
| for (i = 0; i < N; i++){ | | |
| period_id | 8 | bslbf |
| } | | |
| } | | |

# FIG. 73

| Syntax | No. of Bits | Format |
|---|---|---|
| DASHTime_private_data { | | |
| presentation_time | 64 | uimsbf |
| for (i = 0; i < N; i++){ | | |
| period_id | 8 | bslbf |
| } | | |
| } | | |

# FIG. 74

| Syntax | No. of Bits | Format |
|---|---|---|
| DASHTime_private_data { | | |
|    DASHTimePacket_identifier | 8 | uimsbf |
|   presentation_time | 64 | uimsbf |
|     for (i = 0; i < N; i++){ | | |
|      period_id | 8 | bslbf |
|   } | | |
| } | | |

# FIG. 75

| | |
|---|---|
| RECEIVE BROADCAST STREAM | S1101 |

↓

| | |
|---|---|
| EXTRACT SYNCHRONIZATION INFORMATION FOR SYNCHRONIZATION BETWEEN BROADCAST CONTENT AND MEDIA CONTENT | S1103 |

↓

| | |
|---|---|
| RECEIVE MEDIA CONTENT | S1105 |

↓

| | |
|---|---|
| SYNCHRONIZE BROADCAST CONTENT AND MEDIA CONTENT | S1107 |

## FIG. 76

| Format | Description |
|---|---|
| atsc://TSID, SSID, PID | TSID is the ID of the source transport stream (TS)<br>SSID is the ID of source indicating the program in source TS<br>PID is the value of the PID carrying the media stream |
| atsc://TSID, PNUM, PID | TSID is the ID of the source transport stream (TS)<br>PNUM is the program number indicating the program in source TS<br>PID is the value of the PID carrying the media stream |
| atsc://TSID, CHNUM, PID | TSID is the ID of the source transport stream (TS)<br>CHNUM is the number indicating associated channel number in source TS. The channel number is formatted as "major channel number-minor channel number"<br>PID is the value of the PID carrying the media stream |

EP 3 163 889 A1

## FIG. 77

```
<?xml version="1.0" encoding="UTF-8"?>
  <MPD xmlns:xsi="http://www.w3.org/2001/XMLSchema-instance"
   xsi:schemaLocation="urn:mpeg:DASH:schema:MPD:2011 DASH-MPD.xsd"
  xmlns="urn:mpeg:DASH:schema:MPD:2011"
   id="a1fd4476-3523-4a1d-99e2-472ae55eb343"
  type="dynamic"
     availabilityStartTime="2012-07-07T07:07:07"
  minBufferTime="PT10S"
     profiles="urn:mpeg:dash:profile:mp2t-simple:2011">

   <BaseURL>http://cdn1.example.com/</BaseURL>

     <Period id="abc01" start="PT0S">
        <AdaptationSet mimeType="video/mp2t" codecs="avc1.4D401F">
             <Representation id="rep1">
                 <SegmentBase media="atsc://0x0aa4, 0x0022, 0x011" timescale="25000"/>
              <Representation id="rep2" bandwidth="25000">
               <SegmentTemplate   media="$RepresentationID$_$Number%08$.ts"
                          duration="4" startNumber="1"/>
     </AdaptationSet>
       <AdaptationSet mimeType="video/mp2t" codecs="mp4a">
             <Representation id="rep3">
                 <SegmentBase media="atsc://0x0aa4, 0x0022, 0x012" timescale="25000"/>
     </AdaptationSet>
   </Period>
                ......
</MPD>
```

# FIG. 78

| RECEIVE MEDIA CONTENT PRESENTATION INFORMATION | ~ S1301 |

| EXTRACT INFORMATION FOR IDENTIFYING BROADCAST CONTENT | ~ S1303 |

| RECEIVE BROADCAST CONTENT BASED ON INFORMATION FOR IDENTIFYING BROADCAST CONTENT | ~ S1305 |

# FIG. 79

# FIG. 80

PMT Parsing

...
MPD_descriptor
...
stream_type=0x02(MPEG-2 Video)
elementary_PID=PID_V1
..
stream_type=0x81(AC-3 Audio)
elementary_PID=PID_A1

simulcast_flag =1
MPD_transport_mode=0x02(Private Section)
...
transport_stream_id=0x5548
MPD_section_PID=PID_PS

<MPD>
...
  <Period id="nbcu05">
<AdaptationSet>
  <Representation ../>
  <Representation ../>
</AdaptationSet>

Media
CDN

HTTP
Access
Engine

TS/PES
Depacketizer

MPD_bytes

DASH Time, period ID

DASH Time

DASH Media
Segment

MPEG-2 Video ES

AC-3 Audio ES

Decoder

Video

Audio

# FIG. 81

# FIG. 82

EP 3 163 889 A1

# FIG. 83

EP 3 163 889 A1

# FIG. 84

| | |
|---|---|
| SET BROADCAST SIGNAL RECEIVING PARAMETER | ~S2101 |

↓

| | |
|---|---|
| RECEIVE BROADCAST SIGNAL BASED ON BROADCAST SIGNAL RECEIVING PARAMETER | ~S2103 |

↓

| | |
|---|---|
| EXTRACT BROADCAST SERVICE SIGNALING INFORMATION FROM BROADCAST SIGNAL | ~S2105 |

↓

| | |
|---|---|
| GENERATE CHANNEL MAP BASED ON BROADCAST SERVICE SIGNALING INFORMATION | ~S2107 |

# FIG. 85

| RECEIVE USER INPUT FOR BROADCAST SERVICE SELECTION | ～S2151 |

↓

| ACQUIRE BROADCAST SIGNAL RECEIVING PARAMETER CORRESPONDING TO SELECTED BROADCAST SERVICE | ～S2153 |

↓

| SET BROADCAST SIGNAL RECEPTION BASED ON BROADCAST SIGNAL RECEIVING PARAMETER | ～S2155 |

↓

| RECEIVE BROADCAST SIGNAL BASED ON BROADCAST SIGNAL RECEPTION | ～S2157 |

↓

| ACQUIRE BROADCAST SERVICE SIGNALING INFORMATION ON BROADCAST SERVICE SELECTED BY USER BASED ON BROADCAST SIGNAL | ～S2159 |

↓

| UPDATE CHANNEL MAP BASED ON BROADCAST SERVICE SIGNALING INFORMATION | ～S2161 |

↓

| RECEIVE MEDIA COMPONENT INCLUDED IN BROADCAST SERVICE BASED ON CHANNEL MAP | ～S2163 |

↓

| PRESENT BROADCAST SERVICE BASED ON MEDIA COMPONENT | ～S2165 |

# FIG. 86

| | |
|---|---|
| ACQUIRE MEDIA CONTENT PRESENTATION INFORMATION | S2201 |
| ACQUIRE INFORMATION ON MEDIA COMPONENT BASED ON MEDIA CONTENT PRESENTATION INFORMATION | S2203 |
| RECEIVE MEDIA COMPONENT BASED ON INFORMATION ON MEDIA COMPONENT | S2205 |

## FIG. 87

| P1 | L1 | Common PLP | Scheduled & interleaved PLP's | | | | Auxiliary data |
|---|---|---|---|---|---|---|---|
| | | | PLP1 | PLP2 | ... | PLPn | |

## FIG. 88

| P1 | L1 | Fast Information Channel | Scheduled & interleaved PLP's | | | | Auxiliary data |
|---|---|---|---|---|---|---|---|
| | | | PLP1 | PLP2 | ... | PLPn | |

# FIG. 89

| Signaling message header | Signaling message (binary or XML formatted) |
|---|---|

| Syntax | No. Bits | Format |
|---|---|---|
| signaling_message_header{ | | |
| signaling_id | 8 | uimsbf |
| signaling_length | 12 | uimsbf |
| reserved | 4 | '1111' |
| signaling_id_extension { | | |
| protocol_version | 8 | uimsbf |
| reserved | 8 | uimsbf |
| } | | |
| reserved | 2 | '11' |
| version_number | 5 | uimsbf |
| current_next_indicator | 1 | uimsbf |
| fragment_number | 8 | uimsbf |
| last_fragment_number | 8 | uimsbf |
| } | | |

# FIG. 90

| Signaling message header | Service map signaling message OR PORTION THEREOF |
|---|---|

| Syntax | No. of Bits | Format |
|---|---|---|
| service_map_signaling_message { | | |
| ... | | |
| num_services | 8 | uimsbf |
| for (i=0; i<num_services; i++) | | |
| { | | |
| service_id | 16 | uimsbf |
| service_type | 8 | uimsbf |
| short_service_name_length /* m */ | 3 | uimsbf |
| short_service_name | 16*m | bslbf |
| channel_number | 16 | uimsbf |
| | | |
| ... | | |
| timebase_transport_mode | 8 | uimsbf |
| bootstrap_data(timebase_transport_mode) | var | |
| signaling_transport_mode | 8 | |
| bootstrap_data(signaling_transport_mode) | var | |
| | | |
| ... | | |
| num_service_level_descriptors | 8 | uimsbf |
| for (m=0; m<num_service_level_descriptors; m++) | | |
| { | | |
| service_level_descriptor() | var | |
| } | | |
| } | | |
| } | | |

# FIG. 91

| timebase_transport_mode OR signaling_transport_mode VALUE | Designation |
|---|---|
| 0x00 | IPv4/IPv6 flows through same broadcast or over the cellular network |
| 0x01 | IPv4/IPv6 flows through different broadcast |
| 0x02 | Session-based flows (e.g., ALC/LCT, FLUTE sessions) through same broadcast |
| 0x03 | Session-based flows (e.g., ALC/LCT, FLUTE sessions) through different broadcast |
| 0x04 | packet-based flows through same broadcast |
| 0x05 | packet-based flows through different broadcast |
| 0x06 | URL |
| 0x07-0xFF | Reserved |

# FIG. 92

| Syntax | No. of Bits | Format |
|---|---|---|
| bootstrap_data() { | | |
|   IP_version_flag | 1 | bslbf |
|   source_IP_address_flag | 1 | bslbf |
|   destination_IP_address_flag | 1 | bslbf |
|   reserved | 5 | '11111' |
|   if (source_IP_address_flag) | | |
|     source_IP_address | 32 or 128 | uimsbf |
|   if (destination_IP_address_flag) | | |
|     destination_IP_address | 32 or 128 | uimsbf |
|   port_num_count | 8 | |
|   if(port_num_count > 0) | | |
|     destination_UDP_port_num | 16 | uimsbf |
| } | | |

# FIG. 93

| Syntax | No. of Bits | Format |
|---|---|---|
| bootstrap_data() { | | |
|   broadcast_id | 16 | uimsbf |
|   IP_version_flag | 1 | bslbf |
|   source_IP_address_flag | 1 | bslbf |
|   destination_IP_address_flag | 1 | bslbf |
|   reserved | 5 | '11111' |
|   if (source_IP_address_flag) | | |
|     source_IP_address | 32 or 128 | uimsbf |
|   if (destination_IP_address_flag) | | |
|     destination_IP_address | 32 or 128 | uimsbf |
|   port_num_count | 8 | |
|   if(port_num_count > 0) | | |
|     destination_UDP_port_num | 16 | uimsbf |
| } | | |

# FIG. 94

| Syntax | No. of Bits | Format |
|---|---|---|
| bootstrap_data() { | | |
|   IP_version_flag | 1 | bslbf |
|   source_IP_address_flag | 1 | bslbf |
|   destination_IP_address_flag | 1 | bslbf |
|   reserved | 5 | '11111' |
|   if (source_IP_address_flag) | | |
|     source_IP_address | 32 or 128 | uimsbf |
|   if (destination_IP_address_flag) | | |
|     destination_IP_address | 32 or 128 | uimsbf |
|   destination_UDP_port_num | 16 | uimsbf |
|   tsi | 16 | uimsbf |
| } | | |

# FIG. 95

| Syntax | No. of Bits | Format |
|---|---|---|
| bootstrap_data() { | | |
|   broadcast_id | 16 | uimsbf |
|   IP_version_flag | 1 | bslbf |
|   source_IP_address_flag | 1 | bslbf |
|   destination_IP_address_flag | 1 | bslbf |
|   reserved | 5 | '11111' |
|   if (source_IP_address_flag) | | |
|     source_IP_address | 32 or 128 | uimsbf |
|   if (destination_IP_address_flag) | | |
|     destination_IP_address | 32 or 128 | uimsbf |
|   destination_UDP_port_num | 16 | uimsbf |
|   tsi | 16 | uimsbf |
| } | | |

# FIG. 96

| Syntax | No. of Bits | Format |
|---|---|---|
| bootstrap_data() { | | |
|   IP_version_flag | 1 | bslbf |
|   source_IP_address_flag | 1 | bslbf |
|   destination_IP_address_flag | 1 | bslbf |
|   reserved | 5 | '11111' |
|   if (source_IP_address_flag) | | |
|     source_IP_address | 32 or 128 | uimsbf |
|   if (destination_IP_address_flag) | | |
|     destination_IP_address | 32 or 128 | uimsbf |
|   destination_UDP_port_num | 16 | uimsbf |
|   packet_id | 16 | uimsbf |
| } | | |

# FIG. 97

| Syntax | No. of Bits | Format |
|---|---|---|
| bootstrap_data() { | | |
| broadcast_id | 16 | uimsbf |
| IP_version_flag | 1 | bslbf |
| source_IP_address_flag | 1 | bslbf |
| destination_IP_address_flag | 1 | bslbf |
| reserved | 5 | '11111' |
| if (source_IP_address_flag) | | |
| source_IP_address | 32 or 128 | uimsbf |
| if (destination_IP_address_flag) | | |
| destination_IP_address | 32 or 128 | uimsbf |
| destination_UDP_port_num | 16 | uimsbf |
| packet_id | 16 | uimsbf |
| } | | |

# FIG. 98

| Syntax | No. of Bits | Format |
|---|---|---|
| bootstrap_data() { | | |
| URL_length | 8 | |
| for (i = 0; i < URL_length; i++){ | | |
| URL_char | 8 | bslbf |
| } | | |
| } | | |

# FIG. 99

```
service_map_signaling_message {
    ...
    num_services
    for (i=0; i<num_services; i++)
    {
        service_id
        service_type
        short_service_name_length /* m */
        short_service_name
        channel_number

        ...
        timebase_transport_mode
        bootstrap_data(timebase_transport_mode)
        signaling_transport_mode
        bootstrap_data(signaling_transport_mode)

        ...
        num_service_level_descriptors
        for (m=0; m<num_service_level_descriptors; m++)
        {
            service_level_descriptor()
        }
    }
}
```

→ IP/UDP FLOW FOR TRANSMITTING TIMEBASE

timebase

| timebase id |
| clock_rate |
| ... |

→ SPECIFIC ACL/LCT TRANSFER SESSION

| MPG signaling message |
| --- |
| MPD@id |
| ... |

| Component location signaling message |
| --- |
| Service_id |
| for (i=0; i<num_components; i++) |
| { |
| ... |
| } |

| Application signaling message |
| --- |
| App_signaling_id |
| for (i=0; i<num_apps; i++) |
| { |
| ... |
| } |

# FIG. 100

| Signaling message header | Service map signaling message OR PORTION THEREOF |
|---|---|

| Syntax | No. of Bits | Format |
|---|---|---|
| service_map_signaling_message { | | |
| ... | | |
| num_services | 8 | uimsbf |
| for (i=0; i<num_services; i++) | | |
| { | | |
| service_id | 16 | uimsbf |
| service_type | 8 | uimsbf |
| short_service_name_length /* m */ | 3 | uimsbf |
| short_service_name | 16*m | bslbf |
| channel_number | 16 | uimsbf |
| ... | | |
| timebase_transport_flag | 1 | bslbf |
| if(timebase_transport_flag) | | |
| timebase_transport_mode | 8 | uimsbf |
| bootstrap_data(timebase_transport_mode) | var | |
| } | | |
| signaling_transport_mode | 8 | |
| bootstrap_data(signaling_transport_mode) | var | |
| ... | | |
| num_service_level_descriptors | 8 | uimsbf |
| for (m=0; m<num_service_level_descriptors; m++) | | |
| { | | |
| service_level_descriptor() | var | |
| } | | |
| } | | |
| } | | |

# FIG. 101

| Signaling message header | Service map signaling message Or portion thereof |
|---|---|

SERVICE MAP SIGNALING MESSAGE IS AS FOLLOWS.
(REPRESENT IN THE FORM OF OTHER FORMS SUCH AS XML)

| Syntax | No. of Bits | Format |
|---|---|---|
| service_map_signaling_message { | | |
| ... | | |
| num_services | 8 | uimsbf |
| for (i=0; i<num_services; i++) | | |
| { | | |
| service_id | 16 | uimsbf |
| service_type | 8 | uimsbf |
| ... | | |
| timebase_transport_flag | 1 | bslbf |
| MPD_transport_flag | 1 | bslbf |
| component_location_transport_flag | 1 | bslbf |
| app_signaling_transport_flag | 1 | bslbf |
| signaling_transport_flag | 1 | bslbf |
| reserved | 3 | '111' |
| if(timebase_transport_flag) | | |
| timebase_transport_mode | 8 | uimsbf |
| bootstrap_data(timebase_transport_mode) | var | |
| } | | |
| if(MPD_transport_flag) | | |
| MPD_transport_mode | 8 | |
| bootstrap_data(MPD_transport_mode) | var | |
| } | | |
| if(component_location_transport_flag) | | |
| component_location_transport_mode | 8 | uimsbf |
| bootstrap_data(component_location_transport_mode) | var | |
| } | | |
| if(app_signaling_transport_flag) | | |
| app_signaling_transport_mode | 8 | |
| bootstrap_data(app_signaling_transport_mode) | var | |
| } | | |
| if(signaling_transport_flag) | | |
| signaling_transport_mode | 8 | |
| bootstrap_data(signaling_transport_mode) | var | |
| } | | |
| ... | | |
| num_service_level_descriptors | 8 | uimsbf |
| for (m=0; m<num_service_level_descriptors; m++) | | |
| { | | |
| service_level_descriptor() | var | |
| } | | |
| } | | |
| } | | |

EP 3 163 889 A1

# FIG. 102

| X_transport_mode VALUE | Designation |
|---|---|
| 0x00 | IPv4/IPv6 flows through same broadcast or over the cellular network |
| 0x01 | IPv4/IPv6 flows through different broadcast |
| 0x02 | Session-based flows (e.g., ALC/LCT, FLUTE sessions) through same broadcast |
| 0x03 | Session-based flows (e.g., ALC/LCT, FLUTE sessions) through different broadcast |
| 0x04 | packet-based flows through same broadcast |
| 0x05 | packet-based flows through different broadcast |
| 0x06 | URL |
| 0x07-0xFF | Reserved |

203

# FIG. 103

| Syntax | No. Bits | Format |
|---|---|---|
| component_location_signaling_message { | | |
|   signaling_id | 8 | uimsbf |
|   signaling_length | 12 | uimsbf |
|   reserved | 4 | '1111' |
|   signaling_id_extension { | | |
|     protocol_version | 8 | uimsbf |
|     reserved | 8 | uimsbf |
|   } | | |
|   reserved | 2 | '11' |
|   version_number | 5 | uimsbf |
|   current_next_indicator | 1 | uimsbf |
|   fragment_number | 8 | uimsbf |
|   last_fragment_number | 8 | uimsbf |
|   service_id | 16 | uimsbf |
|   num_components | 8 | uimsbf |
|   for (i=0; i<num_components; i++) | | |
|   { | | |
|     component_id_length /*L*/ | 8 | uimsbf |
|     component_id | 8*L | uimsbf |
|     frequency_number | 16 | uimsbf |
|     broadcast_id | 16 | uimsbf |
|     data_pipe_id | 8 | uimsbf |
|     IP_version_flag | 1 | bslbf |
|     source_IP_address_flag | 1 | bslbf |
|     destination_IP_address_flag | 1 | bslbf |
|     reserved | 5 | '11111' |
|     if (source_IP_address_flag) | | |
|       source_IP_address | 32 or 128 | uimsbf |
|     if (destination_IP_address_flag) | | |
|       destination_IP_address | 32 or 128 | uimsbf |
|     UDP_port_num | 16 | uimsbf |
|     tsi | 16 | uimsbf |
|   } | | |
|   num_app_signalings | 8 | uimsbf |
|   for (k=0; k<num_app_signalings; k++) | | |
|   { | | |
|     app_signaling_id_length /*M*/ | 8 | uimsbf |
|     app_signaling_id | 8*M | uimsbf |
|     app_delivery_info() | var | |
|   } | | |
| } | | |

# FIG. 104

| Syntax | No. of Bits | Format |
|---|---|---|
| app_delivery_info() { | | |
|   broadcast_flag | 1 | bslbf |
|   IP_version_flag | 1 | bslbf |
|   source_IP_address_flag | 1 | bslbf |
|   destination_IP_address_flag | 1 | bslbf |
|   reserved | 4 | '1111' |
|   if (broadcast_flag) | | |
|     broadcast_id | 16 | uimsbf |
|   if (source_IP_address_flag) | | |
|     source_IP_address | 32 or 128 | uimsbf |
|   if (destination_IP_address_flag) | | |
|     destination_IP_address | 32 or 128 | uimsbf |
|   destination_UDP_port_num | 16 | uimsbf |
|   tsi | 16 | uimsbf |
| } | | |

# FIG. 105

| Syntax | No. of Bits | Format |
|---|---|---|
| app_delivery_info() { | | |
|   broadcast_flag | 1 | bslbf |
|   IP_version_flag | 1 | bslbf |
|   source_IP_address_flag | 1 | bslbf |
|   destination_IP_address_flag | 1 | bslbf |
|   reserved | 4 | '1111' |
|   if (broadcast_flag) | | |
|     broadcast_id | 16 | uimsbf |
|   if (source_IP_address_flag) | | |
|     source_IP_address | 32 or 128 | uimsbf |
|   if (destination_IP_address_flag) | | |
|     destination_IP_address | 32 or 128 | uimsbf |
|   destination_UDP_port_num | 16 | uimsbf |
|   packet_id | 16 | uimsbf |
| } | | |

# FIG. 106

```
<?xml version="1.0" encoding="UTF-8"?>
<xs:schema xmlns:xs="http://www.w3.org/2001/XMLSchema">
<xs:element name="CompLocTable" type="CompLocTableType"/>
<xs:complexType name="CompLocTableType">
  <xs:sequence>
    <xs:element name="MPDCompLocs" maxOccurs="unbounded">
    <xs:complexType>
      <xs:sequence>
        <xs:element name="PeriodCompLocs" maxOccurs="unbounded">
          <xs:complexType>
            <xs:sequence>
              <xs:element name="ReptnLoc" type="ReptnLocType" maxOccurs="unbounded"/>
            </xs:sequence>
            <xs:attribute name="periodId" type="xs:string"/>
          </xs:complexType>
        </xs:element>
      </xs:sequence>
      <xs:attribute name="mpdId"/>
    </xs:complexType>
    </xs:element>
  </xs:sequence>
</xs:complexType>
<xs:complexType name="ReptnLocType">
  <xs:attribute name="ReptnID" type="StringNoWhitespaceType" use="required"/>
  <xs:attribute name="RFChan" type="xs:unsignedByte" use="required"/>
  <xs:attribute name="BroadcastId " type="xs:unsignedByte" use="required"/>
  <xs:attribute name="DataPipeId " type="xs:unsignedByte" use="required"/>
  <xs:attribute name="IPAddr" type="xs:unsignedInt" use="required"/>
  <xs:attribute name="UDPPort" type="xs:unsignedShort" use="required"/>
  <xs:attribute name="TSI" type="xs:unsignedInt" use="required"/>
</xs:complexType>
<!-- String without white spaces -->
<xs:simpleType name="StringNoWhitespaceType">
  <xs:restriction base="xs:string">
    <xs:pattern value="[^\r\n\t \p{Z}]*"/>
  </xs:restriction>
</xs:simpleType>
</xs:schema>
```

# FIG. 107

# FIG. 108

```
RECEIVE TRANSFER PROTOCOL
PACKET INCLUDING SERVICE          ── S2301
SIGNALING MESSAGE
```

```
EXTRACT SERVICE SIGNALING MESSAGE   ── S2303
FROM TRANSFER PROTOCOL PACKET
```

```
ACQUIRE INFORMATION FOR PROVIDING
BROADCAST SERVICE FROM EXTRACTED    ── S2305
SERVICE SIGNALING MESSAGE
```

# FIG. 109

```
INSERT INFORMATION FOR PROVIDING BROADCAST   ── S2401
SERVICE INTO SERVICE SIGNALING MESSAGE
```

```
PACKETIZE SERVICE SIGNALING               ── S2403
MESSAGE IN TRANSFER PROTOCOL PACKET
```

```
TRANSMIT TRANSFER PROTOCOL PACKET INCLUDING
SERVICE SIGNALING MESSAGE THROUGH            ── S2405
SPECIFIC TRANSMISSION MODE
```

# FIG. 110

FIG. 111

FIG. 112

| NRT Content Item |
| --- |
| |

1..n
contains

1..n

| NRT File |
| --- |
| |

# FIG. 113

| App | | |
|---|---|---|
| represents a kind of NRT Content Item that can support interactivity | | |
| Attributes | | |
| | .. | |
| Relationships | | |
| | Sub-class relationship with NRT Content Item class | |

| App-Based Enhancement | | |
|---|---|---|
| represents an App-Based Enhancement | | |
| Attributes | | |
| | Essential capabilities [0..1] – receiver capabilities needed for meaningful rendition of enhancement | |
| | Non-essential capabilities [0..1] – receiver capabilities useful for optimal rendition of enhancement, but not absolutely necessary for meaningful rendition of enhancement | |
| | Target device [0..n] – for adjunct data services only ♂Possible values | |
| | | Primary device |
| | | Companion device |
| Relationships | | |
| | "Contains" relationship with App class – for the applications in the App-Based Enhancement | |
| | "Contains" relationship with NRT Content Item class – for NRT Content Items used by the applications in the App-Based Enhancement | |
| | "Contains" relationship with Notification Stream class – for Notifications Stream that delivers notifications to synchronize the actions of the applications with an underlying Linear Time Base. | |
| | "Contains" relationship with OnDemand Component class – for On Demand components to be managed by the application(s). | |

## FIG. 114

| Time Base | |
|---|---|
| represents metadata used to establish a time line for synchronizing the components of a Linear Service | |
| Attributes | |
| | Time Base ID – identifier of Time Base |
| | Clock Rate – clock rate of the time base |

| Notification Stream | |
|---|---|
| represents Notification Stream used to deliver synchronized notifications of actions to be taken | |
| Attributes | |
| | Notification Stream ID – identifier of Notification Stream |

EP 3 163 889 A1

# FIG. 115

| Linear Service | | | |
|---|---|---|---|
| represents a Linear Service (as described in section 3.2 of this document) | | | |
| Relationships | | | |
| | "Contains" relationship with Presentable Video Component class | | |
| | Attributes of | | |
| | | Role of video component [1] | |
| | | Possible values | |
| | | | Primary (default) video |
| | | | Alternative camera view |
| | | | Other alternative video component |
| | | | Sign language (e.g., ASL) inset |
| | | | Follow subject video, with name of subject being followed, in the case when the follow-subject feature is supported by a separate video component. |
| | "Contains" relationship with Presentable Audio Component class | | |
| | "Contains" relationship with Presentable CC Component class | | |
| | "Contains" relationship with Time Base class | | |
| | "Contains" relationship with App-Based Enhancement class | | |
| | "Sub-class" relationship with Service class | | |

| App-Based Service represents an App-Based Service | |
|---|---|
| Relationships | |
| | "Contains" relationship with Time Base class |
| | "Contains" relationship with App-Based Enhancement class. |
| | "Sub-class" relationship with Service class |

# FIG. 116

| Program |
| --- |
| represents a Program |

| Attributes | |
| --- | --- |
| | ProgramIdentifier [1] – unique identifier of the Program |
| | StartTime [1] – wall clock date and time the Program is scheduled to start |
| | ProgramDuration [1] – scheduled wall clock time from the start of the Program to the end of the Program |
| | TextualTitle [1..n] – human readable title of the Program, possibly in multiple languages – if not present, defaults to TextualTitle of associated Show |
| | TextualDescription [0..n] – human readable description of the Program, possibly in multiple languages – if not present, defaults to TextualDescription of associated Show |
| | Genre [0..n] – genre(s) of the Program – if not present, defaults to Genre of associated Show |
| | GraphicalIcon [0..n] – icon to represent the program (e.g., in ESG), possibly in multiple sizes – if not present, defaults to GraphicalIcon of associated Show |
| | ContentAdvisoryRating [0..n] – content advisory rating for the Program, possibly for multiple regions – if not present, defaults to ContentAdvisoryRating of associated Show |
| | Targeting/personalization properties – properties to be used to determine targeting, etc., of Program – if not present, defaults to Targeting/personalization properties of associated Show |
| | Content/Service protection properties – properties to be used for content protection and/or service protection of Program  – if not present, defaults to Content/Service protection properties of associated Show |
| | Other properties defined in the "ESG Model" |

| Relationships | | | |
| --- | --- | --- | --- |
| "ProgramOf" relationship with Linear Service class | | | |
| "ContentItemOf" relationship with App-Based Service class | | | |
| "OnDemandComponentOf" relationship with App Based Service Class | | | |
| "Contains" relationship with Presentable Video Component class | | | |
| Attributes | | | |
| | Role of video component [1] | | |
| | Possible values | | |
| | | Primary (default) video | |
| | | Alternative camera view | |
| | | Other alternative video component | |
| | | Sign language (e.g., ASL) inset | |
| | | Follow subject video, with name of subject being followed, in the case when the follow-subject feature is supported by a separate video component. | |
| "Contains" relationship with Presentable Audio Component class | | | |
| "Contains" relationship with Presentable CC Component class | | | |
| "Contains" relationship with App-Based Enhancement class | | | |
| "Contains" relationship with Time Base class | | | |
| "Based-on" relationship with Show class | | | |
| "Contains" relationship with Segment class | | | |
| Attributes of "Contains" relationship with Segment class | | | |
| | RelativeSegmentStartTime – start time of Segment relative to beginning of Program | | |

# FIG. 117

| Content Item | A collection of one or more files that is intended to be consumed as an integrated whole |
|---|---|
| OnDemand Content | Content that is presented at times selected by viewers (typically via user interfaces provided by applications) – such content could consist of continuous content (e.g., audio/video) or non-continuous content (e.g., HTML pages or images) |

EP 3 163 889 A1

**FIG. 118**

Top-Level Audio
(Pick-one
Component)

Complete Main
(Pick-one
Component)

Tracks to be Mixed
(Composite
Component)

Low-rate Encoding
(Elementary
Component)

High-rate Encoding
(Elementary
Component)

Music
(Pick-one
Component)

Dialog
(Elementary
Component)

Effects
(Elementary
Component)

Low-rate Encoding
(Elementary
Component)

High-rate Encoding
(Elementary
Component)

# FIG. 119

| Example Trigger | Function |
|---|---|
| xbc.tv/e12 | Pre-load TPT from identified location (online at http://xbc.tv/e12 or within associated FLUTE session). |
| xbc.tv/e12?s=10 | Pre-load TPT from identified location (online at http://xbc.tv/e12 or within associated FLUTE session), with smoothing parameter value 10 seconds. |
| xbc.tv/e12?v=2 | Pre-load TPT from the identified location and indicate the version number of this TPT. If a TPT had previously been acquired from this location and it was associated with a different version number, the receiver should reload this new version. |
| xbc.tv/e12?m=5a33 | Identify the location of TPT and establish the current Media Time of the associated content. |
| xbc.tv/e12?e=7.5 | Identify the location of TPT and signal the immediate execution of the TPT interactive event with eventID value 5 associated with the TDO that has appID value 7. |
| xbc.tv/e12?e=8.3&t=77ee | Identify the location of TPT and signal the execution at Media Time 77ee of the TPT interactive event with eventID value 3 associated with the TDO that has appID value 8. |
| xbc.tv/e12?m=5a33&s=12 | Identify the location of TPT and establish the current Media Time of the associated content, with smoothing parameter value 12 seconds. |
| xbc.tv/e12?m=44b1&c=xbc55 | Identify the location of the Direct Execution DO to be launched, establish the current Media Time of the associated content, and identify the content. |
| xbc.tv/e12?e=8.3&st=77ee&et=80ee | Identify the location of TPT and signal the execution at Media Time 77ee of the TPT interactive event with eventID value 3 associated with the TDO that has appID vaue 8 and has a end time 80ee. |

# FIG. 120

| Property | Description |
|---|---|
| Application ID | Unique ID capable of identifying application |
| Application version | Version information of application |
| Application type | Version information of application |
| Application location | Location information of application (e.g. URL) |
| Capabilities | Location information of application (e.g. URL) |
| Required synchronization level | Synchronization level information between broadcast streaming and application (e.g. program or even unit, within 2 seconds, lip sync, and frame level sync) |
| Frequency of use | Frequency of use information of application |
| Expiration date | Expiration date information of application |
| Data item needed by applicaion | Data information used in application |
| Security properties | Security-related information of application |
| Target devices | Information of target device in which application will be used (e.g. TV and mobile device) |
| Content advisory | Grade information capable of using application (e.g. all ages and 15 years old or more) |

# FIG. 121

| Element/Attribute | Card-inality | Data Type | Description and Value |
|---|---|---|---|
| TPT | | | |
| @majorProtocolVersion | 0..1 | integer 0..15 | Major Protocol Version, default="1" |
| @minorProtocolVersion | 0..1 | integer 0..15 | Minor Protocol version, default="0" |
| @id | 1 | anyURI | segment_id = domain_name/program_id |
| @tptVersion | 1 | unsignedByte | Data version of this TPT |
| @expireDate | 0..1 | dateTime | Date after which this TPT will not be used |
| @updatingTime | 0..1 | unsignedShort | Time interval to check for TPT updates |
| @serviceID | 0..1 | unsignedShort | NRT service_id |
| @baseURL | 0..1 | anyURI | Base URL for all relative URLs in 정 |
| Capabilities | 0..1 | nrt:CapabilitiesType | Essential capabilities for the segment associated with this TPT |
| LiveTrigger | 0..1 | | Info on Internet live trigger delivery |
| @URL | 1 | anyURI | URL of server for live triggers |
| @pollPeriod | 0..1 | unsignedByte | Short polling period in seconds |
| TDO | 1..N | | TDO (app) for the segment associated with this TPT |
| @appID | 1 | unsignedShort | Application ID of this app, unique within the scope of this TPT |
| @appType | 0..1 | integer 0..15 | Application type (default: 1="TDO") |
| @appName | 0..1 | String | Display name (for viewer launch consent) |
| @globalID | 0..1 | anyURI | Globally unique app ID |
| @appVersion | 0..1 | unsignedByte | Version of this app |
| @cookieSpace | 0..1 | unsignedByte | Persistent storage needed; default=0 |
| @frequencyOfUse | 0..1 | integer 0..15 | Code values per Table 6.3 |
| @expireDate | 0..1 | dateTime | Expire date for caching this app |
| @testTDO | 0..1 | Boolean | Flag for test app; default="false" |
| @availInternet | 0..1 | Boolean | Default="true" |
| @availBroadcast | 0..1 | Boolean | Default="true" |
| URL | 1..N | anyURI | App URL(s) |
| @entry | 0..1 | Boolean | Indicator of entry point; default = "false" |
| Capabilities | 0..1 | nrt:CapabilitiesType | Essential capabilities to present this app |
| ApplicationBoundary | 0..1 | | Extensions to app boundary |
| OriginURL | 1..N | anyURI | Origin to be added to app boundary |
| ContentItem | 0..N | | Content item used by this app |
| URL | 1..N | anyURI | URL(s) of content item |
| @entry | 0..1 | Boolean | Indicator of entry point; default = "false" |
| @updatesAvail | 0..1 | Boolean | Default="false" |
| @pollPeriod | 0..1 | unsignedByte | Short polling period in seconds |
| @size | 0..1 | 24-bit integer | Size of content item, in kilobytes |
| @availInternet | 0..1 | Boolean | Default="true" |
| @availBroadcast | 0..1 | Boolean | Default="true" |
| Event | 1..N | | Event targeted to this TDO |
| @eventID | 1 | unsignedShort | Unique identifier of this Event element within the scope of the TDO element. |
| @action | 1 | String | Allowed values are "prep", "exec", "susp", and "kill" |
| @destination | 0..1 | unsignedByte | Device to which the event is directed (primary screen, second screen, or both) |
| @diffusion | 0..1 | unsignedByte | Period for applying diffusion, in seconds |
| Data | 0..N | base64Binary | Data to be used for this event |
| @dataID | 1 | unsignedShort | Unique identifier of this Data element within the scope of the Event element. |

221

# FIG. 122

```
<?xml version="1.0" encoding="utf-8"?>
<TPT majorProtocolVersion="5" minorProtocolVersion="5" id="http://www.atsc.com" tptVersion="5"
expireDate="2014-12-13T12:12:12" updatingTime="12" serviceID="12" baseURL="http://www.atsc.com">
  <Capabilities />
  <LiveTrigger URL="http://www.atsc.com/liveTrigger" pollPeriod="5" />
  <TDO appId="12" appType="5" appName="quiz01" globalID="http://www.atsc.com" appVersion="5"
cookieSpace="5" frequencyOfUse="5" expireDate="2012-12-13T12:12:12" testTDO="true" availInternet="true"
availBroadcast="true">
    <URL entry="true">http://www.atsc.com/app</URL>
    <Capabilities />
    <ApplicationBoundary>
      <OriginURL>http://www.atsc.com/appBoundary</OriginURL>
    </ApplicationBoundary>
    <ContentItem updatesAvail="true" pollPeriod="5" size="123" availInternet="true" availBroadcast="true">
      <URL entry="true">http://www.atsc.com/contentItem</URL>
    </ContentItem>
    <Event eventID="1" action="exec" destination="2" diffusion="5">
      <Data dataID="10">AAAAZg==</Data>
    </Event>
    <Event eventID="2" action="kill" destination="2" diffusion="5">
      <Data dataID="11">YTM0NZomIzI2OTsmIzM0NTueYQ==</Data>
    </Event>
  </TDO>
</TPT>
```

# FIG. 123

| Element or Attribute Name | Use | Description |
|---|---|---|
| EventStream | | specifies event Stream |
| @xlink:href | O | specifies a reference to an external EventStream element |
| @xlink:actuate | OD<br><br>default: onReque st | specifies the processing instructions, which can be either "onLoad" or "onRequest".<br><br>This attribute shall not be present if the @xlink:href attribute is not present. |
| @schemeIdUri | M | identifies the message scheme. The string may use URN or URL syntax. When a URL is used, it is recommended to also contain a month-date in the form mmyyyy; the assignment of the URL must have been authorized by the owner of the domain name in that URL on or very close to that date. A URL may resolve to an Internet location, and a location that does resolve may store a specification of the message scheme. |
| @value | O | specifies the value for the event stream element. The value space and semantics must be defined by the owners of the scheme identified in the @schemeIdUri attribute. |
| @timescale | O | specifies the timescale in units per seconds to be used for the derivation of different real-time duration values in the Event elements.<br><br>If not present on any level, it shall be set to 1. |
| Event | 0 ... N | specifies one event. For details see Table 25.<br><br>Events in Event Streams shall be ordered such that their presentation time is non-decreasing. |

Legend:
    For attributes: M=Mandatory, O=Optional, OD=Optional with Default Value, CM=Conditionally Mandatory.
    For elements: <minOccurs>...<maxOccurs> (N=unbounded)
Elements are bold; attributes are non-bold and preceded with an @.

# FIG. 124

| Element or Attribute Name | Use | Description |
|---|---|---|
| Event | | specifies an event and contains the message of the event, formatted as a string. The content of this element depends on the event scheme. |
| @presentationTi me | OD default: 0 | specifies the presentation time of the event relative to the start of the Period.<br><br>The value of the presentation time in seconds is the division of the value of this attribute and the value of the @timescale attribute.<br><br>If not present, the value of the presentation t is 0. |
| @duration | O | specifies the presentation duration of the event.<br><br>The value of the duration in seconds is the division of the value of this attribute and the value of the @timescale attribute.<br><br>If not present, the value of the duration is unknown. |
| @id | O | specifies an identifier for this instance of the event. Events with equivalent content and attribute values in the Event element shall have the same value for this attribute. |
| Legend:<br>　　For attributes: M=Mandatory, O=Optional, OD=Optional with Default Value, CM= Conditionally Mandatory.<br>　　For elements: <minOccurs>...<maxOccurs> (N=unbounded)<br>Elements are bold; attributes are non-bold and preceded with an @. | | |

## FIG. 125

```
aligned(8) class DASHEventMessageBox extends FullBox('emsg', version = 0, flags = 0){
    string                          scheme_id_uri;
    string      value;
    unsigned int(32)  timescale;
    unsigned int(32)  presentation_time_delta;
    unsigned int(32)  event_duration;
    unsigned int(32)  id;
    unsigned int(8)   message_data[];
    }
}
```

## FIG. 126

| Application Trigger Property | MPD Events | Inband Events (emsg) |
|---|---|---|
| Application Trigger Type | @schemeIdUri + "U+0020" (SPACE character) + @value | scheme_id_uri + "U+0020" (SPACE character) + value |

# FIG. 127

| @value | Description |
|---|---|
| tpt | Signals the location of TPT |
| status | Signals the lifecycle of applications (e.g., preparing, launching, terminating, suspending, etc.) |
| action | Signals the actions taken by applications |
| mediatime | Signals media time |

# FIG. 128

| Element/Attribute | Card-inality | Data Type | Description and Value |
|---|---|---|---|
| TPT | | | |
| @majorProtocolVersion | 0..1 | integer 0..15 | Major Protocol Version, default="1" |
| @minorProtocolVersion | 0..1 | integer 0..15 | Minor Protocol version, default="0" |
| @id | 1 | anyURI | segment_id = domain_name/program_id |
| @tptVersion | 1 | unsignedByte | Data version of this TPT |
| @expireDate | 0..1 | dateTime | Date after which this TPT will not be used |
| @updatingTime | 0..1 | unsignedShort | Time interval to check for TPT updates |
| @serviceID | 0..1 | unsignedShort | NRT service_id |
| @baseURL | 0..1 | anyURI | Base URL for all relative URLs in 烈 |
| Capabilities | 0..1 | nrt:CapabilitiesType | Essential capabilities for the segment associated with this TPT |
| LiveTrigger | 0..1 | | Info on Internet live trigger delivery |
| @URL | 1 | anyURI | URL of server for live triggers |
| @pollPeriod | 0..1 | unsignedByte | Short polling period in seconds |
| TDO | 1..N | | TDO (app) for the segment associated with this TPT |
| @appID | 1 | unsignedShort | Application ID of this app, unique within the scope of this TPT |
| @appType | 0..1 | integer 0..15 | Application type (default: 1="TDO") |
| @appName | 0..1 | String | Display name (for viewer launch consent) |
| @globalID | 0..1 | anyURI | Globally unique app ID |
| @appVersion | 0..1 | unsignedByte | Version of this app |
| @cookieSpace | 0..1 | unsignedByte | Persistent storage needed; default=0 |
| @frequencyOfUse | 0..1 | integer 0..15 | Code values per Table 6.3 |
| @expireDate | 0..1 | dateTime | Expire date for caching this app |
| @testTDO | 0..1 | Boolean | Flag for test app; default="false" |
| @availInternet | 0..1 | Boolean | Default="true" |
| @availBroadcast | 0..1 | Boolean | Default="true" |
| URL | 1..N | anyURI | App URL(s) |
| @entry | 0..1 | Boolean | Indicator of entry point; default = "false" |
| Capabilities | 0..1 | nrt:CapabilitiesType | Essential capabilities to present this app |
| ApplicationBoundary | 0..1 | | Extensions to app boundary |
| OriginURL | 1..N | anyURI | Origin to be added to app boundary |
| ContentItem | 0..N | | Content item used by this app |
| URL | 1..N | anyURI | URL(s) of content item |
| @entry | 0..1 | Boolean | Indicator of entry point; default = "false" |
| @updatesAvail | 0..1 | Boolean | Default="false" |
| @pollPeriod | 0..1 | unsignedByte | Short polling period in seconds |
| @size | 0..1 | 24-bit integer | Size of content item, in kilobytes |
| @availInternet | 0..1 | Boolean | Default="true" |
| @availBroadcast | 0..1 | Boolean | Default="true" |
| Event | 1..N | | Event targeted to this TDO |
| @eventID | 1 | unsignedShort | Unique identifier of this Event element within the scope of the TDO element. |
| @action | 1 | String | Allowed values are "prep", "exec", "susp", and "kill" |
| @destination | 0..1 | unsignedByte | Device to which the event is directed (primary screen, second screen, or both) |
| @diffusion | 0..1 | unsignedByte | Period for applying diffusion, in seconds |
| Data | 0..N | base64Binary | Data to be used for this event |
| @dataID | 1 | unsignedShort | Unique identifier of this Data element within the scope of the Event element. |

FIG. 129

| Application Trigger Property | MPD Events | Inband Events (emsg) |
|---|---|---|
| tptID | @id | id |
| TPT location | Message | message_data |

FIG. 130

| Application Trigger Property | MPD Events | Inband Events (emsg) |
|---|---|---|
| startTime | @presentationTime | event_presentation_time_data |
| tptID | @id | id |
| status (preparing, launching, terminating, suspending, etc.) | Message | message_data |

## FIG. 131

| Application Trigger Property | MPD Events | Inband Events (emsg) |
|---|---|---|
| startTime | @presentationTime | event_presentation_time_data |
| endTime | startTime + @duration | startTime + event_duration |
| segmentID (tptID) | @id | id |
| Trigger message | Message | message_data |

## FIG. 132

| Application Trigger Property | MPD Events | Inband Events (emsg) |
|---|---|---|
| mediaTime | @presentationTime | event_presentation_time_data |
| segmentID (tptID) | @id | id |

## FIG. 133

| @value | Description |
|---|---|
| tpt | Signals the location of TPT |
| status | Signals the lifecycle of applications (e.g., preparing, launching, terminating, suspending, etc.) |
| action | Signals the actions taken by applications |
| mediatime | Signals media time |
| trigger | Signals all trigger information |

## FIG. 134

| Application Trigger Property | MPD Events | Inband Events (emsg) |
|---|---|---|
| tptID | @id | id |
| Trigger message | Message | message_data |

# FIG. 135

# FIG. 136

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|V=0|C|FEC|r|X|R|RES| type    |              packet_id          |
+-+-+-+-+-+-+-+-+-+-+-+-+-+-+-+-+-+-+-+-+-+-+-+-+-+-+-+-+-+-+-+-+
|                           timestamp                           |
+-+-+-+-+-+-+-+-+-+-+-+-+-+-+-+-+-+-+-+-+-+-+-+-+-+-+-+-+-+-+-+-+
|                    packet_sequence_number                     |
+-+-+-+-+-+-+-+-+-+-+-+-+-+-+-+-+-+-+-+-+-+-+-+-+-+-+-+-+-+-+-+-+
|                        packet_counter                         |
+-+-+-+-+-+-+-+-+-+-+-+-+-+-+-+-+-+-+-+-+-+-+-+-+-+-+-+-+-+-+-+-+
|                       header_extension                        |
+-+-+-+-+-+-+-+-+-+-+-+-+-+-+-+-+-+-+-+-+-+-+-+-+-+-+-+-+-+-+-+-+
|                        payload data                           |
+-+-+-+-+-+-+-+-+-+-+-+-+-+-+-+-+-+-+-+-+-+-+-+-+-+-+-+-+-+-+-+-+
|                     source_FEC_payload_ID                     |
+-+-+-+-+-+-+-+-+-+-+-+-+-+-+-+-+-+-+-+-+-+-+-+-+-+-+-+-+-+-+-+-+
```

(a)

| Value | Data type | Definition of data unit |
|---|---|---|
| 0x00 | MPU | a media-aware fragment of the MPU |
| 0x01 | generic object | a generic object such as a complete MPU or an object of another type |
| 0x02 | signaling message | one or more signaling message or a fragment of a signaling message |
| 0x03 | repair symbol | a single complete repair symbol |
| 0x04 ~ 0x1F | reserved for ISO use | |
| 0x20 ~ 0x3F | Reserved for private use | |

(b)

232

# FIG. 137

| 0 1 2 3 4 5 6 7 8 9 0 1 2 3 4 5 | 6 7 8 9 0 | 1 | 2 3 | 4 | 5 6 7 8 9 0 1 |
|---|---|---|---|---|---|
| length | FT | T | f_i | A | frag_counter |
| MPU_sequence_number ||||||
| DU_length | DU_Header    .... |||||
| DU payload    .... ||||||

# FIG. 138

| ... | Movie Fragment 1 | Movie Fragment 2 | Movie Fragment 3 | Movie Fragment 4 | ... |
|---|---|---|---|---|---|
| Media Time 00:00:00 | 00:30:00 | 01:00:00 | 01:30:00 | 02:00:00 | |
| ... | Trigger 1 xbc.tv/e12?e=7.5 | Trigger 2 xbc.tv/e12?e=8.3&st =77ee&et=80ee | | | ... |

Application Signaling Track

# FIG. 139

| Syntax | Value | No. of bits | Mnemonic |
|---|---|---|---|
| signalling_message () {<br>        message_id<br>        version<br>        if(message_id != PA_message &&<br>message_id !=MPI_message) {<br>        length<br>        } else {<br>        length<br>        }<br>        extension<br>        message_payload{<br>        } | | 16<br>16<br><br><br><br>16<br><br><br><br>32 | uimsbf<br>uimsbf<br><br><br><br>uimsbf<br><br><br><br>uimsbf |

# FIG. 140

| Value | Description |
|---|---|
| 0x0000 | PA messages |
| 0x0001 ~ 0x000F | MPI messages.<br><br>For a Package, 16 contiguous values are allocated to MPI messages.<br><br>If the value % 16 equals 15, the MPI message carries complete PI.<br><br>If the value %16 equals N where N = 0 ~ 14, the MPI message carries Subset-N PI. |
| 0x0010 ~ 0x001F | MPT messages.<br><br>For a package, 16 contiguous values are allocated to MPT messages.<br><br>If the value % 16 equals 15, the MPT message carries complete MPT.<br><br>If the value %16 equals N where N = 0 ~ 14, the MPT message carries Subset-N MPT. |
| 0x0200 | CRI messages |
| 0x0201 | DCI messages |
| 0x0202 | AL_FEC messgages |
| 0x0203 | HRBM messages |
| 0x0204 ~ 0x7FFF | reserved for ISO use |
| 0x8000 | Application Signaling messages |
| 0x8001 ~ 0xFFFF | reserved for private use |

# FIG. 141

| Syntax | Value | No. of bits | Mnemonic |
|---|---|---|---|
| application_signaling_message() { | | | |
|     message_id | 0x8000 | 16 | uimsbf |
|     version | | 8 | uimsbf |
|     length | | 32 | uimsbf |
|     extension { | | | |
|         number_of_tables | N1 | 8 | uimsbf |
|         for(i=0;i<N1;i++) { | | | |
|             table_id | | 8 | uimsbf |
|             table_version | | 8 | uimsbf |
|             table_length | | 16 | uimsbf |
|         } | | | |
|     } | | | |
|     message_payload { | | | |
|         for(i=0;i<N1;i++) { | | | |
|             application_signaling_table() | | | |
|         } | | | |
|     } | | | |
| } | | | |

# FIG. 142

| Syntax | No. of Bits | Format |
|---|---|---|
| application_signaling_table() { | | |
|     table_id | 8 | uimsbf |
|     version | 8 | uimsbf |
|     length | 16 | uimsbf |
|     trigger_type | 8 | uimsbf |
|     for (i=0;i<length-1; i++){ | | |
|         URI_character | 8 | uimsbf |
|     } | | |
|     reserved | var | |
| } | | |

## FIG. 143

| Value | Description |
|---|---|
| 00000001 | Signals the location of TPT-tpt |
| 00000010 | Signals the lifecycle of applications (e.g., preparing, launching, terminating, suspending, etc.) - Status |
| 00000100 | Signals the actions taken by applications - action |
| 00001000 | Signals media time - mediatime |
| 00010000 | Signals all trigger information - trigger |
| 00100000 ~ 10000000 | Reserved |

# FIG. 144

| Value | Description |
|---|---|
| 0x0000 | PA messages |
| 0x0001 ~ 0x000F | MPI messages.<br><br>For a Package, 16 contiguous values are allocated to MPI messages.<br><br>If the value % 16 equals 15, the MPI message carries complete PI.<br><br>If the value %16 equals N where N = 0 ~ 14, the MPI message carries Subset-N PI. |
| 0x0010 ~ 0x001F | MPT messages.<br><br>For a package, 16 contiguous values are allocated to MPT messages.<br><br>If the value % 16 equals 15, the MPT message carries complete MPT.<br><br>If the value %16 equals N where N = 0 ~ 14, the MPT message carries Subset-N MPT. |
| 0x0200 | CRI messages |
| 0x0201 | DCI messages |
| 0x0202 | AL_FEC messgages |
| 0x0203 | HRBM messages |
| 0x0204 ~ 0x7FFF | reserved for ISO use |
| 0x8000 ~ 0x8004 | Application Signaling Message<br><br>0x8000: Signals the location of TPT – tpt<br><br>0x8001: Signals the lifecycle of applications (e.g., preparing, launching, terminating, suspending, etc.) – Status<br><br>0x8002: Signals the actions taken by applications – action<br><br>0x8003: Signals media time – mediatime<br><br>0x8004: Signals all trigger information – trigger |
| 0x8005 ~ 0x801F | Reserved |

# FIG. 145

| Syntax | No. of Bits | Format |
|---|---|---|
| application_signaling_table() { | | |
|     table_id | 8 | uimsbf |
|     version | 8 | uimsbf |
|     length | 16 | uimsbf |
|     for (i=0; i<length-1; i++) { | 8 | uimsbf |
|         URI_character | | |
|     } | var | |
|     reserved | | |
| } | | |

# FIG. 146

```
0 1 2 3 4 5 6 7 8 9 0 1 2 3 4 5 6 7 8 9 0 1 2 3 4 5 6 7 8 9 0 1
```

| V=0 | C | FEC | r | X | R | RES | type | packet_id |
|---|---|---|---|---|---|---|---|---|
| timestamp |||||||||
| packet_sequence_number |||||||||
| packet_counter |||||||||
| header_extension .... |||||||||
| payload data .... |||||||||
| source_FEC_payload_ID |||||||||

# FIG. 147

| 0 1 2 | 3 4 | 5 6 7 | 8 | 9 | 0 | 1 2 3 | 4 5 6 7 8 9 0 | 1 2 3 4 5 6 7 8 9 0 1 |
|---|---|---|---|---|---|---|---|---|
| V=0 | C | FEC | r | X | R | RES | type | packet_id |

| timestamp |
|---|
| packet_sequence_number |
| packet_counter |
| header_extension   .... |
| payload data   .... |
| source_FEC_payload_ID |

(a)

| 0 1 2 3 4 5 6 7 8 9 0 1 2 3 4 5 | 6 7 8 9 0 1 2 3 4 5 6 7 8 9 0 1 |
|---|---|
| type | length |
| header_extension_value   .... | |

(b)

# FIG. 148

ACQUIRE INFORMATION ON APPLICATION INCLUDED IN BROADCAST SERVICE — S2501

↓

GENERATE APPLICATION SIGNALING INFORMATION BASED ON INFORMATION ON APPLICATION — S2503

↓

TRANSMIT BROADCAST SIGNAL BASED ON APPLICATION SIGNALING INFORMATION — S2505

240

# FIG. 149

| | |
|---|---|
| RECEIVE BROADCAST SIGNAL | ~S2601 |

| | |
|---|---|
| ACQUIRE APPLICATION SIGNALING INFORMATION BASED ON BROADCAST SIGNAL | ~S2603 |

| | |
|---|---|
| EXECUTE APPLICATION BASED ON APPLICATION SIGNALING INFORMATION | ~S2605 |

# FIG. 150

● Interactive App Available!

TV Screen

( a )

TV Screen

| mBC | Enjoy<br>MBC Quiz |

( b )

# FIG. 151

● Interactive App Available!

TV Screen

(a)

TV Screen

mBC | Enjoy
MBC Quiz

(b)

# FIG. 152

TV Screen

Agreement to Use of Interactive App   Yes ◉  No ○

◉ Only current program
○ All programs of current channel
○ All programs of all channels

# FIG. 153

TV Screen

Interactive App Block Timer Setting

◉ 15 minutes
○ 30 minutes
○ Until current program is finished

(a)

TV Screen

Agreement to Use of Interactive App   Yes◉   No○

◉ Only current program
○ All programs of current channel
○ All programs of all channels

Interactive Application Info

(b)

# FIG. 154

| TPT | | | | |
|---|---|---|---|---|
| | @majorProtocolVersion | 0..1 | integer 0..15 | Major Protocol Version, default="1" |
| | @minorProtocolVersion | 0..1 | integer 0..15 | Minor Protocol version, default="0" |
| | @id | 1 | anyURI | segment_id = domain name/program id |
| | @tptVersion | 1 | unsignedByte | Data version of this TPT |
| | ........................................................................................ | | | |
| | TDO | 1..N | | TDO (app) for the segment associated with this TPT |
| | | @appID | 1 | unsignedShort | Application ID of this app, unique within the scope of this TPT |
| | | @appType | 0..1 | integer 0-15 | Application type (default: 1="TDO") |
| | | @appName | 0..1 | string | Display name (for viewer launch consent) |
| | ........................................................................................ | | | |
| | | ContentItem | 0..N | | Content item used by this app |
| | | | URL | 1..N | anyURI | URI(s) of content item |
| | ........................................................................................ | | | |

# FIG. 155

| TPT | | | | | |
|---|---|---|---|---|---|
| | @majorProtocolVersion | 0..1 | integer 0..15 | Major Protocol Version, default="1" | |
| | @minorProtocolVersion | 0..1 | integer 0..15 | Minor Protocol version, default="0" | |
| | @id | 1 | anyURI | segment_id = domain name/program id | |
| | ................................................................................ | | | | |
| | TDO | 1..N | | TDO (app) for the segment associated with this TPT | |
| | | @appID | 1 | unsignedShort | Application ID of this app, unique within the scope of this TPT |
| | | @appType | 0..1 | integer 0-15 | Application type (default: 1="TDO") |
| | | @appName | 0..1 | string | Display name (for viewer launch consent) |
| | ................................................................................ | | | | |
| | | ContentItem | 0..N | | Content item used by this app |
| | | | URL | 1..N | anyURI | URI(s) of content item |
| | ................................................................................ | | | | |
| | | | @availInternet | 0..1 | boolean | Default="true" |
| | | | @availBroascast | 0..1 | boolean | Default="true" |
| | | | NotificationInfo | 0..1 | | Information for application notification |
| | | | | @topMargin | 0..1 | UnsignedByte | Top margin of the notification |
| | | | | @rightMargin | 0..1 | UnsignedByte | Right margin of the notification |
| | | | | @message | 1 | String | Notification message |
| | | | | @logo | 1 | Base64Binary | Logo image |
| | | | | @show | 0..1 | UnsignedByte | Time in seconds for the firt appear of the notification |
| | | | | @lasting | 0..1 | UnsignedByte | Lasting time in seconds for notification |
| | | | | @interval | 0..1 | UnsignedByte | Interval time in seconds for notification |
| | ................................................................................ | | | | |

```xml
<?xml version="1.0" encoding="utf-8"?>
<TPT majorProtocolVersion="5" minorProtocolVersion="5" id="http://www.atsc.com" tptVersion="5"
expireDate="2014-12-13T12:12:12" updatingTime="12" serviceID="12" baseURL="http://www.atsc.com">
  <Capabilities />
  <LiveTrigger URL="http://www.atsc.com/liveTrigger" pollPeriod="5" />
  <TDO appId="12" appType="5" appName="quiz01" globalID="http://www.atsc.com" appVersion="5"
cookieSpace="5" frequencyOfUse="5" expireDate="2012-12-13T12:12:12" testTDO="true" availInternet="true"
availBroadcast="true">
   <URL entry="true">http://www.atsc.com/app</URL>
   <Capabilities />
   <ApplicationBoundary>
    <OriginURL>http://www.atsc.com/appBoundary</OriginURL>
   </ApplicationBoundary>
   <ContentItem updatesAvail="true" pollPeriod="5" size="123" availInternet="true" availBroadcast="true">
    <URL entry="true">http://www.atsc.com/contentItem</URL>
   </ContentItem>
   <NotificationInfo topMargin="500" rightMargin="40" message="Enjoy MBC Quiz!"
logo="7J207KeE7JuQ7Yq57ZeI7JiI7KCc..." show="120" lasting="15" interval="300" />
   <Event eventID="1" action="exec" destination="2" diffusion="5">
    <Data dataID="10">AAAAZg==</Data>
   </Event>
   <Event eventID="2" action="kill" destination="2" diffusion="5">
    <Data dataID="11">YTM0NZomIzI2OTsmIzM0NTueYQ==</Data>
   </Event>
  </TDO>
</TPT>
```

FIG. 156

EP 3 163 889 A1

# FIG. 157

@topMargin : 500pX
@rightMargin : 40px
@message : Enjoy MBC Quiz
@logo : 7J207KeE7JuQ7Yq57Zel7Jil7KCc....
@show : 120 sec
@lasting : 15 sec
@interval : 300 sec

TV Screen

500px

mBC | Enjoy MBC Quiz

40px

# FIG. 158

| | Cardinality | Data Type | Description and Value |
|---|---|---|---|
| NotificationInfo | 0..1 | | Information for application notification |
| @targetDevice | 1 | unsignedByte | Device to which application notification is to be showed |
| @topMargin | 0..1 | unsignedByte | Top margin of the notification |
| @rightMargin | 0..1 | unsignedByte | Right margin of the notification |
| @show | 0..1 | unsignedByte | Time in seconds for the first appear of the notification |
| @lasting | 0..1 | unsignedByte | Lasting time in seconds for notification |
| @interval | 0..1 | unsignedByte | Interval time in seconds for notification |
| message | 1 | string | Notification message |
| logo | 1 | Base64Binary | Logo image |

# FIG. 159

(a)

| Variable Name | R/A a | Data Type | Allowed Value | Default Value | Evented ? |
|---|---|---|---|---|---|
| NotificationInfo | R | string | XML, JASON ETC | | Yes |
| A_ARG_TYPE_NotificationInfo | R | string | XML, JASON ETC | | No |

(b)

```
<?xml version="1.0" encoding="utf       -8"?>
<NotificationInfo  targetDevice ="CD"  topMargin ="500"  rightMargin ="40" show="120" lasting="15"
interval="300">
    <message>Enjoy MBC Quiz!</message>
    <logo>7J207KeE7JuQ7Yq57ZeI7Jil7KCc...  </logo>
</ NotificationInfo>
```

(c)

| Name | Required/Optional |
|---|---|
| GetNotificationInfo() | Required |

(d)

| Argument | Direction | Related State Variable |
|---|---|---|
| NotificationInfo | OUT | A_ARG_TYPE_NotificationInfo |

# FIG. 160

# FIG. 161

# FIG. 162

| TPT | | | |
|---|---|---|---|
| @majorProtocolVersion | 0..1 | integer 0..15 | Major Protocol Version, default="1" |
| @minorProtocolVersion | 0..1 | integer 0..15 | Minor Protocol version, default="0" |
| @id | 1 | anyURI | segment_id = domain_name/program_id |
| @tptVersion | 1 | unsignedByte | Data version of this TPT |
| @expireDate | 0..1 | dateTime | Date after which this TPT will not be used |
| @updatingTime | 0..1 | unsignedShort | Time interval to check for TPT updates |
| @serviceID | 0..1 | unsignedShort | NRT service_id |
| @baseURL | 0..1 | anyURI | Base URL for all relative URLs in TPT |
| Capabilities | 0..1 | nrt:Capabilities Type | Essential capabilities for the segment associated with this TPT |
| LiveTrigger | 0..1 | | Info on Internet live trigger delivery |
| @URL | 1 | anyURI | URL of server for live triggers |
| @pollPeriod | 0..1 | unsignedByte | Short polling period in seconds |
| TDO | 0..N | | TDO (app) for the segment associated with this TPT |
| @appID | 1 | unsignedShort | Application ID of this app, unique within the scope of this TPT |
| @appType | 0..1 | integer 0-15 | Application type (default: 1="TDO") |
| @appName | 0..1 | string | Display name (for viewer launch consent) |
| @globalID | 0..1 | anyURI | Globally unique app ID |

Application Trigger Table

| PDITable | | | Table of PDI questions/answers |
|---|---|---|---|
| @protocolVersion | 0..1 | hexBinary | Protocol version (major/minor) |
| @pdiTableId | 1 | anyURI | Globally unique ID of PDI Table |
| @pdiTableVersion | 1 | unsignedByte | PDI Table version (data) |
| @time | 1 | dateTime | Time table questions last updated |
| <choice> | 0..N | | Choice among QIA, QBA, QSA, QTA, QAA |
| QIA | 1 | QIAType | Question with integer answer |
| QBA | 1 | QBAType | Question with Boolean answer |
| QSA | 1 | QSAType | Question with selection(s) answer |
| QTA | 1 | QTAType | Question with text answer |
| QAA | 1 | QAAType | Question with arbitrary answer |

PDI Table

# FIG. 163

(a) Application Trigger Table

```xml
<?xml version="1.0" encoding="utf-8"?>
<TPT majorProtocolVersion="5" minorProtocolVersion="5"
id="http://www.atsc.com/" tptVersion="5" expireDate="2014-12-13T12:12:12"
updatingTime="12" serviceID="12" baseURL="http://www.atsc.com">
  <Capabilities />
  <LiveTrigger URL="http://www.atsc.com/liveTrigger" pollPeriod="5" />
  <TDO appId="12" appType="5" appName="quiz01"
globalID="http://www.atsc.com/mbcapplication1" appVersion="5" cookieSpace="5"
frequencyOfUse="5" expireDate="2012-12-13T12:12:12" testTDO="true"
availInternet="true" availBroadcast="true">
    <URL entry="true">http://www.atsc.com/app</URL>
    <Capabilities />
    <ApplicationBoundary>
     <OriginURL>http://www.atsc.com/appBoundary</OriginURL>
    </ApplicationBoundary>
    <ContentItem updatesAvail="true" pollPeriod="5" size="123" availInternet="true"
availBroadcast="true">
     <URL entry="true">http://www.atsc.com/contentItem</URL>
    </ContentItem>
    <Event eventID="1" action="exec" destination="2" diffusion="5">
     <Data dataID="10">AAAAZg==</Data>
    </Event>
    <Event eventID="2" action="kill" destination="2" diffusion="5">
     <Data dataID="11">YTM0NZomIzI2OTsmIzM0NTueYQ==</Data>
    </Event>
  </TDO>
</TPT>
```

(b) PDI Table

```xml
<?xml version="1.0" encoding="utf-8"?>
<PDITable protocolVersion="0FB7"
pdiTableId="http://www.atsc.com/mbcapplication1" pdiTableVersion="5"
time="2014-12-13T12:12:12">
  <QSA>
   <Q>
    <QText>Interactive Application 동의</QText>
    <Selection selectionId="1">Yes</Selection>
    <Selection selectionId="2">No</Selection>
   </Q>
  </QSA>
</PDITable>
```

## FIG. 164

| PDITable | | | | Table of PDI questions/answers |
|---|---|---|---|---|
| @protocolVersion | 0..1 | | hexBinary | Protocol version (major/minor) |
| @pdiTableId | 1 | | anyURI | Globally unique ID of PDI Table |
| @appId | 0..1 | | anyURI | Globally unique ID of Application |
| @pdiTableVersion | 1 | | unsignedByte | PDI Table version (data) |
| @time | 1 | | dateTime | Time table questions last updated |
| <choice> | 1..N | | | hoice among QIA, QBA, QSA, QTA, QAA |
| | QIA | 1 | QIAType | Question with integer answer |
| | QBA | 1 | QBAType | Question with Boolean answer |
| | QSA | 1 | QSAType | Question with selection(s) answer |
| | QTA | 1 | QTAType | Question with text answer |
| | QAA | 1 | QAAType | Question with arbitrary answer |

# FIG. 165

# FIG. 166

# FIG. 167

Interactive Application is available!

| Enter | Setting |

( a )

Agreement to Use of Interactive Application

◉ Yes
○ No

( b )

# FIG. 168

Service Provider

①

Application (application ID)

②

Application Manager

③ application ID

PDI-A

PDI-Q

PDI Store in Receiver

④

App Launch?

## FIG. 169

# FIG. 170

| Element/Attribute | | | Cardinality | XML data type | Description |
|---|---|---|---|---|---|
| FilteringCriteria | | | | | Table of filtering criteria |
| | <choice> | | 1..N | | Filter criteria including the set of filter criterion |
| | | QIACriterion | 1 | | Filter criterion with integer value |
| | | @id | 1 | anyURI | Globally unique ID of question for filtering |
| | | CriterionValue | 1..N | int | Integer value or lower end of range |
| | | @extent | 0..1 | positiveInt | Number of integers in range (if > 1) |
| | | QBACriterion | 1 | | Filter criterion with Boolean value |
| | | @id | 1 | anyURI | Globally unique ID of question for filtering |
| | | CriterionValue | 1 | boolean | Boolean value |
| | | QSACriterion | 1 | | Filter criterion with selection value |
| | | @id | 1 | anyURI | Globally unique ID of question for filtering |
| | | CriterionValue | 1..N | unsignedByte | Identifier of selection |
| | | QTACriterion | 1 | | Filter criterion with text value |
| | | @id | 1 | anyURI | Globally unique ID of question for filtering |
| | | CriterionValue | 1..N | string | Text string |
| | | @lang | 0..1 | xml:lang | Language of this criterion element |
| | | QAACriterion | 1 | | Filter criterion for answer with no question |
| | | @id | 1 | anyURI | Globally unique ID of question for filtering |
| | | CriterionValue | 1..N | string | Value |

# FIG. 171

Agreement to Use of Interactive Application

⦿ Yes
◯ No

| 1) | Question ID: atsc.org/PDIQ/optin<br>Question type: QSA<br>Question text: "Agreement to Use of Interactive Application"<br>Selections (with selection ID values):<br>    Yes (1)<br>    No (2)<br>Registration date: [Publication Date]<br>Organization: ATSC<br>Contact information: [ATSC's Contact] |
|---|---|

( a )

Agreement to Use of Interactive Application  Yes ⦿  No ◯

⦿ Current Broadcast Program
◯ All Broadcast Programs of Current Channel
◯ All Broadcast Programs of All Channels

| 1) | Question ID:atsc.org/PDIQ/optin<br>Question type:QSA<br>Question text: "Agreement to Use of Interactive Application"<br>Selections (with selection ID values):<br>    Yes (1)<br>    No (2)<br>Registration date: [Publication Date]<br>Organization: ATSC<br>Contact information: [ATSC's Contact] |
|---|---|
| 2) | Question ID: atsc.org/PDIQ/optin-option<br>Question type: QSA<br>Question text:<br>Selections:<br>Current Broadcast Program (1)<br>All Broadcast Programs of Current Channel (2)<br>All Broadcast Programs of All Channels (3)<br>Registration date: [Publication Date]<br>Organization: ATSC<br>Contact information: [ATSC's Contact] |

( b )

263

# FIG. 172

```
<?xml version="1.0" encoding="utf-8"?>
<PDITable protocolVersion ="0FB7" pdiTableId ="http://www.atsc3.com/mbcapplication1"
      pdiTableVersion ="5" time="2014-12 -13T12:12:12">
   <QSA>
      <Q>
         <QText>Interactive Application AGREEMENT </QText >
         <Selection  selectionId ="1">Yes</Selection>
         <Selection  selectionId ="2">No</Selection>
      </Q>
   </QSA>
</PDITable>
```

# FIG. 173

```
<?xml version="1.0" encoding="utf -8"?>
<PDITable  protocolVersion ="0FB7"  pdiTableId ="http://www.atsc3.com/mbcapplication1"
      pdiTableVersion ="5" time="2014 -12 -13T12:12:12">
   <QSA>
      <Q>
         <QText>Interactive Application AGREEMENT </QText >
         <Selection  selectionId ="1">Yes</Selection>
         <Selection  selectionId ="2">No</Selection>
      </Q>
   </QSA>
   <QSA>
      <Q>
         <QText >AGREEMENT </QText >
         <Selection  selectionId ="1? CURRENT BROADCAST Program</Selection>
         <Selection  selectionId ="2? ENTIRE BROADCAST OF CURRENT CHANNELProgram</Selection>
         <Selection  selectionId =??  ENTIRE BROADCAST OF ALL CHANNELS Program</Selection>
      </Q>
   </QSA>
</PDITable>
```

# FIG. 174

| Syntax | Value |
|---|---|
| rating_region | 0 × 01 |
| version_number | 00000 |
| rating_region_name_text() | US (50 states + possessions) |
| dimensions_defined | 0 × 08 |

( a )

| Syntax | Value |
|---|---|
| rating_region | 0 × 02 |
| version_number | 00000 |
| rating_region_name_text() | Canada |
| dimensions_defined | 0 × 02 |

( b )

# FIG. 175

| TPT | | | | | |
|---|---|---|---|---|---|
| | @majorProtocolVersion | | 0..1 | integer 0..15 | Major Protocol Version, default="1" |
| | ........................................................................................................ | | | | |
| | TDO | | 1..N | | TDO (app) for the segment associated with this TPT |
| | | @appID | 1 | unsignedShort | Application ID of this app, unique within the scope of this TPT |
| | | @contentAdvisoryId | 0..1 | unsignedShort | Default is 0 |
| | ........................................................................................................ | | | | |
| | | ContentItem | 0..N | | Content item used by this app |
| | | URL | 1..N | anyURI | URI(s) of content item |
| | ........................................................................................................ | | | | |
| | | @availInternet | 0..1 | boolean | Default="true" |
| | | @availBroadcast | 0..1 | boolean | Default="true" |
| | | @contentAdvisoryId | 0..1 | unsignedshort | Default is 0 |
| | | ContentAdvisoryInfo | 0..1 | | Content Advisory Information for application |
| | | @contentAdvisoryID | 1 | unsignedshort | Unique identifier of this ContentAdvisoryInfo element within the scope of TDO element. The value of this attribute must be greater than 0. |
| | | @rating_region | 1 | UnsignedByte | Rating region |
| | | @rating_description | 0..1 | String | Rating description in text |
| | | Rated_dimension | 0..N | | |
| | | @rating_dimension | 1 | UnsignedByte | The dimension index into RRT instance |
| | | @rating_value | 1 | UnsignedByte | The rating value of the dimension specified by the attribute @rating_dimension of the element |
| | ........................................................................................................ | | | | |
| EVENT | | | 1..N | | Event targerted to this TDO |
| | @eventID | | 1 | unsignedShort | Unique identifier of this Event element within the scope of the TDO element |
| | @action | | 1 | String | Allowed values are "prep", "exec", "susp", and "kill" |
| | @destination | | 0..1 | UnsignedByte | Device to which the event is directed (primary screen, second screen or both) |
| | @diffusion | | 0..1 | UnsignedByte | Period for applying diffusion, in seconds |
| | @contentAdvisoryId | | 0..1 | unsignedShort | Default is 0 |
| | Data | | 0..N | base64Binary | Data to be used for this event |
| | | @dataID | 1 | unsignedShort | Unique identifier of this Data element within the scope of the Event element |

# FIG. 176

| Object getContentAdvisorySetting(String id) | | |
|---|---|---|
| Description | Returns an XML DOM object representing an XML document containing as its root element a ContentAdivosryInfo element. If user doesn't set any rating settings, this method shall return null.<br>Note: Only one PDI Question with a given value of question id can exist in a PDI Store. More than one PDI Table could hold a PDI Question of the same question id so long as the consistency is maintained. | |
| Arguments | id | Identification of rating region. It conforms to the definition of @rating_region of ContentAdvisoryInfo element. |

# FIG. 177

FIG. 177

TRANSMITTER ⎯ C10

C100

C130

C200

FIRST RECEIVER ⎯ C110

IP TRANSCEIVER

IP TRANSCEIVER ⎯ C230

CONTROLLER ⎯ C150

APP TRANSCEIVER

APP TRANSCEIVER

CONTROLLER ⎯ C250

FIRST RECEIVER

C140

C240

SECOND RECEIVER

EP 3 163 889 A1

## FIG. 178

| Event | 1..N | | Event targeted to this TDO |
|---|---|---|---|
| @eventID | 1 | unsignedShort | Unique identifier of this Event element within the scope of the TDO element. |
| @action | 1 | String | Allowed values are "prep", "exec", "susp", and "kill" |
| @destination | 0..1 | unsignedByte | Device to which the event is directed (primary screen, second screen, or both) |
| @diffusion | 0..1 | unsignedByte | Period for applying diffusion, in seconds |
| Data | 0..N | base64Binary | Data to be used for this event |
| @dataID | 1 | unsignedShort | Unique identifier of this Data element within the scope of the Event element |

EP 3 163 889 A1

## FIG. 179

```xml
<?xml version="1.0" encoding="utf-8"?>
<TPT majorProtocolVersion="5" minorProtocolVersion="5" id="http://www.atsc.com" tptVersion="5" expireDate="2014-12-13T12:12:12"
updatingTime="12" serviceID="12" baseURL="http://www.atsc.com">
 <Capabilities />
 <LiveTrigger URL="http://www.atsc.com/liveTrigger" pollPeriod="5" />
 <TDO appId="12" appType="5" appName="quiz01" globalID="http://www.atsc.com" appVersion="5" cookieSpace="5"
frequencyOfUse="5" expireDate="2012-12-13T12:12:12" testTDO="true" availInternet="true" availBroadcast="true">
  <URL entry="true">http://www.atsc.com/app</URL>
  <Capabilities />
  <ApplicationBoundary>
   <OriginURL>http://www.atsc.com/appBoundary</OriginURL>
  </ApplicationBoundary>
  <ContentItem updatesAvail="true" pollPeriod="5" size="123" availInternet="true" availBroadcast="true">
   <URL entry="true">http://www.atsc.com/contentItem</URL>
  </ContentItem>
  <Event eventID="1" action="exec" destination="2" diffusion="5">
   <Data dataID="10">AAAAZg==</Data>
  </Event>
  <Event eventID="2" action="kill" destination="2" diffusion="5">
   <Data dataID="11">YTM0NZomIzI2OTsmIzM0NTueYQ==</Data>
  </Event>
 </TDO>
</TPT>
```

EP 3 163 889 A1

# FIG. 180

HTTP Client
(UPnP Control Point)

Action #1
Name, arguments
(data)

Action #2
Name, arguments
(data)

Action #N
Name, arguments
(data)

marked-up
with XML

HTTP POST
method

(Action name,
arguments in
the message
body)

Transmitted to
a same
ControlURL

XML
Parser

HTTP Server
(UPnP Device)

Action #1
Name, arguments
(data)

Action
performed

Action #2
Name, arguments
(data)

Action
performed

Action #N
Name, arguments
(data)

Action
performed

EP 3 163 889 A1

# FIG. 181

Arguments can be added in HTTP accept header or HTTP body(XML, JSON, HTML, TEXT, IMAGE,.....)

Transmitted to a URI A.
Arguments can be appended to the URI A

HTTP Client (REST Client)

HTTP Server (REST Server)

Action #1 Arguments(data)

HTTP GET
HTTP PUT
HTTP POST
HTTP DELETE

Action #1 Arguments(data) — Action performed

Action #2 Arguments(data)

Action #2 Arguments(data) — Action performed

HTTP GET
HTTP PUT
HTTP POST
HTTP DELETE

Action #N Arguments(data)

Action #N Arguments(data) — Action performed

**Action names are not required.

Transmitted to a URI M.
Arguments can be appended to the URI M.

EP 3 163 889 A1

## FIG. 182

| Variable Name | R/A a | Data Type | Allowed Value | Default Value | Evented? |
|---|---|---|---|---|---|
| TriggerInfoList | R | string | CSV(string) | | Yes |
| A_ARG_TYPE_TriggerURI | R | string | Any URI | | No |

# FIG. 183

| Element/Attribute | Cardi-nality | DataType | Description and Value |
|---|---|---|---|
| TriggerInfoList | | | |
| TriggerInfo | 1..N | | Contains application trigger information |
| triggerType | 1 | String | Type of trigger. Allowed values are 'action', 'status', and 'mediaTime'. |
| action | 1 | String | Type of action. Allowed values are 'prep', 'exec', 'suspend', and 'kill'. |
| eventStartTime | 1 | String | Start time of the event |
| eventEndTime | 0..1 | String | End time of the event |
| data | 0..1 | base64Binary | Data to be used for this trigger |
| dataURI | 0..1 | anyURI | Location of data in content server |

## FIG. 184

```xml
<?xml version="1.0"encoding="UTF-8"?>
<TriggerInfoList>
  <TriggerInfo>
    <triggerType>action</triggerType>
    <action>exec</action>
    <eventStartTime>77ee</eventStartTime>
    <eventEndTime>7870</eventEndTime>
    <data>AAAAZg==</data>
    <dataURI>http://www.atsc.com/trigger/data</dataURI>
  </TriggerInfo>
  <TriggerInfo>
    <triggerType>status</triggerType>
    <action>kill</action>
    <eventStartTime>9a33</eventStartTime>
  <TriggerInfo>
</TriggerInfoList>
```

## FIG. 185

(a)

| Name | Required/Optional |
|---|---|
| GetTriggerInfoList() | Required |
| GetTriggerInfoURI() | Required |

(b)

| Argument | Direction | Related State Variable |
|---|---|---|
| TriggerInfoList | OUT | TriggerInfoList |

(c)

| Argument | Direction | Related State Variable |
|---|---|---|
| TriggerInfoURI | OUT | A_ARG_TYPE_TriggerURI |

FIG. 186

| Variable Name | R/A a | Data Type | Allowed Value | Default Value | Evented? |
|---|---|---|---|---|---|
| TriggerInfoList | R | string | CSV(string) OR XML, JASON ETC | | Yes |
| A_ARG_TYPE_TriggerURI | R | string | Any URI | | No |
| A_ARG_TYPE_TriggerInfo | R | string | XML, JASON ETC | | No |
| A_ARG_TYPE_AppIDs | R | string | CSV(string) OR XML, JASON ETC | | No |

EP 3 163 889 A1

# FIG. 187

| Element/Attribute | Cardinality | Data Type | Description and Value |
|---|---|---|---|
| TriggerInfoList | | | |
|   TriggerInfo | 1..N | | Containsapplication trigger information |
|     @appID | 1 | String | Application ID of this app |
|     triggerType | 1 | String | Type of trigger. Allowed values are 'action', 'status', and 'mediaTime'. |
|     Action | 1 | String | Type of action. Allowed values are 'prep', 'exec', 'suspend', and 'kill'. |
|     eventStartTime | 1 | String | Start time of the event |
|     eventEndTime | 0..1 | String | End time of the event |
|     data | 0..1 | base64Binary | Data to be used for this trigger |
|     dataURI | 0..1 | anyURI | Locationof data in content server |

EP 3 163 889 A1

## FIG. 188

```
<?xml version="1.0" encoding="UTF-8"?>
<TriggerInfoList>
 <TriggerInfo appID="12">
   <triggerType>action</triggerType>
   <action>exec</action>
   <eventStartTime>77ee</eventStartTime>
   <eventEndTime>7870</eventEndTime>
   <data>AAAAZg==</data>
   <dataURI>http://www.atsc.com/trigger/data</dataURI>
 </TriggerInfo>
 <TriggerInfo appID="13">
   <triggerType>status</triggerType>
   <action>exec</action>
   <eventStartTime>9a33</eventStartTime>
 <TriggerInfo>
</TriggerInfoList>
```

## FIG. 189

(a)

| Name | Required/Optional |
|---|---|
| GetAppIDs() | Required |
| GetTriggerInfo() | Required |

(b)

| Argument | Direction | Related State Variable |
|---|---|---|
| appIDs | OUT | A_ARG_TYPE_AppIDs |

(c)

| Argument | Direction | Related State Variable |
|---|---|---|
| appIDs | IN | A_ARG_TYPE_AppIDs |
| TriggerInfo | OUT | A_ARG_TYPE_TriggerInfo |

EP 3 163 889 A1

# FIG. 190

C10 — Content Provider / Broadcaster

C100 — Receiver (PD)

C200 — Mobile Phone... (CD)

C10 — Content Provider / Broadcaster Server

Discovery and pairing

Subscribe to application signaling service

RECEIVE APPLICATION INFO (TPT)

STORE IN STORAGE

RECEIVE APPLICATION TRIGGER 'ACTION'

Event destination== 2 (Second Screen)

TriggerInfoList eventing

EP 3 163 889 A1

## FIG. 191

```
<?xml version="1.0" encoding="UTF-8"?>
<TriggerInfoList>
  <TriggerInfo>
    <triggerType>mediaTime</triggerType>
    <action>exec</action>
    <eventStartTime>9a33</eventStartTime>
  <TriggerInfo>
</TriggerInfoList>
```

# FIG. 192

Content Provider / Broadcaster (C10), Receiver (PD) (C100), Mobile Phone... (CD) (C200), Content Provider / Broadcaster Server (C10)

- Discovery and pairing
- Subscribe to application signaling service
- RECEIVE APPLICATION INFO (TPT)
- STORE IN STORAGE
- RECEIVE APPLICATION TRIGGER 'ACTION'
- Event destination== 2 (Second Screen)
- TriggerInfoList eventing
- Request data using dataURI

EP 3 163 889 A1

## FIG. 193

```xml
<?xml version="1.0" encoding="UTF-8"?>
<TriggerInfoList>
  <TriggerInfo>
    <triggerType>mediaTime</triggerType>
    <action>exec</action>
    <eventStartTime>77ee</eventStartTime>
    <eventEndTime>7870</eventEndTime>
    <data>AAAAZg==</data>
    <dataURI>http://www.atsc.com/trigger/data</dataURI>
</TriggerInfo>
</TriggerInfoList>
```

# FIG. 194

C10 — Content Provider / Broadcaster

C100 — Receiver (PD)

C200 — Mobile Phone... (CD)

C10 — Content Provider / Broadcaster Server

Discovery and pairing

Subscribe to application signaling service

RECEIVE APPLICATION INFO (TPT)

STORE IN STORAGE

RECEIVE APPLICATION TRIGGER 'STATUS'

Event destination== 2 (Second Screen)

TriggerInfoList eventing

EP 3 163 889 A1

# FIG. 195

```
<?xml version="1.0" encoding="UTF-8"?>
<TriggerInfoList>
  <TriggerInfo>
    <triggerType>status</triggerType>
    <action>kill</action>
    <eventStartTime>9a33</eventStartTime>
  <TriggerInfo>
</TriggerInfoList>
```

# FIG. 196

C10       C100       C200       C10

| Content Provider / Broadcaster | Receiver (PD) | Mobile Phone... (CD) | Content Provider / Broadcaster Server |
|---|---|---|---|

Discovery and pairing

Subscribe to application signaling service

RECEIVE APPLICATION INFO (TPT)

STORE IN STORAGE

RECEIVE APPLICATION TRIGGER 'MEDIATIME'

Event destination== 2 (Second Screen)

TriggerInfoList eventing

EP 3 163 889 A1

# FIG. 197

```
<?xml version="1.0" encoding="UTF-8"?>
<TriggerInfoList>
  <TriggerInfo>
    <triggerType>mediaTime</triggerType>
    <action>exec</action>
    <eventStartTime>9a33</eventStartTime>
  <TriggerInfo>
</TriggerInfoList>
```

# FIG. 198

C10 — Content Provider / Broadcaster
C100 — Receiver (PD)
C200 — Mobile Phone... (CD)
C10 — Content Provider / Broadcaster Server

RECEIVE APPLICATION INFO (TPT)

STORE IN STORAGE

RECEIVE APPLICATION TRIGGER

Event destination== 2 (Second Screen)

TRIGGER TRANSMISSION IS NOT POSSIBLE

Discovery and pairing

Subscribe to application signaling service

Optional

GetTriggerInfoList()

TriggerInfoList

Check eventStartTime and eventEndTime to see if the trigger is valid to be used for CD.

# FIG. 199

C10 — Content Provider / Broadcaster

C100 — Receiver (PD)

C200 — Mobile Phone... (CD)

C10 — Content Provider / Broadcaster Server

RECEIVE APPLICATION INFO (TPT)

STORE IN STORAGE

RECEIVE APPLICATION TRIGGER

Event destination== 2 (Second Screen)

TRIGGER TRANSMISSION IS NOT POSSIBLE

Discovery and pairing

GetAppIDs()

AppID list

GetTriggerInfo("12")

Optional

TriggerInfo

Check eventStartTime and eventEndTime to see if the trigger is valid to be used for CD.

EP 3 163 889 A1

# FIG. 200

# FIG. 201

RECEIVE BROADCAST SIGNAL —— CS2100

ACQUIRE APPLICATION SIGNALING INFORMATION FROM BROADCAST SIGNAL —— CS2200

TRANSMIT TRIGGER BASED ON APPLICATION SIGNALING INFORMATION —— CS2300

## INTERNATIONAL SEARCH REPORT

| International application No. |
| --- |
| **PCT/KR2015/006680** |

| A. CLASSIFICATION OF SUBJECT MATTER |
| --- |
| *H04N 21/434(2011.01)i, H04N 21/41(2011.01)i, H04N 5/44(2011.01)i* |
| According to International Patent Classification (IPC) or to both national classification and IPC |

| B. FIELDS SEARCHED |
| --- |
| Minimum documentation searched (classification system followed by classification symbols) |
| H04N 21/434; H04N 21/23; H04N 21/235; H04N 7/00; H04N 21/435; H04N 21/43; H04B 7/14; H04N 21/41; H04N 5/44 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: broadcasting signal, signaling, trigger, second screen, application, control |

| C. DOCUMENTS CONSIDERED TO BE RELEVANT | | |
| --- | --- | --- |
| Category* | Citation of document, with indication, where appropriate, of the relevant passages | Relevant to claim No. |
| Y<br><br>A | US 2014-0115644 A1 (LG ELECTRONICS INC.) 24 April 2014<br>See paragraph [0387]; claims 1, 19; and figures 101-102. | 1-3,6-10,13-14<br><br>4-5,11-12 |
| Y | KR 10-2014-0005227 A (LG ELECTRONICS INC.) 14 January 2014<br>See paragraphs [0570]-[0590]; claims 1, 11; and figure 36. | 1-3,6-10,13-14 |
| A | KR 10-2013-0087584 A (LG ELECTRONICS INC.) 06 August 2013<br>See abstract; claims 1-20; and figures 1, 38. | 1-14 |
| A | KR 10-2009-0043415 A (KOREAN BROADCASTING SYSTEM) 06 May 2009<br>See abstract; claim 1; and figure 4. | 1-14 |
| A | KR 10-2013-0032019 A (SAMSUNG ELECTRONICS CO., LTD. et al.) 01 April 2013<br>See paragraphs [0027]-[0032]; claim 1; and figures 1-7. | 1-14 |

| ☐ Further documents are listed in the continuation of Box C. | ☒ See patent family annex. |
| --- | --- |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 27 OCTOBER 2015 (27.10.2015) | **27 OCTOBER 2015 (27.10.2015)** |

| Name and mailing address of the ISA/**KR** | Authorized officer |
| --- | --- |
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/006680**

| Patent document cited in search report | Publication date | Patent family member | Publication date |
|---|---|---|---|
| US 2014-0115644 A1 | 24/04/2014 | AU 2013-332537 A1 | 30/04/2015 |
| | | CA 2887653 A1 | 24/04/2014 |
| | | CA 2887659 A1 | 24/04/2014 |
| | | US 2014-0115060 A1 | 24/04/2014 |
| | | US 2015-0026743 A1 | 22/01/2015 |
| | | US 2015-0058905 A1 | 26/02/2015 |
| | | US 8887223 B2 | 11/11/2014 |
| | | WO 2014-062017 A1 | 24/04/2014 |
| | | WO 2014-062018 A1 | 24/04/2014 |
| KR 10-2014-0005227 A | 14/01/2014 | CA 2827370 A1 | 23/08/2012 |
| | | US 2015-0033271 A1 | 29/01/2015 |
| | | WO 2012-111979 A2 | 23/08/2012 |
| | | WO 2012-111979 A3 | 06/12/2012 |
| KR 10-2013-0087584 A | 06/08/2013 | CA 2823037 A1 | 05/07/2012 |
| | | CN 103283219 A | 04/09/2013 |
| | | DE 112011103965 T5 | 22/08/2013 |
| | | EP 2658247 A1 | 30/10/2013 |
| | | EP 2658247 A4 | 31/12/2014 |
| | | GB 201311853 D0 | 14/08/2013 |
| | | GB 2501021 A | 09/10/2013 |
| | | KR 10-1455557 B1 | 04/11/2014 |
| | | KR 10-2014-0094628 A | 30/07/2014 |
| | | US 2013-0291050 A1 | 31/10/2013 |
| | | US 2014-0304760 A1 | 09/10/2014 |
| | | US 8726328 B2 | 13/05/2014 |
| | | WO 2012-091370 A1 | 05/07/2012 |
| KR 10-2009-0043415 A | 06/05/2009 | US 2009-0110133 A1 | 30/04/2009 |
| | | US 8170144 B2 | 01/05/2012 |
| KR 10-2013-0032019 A | 01/04/2013 | CN 103843266 A | 04/06/2014 |
| | | EP 2759079 A1 | 30/07/2014 |
| | | JP 2014-531823 A | 27/11/2014 |
| | | US 2013-0081088 A1 | 28/03/2013 |
| | | US 2014-0130114 A1 | 08/05/2014 |
| | | US 8661493 B2 | 25/02/2014 |
| | | WO 2013-043000 A1 | 28/03/2013 |

Form PCT/ISA/210 (patent family annex) (July 2009)